# EUROPEAN PATENT SPECIFICATION

(11) **EP 1 269 321 B1**
(45) Date of publication and mention of the grant of the patent: **18.06.2008**
(21) Application number: 01922680.2
(22) Date of filing: 23.03.2001
(51) Int. Cl.: G06F 11/36

(54) **METHOD AND SYSTEM FOR AN AUTOMATED SCRIPTING SOLUTION FOR ENTERPRISE TESTING**
VERFAHREN UND SYSTEM FÜR EINE AUTOMATISCHE SKRIPT BASIERTE LÖSUNG ZUM UNTERNEHMENSTESTEN
PROCEDE ET SYSTEME PERMETTANT UNE SOLUTION DE SCRIPT INFORMATISEE POUR MISE A L'ESSAI EN ENTREPRISE

(30) Priority: 27.03.2000 US 535586; 27.03.2000 US 536214; 27.03.2000 US 536879
(43) Date of publication of application: 02.01.2003
(73) Proprietor: Accenture LLP, Palo Alto, CA 94304 (US)
(72) Inventor: HASWELL, John, Jeffrey, Herndon, VA 20171 (US); YOUNG, Robert, J., Charleston, MA 02129 (US); SCHRAMM, Kevin, Rose Valley, PA 19063 (US)
(74) Representative: Keltie, David Arthur
(86) International application number: PCT/US2001/009610
(87) International publication number: WO 2001/093043

(56) References cited:
- US-A- 6 002 871
- US-A- 6 038 378
- ANONYMOUS: "The complete testing solution for e-business" MERCURY INTERACTIVE, [Online] 1999, XP002179760 Solution sheet Retrieved from the Internet: <URL:http://www-svca.mercuryinteractive.co m/pdf/products/ebizsol11_99.pdf> [retrieved on 2001-10-10]
- ANONYMOUS: "WinRunner Powerful test automation for enterprise" MERCURY INTERACTIVE, [Online] 1999, XP002179761 Brochure Retrieved from the Internet: <URL:http://www.blm.gov/nirmc/winrunner.pd f> [retrieved on 2001-10-10]
- ANONYMOUS: "A non-intrusive approach to test automation for the enterprise" GRESHAM COMPUTING, [Online] 1999, XP002179762 White Paper Retrieved from the Internet: <URL:http://www.gresham-software.com/testi ng/products/pdfs/infernowp.pdf> [retrieved on 2001-10-10]
- NOLAN C: "A Look at e-Test Suite 3.1 by RSW" INTERNET CITATION, July 1999 (1999-07), XP002155308

## Description

### FIELD OF THE INVENTION

The present invention relates to scripting and more particularly to automated scripting solutions.

### BACKGROUND OF THE INVENTION

Newly developed software programs must be thoroughly tested in order to eliminate as many "bugs" or errors as possible before the software is released for widespread public use. Accordingly, development of software is largely a trial and error process. Several different methods for testing software programs have been developed. One conventional approach, generally referred to as beta testing, involves distributing the program, typically under a non-disclosure agreement, to a group of users who use the program for a period of time and report any errors which are encountered to the software developer. Although this type of testing is commonly used in the software industry, it is often found to be very time consuming, adversely affecting the scheduled release of products incorporating the software program. In addition, beta testing can be extremely difficult to control, particularly when a large number of users are provided the beta version of the software. Furthermore, due to the non-systematic use of the program, there is no guarantee that every error, or even most errors, will be identified with this approach, even under circumstances where a large number of users are using the software.

As software is developed on and runs on computers, it is not surprising to find that many of the techniques for automating the testing of software have been implemented in digital computers. A common approach for testing software is the use of test suites. Test suites compare "known good" outputs of a program (for a given set of input) against the current output. Tests that check program file output are easy to implement and can be automated with shell scripts (e.g., Expect available on the Internet). For programs with user interfaces that communicate to standard input/output devices (stdin/stdout), a similar method may be employed. Capture/playback tools are available for recording keyboard input and program output as a person tests a program.

Much of the code written today is for software products with a graphical user interface (GUI), such as Microsoft.RTM. Windows.TM.. In fact, much of software development itself is done within a graphical user interface, with software tool vendors providing products which allow software developers to develop GUI software using visual programming techniques. The Quality Assurance (QA) engineer faces more complex problems when testing GUI software. In particular, GUI programs must behave correctly regardless of which video mode or operating environment is being employed.

Intuitively, testing user interfaces should not be as difficult as testing a complex internal engine, such as a compiler or a real-time, multi-user operating system. In practice, however, user interface (UI) testing is the most challenging part of the QA process. This problem stems largely from the difficulty in automating UI tests. Tests for complex engines, in contrast, are often command-line programs whose testing can easily be automated using simple batch execution. Thus despite the plethora of present day tools for automating program testing, the task of developing, maintaining and analyzing the results of UI tests remains an arduous task.

The basic steps traditionally employed to test user interfaces may be summarized as follows. First, the application being tested is controlled by placing it into a specific state using either pre-recorded keyboard or mouse device actions, or entering input through a test script. Next, the then-current state of the application is recorded by taking a screenshot (e.g., capturing a screen bitmap). Finally, the captured screenshot is compared with a baseline screenshot that is known to be valid.

The approach is far from ideal, however. Consider, for instance, the determination of whether the state of a check box is valid within a specific dialog box. Here, the QA engineer must take a screenshot of that check box and compare it with the expected image. Thus, testing of even the simplest component is laborious. Moreover, the approach itself is prone to error. A change of just a few pixels across all windows-a common occurrence in GUI software development--causes all tests to fail. Consequently, as software becomes more and more complex, it becomes less and less feasible to test user interface tasks with present-day screen comparison methodology.

The software testing phase is a critical phase in the software development process. During the software development process, the software testing phase occurs after the software has been designed, implemented in a programming language, and tested to a limited degree. During the testing phase, software testers test the software extensively to ensure that the software meets all of the requirements it is intended to meet. In order to accommodate simultaneous testing of several different software packages by several testers, multiple test machines are often implemented. Different types of software packages may need to be tested on different types of test machines, such as, for example, test machines with different hardware configurations and/or different operating systems. When a large number of software testers are required to share common resources for software testing, provisions must be made for scheduling the tests in order to efficiently manage these shared resources. The efficient management of these shared resources may also require that tests and the results of the tests be recorded so that the tests can be used repeatedly if needed and so that the results of the tests can be analyzed and subsequently used for comparison with the results of tests performed at a later time.

In an effort to maximize efficiency in the handling of test scheduling and test execution, attempts have been made to automate software testing by using a server to manage test machines and to allocate test packages among the test machines in accordance with a schedule. Generally, these types of systems pre-allocate tasks to test machines by calculating the current and scheduled loads on the test machines and scheduling the tasks so that they are performed in a tine-efficient manner. For example, Sun Microsystems, Inc. has proposed an automated task-based scheduler for use with UNIX platform systems which allows users operating "client" machines to schedule tests to be executed on "target" machines. A central server receives a request from a client machine to perform a task. The server maintains information relating to all currently scheduled tasks on all target machines in a "status" database. The server maintains information relating to the expected duration of each test package and other test package attributes in a "packages" database.

When the server receives a request to perform a task from a client machine, the server determines the loads on each of the target machines which are suitable for performing the task. The loads are determined based on the expected duration of each test package. The server then schedules the task on the target machine with the least current load. A task file created at the client machine and copied to the server includes priority information relating to the task requested by the client machine. Once the server has selected a target machine for the task, the task file is copied to the selected target machine. The target machine selects a task to be performed based on this priority information contained in the task file copied to the target machine. Once a task is completed, the results are copied back to the server which compares them to a set of "golden results" and creates a comparison report which is mailed back to the user that requested the test.

### SUMMARY OF THE INVENTION

A method as defined in claim 1 and system as defined in claim 4 are provided for affording an automated scripting solution for enterprise testing. First, a table-driven automated scripting architecture is provided. Then, a test script is developed using the table-driven automated scripting architecture. A synchronized execution of the test script is then performed. Finally, metrics of the synchronized execution of the test script are outputted.

Document D1 = XP-002179761 constitutes the closest prior art to the present application. D1 discloses a system and method for providing an automated scripting solution for enterprise testing. According to D1 all business process data is stored in a spreadsheet which can be edited easily to generate data driven tests, test scenarios are automatically generated from recorded or programmed scripts, real time performance monitoring is achieved and test results are presented in a clear and visual format so that defects can be analysed.

### BRIEF DESCRIPTION OF THE DRAWINGS

The invention will be better understood when consideration is given to the following detailed description thereof. Such description makes reference to the annexed drawings wherein:
Figure **1** is a flowchart illustrating a method for affording an automated scripting solution for enterprise testing in accordance with one embodiment of the present invention;
Figure **2** is a schematic diagram illustrating one exemplary system architecture of the present invention, in accordance with one embodiment of the present invention;
Figure **3** is a representative hardware environment illustrating a hardware configuration of a client computer in accordance with a preferred embodiment;
Figure **4** is a flowchart illustrating a method for affording a table-driven automated scripting architecture in accordance with one embodiment of the present invention;
Figure **5** is a flowchart illustrating a method for affording improved accuracy in an automated scripting framework in accordance with one embodiment of the present invention;
Figure **6** is a flowchart illustrating a method for affording application independence in an automated scripting framework, in accordance with one aspect of the present invention;
Figure **7** is a flowchart illustrating a method for affording test development in an automated scripting framework, in accordance with an embodiment of the present invention;
Figure **8** is a flowchart illustrating a method for affording synchronization in an automated scripting framework, in accordance with an aspect of the present invention;
Figure **9** is a flowchart illustrating a method for affording test maintenance in an automated scripting framework in accordance with an embodiment of the present invention; and
Figure **10** is a flowchart illustrating a method for affording metrics in an automated scripting framework, in accordance with an embodiment of the present invention.
figure **11** illustrates the creating ot Container "Roles" according to an embodiment ot the present invention;
Figure **12** is an illustration of a graphic display at a point where a user has right-clicked on the Schema folder and selected New - Attribute according to an embodiment of the present invention;
Figure **13** illustrates the adding of different Roles according to an embodiment of the present invention;
Figure **14** illustrates an example of the graphic display showing the attributes of member "Joe Bloggs" according to an embodiment of the present invention;
Figure **15** is a flowchart that illustrates a method for handling events in a system;

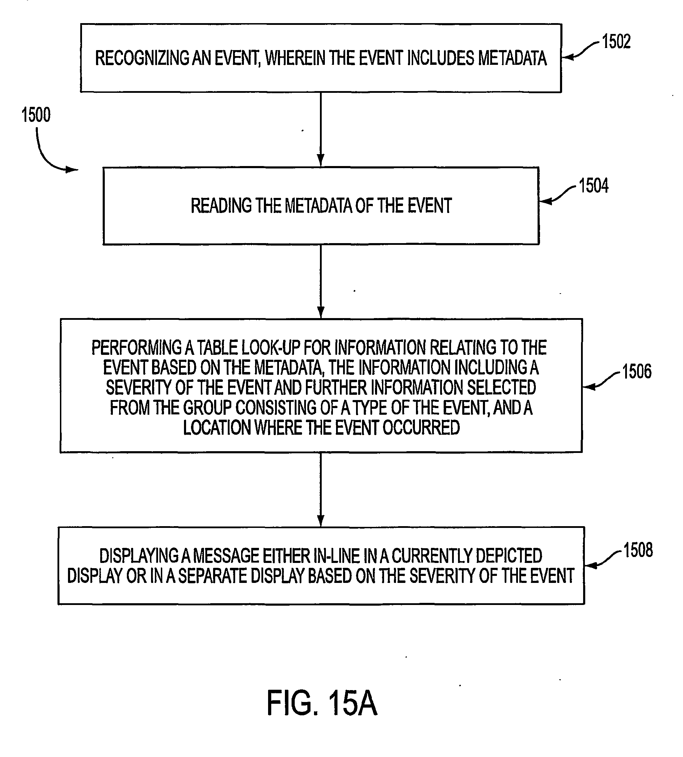

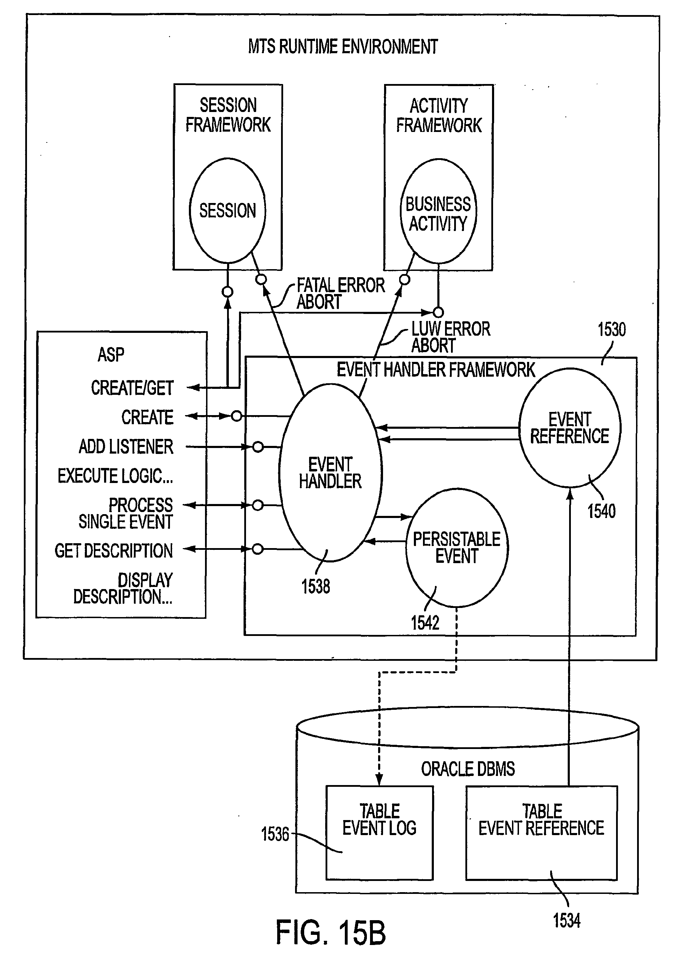

Figure **15****.****1** illustrates a ReTA Event Handler framework that manages the informational, warning and error events that an application raises according to an embodiment of the present invention;

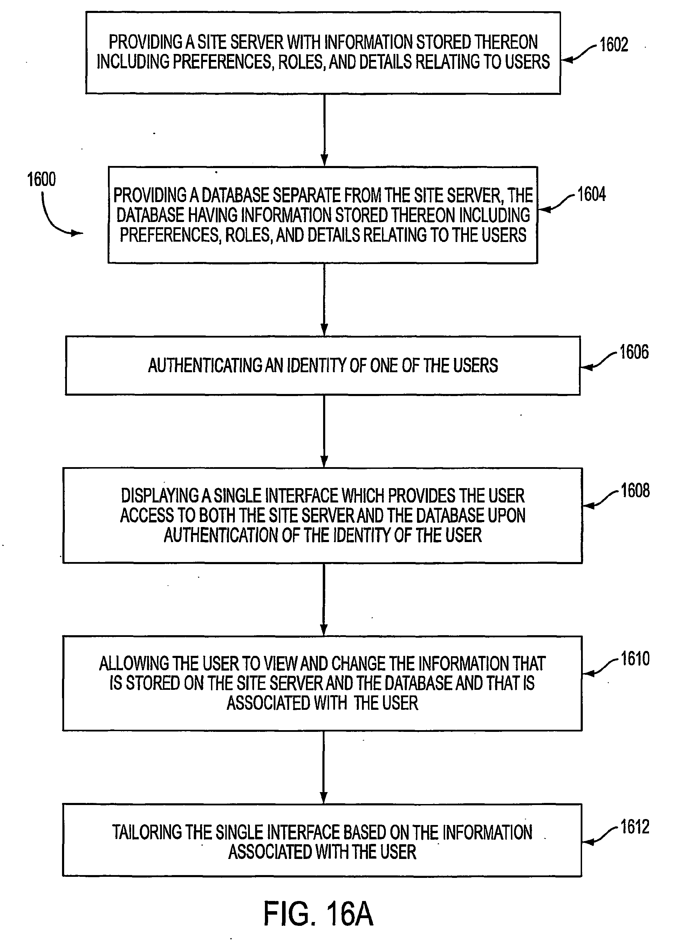

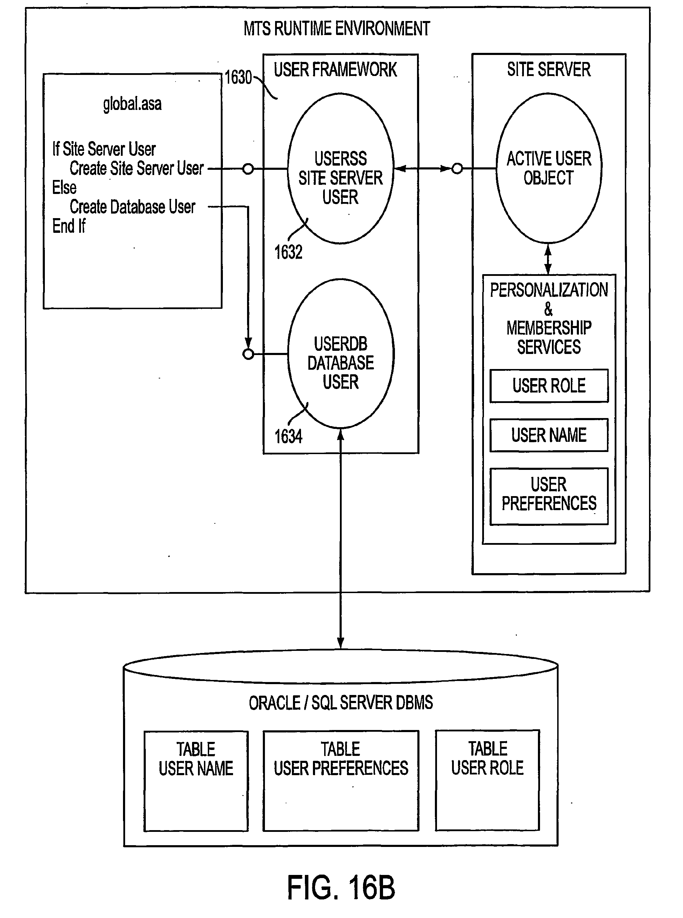

Figure **16** is a flowchart depicting a method for managing user information;
Figure **16****.****1** illustrates a User framework which enables two approaches to maintaining user information according to an embodiment of the present invention;

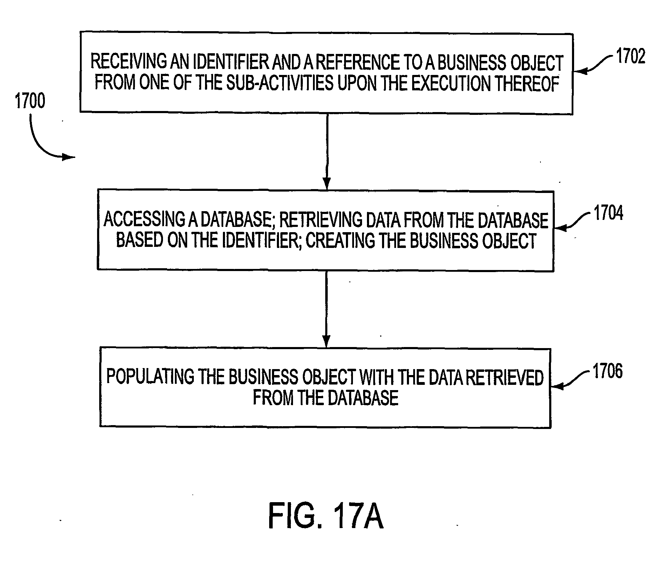

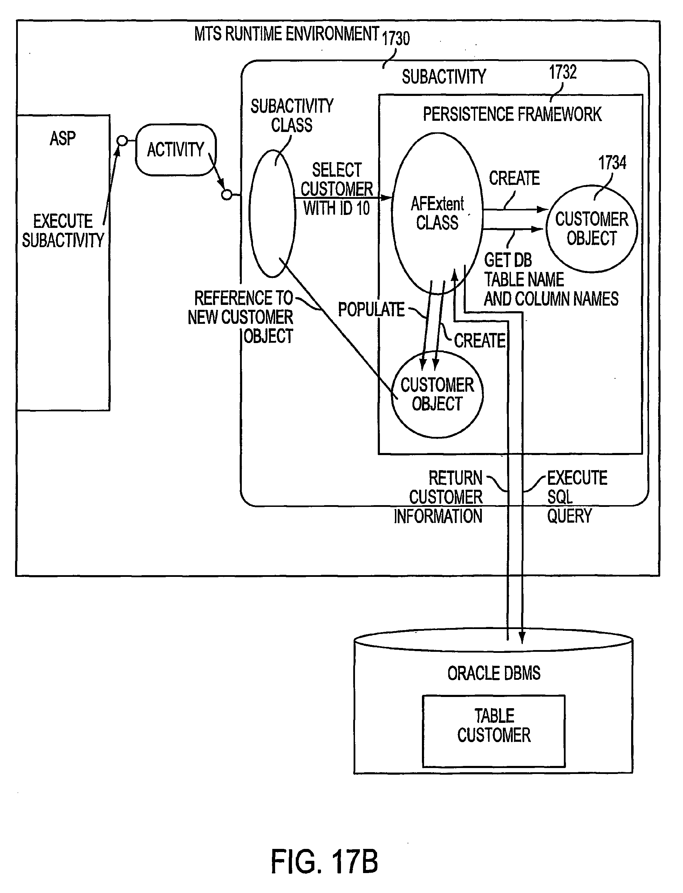

Figure **17** is a flowchart that illustrates a method for managing business objects in a system that includes a plurality of sub-activities which each include sub-activity logic adapted to generate an output based on an input received from a user upon execution, and a plurality of activities which each execute the sub-activities in a unique manner upon being selected for accomplishing a goal associated with the activity;
Figure **17****.****1** shows a SubActivity component using the Persistence framework to retrieve a Customer Object from the Database according to an embodiment of the present invention;

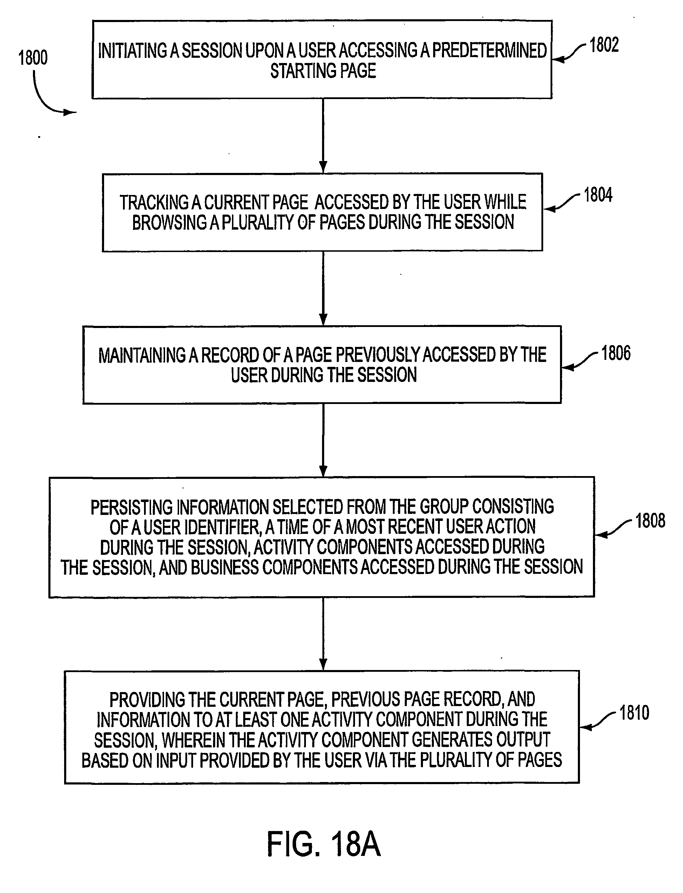

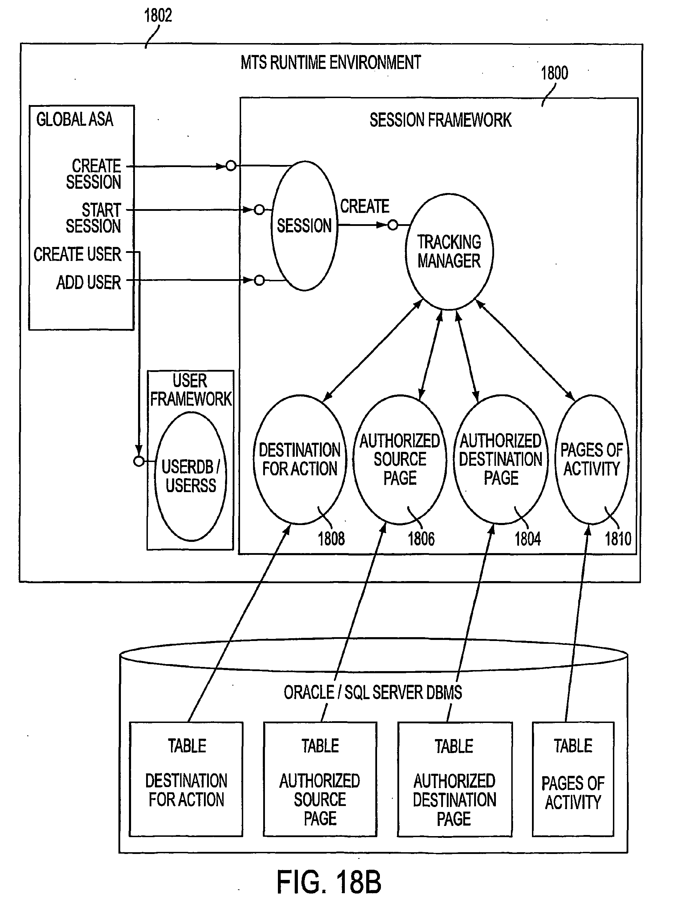

Figure **18** is a flow chart depicting a method for persisting information during a user session;
figure **18****.****1** illustrates a session flow Diagram - Un session start according to an embodiment of the present invention;

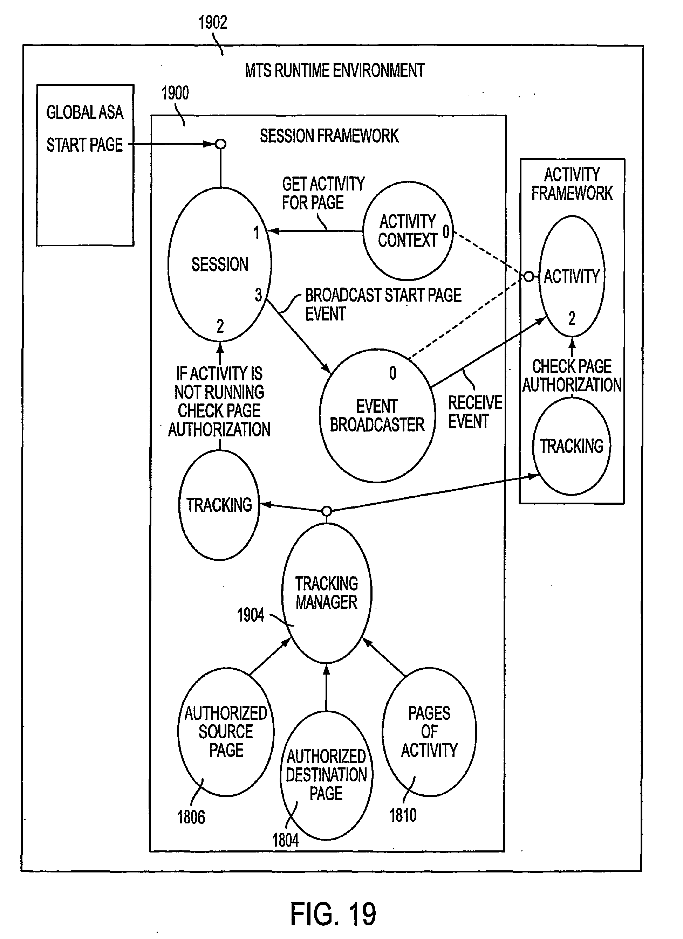

Figure **19** illustrates a Session Flow Diagram - On Start ASP Page according to an embodiment of the present invention;

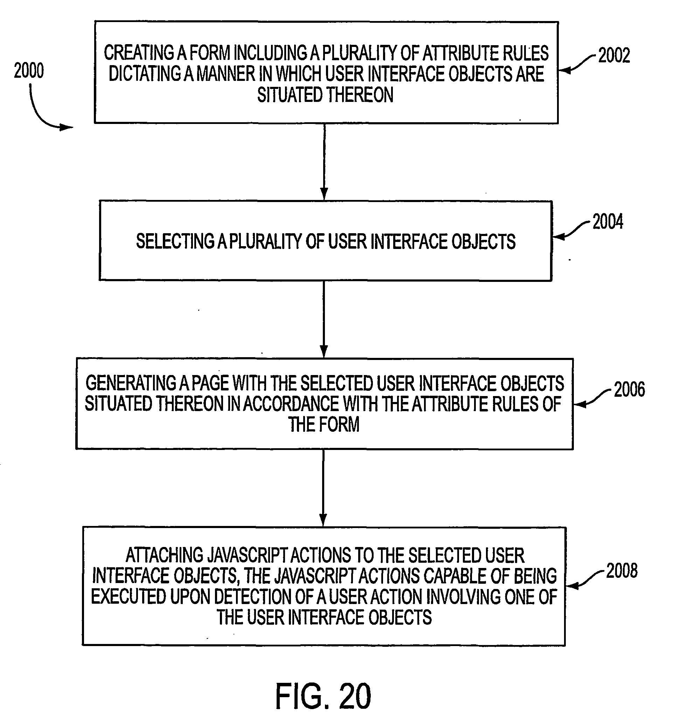

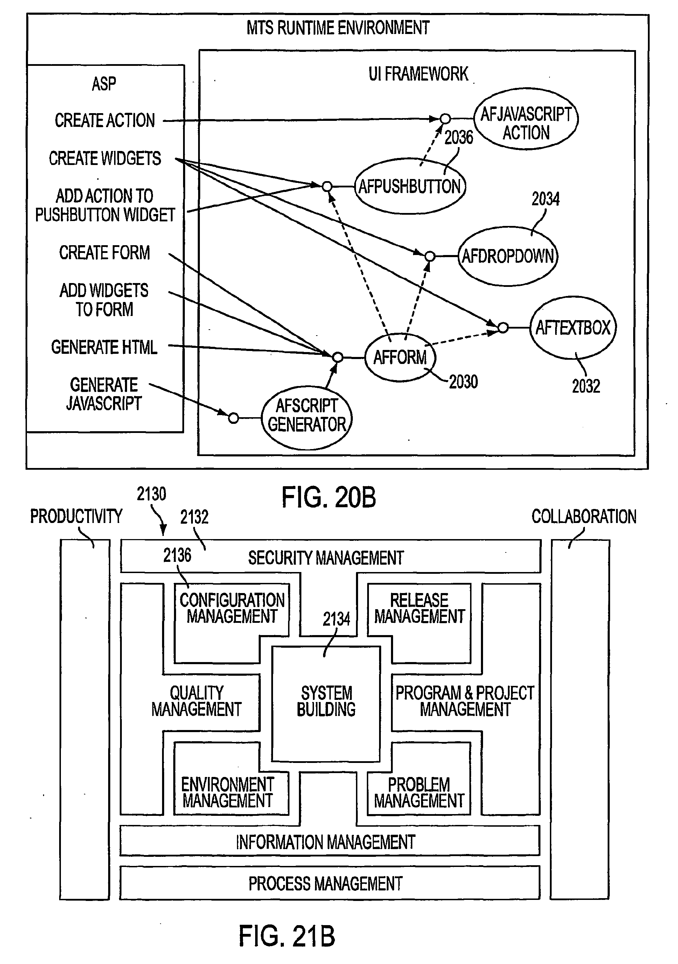

Figure **20** is a flow chart illustrating a method for generating a graphical user interface;
Figure **20****.****1** is an illustration showing the steps for generating a HTML page consisting of a form with a TextBox, a DropDown list and a PushButton according to an embodiment of the present invention;

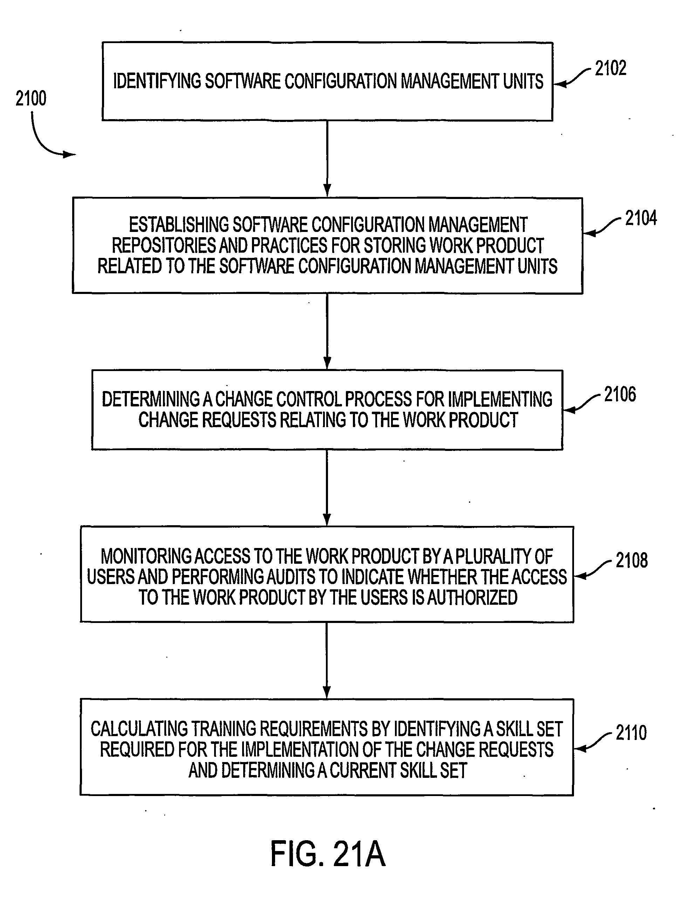

Figure **21** is a flow chart depicting a method for software configuration management
Figure **21****.****1** is an illustration of an IDEA framework on which the ReTA Development Architecture Design is based according to an embodiment of the present invention;

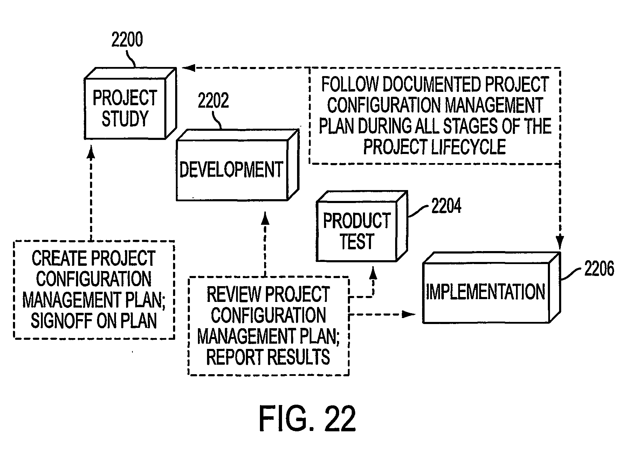

Figure **22** illustrates the Configuration Management Life Cycle according to an embodiment of the present invention;

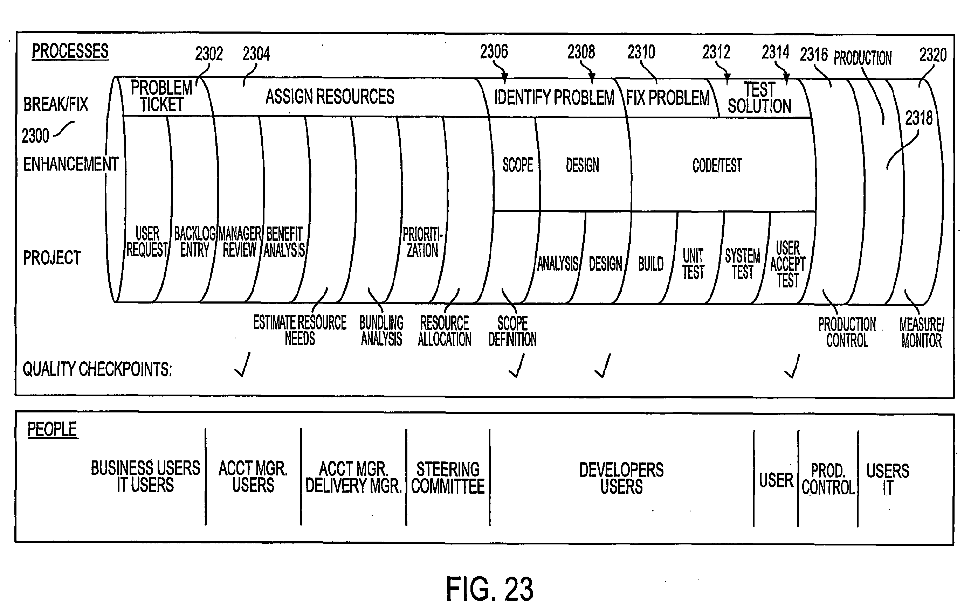

Figure **23** illustrates the change control 'pipeline' and each phase within the pipeline according to an embodiment of the present invention;

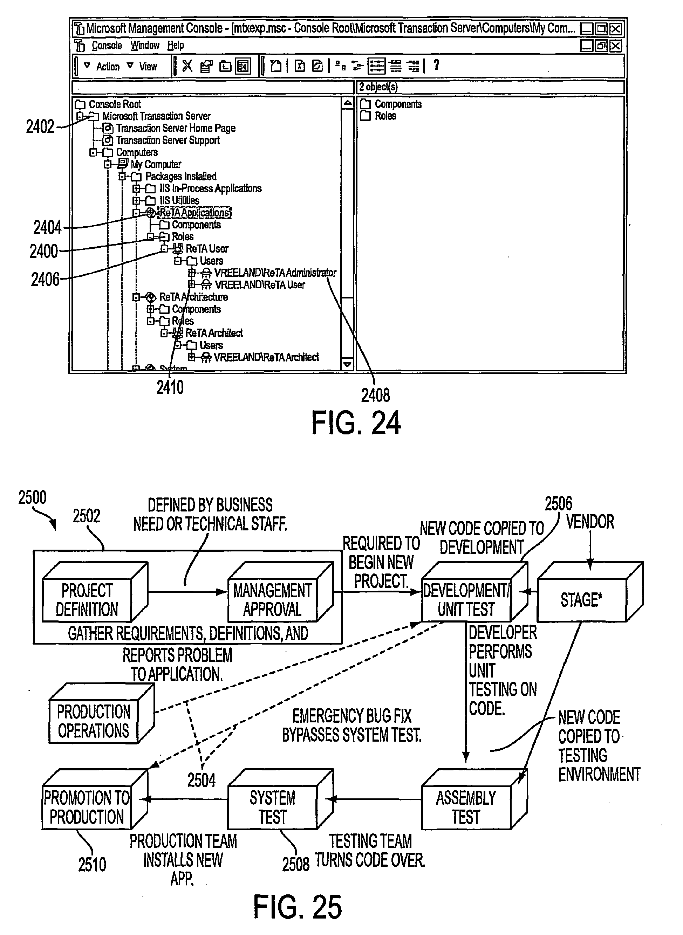

Figure **24** depicts the application of Roles within the Microsoft Transaction Server (MTS) management console according to an embodiment of the present invention;
Figure **25** illustrates an environment migration process that guides development within ReTA engagement environments according to an embodiment of the present invention;

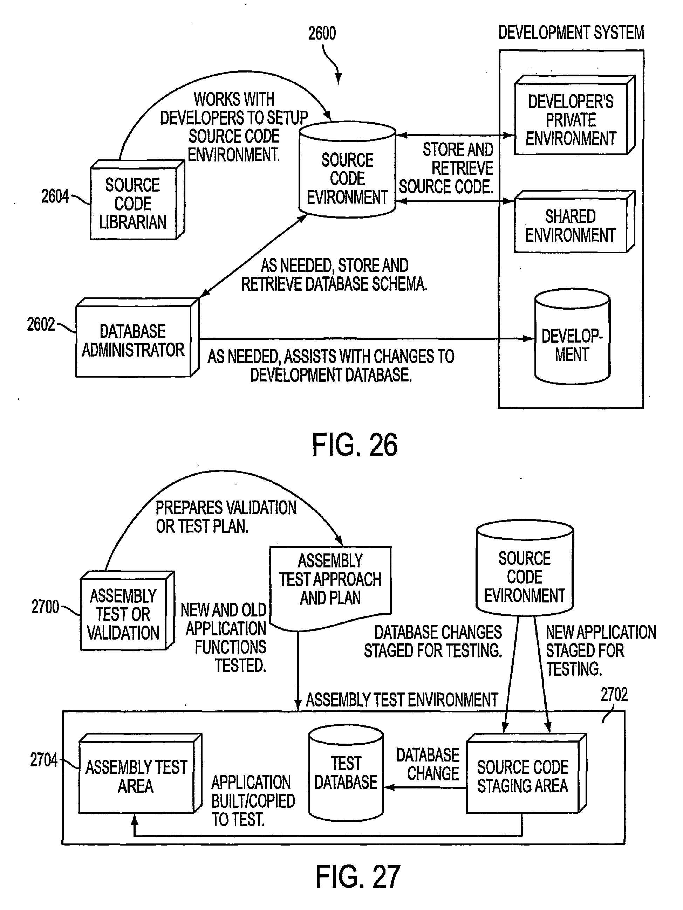

Figure **26** is an illustration of a Development/Unit test for existing applications according to an embodiment of the present invention;
Figure **27** illustrates an assembly test for existing applications according to an embodiment of the present invention;

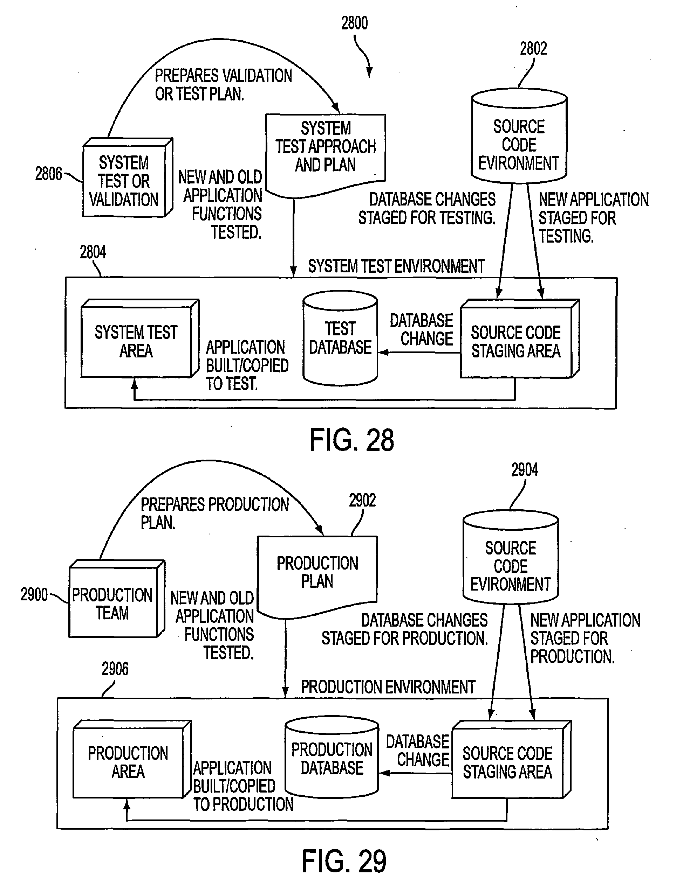

Figure **28** illustrates a system test for existing applications according to an embodiment or the present invention;
Figure **29** is a flowchart for production of existing applications according to an embodiment of the present invention;

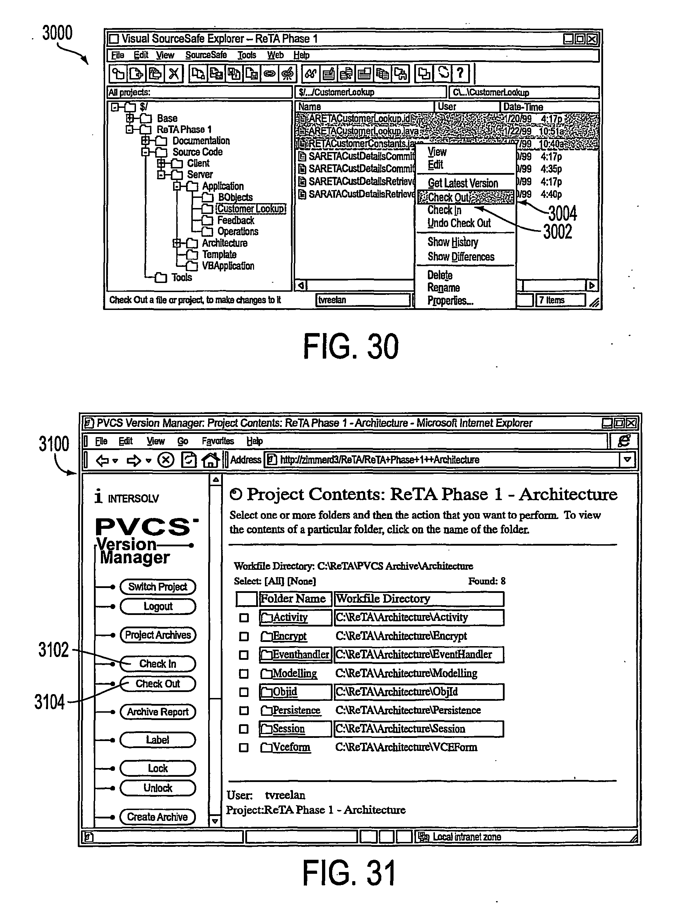

Figure **30** illustrates a graphic display of Visual Source Safe according to an embodiment of the present invention;
Figure **31** illustrates a frame of PVCS Version Manager I-Net Client according to an embodiment of the present invention;

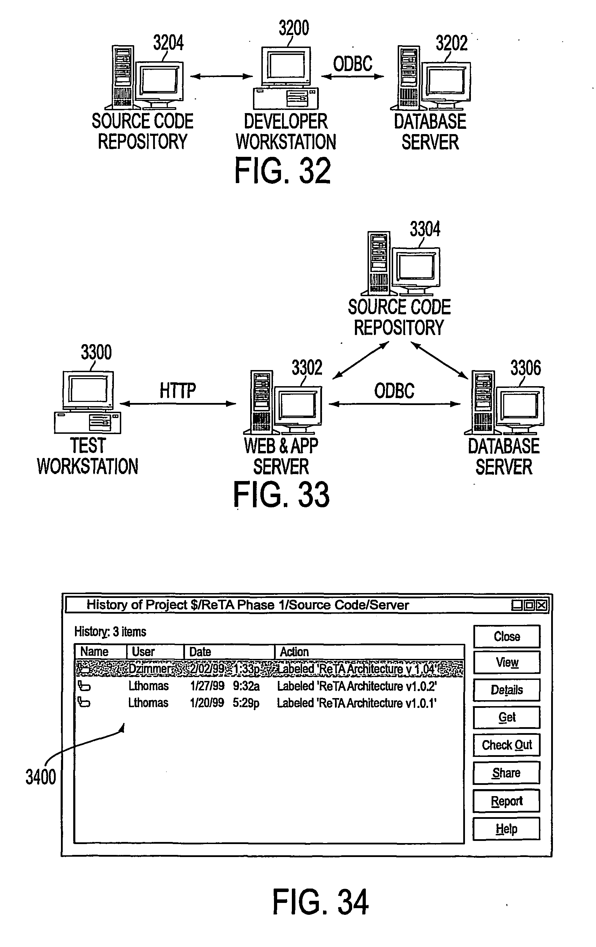

Figure **32** is an illustration of a Build Source Control Model according to an embodiment of the present invention;
Figure **33** illustrates an Assembly Test phase control mode according to an embodiment of the present invention;
Figure **34** illustrates a Microsoft Visual SourceSafe 'Labels' dialog box according to an embodiment of the present invention;

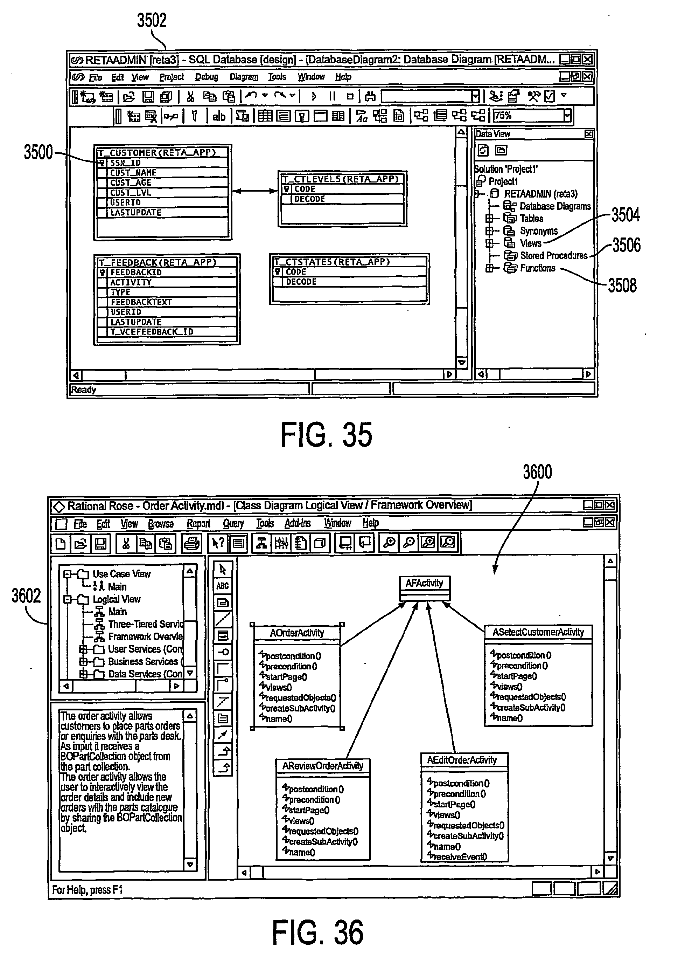

Figure **35** illustrates a Database Diagram within Visual Studio according to an embodiment of the present invention;
Figure **36** illustrates Object Modeling within Rational Rose according to an embodiment of the present invention;

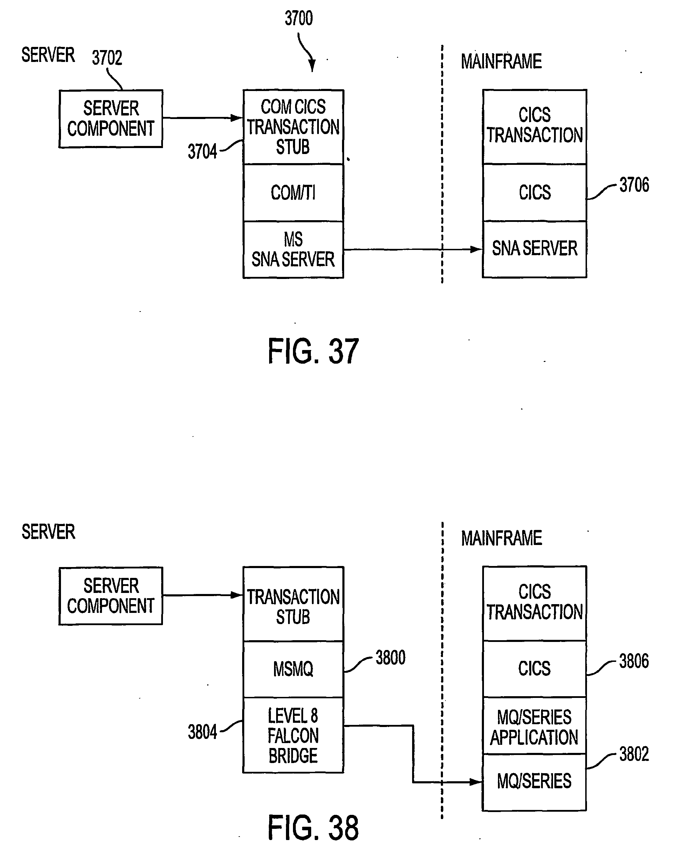

Figure **37** illustrates directly calling a wrapped CICS component according to an embodiment of the present invention;
Figure **38** illustrates indirectly calling a wrapped CICS component according to an embodiment of the present invention;

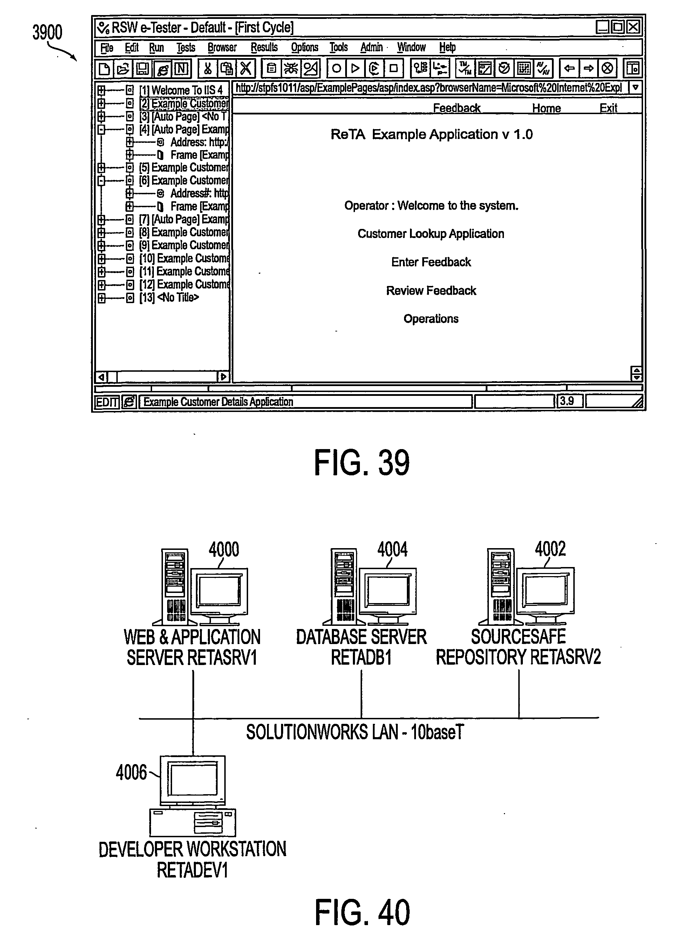

Figure **39** illustrates RSW eTest Automated Testing Tool according to an embodiment of the present invention;
Figure **40** is an illustration which describes the physical configuration necessary for RETA development according to an embodiment of the present invention;

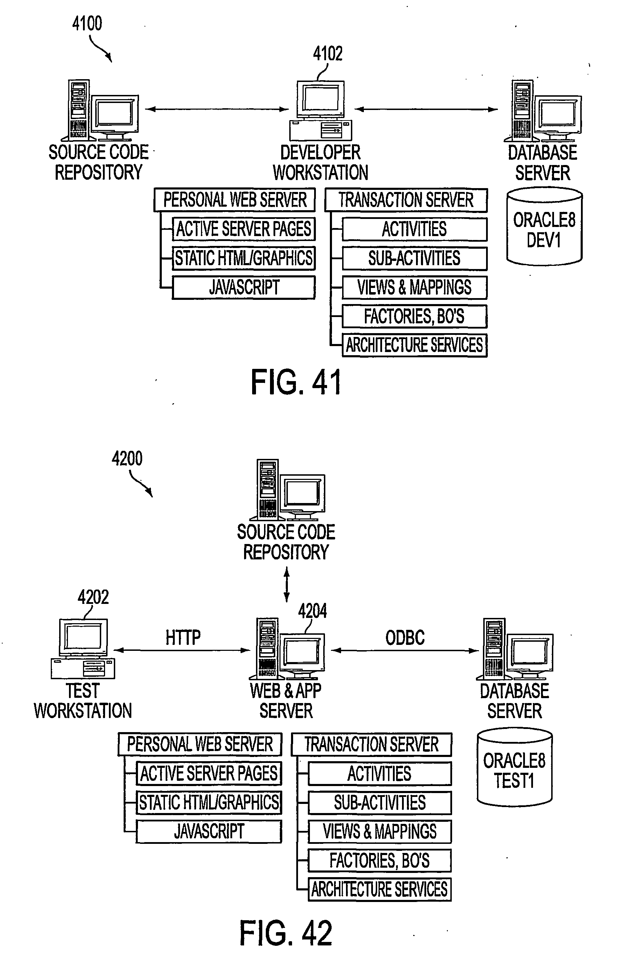

Figure **41** illustrates the application & architecture configuration for a typical ReTA Build environment according to an embodiment of the present invention;
Figure **42** illustrates the application & architecture configuration for a typical ReTA Build environment according to an embodiment of the present invention;

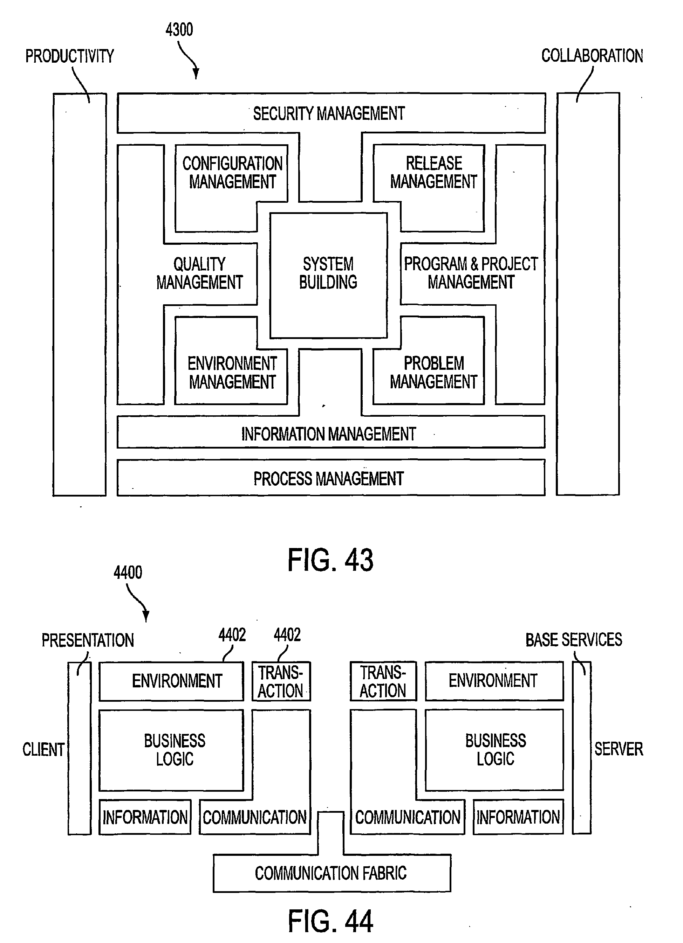

Figure **43** illustrates an IDEA Framework with components in scope ReTA Phase 1 according to an embodiment of the present invention;
Figure **44** illustrates a NCAF Framework with the shaded components in scope for Phase 1 according to an embodiment of the present invention;

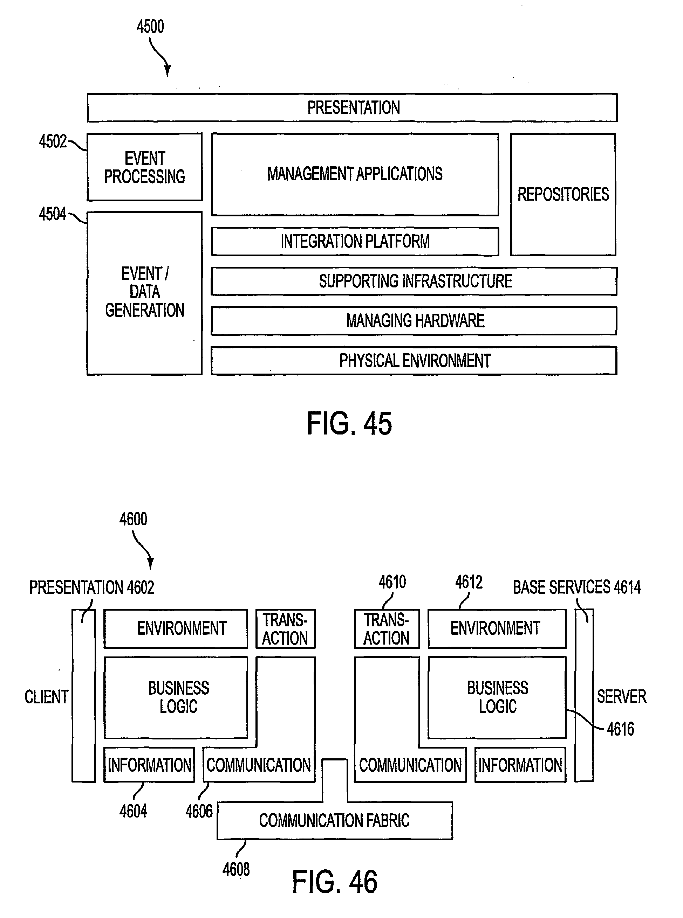

Figure **45** illustrates a MODEnc Framework according to an embodiment of the present invention;
Figure **46** illustrates a NCAF Framework according to an embodiment of the present invention;

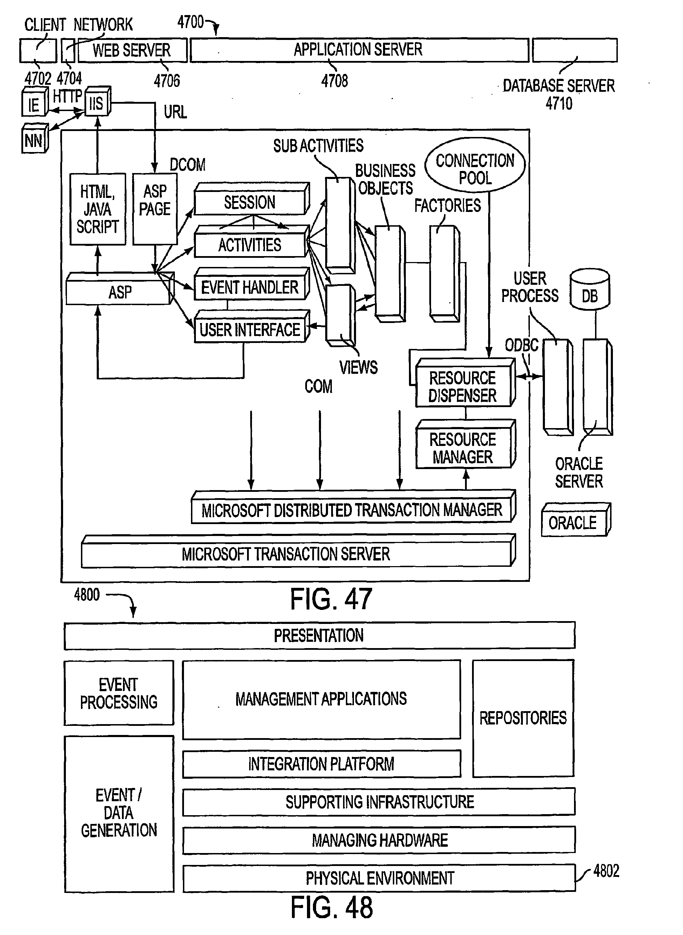

Figure **47** illustrates the components that comprise the ReTA execution architecture and their physical location according to an embodiment of the present invention;
Figure **48** illustrates a MODEnc Framework for Operations Architecture according to an embodiment of the present invention;

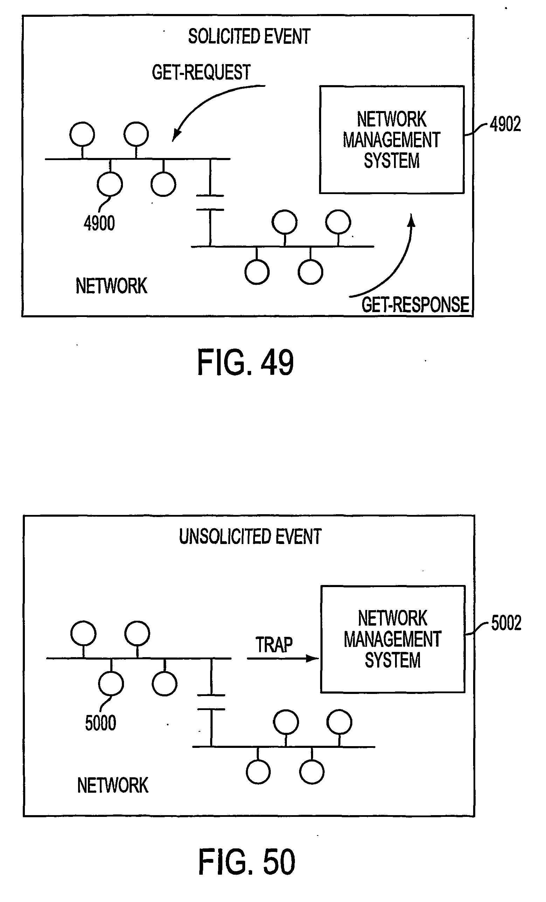

Figure **49** is an illustrative representation of a solicited event resulting from the direct (synchronous) polling of a network component by a network management station according to an embodiment of the present invention;
Figure **50** is an illustrative representation of when an unsolicited event occurs when a network component sends (asynchronously) data to the network management station according to an embodiment of the present invention;

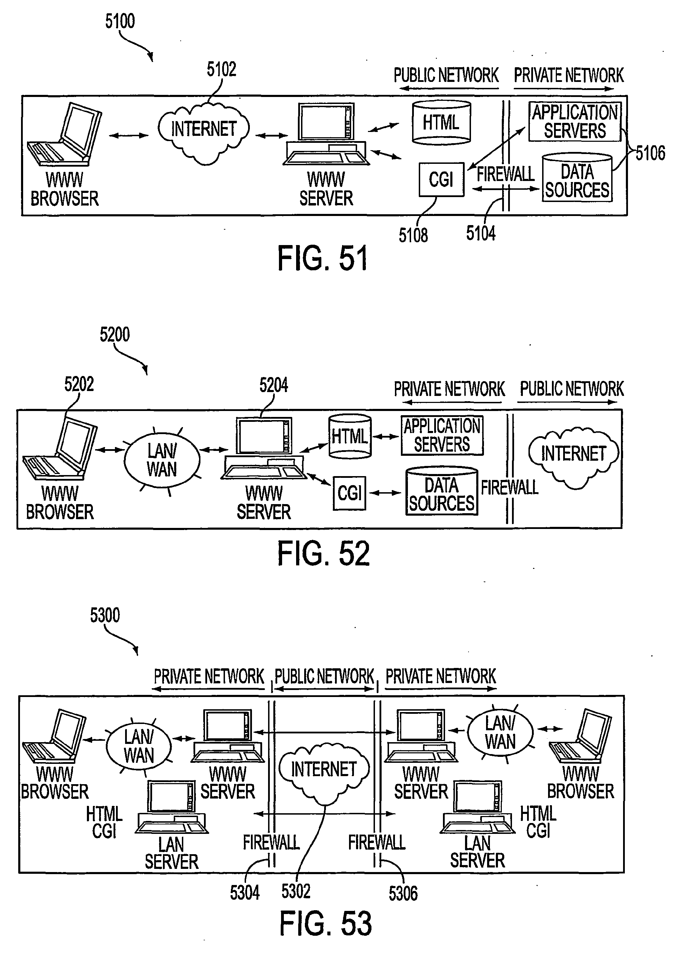

Figure **51** illustrates event management in a net-centric environment according to an embodiment of the present invention;
Figure **52** illustrates event management in an Intranet-based net-centric model according to an embodiment of the present invention;
Figure **53** illustrates event management when using an Extranet-based net-centric model according to an embodiment of the present invention;

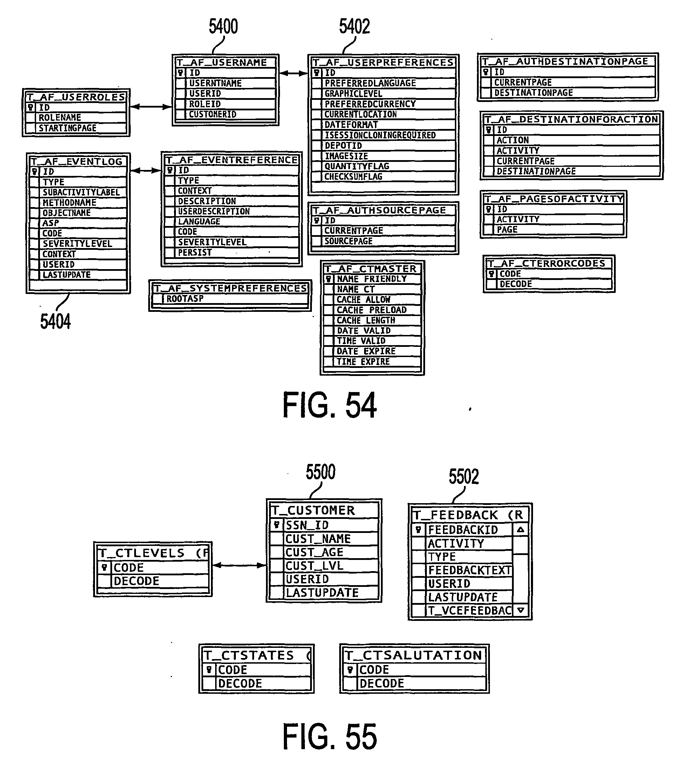

Figure **54** illustrates the tables and relationships required for the ReTA Phase 1 Architecture Frameworks according to an embodiment of the present invention;
Figure **55** illustrates tables and relationships required for the ReTA Phase 1 validation application according to an embodiment of the present invention;

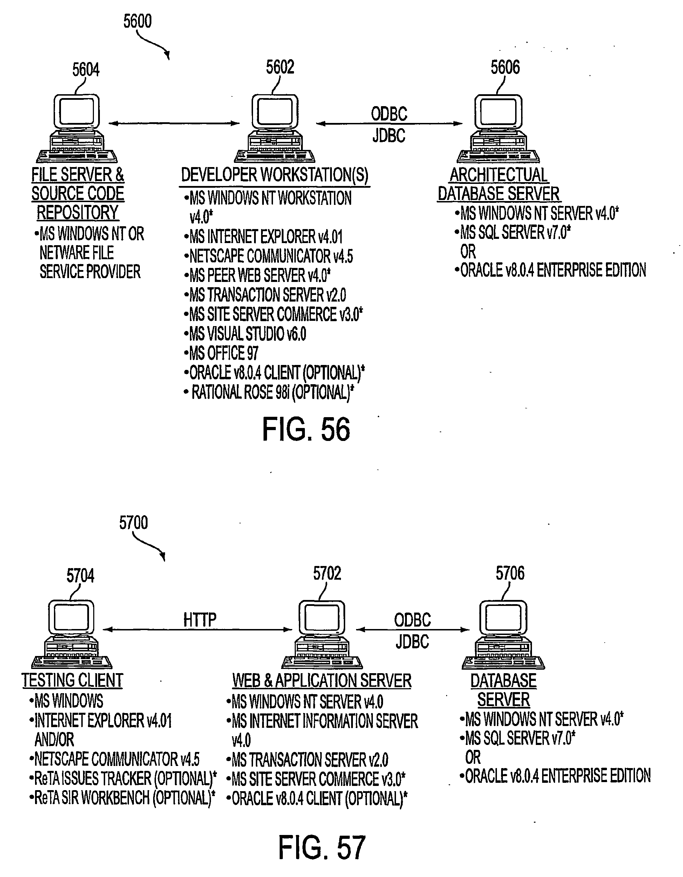

Figure **56** illustrates the physical configuration of a possible ReTA-engagement development environment according to an embodiment of the present invention;
Figure **57** illustrates the physical configuration of possible ReTA-based Assembly, Product and Performance testing environments according to an embodiment of the present invention;

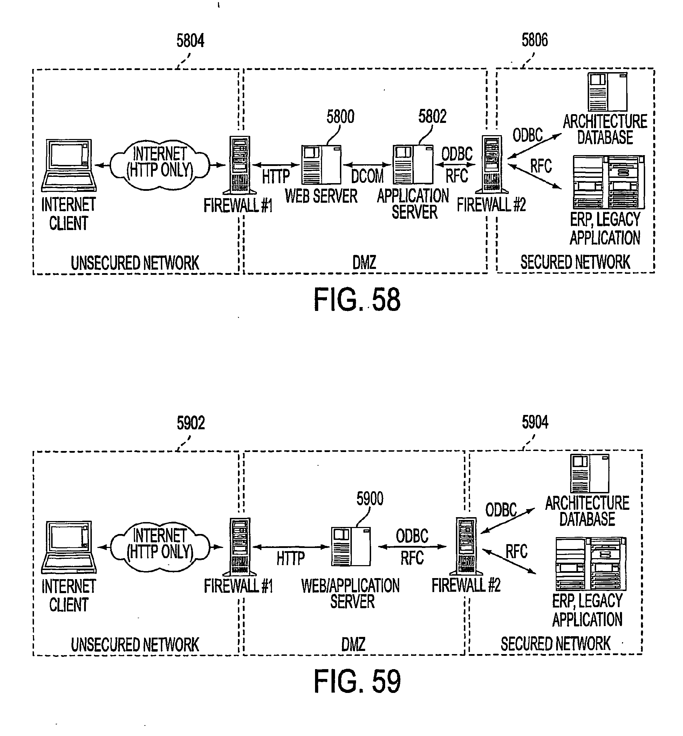

Figure **58** illustrates Separate Web and Application Servers according to an embodiment of the present invention;
Figure **59** illustrates a Single Web and Application Server according to an embodiment of the present invention;

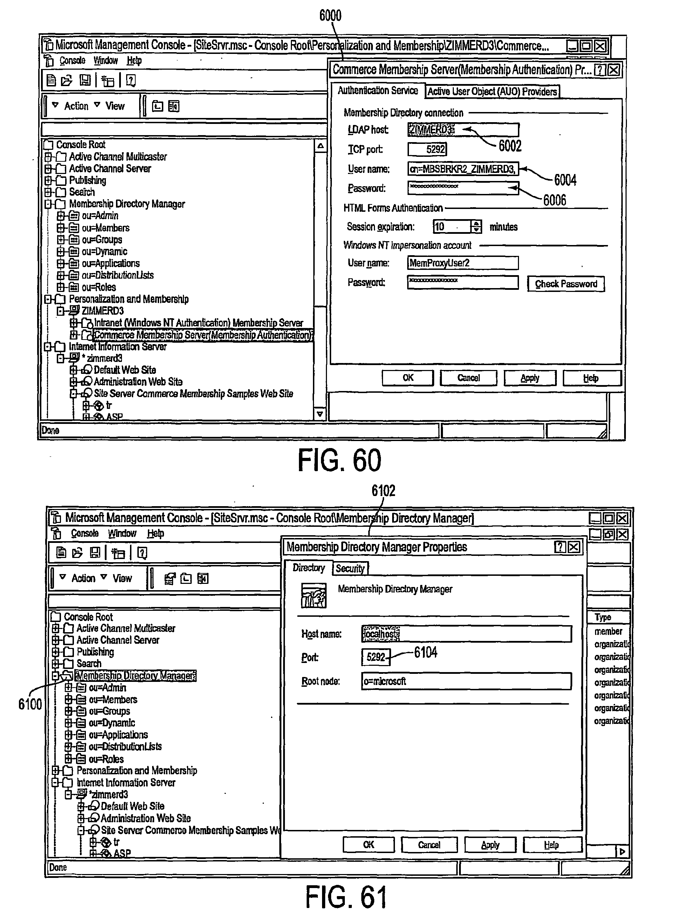

Figure **60** illustrates a Commerce Membership Server [Membership Authentication] properties view according to an embodiment of the present invention;
Figure **61** illustrates a Membership Directory Manager Properties Dialog according to an embodiment of the present invention;

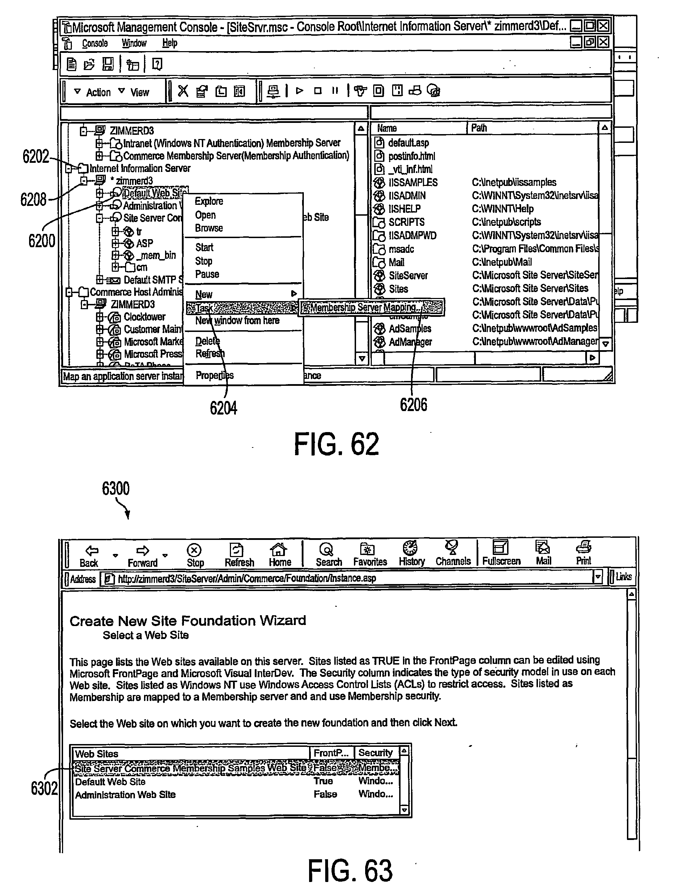

Figure **62** is an illustration of a Membership Server Mapping Property according to an embodiment of the present invention;
Figure **63** is an illustration of a Create New Site Foundation Wizard according to an embodiment of the present invention;

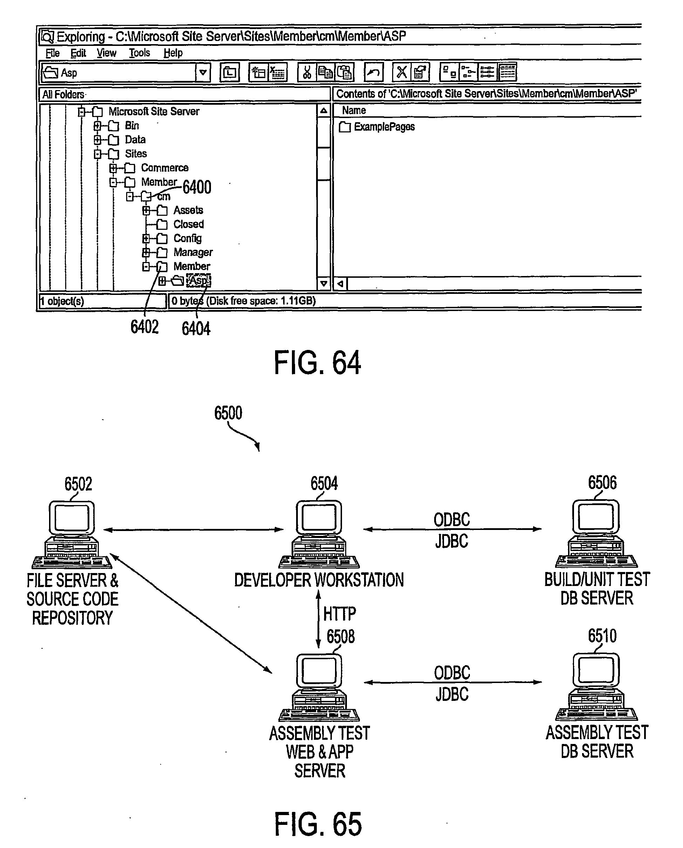

Figure **64** illustrates the web application being placed under the "Member" directory of "cm" in Windows Explorer according to an embodiment of the present invention;
Figure **65** depicts a typical ReTA engagement development environment according to an embodiment of the present invention;

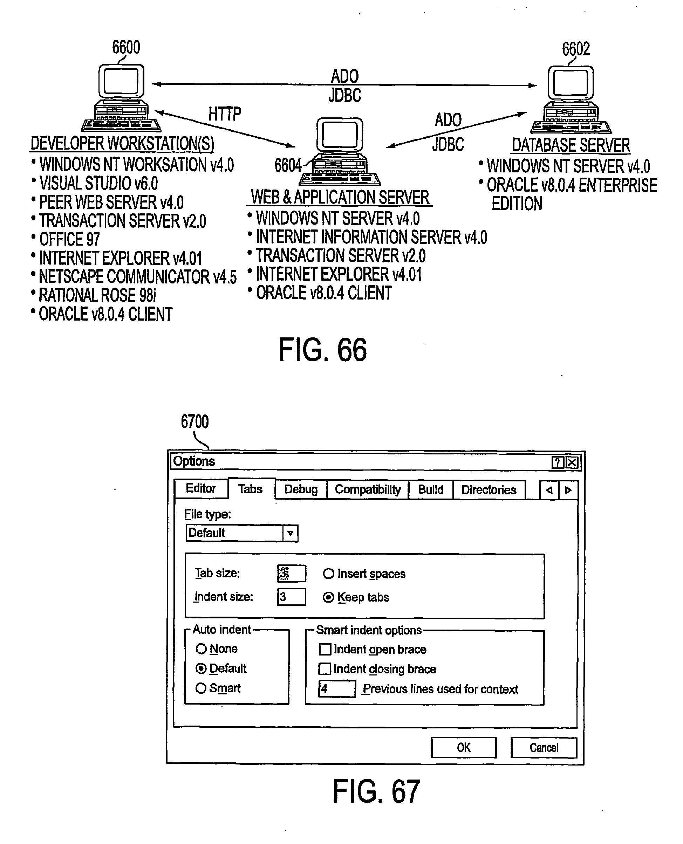

Figure **66** illustrates the development environment configuration for a ReTA Phase 1 engagement according to an embodiment of the present invention;
Figure **67** illustrates an interface associated with the ability of inserting or removing statements within a block without worrying about adding or removing braces according to an embodiment of the present invention;

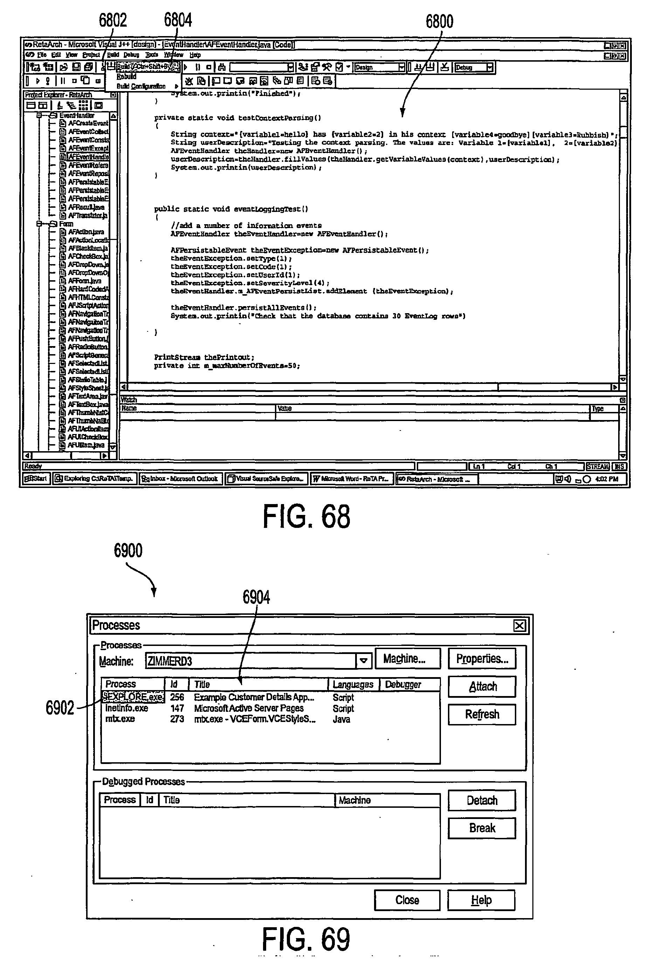

Figure **68** shows a Visual J++ Build Environment according to an embodiment of the present invention;
Figure **69** shows an interface for attaching to the MTS Process for debugging according to an embodiment of the present invention;

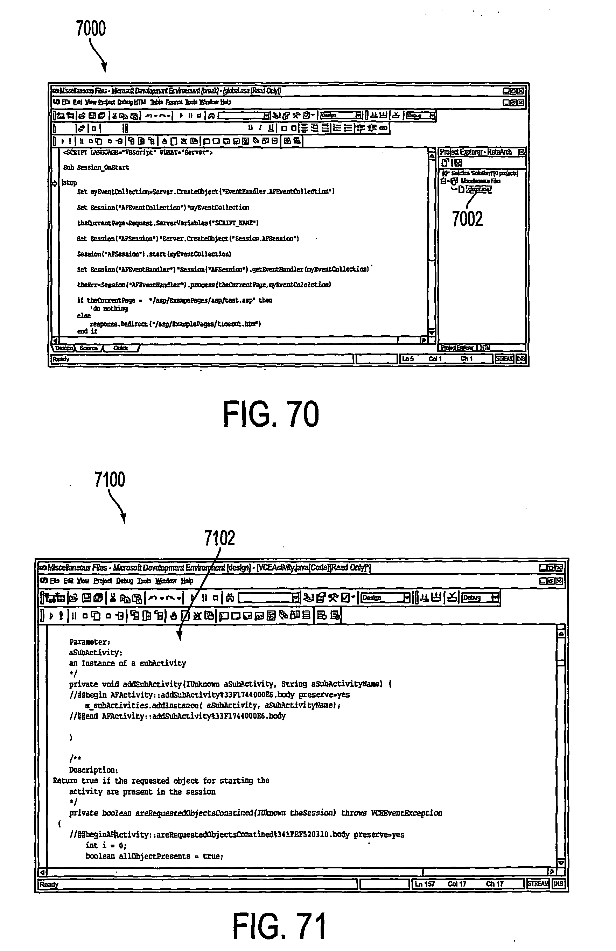

Figure **70** shows an interface for debugging an Active Server Page (example global.asa file) according to an embodiment of the present invention;
Figure **71** illustrates an example of Rose generated java file and javadoc comments according to an embodiment of the present invention;

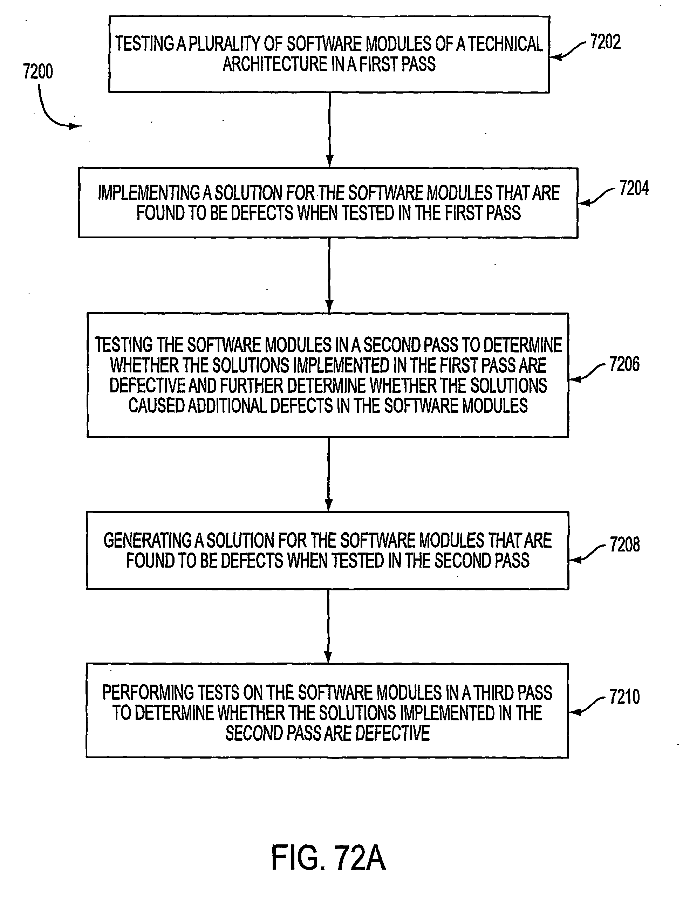

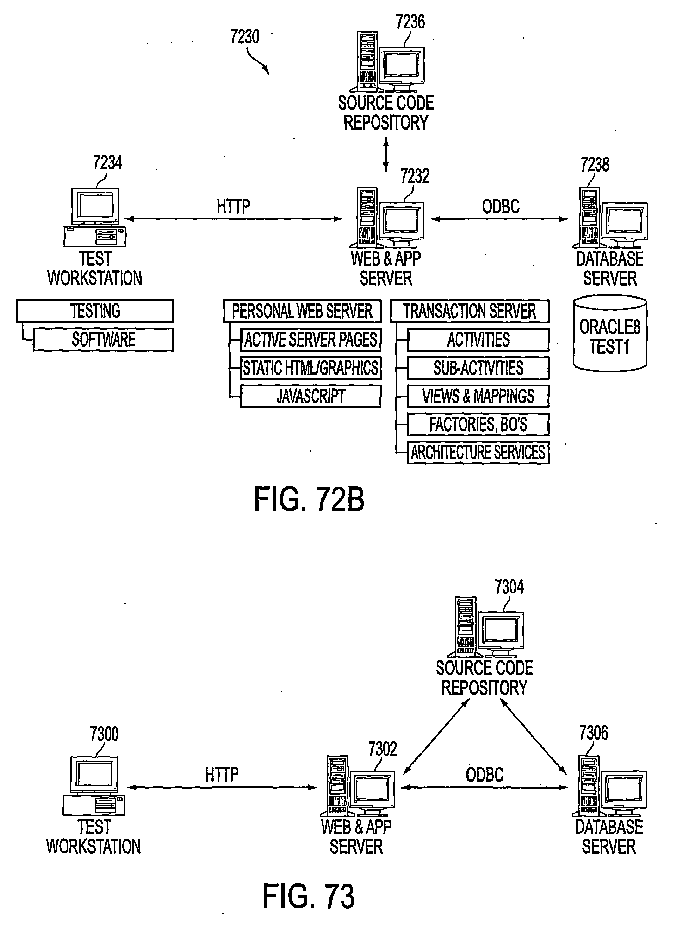

Figure **72** is a flowchart illustrating a method for testing a technical architecture;
Figure **72****.****1** illustrates the application & architecture configuration for a typical ReTA Build environment according to an embodiment of the present invention;
Figure **73** illustrates that the code for technology architecture assembly test may be migrated from the technology architecture component test environment as defined in the migration procedures according to an embodiment of the present invention;

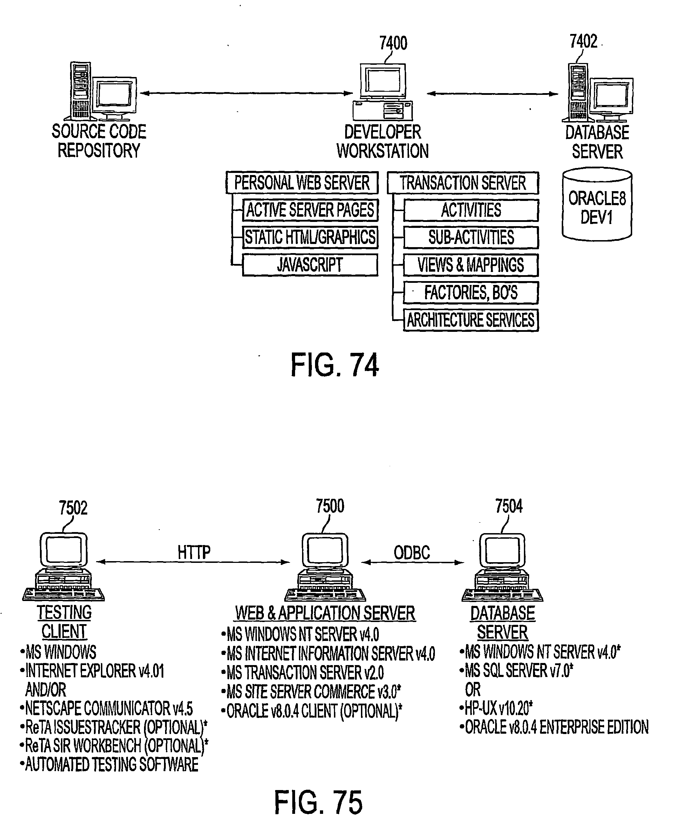

Figure **74** illustrates the application & architecture configuration for a typical ReTA Build environment according to an embodiment of the present invention; and
Figure **75** illustrates the physical characteristics of the testing environment to be utilized during the Performance Testing Phases according to an embodiment of the present invention.

### DETAILED DESCRIPTION OF THE INVENTION

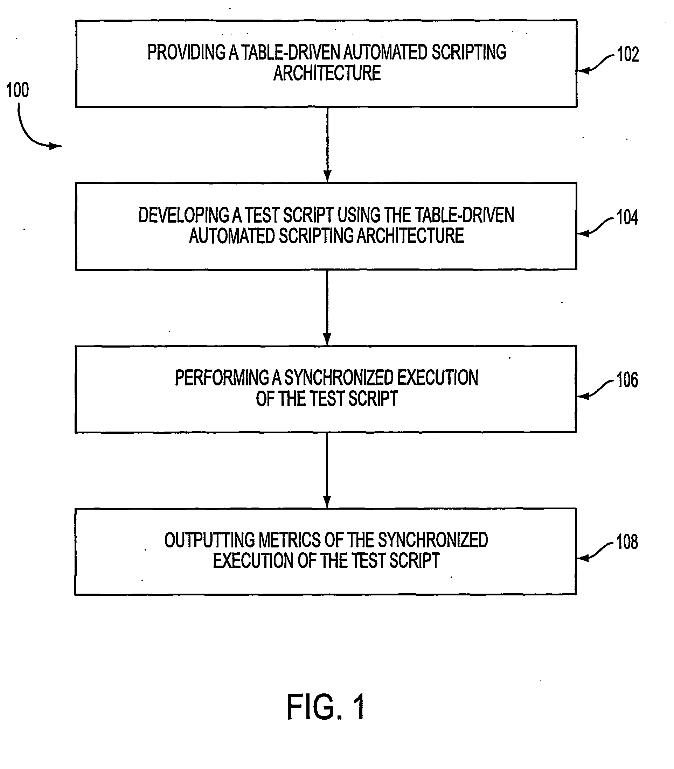

Figure **1** is a flowchart illustrating a method **100** for affording an automated scripting solution for enterprise testing in accordance with one embodiment of the present invention. First, in operation **102,** a table-driven automated scripting architecture is provided. Then, in operation **104,** a test script is developed using the table-driven automated scripting architecture. A synchronized execution of the test script is then performed as indicated in operation **106.** In operation **108,** metrics of the synchronized execution of the test script are outputted.

The present invention has been developed and implemented to automate regression testing of host applications. Among other roles, the present invention can be used in an Integration Test (IT) phase to develop a more robust and systematic process for executing test scripts during certification testing. The present invention is a two-tier application, consisting of a database (Microsoft Access 97 or SQL Server) and an automation tool (Mercury Interactive WinRunner). The present invention reduces testing time and allows the testing team to detect and log more application issues, ensuring quality software delivery.

The present invention provides data-driven test scripts with an English-based, form-driven user interface. The present invention data architecture divides and stores test script information (steps, actions, application widgets, etc.) into separate, reusable components. The table relationships between these components provide the capability to develop easily maintained, data-driven test scenarios.

Traditional testing tools are manual and require long hours of slow and tedious testing. The few automated tools that do exist have limited flexibility and hard coded scripts.

In contrast, the present invention's unique and innovative features yield exceptional benefits in both scope and time. Organizational benefits include: increased development productivity, higher issue counts and shorter development cycles.

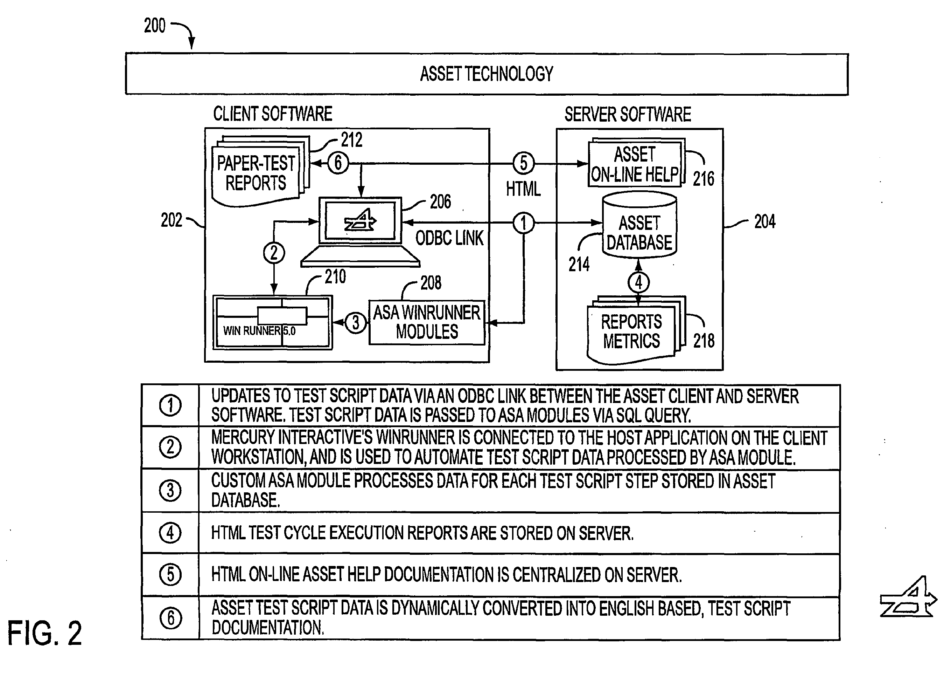

Figure **2** is a schematic diagram illustrating one exemplary system architecture **200** of the present invention, in accordance with one embodiment of the present invention. The system architecture **200** includes a client script system **202** and a server script system **204.** The client script system **202** includes a client computer **206,** ASA modules **208,** test script automator **210,** and test script documentation **212.** The server script system **204** includes a database **214,** on-line help documentation **216,** and metrics statistical reports **218.**

In use, the client computer **206** updates test script data located on the database **214** utilizing an ODBC connection. The test script data is further passed to the ASA modules **208** via an SQL query. The ASA modules **208** then process the test script data and pass the processed data to the test script automator **210.** Automated execution of the processed test script data is then performed by the test script automator **210,** which is connected to a host application executing on the client computer **206.**

In addition, the client computer **206** may be utilized to obtain the on-line help documentation **216** located on the server system **204.** The server system also stores the metrics statistical reports **218** after execution of each test cycle. Finally, test script data is dynamically converted into English-based, test script documentation **212.**

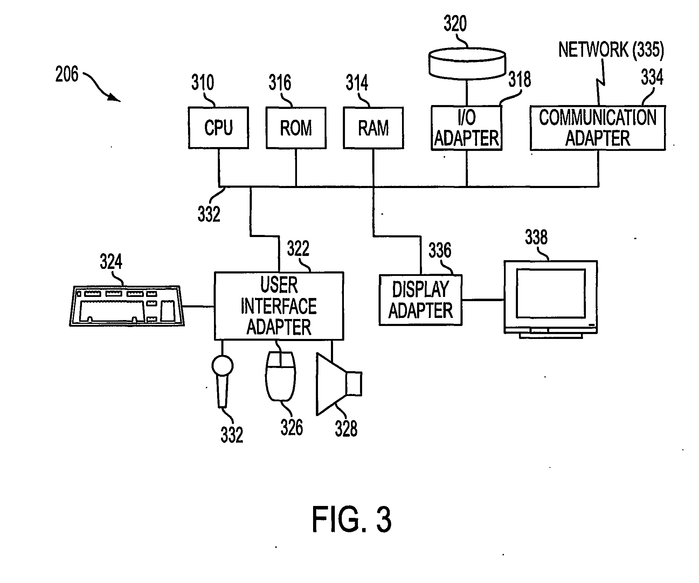

A preferred embodiment of a client computer system **206** in accordance with the present invention is preferably practiced in the context of a personal computer such as an IBM compatible personal computer, Apple Macintosh computer or UNIX based workstation. A representative hardware environment is depicted in Figure 3, which illustrates a typical hardware configuration of a client computer **206** in accordance with a preferred embodiment having a central processing unit **310,** such as a microprocessor, and a number of other units interconnected via a system bus **312.** The workstation shown in Figure 3 includes a Random Access Memory (RAM) **314,** Read Only Memory (ROM) **316,** an I/O adapter **318** for connecting peripheral devices such as disk storage units **320** to the bus **312,** a user interface adapter **322** for connecting a keyboard **324,** a mouse **326,** a speaker **328,** a microphone **332,** and/or other user interface devices such as a touch screen (not shown) to the bus **312,** communication adapter **334** for connecting the workstation to a communication network (e.g., a data processing network) and a display adapter **336** for connecting the bus **312** to a display device **338.** The workstation typically has resident thereon an operating system such as the Microsoft Windows NT or Windows/95 Operating System (OS), the IBM OS/2 operating system, the MAC OS, or UNIX operating system. Those skilled in the art will appreciate that the present invention may also be implemented on platforms and operating systems other than those mentioned.

A preferred embodiment is written using JAVA, C, and the C++ language and utilizes object oriented programming methodology. Object oriented programming (OOP) has become increasingly used to develop complex applications. As OOP moves toward the mainstream of software design and development, various software solutions require adaptation to make use of the benefits of OOP. A need exists for these principles of OOP to be applied to a messaging interface of an electronic messaging system such that a set of OOP classes and objects for the messaging interface can be provided.

OOP is a process of developing computer software using objects, including the steps of analyzing the problem, designing the system, and constructing the program. An object is a software package that contains both data and a collection of related structures and procedures. Since it contains both data and a collection of structures and procedures, it can be visualized as a self-sufficient component that does not require other additional structures, procedures or data to perform its specific task. OOP, therefore, views a computer program as a collection of largely autonomous components, called objects, each of which is responsible for a specific task. This concept of packaging data, structures, and procedures together in one component or module is called encapsulation.

In general, OOP components are reusable software modules which present an interface that conforms to an object model and which are accessed at run-time through a component integration architecture. A component integration architecture is a set of architecture mechanisms which allow software modules in different process spaces to utilize each others capabilities or functions. This is generally done by assuming a common component object model on which to build the architecture. It is worthwhile to differentiate between an object and a class of objects at this point. An object is a single instance of the class of objects, which is often just called a class. A class of objects can be viewed as a blueprint, from which many objects can be formed.

OOP allows the programmer to create an object that is a part of another object. For example, the object representing a piston engine is said to have a composition-relationship with the object representing a piston. In reality, a piston engine comprises a piston, valves and many other components; the fact that a piston is an element of a piston engine can be logically and semantically represented in OOP by two objects.

OOP also allows creation of an object that "depends from" another object. If there are two objects, one representing a piston engine and the other representing a piston engine wherein the piston is made of ceramic, then the relationship between the two objects is not that of composition. A ceramic piston engine does not make up a piston engine. Rather it is merely one kind of piston engine that has one more limitation than the piston engine; its piston is made of ceramic. In this case, the object representing the ceramic piston engine is called a derived object, and it inherits all of the aspects of the object representing the piston engine and adds further limitation or detail to it. The object representing the ceramic piston engine "depends from" the object representing the piston engine. The relationship between these objects is called inheritance.

When the object or class representing the ceramic piston engine inherits all of the aspects of the objects representing the piston engine, it inherits the thermal characteristics of a standard piston defined in the piston engine class. However, the ceramic piston engine object overrides these ceramic specific thermal characteristics, which are typically different from those associated with a metal piston. It skips over the original and uses new functions related to ceramic pistons. Different kinds of piston engines have different characteristics, but may have the same underlying functions associated with it (e.g., how many pistons in the engine, ignition sequences, lubrication, etc.). To access each of these functions in any piston engine object, a programmer would call the same functions with the same names, but each type of piston engine may have different/overriding implementations of functions behind the same name. This ability to hide different implementations of a function behind the same name is called polymorphism and it greatly simplifies communication among objects.

With the concepts of composition-relationship, encapsulation, inheritance and polymorphism, an object can represent just about anything in the real world. In fact, one's logical perception of the reality is the only limit on determining the kinds of things that can become objects in object-oriented software. Some typical categories are as follows:
- Objects can represent physical objects, such as automobiles in a traffic-flow simulation, electrical components in a circuit-design program, countries in an economics model, or aircraft in an air-traffic-control system.
- Objects can represent elements of the computer-user environment such as windows, menus or graphics objects.
- An object can represent an inventory, such as a personnel file or a table of the latitudes and longitudes of cities.
- An object can represent user-defined data types such as time, angles, and complex numbers, or points on the plane.

With this enormous capability of an object to represent just about any logically separable matters, OOP allows the software developer to design and implement a computer program that is a model of some aspects of reality, whether that reality is a physical entity, a process, a system, or a composition of matter. Since the object can represent anything, the software developer can create an object which can be used as a component in a larger software project in the future.

If 90% of a new OOP software program consists of proven, existing components made from preexisting reusable objects, then only the remaining 10% of the new software project has to be written and tested from scratch. Since 90% already came from an inventory of extensively tested reusable objects, the potential domain from which an error could originate is 10% of the program. As a result, OOP enables software developers to build objects out of other, previously built objects.

This process closely resembles complex machinery being built out of assemblies and subassemblies. OOP technology, therefore, makes software engineering more like hardware engineering in that software is built from existing components, which are available to the developer as objects. All this adds up to an improved quality of the software as well as an increased speed of its development.

Programming languages are beginning to fully support the OOP principles, such as encapsulation, inheritance, polymorphism, and composition-relationship. With the advent of the C++ language, many commercial software developers have embraced OOP. C++ is an OOP language that offers a fast, machine-executable code. Furthermore, C++ is suitable for both commercial-application and systems-programming projects. For now, C++ appears to be the most popular choice among many OOP programmers, but there is a host of other OOP languages, such as Smalltalk, Common Lisp Object System (CLOS), and Eiffel. Additionally, OOP capabilities are being added to more traditional popular computer programming languages such as Pascal.

The benefits of object classes can be summarized, as follows:
- Objects and their corresponding classes break down complex programming problems into many smaller, simpler problems.
- Encapsulation enforces data abstraction through the organization of data into small, independent objects that can communicate with each other. Encapsulation protects the data in an object from accidental damage, but allows other objects to interact with mat data by calling the object's member functions and structures.
- Subclassing and inheritance make it possible to extend and modify objects through deriving new kinds of objects from the standard classes available in the system. Thus, new capabilities are created without having to start from scratch.
- Polymorphism and multiple inheritance make it possible for different programmers to mix and match characteristics of many different classes and create specialized objects that can still work with related objects in predictable ways.
- Class hierarchies and containment hierarchies provide a flexible mechanism for modeling real-world objects and the relationships among them.
- Libraries of reusable classes are useful in many situations, but they also have some limitations. For example:

- Complexity. In a complex system, the class hierarchies for related classes can become extremely confusing, with many dozens or even hundreds of classes.
- Flow of control. A program written with the aid of class libraries is still responsible for the flow of control (i.e., it must control the interactions among all the objects created from a particular library). The programmer has to decide which functions to call at what times for which kinds of objects.
- Duplication of effort. Although class libraries allow programmers to use and reuse many small pieces of code, each programmer puts those pieces together in a different way. Two different programmers can use the same set of class libraries to write two programs that do exactly the same thing but whose internal structure (i.e., design) may be quite different, depending on hundreds of small decisions each programmer makes along the way. Inevitably, similar pieces of code end up doing similar things in slightly different ways and do not work as well together as they should.

Class libraries are very flexible. As programs grow more complex, more programmers are forced to reinvent basic solutions to basic problems over and over again. A relatively new extension of the class library concept is to have a framework of class libraries. This framework is more complex and consists of significant collections of collaborating classes that capture both the small scale patterns and major mechanisms that implement the common requirements and design in a specific application domain. They were first developed to free application programmers from the chores involved in displaying menus, windows, dialog boxes, and other standard user interface elements for personal computers.

Frameworks also represent a change in the way programmers think about the interaction between the code they write and code written by others. In the early days of procedural programming, the programmer called libraries provided by the operating system to perform certain tasks, but basically the program executed down the page from start to finish, and the programmer was solely responsible for the flow of control. This was appropriate for printing out paychecks, calculating a mathematical table, or solving other problems with a program that executed in just one way.

The development of graphical user interfaces began to turn this procedural programming arrangement inside out. These interfaces allow the user, rather than program logic, to drive the program and decide when certain actions should be performed. Today, most personal computer software accomplishes this by means of an event loop which monitors the mouse, keyboard, and other sources of external events and calls the appropriate parts of the programmer's code according to actions that the user performs. The programmer no longer determines the order in which events occur. Instead, a program is divided into separate pieces that are called at unpredictable times and in an unpredictable order. By relinquishing control in this way to users, the developer creates a program that is much easier to use. Nevertheless, individual pieces of the program written by the developer still call libraries provided by the operating system to accomplish certain tasks, and the programmer must still determine the flow of control within each piece after it's called by the event loop. Application code still "sits on top of" the system.

Even event loop programs require programmers to write a lot of code that should not need to be written separately for every application. The concept of an application framework carries the event loop concept further. Instead of dealing with all the nuts and bolts of constructing basic menus, windows, and dialog boxes and then making these things all work together, programmers using application frameworks start with working application code and basic user interface elements in place. Subsequently, they build from there by replacing some of the generic capabilities of the framework with the specific capabilities of the intended application.

Application frameworks reduce the total amount of code that a programmer has to write from scratch. However, because the framework is really a generic application that displays windows, supports copy and paste, and so on, the programmer can also relinquish control to a greater degree than event loop programs permit: The framework code takes care of almost all event handling and flow of control, and the programmer's code is called only when the framework needs it (e.g., to create or manipulate a proprietary data structure).

A programmer writing a framework program not only relinquishes control to the user (as is also true for event loop programs), but also relinquishes the detailed flow of control within the program to the framework. This approach allows the creation of more complex systems that work together in interesting ways, as opposed to isolated programs, having custom code, being created over and over again for similar problems.

Thus, as is explained above, a framework basically is a collection of cooperating classes that make up a reusable design solution for a given problem domain. It typically includes objects that provide default behavior (e.g., for menus and windows), and programmers use it by inheriting some of that default behavior and overriding other behavior so that the framework calls application code at the appropriate times.

There are three main differences between frameworks and class libraries:
- Behavior versus protocol. Class libraries are essentially collections of behaviors that you can call when you want those individual behaviors in your program. A framework, on the other hand, provides not only behavior but also the protocol or set of rules that govern the ways in which behaviors can be combined, including rules for what a programmer is supposed to provide versus what the framework provides.
- Call versus override. With a class library, the code the programmer instantiates objects and calls their member functions. It's possible to instantiate and call objects in the same way with a framework (i.e., to treat the framework as a class library), but to take full advantage of a framework's reusable design, a programmer typically writes code that overrides and is called by the framework. The framework manages the flow of control among its objects. Writing a program involves dividing responsibilities among the various pieces of software that are called by the framework rather than specifying how the different pieces should work together.
- Implementation versus design. With class libraries, programmers reuse only implementations, whereas with frameworks, they reuse design. A framework embodies the way a family of related programs or pieces of software work. It represents a generic design solution that can be adapted to a variety of specific problems in a given domain. For example, a single framework can embody the way a user interface works, even though two different user interfaces created with the same framework might solve quite different interface problems.

Thus, through the development of frameworks for solutions to various problems and programming tasks, significant reductions in the design and development effort for software can be achieved. A preferred embodiment of the invention utilizes HyperText Markup Language (HTML) to implement documents on the Internet together with a general-purpose secure communication protocol for a transport medium between the client and the Newco. HTTP or other protocols could be readily substituted for HTML without undue experimentation. Information on these products is available in T. Berners-Lee, D. Connoly, "RFC 1866: Hypertext Markup Language - 2.0" (Nov. 1995); and R. Fielding, H, Frystyk, T. Berners-Lee, J. Gettys and J.C. Mogul, "Hypertext Transfer Protocol - HTTP/1.1: HTTP Working Group Internet Draft" (May 2, 1996). HTML is a simple data format used to create hypertext documents that are portable from one platform to another. HTML documents are SGML documents with generic semantics that are appropriate for representing information from a wide range of domains. HTML has been in use by the World-Wide Web global information initiative since 1990. HTML is an application of ISO Standard 8879; 1986 Information Processing Text and Office Systems; Standard Generalized Markup Language (SGML).

To date, Web development tools have been limited in their ability to create dynamic Web applications which span from client to server and interoperate with existing computing resources. Until recently, HTML has been the dominant technology used in development of Web-based solutions. However, HTML has proven to be inadequate in the following areas:
- Poor performance;
- Restricted user interface capabilities;
- Can only produce static Web pages;
- Lack of interoperability with existing applications and data; and
- Inability to scale.

Sun Microsystem's Java language solves many of the client-side problems by:
- Improving performance on the client side;
- Enabling the creation of dynamic, real-time Web applications; and
- Providing the ability to create a wide variety of user interface components.

With Java, developers can create robust User Interface (UI) components. Custom "widgets" (e.g., real-time stock tickers, animated icons, etc.) can be created, and client-side performance is improved. Unlike HTML, Java supports the notion of client-side validation, offloading appropriate processing onto the client for improved performance. Dynamic, real-time Web pages can be created. Using the above-mentioned custom UI components, dynamic Web pages can also be created.

Sun's Java language has emerged as an industry-recognized language for "programming the Internet." Sun defines Java as: "a simple, object-oriented, distributed, interpreted, robust, secure, architecture-neutral, portable, high-performance, multithreaded, dynamic, buzzword-compliant, general-purpose programming language. Java supports programming for the Internet in the form of platform-independent Java applets." Java applets are small, specialized applications that comply with Sun's Java Application Programming Interface (API) allowing developers to add "interactive content" to Web documents (e.g., simple animations, page adornments, basic games, etc.). Applets execute within a Java-compatible browser (e.g., Netscape Navigator) by copying code from the server to client. From a language standpoint, Java's core feature set is based on C++. Sun's Java literature states that Java is basically, "C++ with extensions from Objective C for more dynamic method resolution."

Another technology that provides similar function to JAVA is provided by Microsoft and ActiveX Technologies, to give developers and Web designers wherewithal to build dynamic content for the Internet and personal computers. ActiveX includes tools for developing animation, 3-D virtual reality, video and other multimedia content. The tools use Internet standards, work on multiple platforms, and are being supported by over 100 companies. The group's building blocks are called ActiveX Controls, small, fast components that enable developers to embed parts of software in hypertext markup language (HTML) pages. ActiveX Controls work with a variety of programming languages including Microsoft Visual C++, Borland Delphi, Microsoft Visual Basic programming system and, in the future, Microsoft's development tool for Java, code named "Jakarta." ActiveX Technologies also includes ActiveX Server Framework, allowing developers to create server applications. One of ordinary skill in the art readily recognizes that ActiveX could be substituted for JAVA without undue experimentation to practice the invention.

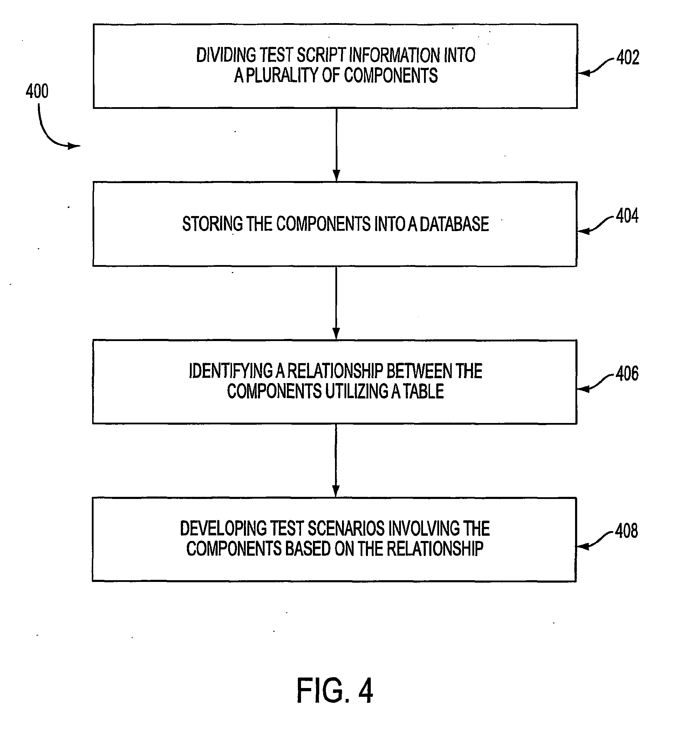

Figure **4** is a flowchart illustrating a method **400** for affording a table-driven automated scripting architecture in accordance with one embodiment of the present invention. First, in operation **402,** test script information is divided into a plurality of components. Then, in operation **404** the components are stored into a database. A relationship between the components is identified using a table, as indicated in operation **406.** Test scenarios involving the components are then developed based on the relationship. See operation **408.**

In one aspect of the present invention, the test script information relates to at least one of either steps and/or actions. The test scenarios are typically data-driven. In addition, the test scenarios may be developed using an English-based interface. As an option, the interface may be accessed utilizing a network. Also optionally, the architecture is a two-tier architecture.

The table-driven architecture inherent within the present invention is what makes it such a unique innovation. This feature provides benefits such as simplified test script development and maintenance, inherent GUI testing Best Practices, and reduced training time via English-based GUI interface. The table-driven architecture further allows the capability to quickly load data, flexible test cycle planning, real-time and statistical test status reporting, and essentially 100% test script execution accuracy.

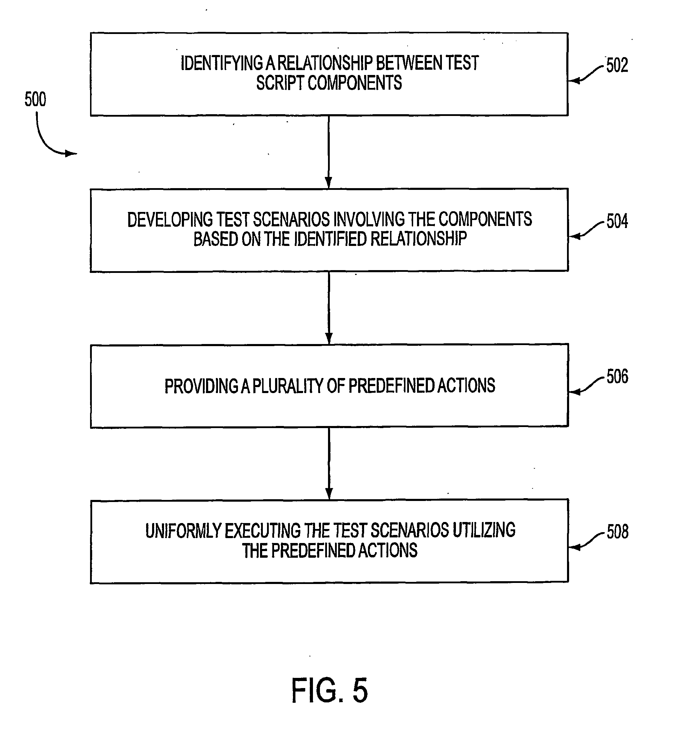

Figure **5** is a flowchart illustrating a method **500** for affording improved accuracy in an automated scripting framework in accordance with one embodiment of the present invention. First, in operation **502,** a relationship is identified between test script components. Next, in operation **504,** test scenarios involving the components are developed based on the identified relationship. A plurality of predefined actions are then provided as indicated in operation **506.** The test scenarios are then uniformly executed utilizing the predefined actions. See operation **508.**
In one aspect of the present invention, the cause of errors raised while executing the test scenarios is analyzed. In another aspect, the test scenarios are data-driven. Optionally, the test scenarios may be developed using an English-based interface. Also optionally, the interface may be accessed utilizing a network.
Execution of scripts by hand is plagued by error (skipped steps, misread script, etc.) Script automation has the inherent advantage of consistency. Uniform execution provides value to the testing effort. To that end, the present invention's predefined suite of standard actions ensures that every user-widget interaction is executed consistently. Other advantages of this consistency include issue identification/cause analysis and issue recreation.

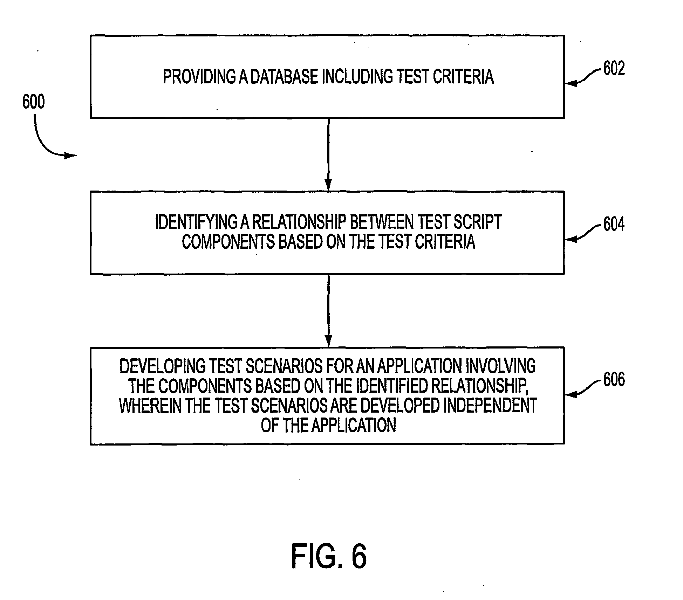

Figure **6** is a flowchart illustrating a method **600** for affording application independence in an automated scripting framework, in accordance with one aspect of the present invention. In an initial operation **602,** a database including test criteria is provided. Then, in operation **604,** a relationship between test script components is identified based on the test criteria. Test scenarios for an application involving the components are then developed independent of the application based on the identified relationship as indicated in operation **606.**

In one embodiment of the present invention the test criteria is business rules. Optionally, the test criteria may be test conditions.

In another embodiment of the present invention, the test scenarios are stored for delayed execution. The test scenarios may be data-driven. In addition, the test scenarios may be developed using an English-based interface. Further, the framework may utilize a two-tier architecture.

Conventional automated testing software requires the host application to be running while the user is creating each test script. In the instance where the host application is malfunctioning or has not yet been developed, test scripts may still be developed in the present invention, without the application, in accordance with system requirements. The scripts may be executed at a later date when the host application has been completed and/or is functioning normally.

The present invention scripts can be executed with minimal knowledge of application functionality, testing experience and supervision. The tool itself is English-driven and the business rules and test conditions for the application are retained in the present invention, not the user.

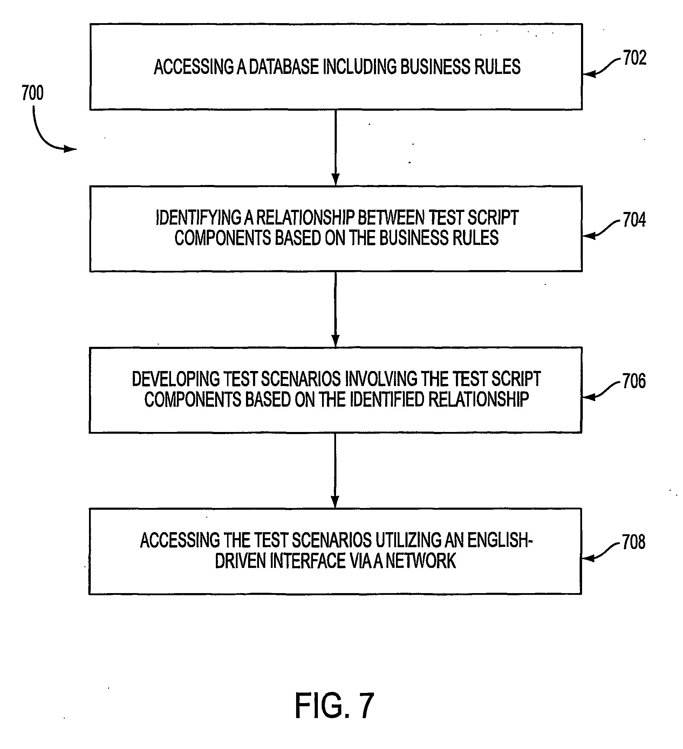

Figure 7 is a flowchart illustrating a method **700** for affording test development in an automated scripting framework, in accordance with an embodiment of the present invention. First, in operation **702,** a database including business rules is accessed. Next, in operation **704,** a relationship between test script components is identified based on the business rules. As shown in operation **706,** test scenarios involving the test script components are then developed based on the identified relationship. The test scenarios are accessed utilizing an English-driven interface via a network. See operation **708**

In one aspect of the present invention, the test scenarios are data-driven. Optionally, the test scenarios may be developed using the English-driven interface. Also optionally, the interface is accessed utilizing a network. Further, the framework may utilize a two-tier architecture.

With the present invention, the creation of automated test scripts no longer requires recording or coding. Using the form-driven, english-based interface is intuitive, providing ease of use, simplified training, reduced learning curve and increased productivity.

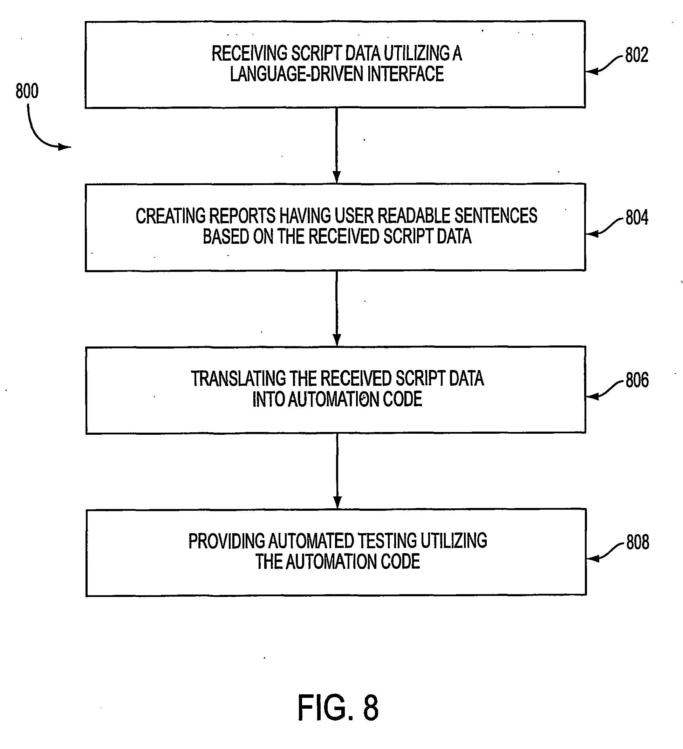

Figure **8** is a flowchart illustrating a method **800** for affording synchronization in an automated scripting framework, in accordance with an aspect of the present invention. First, in operation **802,** script data is received utilizing a language-driven interface. Then, in operation **804,** reports having user readable sentences are created based on the received script data. The received script data is then translated into automation code as indicated in operation **806.** In operation **808,** automated testing is provided utilizing the automation code.
In one embodiment of the present invention, the reports are created as hard copies. Optionally, the received script data is translated into automation code using relational table values. In another embodiment, the script data may be divided into a plurality of components stored in a database. Further, the database may reside on a remote server.

The present invention scripts have the distinct advantage of simultaneously being both paper-based and automation-ready at all times. Once script data is entered in the tool, pre-defined reports present the data as readable sentences while relational table values translate the data into automation code.

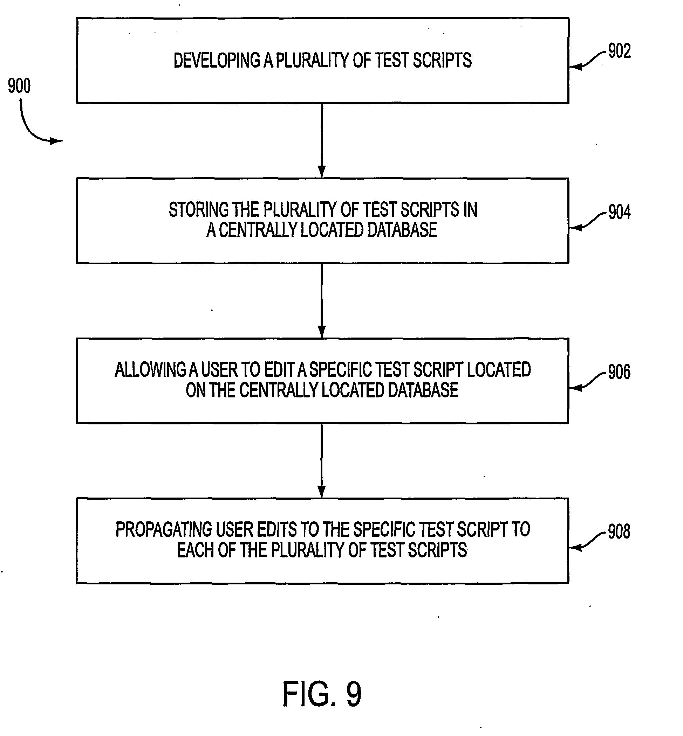

Figure **9** is a flowchart illustrating a method **900** for affording test maintenance in an automated scripting framework in accordance with an embodiment of the present invention. In an initial operation **902,** a plurality of test scripts are developed. Next, in operation **904,** the plurality of test scripts are stored in a centrally located database. A user is then allowed to edit a specific test script located on the centrally located database as indicated in operation **906.** The user edits the specific test script are then propagated to each of the plurality of test scripts, in operation **908.**

In one aspect of the present invention, the user edits to the specific test script are propagated to each of the plurality of test scripts simultaneously. In another aspect, the plurality of test scripts are utilized to develop test scenarios.

In an embodiment of the present invention, the test scenarios are developed using an English-based interface. In another embodiment, the interface is accessed utilizing a network. In a further embodiment, the framework utilizes a two-tier architecture.

The present invention's relational database architecture significantly simplifies and reduces script maintenance. Edits are propagated instantly to all scripts. Also, all data is centrally located and easily created/edited.

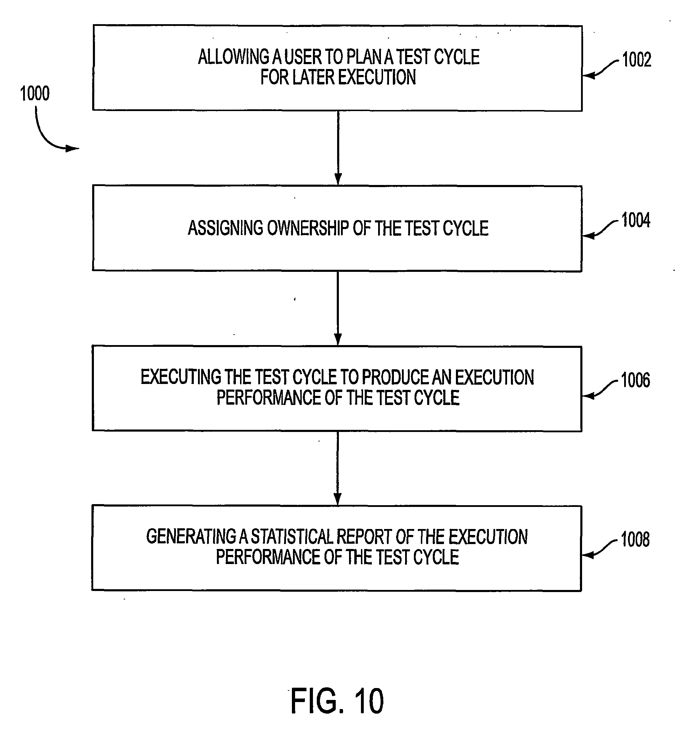

Figure **10** is a flowchart illustrating a method **1000** for affording metrics in an automated scripting framework, in accordance with an embodiment of the present invention. First, in operation **1002,** a user is allowed to plan a test cycle for later execution. Next, in operation **1004,** ownership of the test cycle is assigned. The test cycle is then executed to produce an execution performance of the test cycle, as shown in operation **1006.** A statistical report of the execution performance of the test cycle is generated. See operation **1008.**

In one aspect of the present invention, the statistical report is generated after the test cycle is executed. In another aspect, the statistical report is generated real-time during execution of the test cycle.

In one embodiment of the present invention, the statistical report is generated as a word processor document. Optionally, the statistical report may be generated as an HTML file. Also optionally, the statistical report is displayed on a computer display device.

The Resources eCommerce Technology Architecture (ReTA) is a solution that allows the use of packaged components to be integrated into a client based eCommerce solution. Before the present invention, the Resources architecture offerings provided services that supported the construction, execution and operation of very large custom built solutions. In the last few years, client needs have shifted towards requirements for solutions that continually integrate well with third party applications (i.e., data warehouse and portion of the present description management systems). Previous engagements have proven that it is difficult to integrate these applications into a new solution. As application vendors continue to produce new releases that incorporate technical advancements, it is even more difficult to ensure that these integrated applications continue to work with a given solution.

The ReTA approach to constructing, executing and operating a solution emphasizes the ability to change solution components with minimal impact on the solution as a whole. From this approach, ReTA views third party applications as another component in the overall solution. ReTA is component based, which means the engagement can choose to take only the pieces it needs to meet its specific business requirements. ReTA is especially suited to building small applications, implementing tools and packages, integrating applications and web enabling applications.

The present invention provides the ability to generate statistical reports of past execution performance, plan and assign ownership of future test cycles, and conduct real-time status reporting during test execution. These reports can also be output as various media, including MS Word and HTML.

Automated execution of application tests using the present invention is much faster than manual execution. Additionally, manual script execution is tedious, labor-intensive and prone to error. With the present invention, clicking, typing, etc. are executed at a rate of approximately one second per step.

The present invention further provides the ability to generate statistical reports of past execution performance, plan and assign ownership of future test cycles, and conduct real-time status reporting during test execution.

In one embodiment, the present invention is application software, written in a programming language such asVBA 6.0, which works cooperatively with Mercury Interactive's WinRunner to perform its automated testing function.

### Site Server Framework Execution Architecture

To connect to a Site Server, a COM component (UserSS) is used to make calls to Site Server's API. The ReTA UserSS component allows the developer to access Site Server's Personalization and Membership Services without any knowledge of Site Server's API.

In a Site Server framework architecture, the UserSS COM component connects to the Site Server. The UserSS component uses Site Server's Personalization and Membership; UserSS also performs security as well on a Commerce Site. The ReTA framework uses the UserSS layer to provide access to Site Server. The UserSS layer provides the following benefits:
- It insulates the application developer from Site Server's API.
- It provides functionality for using Site Server's Personalization and Membership Services.

### Site Server Framework Development Architecture

### UserSS Interface Methods

The UserSS component interfaces with the SiteServer personalization and membership services. This component uses SiteServer to handle the user security, role and preferences.

### Methods

The IAFUser, IAFLTserPreferences, and IAFUserRole interfaces define the access to the AFUserSS component. These interfaces support the following methods:

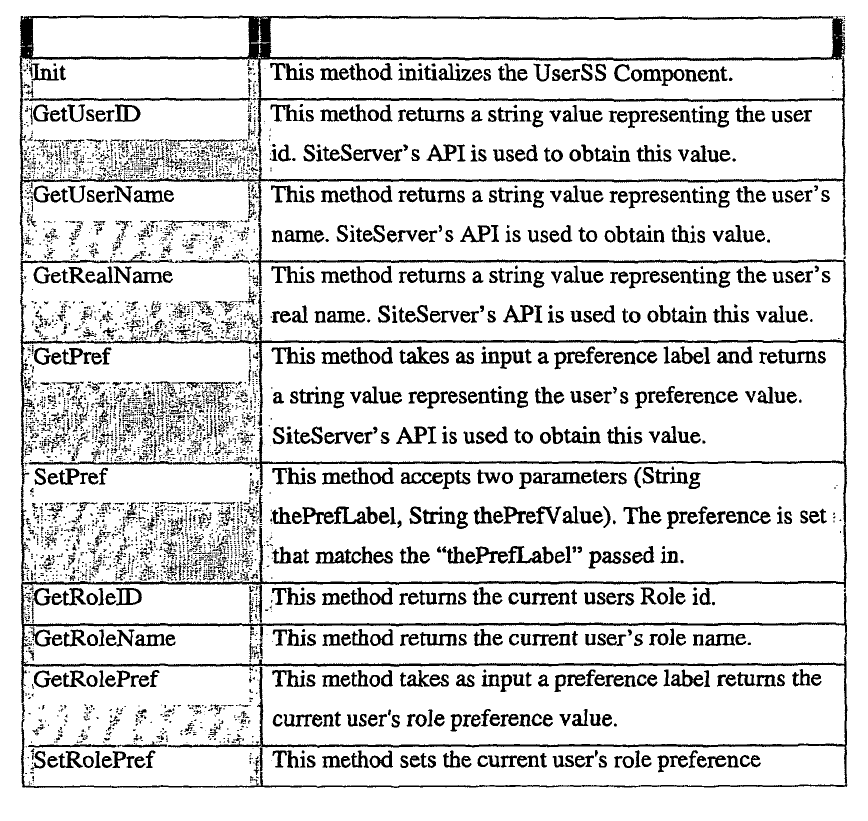

### Site Server Personalization and Membership/ Directory Membership Manager

This portion of the description describes the required settings in Site Server Commerce Edition used by the ReTA frameworks. This portion of the description also describes the steps involved in creating the required settings.

### ReTA Required Settings

The Membership Directory Manager is used to manage administration and access control for Membership Directory objects, including users and groups, and schema objects. The Membership Directory stores objects used by all Site Server features.

The ReTA UserSS framework requires schema objects to be created. The schema objects required by the ReTA Frameworks are: **Roles** container, **RoleName** attribute, **username** attribute, **webUserId** attribute, and a **Role** class.

### Required Container, Class, and Attribute Setup Instructions

Users may have different roles within the system. In Site Server ReTA takes advantage of this by creating a Container "Roles" that contains different "Roles" or different objects of the class "Role". These "Roles" have attributes such as a default start page. Therefore different "Roles" (different objects of the class "Role") such as "Operator" or "Customer" may both have a default start page attribute that may point to different URL's.

The Site Server portion of the present description details how to setup a Container, Class, and Attributes. The following lists the steps involved to setup the required attributes for the ReTA Frameworks to integrate with Site Server.

### Using the Site Server Console, right click on the Membership Directory Manager folder.

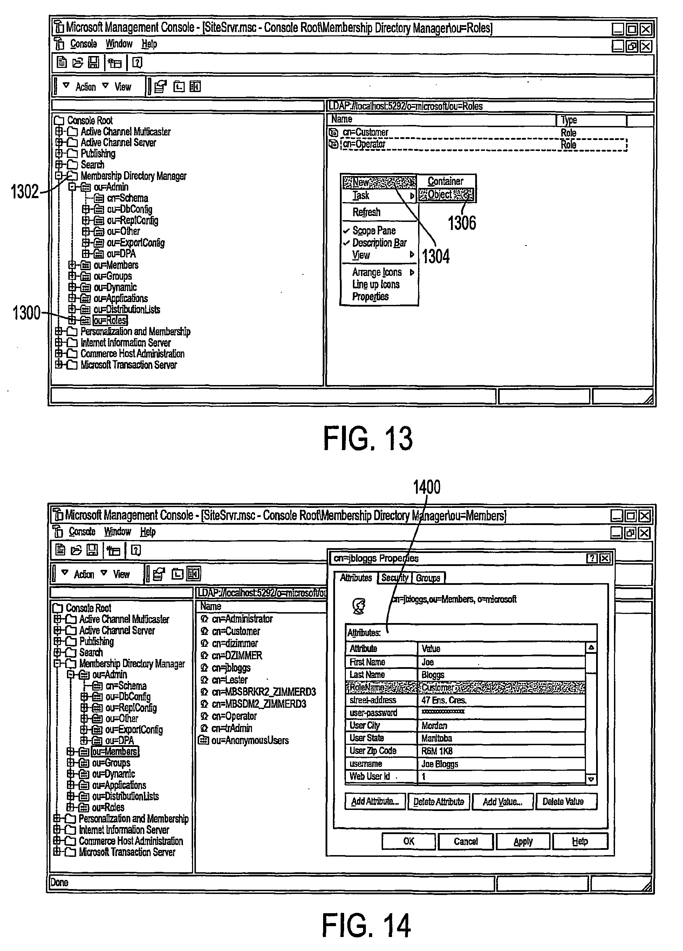

- Select New - Container, then type in **Roles** for the Container name.

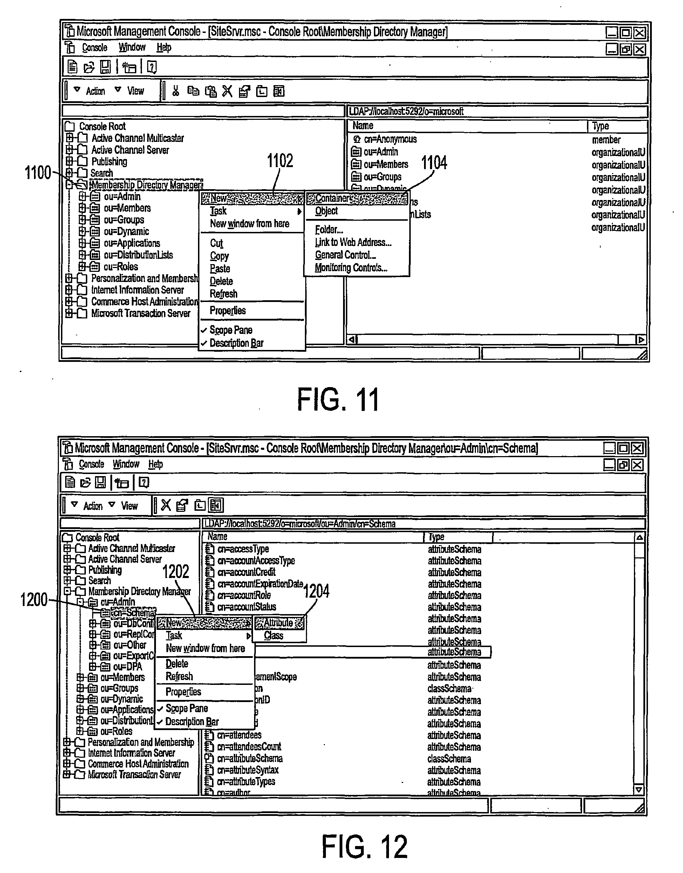

- Figure **11** illustrates the creating of Container "Roles". Right click on Membership Directory Manager **1100** and select New **1102 -** Container **1104.** After creating the Container "Roles", create the attribute "DefaultStartPage", "username", webUserId", and "RoleName" in the Schema. To create these attributes expand the Admin Container under the Membership Directory Manager.
- Right click on the Schema folder **1200** and select New **1202 -** Attribute **1204** (See Figure **12**)
- Define the class "Role" the same way by right clicking on Schema and selecting New - Class.
- Select the "common-name" as a required attribute, also select the "DefaultStartPage" as an attribute but do not make it required.
- Create the Roles for our Application, "Operator" and "Customer".
- See Figure **13****,** which illustrates the adding of different Roles. Right click the Roles Container **1300** under the Membership Directory Manager folder **1302.** Select New **1304** - Object **1306,** select "Role" for the class of object to create, type the name of the object i.e. "Operator", add the attribute "DefaultStartPage" by clicking Add Attribute button and enter the URL.
- Once these have been created, a member of the system can be assigned to a "Role" and the ReTA Framework required attributes can be added to the user. Figure **14** illustrates an example showing the attributes **1400** of member "Joe Bloggs" (Note RoleName).

### EVENT HANDLER FRAMEWORK DESIGN

Figure **15** illustrates a method **1500** for handling events in a system. In operation **1502,** an event which includes metadata is recognized. Next, in operation **1504,** the metadata of the event is read and, in operation **1506** a table look-up is performed for information relating to the event based on the metadata. The information includes a severity of the event and further information such as a type of the event, and a location where the event occurred. In operation **1508,** a message is displayed either in-line in a currently depicted display or in a separate display based on the severity of the event.

Optionally, the event may additionally be indicated to components of the system other than the component in which the event occurred. The type of the event may be a database error, an architecture error, a security error, and/or an application error. Further the location of the event may be at least one of a method and an object where the event occurred. Also, the information may further relate to a code associated with the event.

The message may include the information relating to the event. In additionally, the message may also include a time during which the event occurred. Further, the message may include a string altered based on a user profile. The following material provides a more detailed description of the above-described method.

This portion of the present description details the ReTA Event Handler framework design from the perspective of the application developer. The role of this framework is to provide services to manage the informational, warning and error events that an application may raise. These services include:
- Presenting the user with an understandable event explanation.
- Informing other Components when errors happen (for example to restore transactional data to a consistent state) using a Publish/Subscribe mechanism.
- Logging informational, warning and error event messages.

The Event Handler uses an Event Reference meta-data database table to maintain information about the types of events in an application and the policy for dealing with them. This gives a flexible approach and the event messages, the severity and other policies for the events can be changed during operations.

### Phase 2 - Event Handler Enhancements

For phase 2, Event Handler consists of the following enhancements:
- The Event Handler framework is componentized. It no longer maintains references to any of the other framework components. Internally, the Event Handler continues to use the persistence light framework to log events to the database.
- As in phase 1, it can be used as a Session level component. As an enhancement for phase 2, the Event Handler framework can be used as a stateless page level component. This means that a new instance of the component is created at the beginning of each ASP page and is released at the end of each page.
- The Event Handler framework no longer requires Event Collection components as parameters to implement event handling, which only allowed handling events at the page level. In phase 2, the new method "processSingleEvent" takes the parameters of a single event as its input, which enables handling events at the occurrence of the event.
- As in phase 1, The Event Handler can format error descriptions in HTML. As an enhancement for phase 2, the Event Handler can return the error message as a string and enables the application to implement client specific formatting (HTML or other).
- The process event method no longer calls the ASP redirect method. Instead, it returns the severity level code. On return, the application logic determines whether to redirect to the error page or display the error in-line in the current page.
- The Translator is no longer a separate component. Instead, it is a Java class inside the Event Handler component.

### Event Handler Framework

### Description

With reference to Figure **15****.****1****,** the ReTA Event Handler Framework **1530** manages the informational, warning and error events that an application raises. The following describes the ReTA event handling sequence:
*1) The event(s) occurs*
   - When an event occurs the following event information is recorded:
      o *event type (defined in database Event Reference table), for example:*
         ■ database error
         ■ security error
         ■ architecture error
         ■ application error
      o *event location:*
         ■ method and object name where the event occurred
      o *event code (sub-type):*
         ■ SQL error code,
         ■ application error code - mapped to a unique description in the database
         ■ architecture error code - mapped to a unique description in the database
      o event context:
         ■ Any relevant information about when the event occurred stored in a tagged
         ■ name value pair format. Eg. [OrderNumber=1][Description="Repeat Order"]
   - If the event occurs within a Java class inside a COM object, use the Java exception mechanism by throwing an AFEventException. If the exception occurs elsewhere, call the add method on the Event Collection passing the event information.
   - Each method defining a COM component interface captures these event exceptions and either adds them to an Event Collection component or directly calls a method on the Event Handler component.
   - Events are processed from the ASP page by calling the process method of the Event Handler. Events can also processed from the point where the event occurred by calling the "processSingleEvent" method of the Event Handler.
2) The Event Handler processes the event(s):
   - For each event, set the user id and current page
   - For each event, retrieve the event severity from the event handler's "translator" class. This class caches in memory all event descriptions and severity levels retrieved from the event reference database table.
   - Add the events to the Event Handler context.
   - Implement the persistence policy on the events - events are logged in a batch.
   - Return the severity of the most severe event to the caller. The caller is responsible for either redirecting to the error page or displaying the event in-line in the Current Page.
3) Display the event:
   - Use the Event Handler component to generate the error message. This message can contain context information describing when the event was created.
   - Create the HTML formatting and display the event message.
   - The Error Message is either displayed in-line in the current page or in a separate error page.
4) The Event Handler generates error display message:
   - Get the event with the highest severity level from its event context.
   - If the most severe event is "fatal", display the user description associated with the event. Broadcast a SESSION_ABORT message using the Publish/Subscribe mechanism. Any component that is interested in these events must implement the IAFEventListener interface and register with the Event Broadcaster component as interested. To do this they call the addListener method of the Event Handler component.
   - If the most severe event is "logical unit of work", display the user description associated with the event. Broadcast an ACTIVITY_ABORT message using the Publish/Subscribe mechanism.
   - If the most severe event is "warning", display the user description associated with the event.
   - Note: The user event descriptions are retrieved from the database either on session start or on demand and are cached by the Translator class. When generating the event description page, this description is requested from the Translator. Event descriptions can have embedded context parameters. When generating the event description page, the event handler replaces these parameters with their values specified when creating the event.

### Database Tables

The Event Handler uses two database tables: The T_AF_EventReference **1534** is a static table that describes the Event meta-data, giving the policies for each event type. The policies include:
- The message that is displayed to the user. These messages can contain data from the Context that is included when the event is generated.
- The severity of the event. The severity can be Information, Warning, Error and Fatal.
- Whether to persist the event in the database event log.
The T_AF_EventLog **1536** contains the log of the events that occurred. The following information is logged:
- Event type and Code
- The location where the event occurred. I.e. ASP, Object name and Method Name.
- The user that raised the event.
- The datestamp.
- The context information giving other information about what caused the event.

### Services

The Event Handler Framework provides the following services:

| | |
|---|---|
| | |
| *Register event* | Create event |
| | Maintain event reference |
| *Process event* | Information |
| | Warning |
| | Logical Unit of Work |
| | Fatal |
| *Display events* | Translate event |
| | Inform user |
| *Persist event* | Log event to database |

### Components and Classes

The Event Handler Framework implements these services through the following COM and Class objects:

| | |
|---|---|
| | |
| AFEventHandler | Handle events generated by the system |
| AFEventCollection | Contains a collection of events (AFEventException) |
| AFResult | Defines the result returned by a method execution. |
| | |
| AFEventException | Contains single event information. |
| AFEventReference | Contains event reference information from database table T_AF_EventReference |
| AFTranslator | Returns event reference information based on the event type and event code. |
| | *Note: multi-language translation functionality not implemented* |
| AFPersistableEvent | This is the persistable class containing the information for a single event. It is a sub-class of the Persistence PersistableObj class. The persistance mechanism can insert, delete, select and update objects of this class in the database. This class persists event information the T_AF_EventLog table. |

These components and classes are described in detailed in the following sub-portions of the description.

### AFEventHandler

The AFEventHandler component **1538** handles the events generated by the system. Depending on the severity level, the event handler may redirect the user to another ASP page and may abort the activity or session. The event handler also determines whether and when to log an event.

### Methods

The LAFEventHandler interface defines the access to the AFEventHandler component. This interface supports the following methods:

| | |
|---|---|
| | |
| PersistAllEvents | Persist all the events stored by the event handler to the database. |
| ProcessSingleEvent | Gather associated event information. Call the add method to persist the events in the event log. Return the event severity to the caller. This method is called either from the ASP page or from a Java class where the Event was trapped. |
| Process | Examine the events and gather associated event information. Call the add method to persist the events in the event log. Return the event severity of the most severe event to the caller. The application developer calls this method from an ASP page to check the events generated during the scripting logic execution. |
| Generate | Return generated HTML which describes the severity of the error, gives the target URL (depending on the severity - previous page, activity start page or home page) and an error log. The Event Handler page calls this method. |
| Initialize | The application developer can invoke this method to load all event descriptions in memory (normally used to speed access during user session). |
| GetErrorDescription | Return error message as a string, which describes the severity of the error. This allows the application to determine the HTML formatting used to display an error. |
| HasFatalError | If the event handler contains at least one fatal error, returns true. |

### AFEventCollection

The AFEventCollection component contains a collection of events.

### Methods

The IAFEventCollection interface defines the access to the AFEventCollection component. This interface supports the following methods:

| | |
|---|---|
| | |
| SpecifySubActivity | Attach the sub-activity to all events contained in the event collection. |
| GetSubActivity | Return the sub-activity attached to all events contained in the event collection. |
| Add | Add an event to the event collection. |
| Get | Return the requested event. |
| NumberOfEvents | Return the number of events in the collection. |
| Clear | Clear all the events from the collection. |

### AFResult

The AFResult component defines the result return by a method execution.

### Methods

The IAFResult interface defines the access to the AFResult component. This interface supports the following methods:

| | |
|---|---|
| | |
| GetResult | Return the result. |
| AddResult | Add a result. |
| AddResultString | Add the result as a string. |
| GetResultString | Return the result as a string. |

### AFTranslator

The AFTranslator class returns event reference information (based on the event type and event code.

### Methods

The AFTranslator class has the following methods:

| | |
|---|---|
| | |
| GetEventTranslation | Return the description for this event. |
| GetEventSeverity | Return the severity level for this event. |
| GetEventPersist | Return flag that defines whether to persist this event. |
| GetUserDescription | Return the user description for this event. This description is displayed to the user. |
| GetDescription | Return the description for this event. This description is user by the technical support team to analyze error. |
| Start | Initialize component. |

### AFEventException

The AFEventException class contains the event exception information and is added to the AFEventCollection component for processing by the AFEventHandler component.

### Methods

The following AFEventException class methods are important for the application developer to understand:

| | |
|---|---|
| | |
| AFEventException | Create the event exception class and populate it with |
| | *event type:* |
| | database error |
| | Java error |
| | security error |
| | architecture error |
| | application error |
| | *event location:* |
| | method and object name where the event occurred |
| | *event code (sub-type):* |
| | SQL error code, |
| | Application error code - mapped to a unique description in the database |
| | Architecture error code - mapped to a unique description in the database |
| | *event context:* |
| | value of specific object |
| AddToCollection | Add the current event to an event collection. |

### AFEventReference

The AFEventReference component 1540 contains the event reference information that is defined by the application through database table T_AF_EventReference. The architecture reads the event reference data into memory on session start.

**T_AF_EventReference:**

| | |
|---|---|
| | |
| Id | Unique id |
| Type | The event type |
| Code | The event code |
| SeverityLevel | The event severity level: |
| | 1 : Information |
| | 2 : Warning |
| | 3 : Abort the activity |
| | 4 : Fatal, close the session |
| Persist | 1: if the event should be persisted in the event log. |
| | 0 : if the event should not be persisted |
| Description | Event description showed to the operator |
| UserDescription | Event description shown to the user. This description can contain contextual information, which is specified by adding tag like [ParameterName] in the description. These tags are replaced by the event framework when displaying the event to the user. |
| Language | Language of the description. This may be used by the multi-language framework when developed. At this time, set to 'English'. |
| Context | Event context default value. |

### AFPersistableEvent

The AFPersistableEvent **1542** contains the event information captured during the application execution that is persisted to the database table T_AF_EVENTLOG.

**T_AF_ EVENTLOG:**

| | |
|---|---|
| Id | Unique id |
| Type | The event type |
| Code | The event code |
| SeverityLevel | The event severity level: |
| | 1: Information |
| | 2: Warning |
| | 3 : Abort the activity |
| | 4 : Fatal, close the session |
| SubActivityLeve 1 | Name of Sub Activity where event occurred. |
| MethodName | Name of class method where event occurred. |
| ObjectName | Name of class where event occurred. |
| ASP | Name of ASP page where event occurred. |
| Context | Event context default value. |
| UserID | ID of user logged in when event occurred. |
| LastUpdate | |

### USER FRAMEWORK DESIGN

Figure **16** depicts a method **1600** for managing user information. A site server is provided in operation **1602.** The side server has information stored on it including preferences, roles, and details relating to users. A database separate from the site server is provided in operation **1604.** The database has information stored thereon including preferences, roles, and details relating to the users. In operation **1606,** an identity of one of the users is authenticated. A single interface is displayed in operation **1608,** which provides the user access to both the site server and the database upon authentication of the identity of the user. In operation **1610,** the user is allowed to view and change the information that is stored on the site server and the database and that is associated with the user. The single interface is tailored in operation **1612** based on the information associated with the user.

The identity of the user may be authenticated by verifying a user name and a password, a secure sockets layer (SSL) certificate, and/or a log-in form. Further, the preferences relating to the users may include a currency in which monetary values are displayed and a language in which text is displayed. Also, the roles relating to the users may include a customer, a manager, and an employee. Additionally, the details of the users may include a user name and a legal name. The following material provides a more detailed description of the above-described method.

This portion of the present description details the ReTA User framework design from the perspective of the application developer. The primary role of this framework is to provide services that allow the application developer to maintain user preferences, roles and security.

In regards to security, the User framework provides User Authentication services through any of the standard Internet Information Server security methods:
- Username/Password sent in clear text.
- SSL Certificates
- Windows NT Challenge/Response (Intranet only)
- HTML Forms login (Site Server version only)

Once the user has been authenticated, the User framework provides services for accessing:
- User information - NT username, Real Name.
- User Preference information - For example Language, Currency (These are configurable)
- User Role information (e.g. Customer, Manager, Employee)
- User Role Preference information

There are two implementations of the User Component: One is database driven and the other interfaces with Site Server Personalization and Membership directory.

### User Framework

### Description

With reference to Figure **16****.****1****,** the User framework **1630** enables two approaches to maintaining user information. The framework supports two approaches by exposing a single set of interfaces that can be used by either of the two user framework components. With the AFUserSS component **1632,** the framework interfaces with the Microsoft Site Server products Personalization and Membership Directory. For this user component, SiteServer holds and manages user information. With the AFUserDB component **1634,** the framework interfaces with database tables. For this user component, database tables define the user information.

### Services

The User Framework provides the following services:

| | |
|---|---|
| | |
| *User Information Maintenance* | User Role |
| | User RoleName |
| | User Preferences |
| | User Role Preferences |
| | User Id |
| | User Name |
| | User RealName. |

### Components

The User Framework implements these services through the following COM objects:

| | |
|---|---|
| | |
| AFUserDB | User information maintained through the following database tables. |
| | T_AF_USERNAME, |
| | T_AF_USERPREFERENCES |
| | T_AF_USERROLES |
| AFUserSS | User information maintained through SiteServer. |

These components are described in detailed in the following sub-portions of the description.

### AFUserDB

The AFUserDB component holds the user role, preferences and details retrieved from the database. When created the user component retrieves the user NT login name, user details and constructs the user preference and user role objects.

### Methods

The IAFUser, IAFUserPreferences and IAFUserRole interfaces define the access to the AFUserDB component. These interfaces support the following methods:

| | |
|---|---|
| | |
| Init | This method retrieves the user's NT name, user details from the database, constructs the preference object and constructs user's role object. |
| GetUserID | Returns the user id. |
| GetUserName | Returns the user's NT account name. |
| GetReaIName | Returns the user's real name. |
| GetPref | Returns user's preference based on label passed to this method. |
| SetPref | This method sets the user's preference to the 2^{nd} parameter passed in. |
| GetRoleID | Returns the user's role ID. |
| GetRoleName | Returns the user's role name. |
| GetRolePref | Returns role preference. |
| SetRolePref | This method sets the current user's role preference |

### AFUserSS

The UserSS component interfaces with the SiteServer personalization and membership services. This component uses SiteServer to handle the user security, role and preferences.

### Methods

The IAFUser, IAFUserPreferences, and IAFUserRole interfaces define the access to the AFUserSS component. These interfaces support the following methods:

| | |
|---|---|
| | |
| Init | This method returns a zero integer. It is here for compatibility with the UserDB component. |
| GetUserID | This method returns a string value representing the user id. SiteServer's API is used to obtain this value. |
| GetUserName | This method returns a string value representing the user's name. SiteServer's API is used to obtain this value. |
| GetRealName | This method returns a string value representing the user's real name. SiteServer's API is used to obtain this value. |
| GetPref | This method returns a string value representing the user's preference. SiteServer's API is used to obtain this value. |
| SetPref | This method accepts two parameters (String thePrefLabel, String thePrefValue). The preference is set that matches the "thePrefLabel" passed in. |
| GetRoleID | This method returns the current user id. |
| GetRoleName | This method returns the current user's role name. |
| GetRolePref | This method returns the current user's role preference. |
| SetRolePref | This method sets the current user's role preference |

### PERSISTENCE FRAMEWORK DESIGN

Figure **17** illustrates a method **1700** for managing business objects in a system that includes a plurality of sub-activities which each include sub-activity logic adapted to generate an output based on an input received from a user upon execution, and a plurality of activities which each execute the sub-activities in a unique manner upon being selected for accomplishing a goal associated with the activity. First, in operation **1702,** an identifier and a reference to a business object are received from one of the sub-activities upon the execution thereof. In operation **1704,** a database is accessed and data from the database is retrieved based on the identifier. The business object is created and populated with the data retrieved from the database in operation **1706.**

The data may be stored on the database in tables. Further, the created business object may replace an existing business object. Additionally, the identifier may identify a customer and the business object may be a customer object. Also, a business object referenced by one of the sub-activities may be removed upon the execution thereof.

The business object may be a Visual Basic business object. In another aspect of the present invention, the business object may be a Java business object. The following material provides a more detailed description of the above-described method.

This portion of the present description details the ReTA Persistence framework design from the perspective of the application developer. The role of this framework is to provide services that interact with application database(s) to create, retrieve, update and delete business objects.

### Persistence Framework

### Description

The ReTA Persistence framework provides a transparent and flexible mapping of the business object attributes to relational database tables. To implement this "business object to database table" mapping, the framework is tightly integrated with all business objects. The framework exposes abstract methods that the application developer implements in the business objects. In contrast with the other ReTA frameworks, the Persistence framework is not implemented as a separate component. The Persistence framework is a set of local language classes available in Java or Visual Basic. Figure **17****.****1** shows a SubActivity component **1730** using the Persistence framework **1732** to retrieve a Customer Object **1734** from the Database.

### Services

The Persistence Framework provides the following services:

| | |
|---|---|
| | |
| *Database Connection* | Uncouple database connection from application |
| *Database mapping* | Map an object to a database table |
| *Object query* | Trigger queries on objects Easily iterate through the results |
| *Record locking* | Optimistic locking |
| *Encryption* | Encode Database User Name and Password |
| | *Note: Encoding implemented only once (as part of system set up).* |
| | Decode Database User Name and Password |
| | *Note: Used by persistence framework during all database accesses.* |

### Classes

The Persistence Framework implements these services through the following Java or Visual Basic Classes:

| | |
|---|---|
| | |
| AFPLPersistableObj | This is the superclass of all Java Persistable Objects in the application. Application developers create a subclass for each Business Object and implement all the abstract methods that this class defines. |
| AFPLExtent | Provides the mapping between the business object and its associated database table and manages the database connection. |

| | |
|---|---|
| | |
| VBPersistObj | This is the interface class that all Persistable VB must implement. Application developers create a subclass for each Business Object and implement all the methods that this class defines. |
| VBExtent | Provides the mapping between the business object and its associated database table and manages the database connection. |

These classes are described in detailed in the following sub-portions of the description.

### AFPLPersistableObj

The AFPLPersistableObj abstract class contains methods called by the application developer objects to manage attribute values common to all persistable business objects (user id and last update timestamp). In addition, the AFPLPersistableObj class represents the superclass of a persisted object. In order to persist a business class; the application developer extends AFPLPersistableObj and implements the AFPLPersistableObj abstract methods.

The AFPLPersistableObj defines the following methods:

| | |
|---|---|
| | |
| addColumnNames | Return the column names common to all persistable business objects (user id and last update timestamp). The application developer invokes this method from the constructor method of a business object. |
| addPersistedAttributes | Return attributes common to all persistable business objects (user id and last update timestamp). The application developer invokes this method from the getPersistedAttributes method of a business object. |
| isEqual | Abstract method that all Business Objects must implement. If the passed in attribute is one of the attributes common to all persistable business objects (user id and last update timestamp), compare the passed in value to the currently held attribute value. The application developer should also invoke the superclass isEqual. |
| newFrom | Abstract method that all Business Objects must implement. Populate the Business Object using the result set passed as an attribute. The application developer should also invoke the superclass newFrom method to populate the UserId and lastUpdate attributes. |
| attributeGet | Abstract method that all Business Objects must implement. Return the value of the attribute passed as parameter |
| attributeSet | Abstract method that all Business Objects must implement. Set the value of the attribute passed as parameter |
| setUserId | Set the user id value |
| getUserId | Return the user id value |
| setTimeStamp | Set the last update timestamp value |
| getTimeStamp | Return the last update timestamp value. |
| setUserIdTimeStamptoObj | Adds the last update timestamp value and user id to the passed in persistable business object. The application developer invokes this method from the setUserIdTimeStamptoObj method of a business object. |
| getColumnNames | Return the database table column names. |
| getPersistedAttributes | Return all the attributes to persist. The application developer invokes the addPersistedAttribute method of the super class to add user id and last update timestamp attributes. |
| getKeyNames | Return the primary key field name. |
| getKeyValues | Return all the primary key values. |
| getKeyAttributeVector | Return vector of all key attributes. |
| getKeyAttributes | Return the array of all key attributes. |
| getTableName | Return the name of the database table associated with this business object. |
| columnList | Returns a comma-separated list of all columns corresponding with this class. |
| attributesForInsert | Returns a comma separated list of attribute values for SQL insert command. |
| attributesForUpdate | Returns a comma separated list of attribute name = attribute value pairs for SQL update command. |
| conditionForUpdateRemove | Returns the 'where' clause for SQL update or remove command (both are equal). |

### AFPLExtent

The AFPLExtent class provides the mapping between the business object and its associated database table. In addition, the AFPLExtent class represents the domain defined by the visible part of the database table for the specified user. This class holds the passed in database URL, username and password used during the access to the database. Lastly, the AFPLExtent class manages the database connection.

### Methods

The AFPLExtent class implements the following methods used by the application developer from business factory objects:

| | |
|---|---|
| | |
| Select | Return all business objects matching the search criteria. |
| Update | Update all business objects matching the search criteria |
| Delete | Remove all business objects matching the specified criteria |
| Insert | Insert new business object(s) |

### VBPersistObj

The VBPersistObj interface class contains methods that need to be implemented on every VB Business Object.

The application developer implements the following methods from their business object:

| | |
|---|---|
| | |
| newFrom | Create a new instance of that class using the resultset passed as parameter |
| GetValue | Returns the value for the attribute passed as parameter. |
| Set Value | Sets the value for the attribute passed as parameter. |
| GetColumns | Return the database table column names. |
| GetTableName | Return the Table Name where this class is stored in the database. |
| attributesForInsert | Returns a comma separated list of attribute values for SQL insert command. |
| attributesForUpdate | Returns a comma separated list of attribute name = attribute value pairs for SQL update command. |
| conditionForUpdateRemove | Returns the 'where' clause for SQL update or remove command (both are equal). |

### VBExtent

The VBExtent class provides the mapping between the business object and its associated database table. In addition, the VBExtent class represents the domain defined by the visible part of the database table for the specified user. This class holds the passed in database URL, username and password used during the access to the database. Lastly, the VBExtent class manages the database connection.

### Methods

The VBExtent class implements the following methods used by the application developer from business factory objects:

| | |
|---|---|
| | |
| Select | Return all business objects matching the search criteria. |
| Update | Update all business objects matching the search criteria |
| Delete | Remove all business objects matching the specified criteria |
| Insert | Insert new business object(s) |

### SESSION FRAMEWORK DESIGN

Figure **18** illustrates a method **1800** for persisting information during a user session. First, in operation **1802,** a session is initiated upon a user accessing a predetermined starting page. A current page accessed by the user is then tracked in operation **1804** while browsing a plurality of pages during the session. In operation **1806,** a record is maintained of a page previously accessed by the user during the session. Information is persisted in operation **1808.** This information is selected from a group of items such as user identifier, a time of a most recent user action during the session, activity components accessed during the session, and business components accessed during the session. During the session, the current page, previous page record, and information are provided to at least one activity component in operation **1810.** Also in operation **1810,** the activity component generates output based on input provided by the user via the plurality of pages.

In one embodiment of the present invention, the activity components to which the current page, previous page record, and information are provided may be selectively determined. In addition, the activity component may be provided an indication as to whether the user is permitted to access each of the pages. In such a case, the activity component may also be provided the indication as to whether the user is permitted to access each of the pages based on the previous page record.

In another embodiment of the present invention, the information may also include the user identifier. In such an embodiment, user preferences may be looked up based on the user identifier with the information including the user preferences. Also, in order to identify the persisted information, references to activity components, business components, a user component, a tracking manager component, a system preference component, and an event handler component may be employed. The following material provides a more detailed description of the above-described method.

This portion of the present description details the ReTA Session framework design from the perspective of the application developer. The primary role of this framework is to provide services to handle the stateless nature of Internet. By default, the Internet does not provide services for maintaining information between pages. Without these services, it would not be possible to implement most eCommerce functionality. For example, session level state is necessary to implement eCommerce functionality where a customer can select products on multiple product description pages and then submit a complete product order request from a confirm order page. The ReTA Session framework leverages the Internet Information Server / Active Server Page (IIS/ASP) session object, which is automatically created when a user who has no open IIS sessions requests a Web page.

### Session Framework

### Description

Figure **18****.****1** illustrates a Session Flow Diagram - On Session Start. As shown, a Session framework **1830** operates in the MTS Runtime Environment **1832.** Figure **19** illustrates a Session Flow Diagram - On Start ASP Page. Again, the Session framework **1900** operates in the MTS Runtime Environment **1902.** The ReTA Session framework provides services required throughout a user session. The user creates the Session framework at log on and removes the Session framework at log off. During the lifetime of the user session, application and architecture components require certain data to persist. This framework provides services to store and retrieve all information needed for a particular user session. This information may persist throughout the user session. The Session framework also provides services to uniquely identify the user and enforce access rights.

The user information that the Session framework persists, in memory, between Active Server Page requests includes:
- *User id*
   o Identifies session user
- *Last page*
   o Last page accessed by the session user.
- *Current page*
   o Current page accessed by the session user.
- *Last connection time:*
   o Session user's last connection time.
- *Current activity:*
   o Activity currently being executed by the session user (refer to activity framework design)
- *Activity Components*
   o All activity components accessed during user session
- *Business Components*
   o All business components accessed during user session required by multiple activity components.

### Note:

This framework uses the Active Server Page's Session Object. Thus, the framework only works with browsers that accept cookies. For other browsers (or if cookies are disabled), a new ASP Session Object may start for each web page.

### Services

The Session Framework provides the following services:

| | |
|---|---|
| | |
| *Security* | User identification |
| | Page access authorization - Session scope |
| | Automatic abort - timeout |
| *Customized information delivery* | Customized user interface |
| | Customized application access |
| *Manage user session* | Inform user on session status |
| | Abort session |
| *Flow control* | Page to open on action |
| | Pages of activity |
| *Maintain context* | Activity Component context |
| | Business Component context - shared among activities |
| *Message Broadcast* | Register listener |
| | Broadcast Message to registered listeners |
| *Encryption* | Encode Database User Name and Password |
| | *Note: Encoding implemented only once (as part of system set up).* |
| | Decode Database User Name and Password |
| | *Note: Used by session framework during all database accesses.* |

### Components

The Session Framework implements these services through the following COM objects:

| | |
|---|---|
| | |
| AFSession | Manages current user session |
| AFSystemPreferences | Contains System Preferences from database table T_AF_SYSTEMPREFERENCES |
| AFTrackingManager | Contains security and flow control info from database |
| | tables T_AF_PAGESOFACTIVITY, |
| | T_AF_AUTHDESTINATIONPAGE |
| | T_AF_AUTHSOURCEPAGE |
| | T_AP_DESTINATIONFORACTION |
| AFBrowserInfo | Contains current user's web browser information |

These components are described in detailed in the following sub-portions of the description.

### AFSession

The AFSession component maintains the user's session state information. To maintain the state information, this component holds references to activity components (logical units of work - application flow logic), business components (business logic required across activity components), user component (user information), tracking manager component (web page access security and web page flow control information), system preference component (system preference information) and event handler component (event handler) created during the user's session.

From the application developer's perspective, the state maintenance work performed by the AFSession component is transparent. The application developer leverages the session services through populating the database tables with the client specific information.

### Methods

The IAFSession, IAFEventBroadcaster and IAFContext interfaces define the access to the AFSession component. These interfaces support the following methods:

| **AFsession** | |
|---|---|
| | |
| Start | Start session - Called by ASP (global.asa Session_OnStart). |
| Stop | Stop session - Called by ASP (global.asa Session_OnStop). |
| StartPage | This method is called by ASP script logic at the start of each page. It is used to broadcast a pageStart event to all the listeners (activity components) that have registered as interested in pageStart events. It also stores this page as the current page and moves the existing current page into the last page (information held by the session's "tracking" object). |
| StopPage | This method is called by ASP script logic at the end of each page. It is used to broadcast a pageEnd event to all the listeners (activity components) that have registered as interested in pageEnd events. |
| Abort | This method is called when the session is to be aborted. This method calls the abort method on all activity components known to session (held by the session's "activity context" object). |
| SetCurrentPage | Sets the current Active Server Page (held by the session's "tracking" object). |
| GetCurrentPage | Returns the current Active Server Page (held in the session's "tracking" object). |
| GetLastPage | Returns the last Active Server Page accessed in the session (held in the session's "tracking" object). |
| SetSessionld | Update the sessionId attribute. |
| GetSessionId | Returns the current session Id. |
| SetCurrentActivity | Sets the current activity Page (held in the session's "tracking" object). |
| GetCurrentActivity | Returns the instance of the current activity (held in the session's "tracking" object). |
| GetActivity | Returns the instance of the requested activity (held by the session's "activity context" object). |
| IsActivityInContext | Ask session if it has a reference to the requested activity (held by the session's "activity context" object). If found, returns true, else returns false. |
| AddActivity | Add the requested activity (references held by the session's "activity context" object). Set the requested activity to the current activity (held in the session's "tracking" object). |
| RemoveActivity | Remove the current activity (held by the session's "activity context" object). |
| GetNextPage | Returns the next web page to access for the current activity (information held by the "tracking manager" component). |
| GetAFUser | Returns the "user" component (information associated with the current logged in user). |
| SetAFUser | Sets the user for the current session. Returns an integer indicating success or failure. |
| GetTrackingManager | Returns the "tracking manager" component. |
| GetEventHandler | Returns the "event handler" component. |
| GetSystemPreferences | Returns the "system preference" component. |
| AddObject | Add a business object (held by the session's "business object context" object). |
| GetObject | Returns the instance of the requested business object (held by the session's "business object context" object). |
| RemoveObject | Remove the instance of the requested business object (held by the session's "business object context" object). |
| ContainsKey | Returns true if the "label" of the requested business object exists (held by the session's "business object context" object). |
| GetKeys | Returns all business object "labels" (held by the session's "business object context" object). |

| **AFEventBroadcaster** | |
|---|---|
| AddListener | Add the requested listener (activity component) to list of interested listeners. If an activity is interested in a StartPage event (i.e., needs to capture user modified data from the previous web page), this method is called by ASP script logic at the start of the page. |
| RemoveListener | Remove the requested listener (activity component) from list of interested listeners. |
| BroadcastEvent | Invoke the receiveEvent method on all registered listeners (activity components). Refer to activity framework design for the automated user data capture functionality. |

### AFSystemPreferences

The AFSystemPreferences component contains system preferences (held during the session). This component uses the ReTA persistence framework to read the system preferences from the database ("system preferences" table).

### Methods

The IAFSystemPreferences interface defines the access to the AFSystemPreferences component. This interface supports the following methods:

| | |
|---|---|
| | |
| Start | Reads and stores "system preference" data from "system preferences" table. |
| GetRootAsp | Returns the application's ASP root location (as defined in from "system preferences" table). |

### AFTrackingManager

The AFTrackingManager component provides page sequence security, dialogue flow and activity flow functionality for the session framework.

### Page sequence security

The page sequence security is defined in the following tables:
*Table "Authorized Destination Page "* **1834:**
Define for each page, the pages that are allowed to be accessed. If no authorized destination pages are defined, the page is authorized to access any page.

| | |
|---|---|
| | |
| Id | Unique id |
| CurrentPage | Name of the current page |
| DestinationPage | Page which is authorized to be access |

*Table "Authorized Source Page"* **1836**:
Define for each page, the pages that are allowed to access it. If no authorized source pages are defined, the page is authorized to be accessed by any page.

| | |
|---|---|
| | |
| Id | Unique id |
| CurrentPage | Name of the current page |
| SourcePage | Page authorized to access the current page |

*Dialogue flow*
The dialogue flow is defined in the following table:
*Table "Destination For Action"* **1838**:
Define the action flow between the web pages (i.e., which ASP is open when a specified push button is clicked during a specified activity).

| | |
|---|---|
| | |
| Id | Unique id |
| CurrentPage | Name of the current page |
| Action | Name of the UI widget, which triggers the action. |
| Activity | Name of the activity where the event is triggered |
| DestinationPage | Name of the page to open |

*Activity flow*
The activity flow is defined in the following table:
*Table "Page Of Activity"* **1840:**
Define the automated activity switching when the user jumps from one web page to another.

| | |
|---|---|
| | |
| Id | Unique id |
| Activity | Name of the activity |
| Page | Name of the page belonging to the activity |

### Methods

The IAFTrackingManager interface **1904** defines the access to the AFTrackingManager component. This interface supports the following methods:

| | |
|---|---|
| | |
| CheckAuthorizedSourcePage | Determines if the previous page is in the list of allowable sources for this page (as defined in *"Authorized Source Page"* table). If access is allowed, returns true. Else, returns false. |
| CheckAuthorizedDestinationPage | Determines if this page is in the list of allowable destinations for the previous page (as defined in *"Authorized Destination Page"* table). If access is allowed, returns true. Else, returns false. |
| GetDestination | Returns destination page for requested action, activity, and source page (as defined *Destination For Action"* table). |
| IsPartOfActivity | Determines if this page is part of requested activity (as defined in *"Page Of Activity"* table). If page is part of activity, returns true. Else, returns false. |
| Start | Reads and stores the *Authorized Destination Page, Authorized Source Page, Destination For Action* and *Page Of Activity* tables. |

### AFBrowserInfo

The AFBrowserInfo component contains the user's browser information.

### Methods

The IAFBrowserInfo and IAFEditable interfaces define the access to the AFBrowserInfo component. These interfaces support the following methods:

| | |
|---|---|
| | |
| GetBrowserName | Returns the name of the browser that the user is currently running. |
| GetBrowserVersion | Returns the version of the browser that the user is currently running. |
| IsPluginSupported | *Note: not implemented* |
| IsCustomPluginSupport ed | *Note: not implemented* |
| IsMimeSupported | *Note: not implemented* |
| SetValues | Sets the requested attribute's value. |
| GetValue | Returns the requested attribute's value. |

### USER INTERFACE FRAMEWORK DESIGN

Figure **20** illustrates a method **2000** for generating a graphical user interface. A form is initially created in operation **2002.** The form includes a plurality of attribute rules dictating a manner in which user interface objects are situated thereon. In operation **2004,** a plurality of user interface objects are selected. A page is generated in operation **2006** with the selected user interface objects situated on the page in accordance with the attribute rules of the form. JavaScript actions are attached to the selected user interface objects in operation **2008.** The JavaScript actions are capable of being executed upon detection of a user action involving one of the user interface objects.

The user interface objects may include one or more of the following: a push button, a text box, a text area, a radio button, a check box, a drop down, a blank item, a user interface list, and a static table. The user action may include at least one of clicking on one of the user interface objects, changing text in one of the interface objects, exiting a text box of one of the interface objects. Further, the user action involving one of the user interface objects may cause a predetermined event. Optionally, the page may be an HTML page. The following material provides a more detailed description of the above-described method.

This portion of the present description details the ReTA User Interface (UI) framework design from the perspective of the application developer. The role of this, framework is to provide services that generate the HTML code for UI widgets and attach Javascript actions to UI widgets. The UI framework exposes these services through a set of Component Object Model (COM) objects. The application developer uses these UI COM objects and their services through scripting logic added to the application's Active Server Pages (ASP).

### User Interface Framework

The User Interface framework provides components for generating HTML. An HTML page is generated from a combination of the various UI Components. Figure **20****.****1** shows the steps for generating a HTML page consisting of a form **2030** with a TextBox **2032,** a DropDown list **2034** and a PushButton **2036.**

The User Interface Framework provides the following services:

| | |
|---|---|
| | |
| *Generate UI Items* | Form |
| | Push Button |
| | Text Box (single-line entry field). |
| | Text Area (multi-line entry field) |
| | Radio Button group |
| | Check Box |
| | Drop Down List Box |
| | Blank Item |
| | Static Table |
| | Single-Select List Box |
| *Generate UI actions* | JavaScript - action shell |
| | JavaScript - data type validation |
| | JavaScript - data range validation |
| | JavaScript - automatic navigation action |
| *Generate Page Format* | Cascading Style Sheet |
| | Form (grid layout for form elements) |

The User Interface Framework implements these services through the following COM objects:

| | |
|---|---|
| | |
| AFForm | Form containing the widgets |
| AFPushButton | Push button widget |
| AFTextBox | Single-line entry text box widget |
| AFTextArea | Multi-line entry text box widget |
| AFRadioButton | Radio button widget |
| AFCheckBox | Check box widget |
| AFDropDown | Combo box widget |
| AFBIankItem | Blank item widget (used for spacing.) |
| AFUIList | Single-Select List Box widget - *IE4 Only* |
| AFStaticTable | Static Table widget |
| AFHardCodedASPAction | Javascript function - Move to next page |
| AFJScriptAction | HTML - attach Javascript function to a form element |
| AFScriptGenerator | Javascript tag and functions |
| AFStyleSheet | Cascading style sheet (CSS) |

These components are described in detail in the following sub-portions of the description.

### AFForm

The AFForm component is used in conjunction with form element widgets to build complex user interfaces. Initially, the application creates an instance of the form component and sets its attributes. Following this activity, the application creates instances of the associated form element widgets and adds them to the form using the form's add method. As another service, the form component provides methods to help align all associated form element widgets properly on the page.

### Methods

The IAFForm interface defines the access to the AFForm component. This interface supports the following methods, which the developer uses to create a form.

| | |
|---|---|
| | |
| Int left() | Align the form left |
| Int right() | Align the form right |
| Int center() | Align the form centrally |
| Int caption(String) | Sets the caption that may appear at the top of the form. |
| Int name(String) | Set the HTML name of the form. This option is required by some of the items which can be added to the form and should always be set |
| Int value(String) | Set the HTML value of the form. |
| Int border(int) | Sets the width of the border around the form |
| Int size() | Returns the number of form element widgets added to form. |
| String sendLocation(int, eventcollection) | Value of the Location object attached to the members of this form. |
| Int form_width(int) | Sets the width of the form in UI elements. For example if set to 2 a form 2 elements wide would be created. A third element added to the form would be placed on a new line. |
| Int cell_width(int) | Sets the HTML Cell padding value for the form. A larger number may increase the spacing between the form elements. |
| Int lockTableWidth(int) | Locks the width of the form to the input value in percentage valid ranges (0-100%). Use this option to set the amount of screen width the form may occupy. |
| Int Add(Widget Object, eventcollection) | Add a widget object to this form. Widgets are created separately. |
| String generate(eventcollection) | Generates the HTML code for the Form. The return value is the output HTML and should be printed to the screen. |

### AFPushButton

The AFPushbutton component can only be used in conjunction with a AFForm component (the form's generate method iterates through the generate method for all form element widgets to build the necessary HTML code). An action object can be attached to a AFPushButton component. (Refer to AFHardCodedASPAction and AFJScriptAction for details).

### Methods

The IAFPushbutton and IAFUIActionItem interfaces define the access to the AFPushbutton component. These interfaces support the following methods, which the developer uses to create a push button form element.

| | |
|---|---|
| | |
| Int left() | Align the button left |
| Int right() | Align the button right |
| Int center() | Align the button centrally |
| Int caption(String) | Set the text that may appear on the button. The button may stretch its size to fit this text |
| Int name(String) | Set the name of the button. |
| Int setIsResetButton() | Set the button to be the default HTML reset button. When this method is called, clicking on the button causes the values of all HTML form elements in the form to which this button belongs to be reset to their values when the page was initially loaded. |
| Int setIsNotResetButton() | Resets the above method. The button returns to being a normal Widget item. |
| Int addAction(Action) | Adds an action to the button. |

### AFTextBox

The AFTextBox component can only be used in conjunction with a AFForm component (the form's generate method iterates through the generate method for all form element widgets to build the necessary HTML code). An action object can be attached to a AFTextBox component. (Refer to AFHardCodedASPAction and AFJScriptAction for details).

### Methods

The IAFTextBox and IAFUIActionItem interfaces define the access to the AFTextBox component. These interfaces support the following methods, which the developer uses to create a Text Box form element.

| | |
|---|---|
| | |
| Int left() | Align the textbox to the left |
| Int right() | Align the textbox to the right |
| Int center() | Align the textbox to the center |
| Int caption(String) | Set the caption to appear next to the text box. |
| Int name(String) | Set the HTML name of the text box |
| Int max_length(int) | Set the maximum length of text in the box |
| Int size(int) | Set the visible size of the text box |
| Int default_text(String) | Set the default text in the text box |
| Int data Validation(type, range, lower bound, upper bound) | Adds data validation to the onBlur event of the text box. |
| | Data Type validation includes: |
| | Numeric - DV_TYPE_ISNUMERIC, |
| | Alpha - DV_TYPE_ISAPIMA, or |
| | Date - DV TYPE ISDATE. |
| | None-DV_NONE |
| | Range validation* includes all 8 permutations - |
| | <less than> through <(less than equal) and (greater than equal)>. |
| | DV_RANGE_LESSTHAN, |
| | DV_RANGE_LESSTHANEQUAL, |
| | DV_RANGE_GREATERTHAN, |
| | DV_RANGE_GREATERTHANEQUAL, |
| | DV_RANGE_LESSTHAN_GRBATERTHAN, |
| | DV_RANGE_LESSTHANEQUAL_GREATERTH AN, |
| | DV_RANGE_LESSTHAN_GREATERTHANEQU AL, |
| | DV_RANGE_LESSTHANEQUAL_GREATERTH ANEQUAL |
| | ** Note: Range validation only occurs for "Numeric" data type.* |
| Int setTextBoxlndicator(int) | This method sets a private member variable to an integer value, this value indicates if the textbox may be the only textbox on the form that is to be generated. |
| Int addAction(Action) | Adds an action to the onChange event of the text box. |

### AFTextArea

The AFTextArea component can only be used in conjunction with a AFForm component (the form's generate method iterates through the generate method for all form element widgets to build the necessary HTML code). An action object can be attached to a AFTextArea component. (Refer to AFHardCodedASPAction and AFJScriptAction for details).

### Methods

The IAFTextArea and IAFUIActionItem interfaces define the access to the AFTextArea component. These interfaces support the following methods, which the developer uses to create a Text Area form element.

| | |
|---|---|
| | |
| Int left() | Align the text area left |
| Int right() | Align the text area right |
| Int center() | Align the text area to the center |
| Int caption(String) | Set the caption to appear next to the text area |
| Int name(String) | Set the HTML name of the textArea. |
| Int formName(String) | The name of the HTML form on which the textarea is to be placed. This is a required method and the textarea may not function correctly without this value being set. |
| Int setRows(int) | Set the number of rows which the text Area may display to the user |
| Int setColumns(int) | Set the number of columns, which the text Area may display, to the user. |
| Int dataValidation(type, range, lower bound, upper bound) | Adds data validation to the onBlur event of the text box. Data Type validation includes: |
| | Numeric - DV_TYPE_ISNUMERIC, |
| | Alpha - DV_TYPE_ISAPLHA, or |
| | Date - DV_TYPE_ISDATE. |
| | None_DV_NONE |
| | Range validation* includes all 8 permutations - <less than> through <(less than equal) and (greater than equal)>. |
| | DV_RANGE_LESSTHAN, |
| | DV_RANGE_LESSTHANEQUAL, |
| | DV_RANGE_GREATERTHAN, |
| | DV_RANGE_GREATERTHANEQUAL, |
| | DV_ANGE-LESSTHAN_GREATERTHAN, |
| | DV_RANGE_LESSTHANEQUAL_GREATERTHAN, |
| | DV_RANGE_LESSTHAN_GREATERTHANEQUAL, |
| | DV_RANGE_LESSTHANEQUAL_GREATERTHAN EQUAL |
| | * *Note: Range validation only occurs for "Numeric" data type.* |
| Int setFormName(String) | Set the name of the form onto which the textArea object is being added. This method is mandatory for the correct functioning of the method. |
| Int setMaximumSize(int) | Set the maximum size of text, which can be entered into the text area. When this value is exceeded, a pop up window may warn the user that they have exceeded the maximum size and that their entry may be truncated to the maximum value (which is set here). The default value is 500. |
| Int addAction(action) | Add an action to the textarea. |

### AFRadioButton

The AFRadioButton component can only be used in conjunction with a AFForm component (the form's generate method iterates through the generate method for all form element widgets to build the necessary HTML code). An action object can be attached to a AFRadioButton component. (Refer to AFHardCodedASPAction and AFJScriptAction for details).

Radio buttons are used in groups. Because of the complexity of the client side script required in conjunction with the radio button component, the application developer must call the *generateRadioButtonScript* () method on the AFScriptgenerator object on the page wherever radio buttons are used. This method takes as inputs:
- The name of the form object to which the radio button has been added.
- The name of the radio button group within the form
- The default value the radio button group may pass to the page view if nothing is selected by the user.
- The return value from this method is the generated HTML and Javascript which is written to the client browser within the <HEAD> </HEAD> tag of the page.

### Methods

The IAFRadioButton and IAFUIActionItem interfaces define the access to the AFRadioButton component. These interfaces support the following methods, which the developer uses to create a Radio Button form element.

| | |
|---|---|
| | |
| Int left() | Align the radio button left |
| Int right() | Align the radio button right |
| Int center() | Align the radio button to the center |
| Int caption(String) | Set the caption to appear next to the radio button |
| Int name(String) | Set the HTML name of the radio button |
| Int deselect() | Deselect the radio button. |
| Int select() | Select the radio button. (highlights button) |
| Int setFonnName(String) | Sets the name of the form onto which the radio button is being added. This is a mandatory method in order for the component to function correctly. |
| Int setGroupNumber(int) | Set the number within the group which this radio button is assigned |
| Int getGroupNumberQ | Returns the group number of the Radio Button |
| Int addAction(action) | Add an action to the radio button. |

### AFCheckBox

The AFCheckBox component can only be used in conjunction with a AFForm component (the form's generate method iterates through the generate method for all form element widgets to build the necessary HTML code). An action object can be attached to a AFCheckBox component. (Refer to AFHardCodedASPAction and AFJScriptAction for details).

### Methods

The IAFCheckBox and IAFUIActionItem interfaces define the access to the AFCheckBox component. These interfaces support the following methods, which the developer uses to create a Check Box form element.

| | |
|---|---|
| | |
| Int left() | Align the checkbox to the left |
| Int right() | Align the checkbox to the right |
| Int center() | Align the checkbox to the center |
| Int caption(String) | Sets the HTML caption value of the object. The text may be displayed next to the checkbox object. |
| Int name(String) | Sets the HTML name of the checkbox |
| Int select() | Mark as checked the checkbox when generating it |
| Int deselect() | Mark as not checked the checkbox when generating it. |
| Int value(String) | Sets the HTML value of the checkbox |
| Int addAction(action) | Add an action to the checkbox. |

### AFDropDown

The AFDropDown component can only be used in conjunction with a AFForm component (the form's generate method iterates through the generate method for all form element widgets to build the necessary HTML code). An action object can be attached to a AFDropDown component. (Refer to AFHardCodedASPAction and AFJScriptAction for details).

### Methods

The IAFDropDown and IAFUIActionItem interfaces define the access to the AFDropDown component. These interfaces support the following methods, which the developer uses to create a Combo Box form element.

| | |
|---|---|
| Int left() | Align the Combo Box to the left |
| Int right() | Align the Combo Box to the right |
| Int center() | Align the Combo Box to the center |
| Int caption(String) | Set the HTML caption of the object. |
| Int name(String) | Set the HTML attribute of the object. |
| Int addData(String) | Add a row of data to the Combo Box. |
| Int formName(String) | Set the name of the form onto which the Combo Box component has been added. |
| Int selected(int) | Set the index of the data item on the Combo Box, which may be selected. |
| Int addAction(action) | Add an action to the Combo Box. |
| Int setCodesTable(Strin g) | Populate dropdown box with a Codes Table value |

### AFSIankItem

The AFBlankItem component can only be used in conjunction with a AFForm component (the form's generate method iterates through the generate method for all form element widgets to build the necessary HTML code).

### Methods

The IAFBlankItem interface defines the access to the AFBlankItem component. This interface supports the following methods, which the developer uses to create a blank item form element.

| | |
|---|---|
| int left() | Align the blank item to the left |
| int right() | Align the blank item to the right |
| int center() | Align the blank item to the center |
| int setWidths(int, int) | Set the widths of the blank item in percentage (%) |
| int setValues(String, String) | Set the values of the blank item. The first String sets the text to appear in the first cell and the second String sets the text to appear in the second. |
| int setColors(int, int) | Sets the color of the elements of the blank item. The two integer values represent the color of the first and second cells. Valid Values are 0 and 1. The default color is white. Passing a value of 1 into either parameter causes the blank item cell to be displayed in the default highlighted color. |

### AFUCList

The AFUIList component creates a sophisticated DHTML based single-select list box form widget. The list box widget consists of a fixed headings row and a scrollable set of data rows. The list box widget supports data entry through data row level associated check boxes and text boxes. In addition, action objects can be attached to the list box and are generated in the same way as described for other form components. (Refer to AFHardCodedASPAction and AFJScriptAction for details).

The list box widget refreshes itself by passing (as parameters) the selected item and the state of all check boxes and all text boxes. The AFUIList view captures the values and updates the state of the list box to reflect the user choice.

### Note:

The sophisticated functionality provided by this widget requires DHTML support. As of this portion of the present descriptions release date (Phase 2), only Internet Explorer 4.0 provides the necessary DHTML services. Therefore, this component is not cross-browser compatible.

### Methods

The IAFUIList interface defines the access to the APUIList component. This interface supports the following methods, which the developer uses to create a single select list box.

| | |
|---|---|
| Int left() | Align the list box to the left |
| Int right() | Align the list box to the right |
| Int center() | Align the list box to the center |
| Int setChecked() | Set indicated Selected List row as "checked" |
| Int setUnChecked() | Set indicated Selected List row as "unchecked" |
| Int setSelected() | Set indicated Selected List row as "highlighted" |
| Int getSelectedRow() | Return the currently selected list box row number. |
| Int getSelectedRowObjIDQ | Return the object id of the currently selected list box row. |
| String getObjldForRow() | Capture the Object id for a given list box row (used by the view mechanism). |
| int getRowForImageReference() | Retrieve the list box row number, which corresponds to an image reference. |
| Int getCheckboxStatus() | Get Check Box status of requested list box row. |
| Int setTextBox Value() | Set text box value for requested list box row with passed in String value. |
| String getTextBoxValue() | Get text box value for requested list box row. |
| Int setName() | Set list box name. |
| Int getName() | Get list box name. |
| Int getNumberOfRows() | Get the total number of list box rows. |
| Int addDataRowTokenized() | Add a row to the list box. |
| Int addDataRow() | Add a row to the list box. |
| Int setBorderwidth() | Set border width. |
| Int set ValuesTokenized() | Set the default values of the list box: BorderWidth, cellPadding, Click Trigger Flag and Double Click Trigger Flag. |
| Int setValues() | Set the default values of the list box: BorderWidth, cellPadding, Click Trigger Flag and Double Click Trigger Flag. |
| Int reset() | Clear all list box data rows. |
| String generate() | Generate the DHTML for the list box data rows (bottom frame). |
| String generateSingleClickAction() | Return the results of the single click action, which was attached to the list box. If no action is attached, return a blank string. |
| String generateDoubleClickAction() | Return the results of the double click action, which was attached to the list box. If no action is attached, return a blank string. |
| String generateScripts() | Generate the scripts required to handle the selected list. This method is executed on the parent frame that the list box is embedded. |
| Int addClickAction() | Add a click action to the list box. |
| Int addDoubleClickAction() | Add a double click action to the list box. |

### AFThumbNailContainer

The AFThumbNailContainer component generates a set of thumbnail images. The thumbnails are used as iconic pushbuttons. The application developer defines the single click and double click action destinations in the ASP page by coding the JavaScript functions referenced by the AFThumbNailContainer "generate" method.

### Methods

The IAFThumbNailContainer interface defines the access to the AFThumbNailContainer component. This interface supports the following methods, which the developer uses to create a Thumbnail container.

| | |
|---|---|
| | |
| Int setselected() | Set indicated Thumbnail item as "highlighted" |
| String getSelectedThumbNailObjectI d() | Return the selected item object id. If no item is selected, return an empty string. |
| String generate() | Generate the HTML code for the thumbnails. |
| Int addItem () | Add thumbnail image to container. |
| Int setAttributes () | Define the border width, the input path to the thumbnail images and identify the selected item. |

### AFStaticTable

The static table component creates a standard HTML table with the parameters set by the developer through scripting logic added to application's ASP.

### Methods

The IAFStaticTable interface defines the access to the AFStaticTable component. This interface supports the following methods, which the developer uses to create a static HTML table.

| | |
|---|---|
| int addDataElement (String, int) | Adds a data element to the static table. The integer value passed as the second parameter specifies the color to be applied to this cell of the table. |
| | 0 indicates that it should be white, |
| | 1 indicates the default highlighted color, |
| | 2 indicates the default AF Blue color, |
| | 3 indicates a gray color. |
| Int SetRowLength(int) | Set the number of data elements before an end of row is generated. |
| Int GetRowLengtb() | Returns the number of data elements in the table. |
| int setBorderWidth(int) | Set the width of the border, which may appear around the table. Valid values are 0 through 10. Default is 0. |
| Int getBorderWidth() | Returns the current border setting for the static table. |
| Int SetCellPadding (int) | Sets the HTML cell padding value that may be applied to the form. This creates space around the data in the table. Valid values are 0 through 100. Default is 0. |
| Int getCellPadding() | Get the current cell padding value for the static table. |
| Int SetTableName(Stirng) | Sets the HTML name attribute on the table object. |
| String GetTableName() | Returns the HTML name attribute on the table object. |
| String Generate () | Returns the generated HTML for the static table. |
| SetFontOffSet (int) | Sets the size of the font to be used on the static table. Valid values are -5 through +5. Default is 0. |

### AFHardCodedASPAction

The AFHardCodedASPAction component adds a user defined automatic navigation action to a UI component. The UI components that support this service include AFPushButton, AFTextBox, AFTextArea, AFRadioButton, AFCheckBox, AFDropDown and AFSelectedList. Attaching the navigation action to a UI item may automatically direct the user to the next page. The next page is identified by the flow control service of the session framework. This means that the developer does not have to specify the page to open. This service also ensures that all changes made to the open pages are capture before opening a new one. The navigation action is triggered when the user causes a defined event on the object. Defined events include clicking on a link or button and changing the text or exiting a text box. The Javascript events are onClick and OnChange.

The page that represents the target of the action must be entered into the database. The action logic may look to see which activity it belongs to and then look in the database to determine what page to show to the user. An example database entry in the T_AF_FWDestinationforaction table is:

**T_AF_FWDestinationforaction**

| | | | | |
|---|---|---|---|---|
| Id | | | | |
| 100 | //ASP/SampApp/Samp.as p | Next | Order | //ASP/SampApp/SampNext. asp |

- The id field must be a unique number,
- The current page is the page on which the action is being triggered.
- The Action is the name of the UI item which is triggering the action,
- The Activity is the activity in which the action is taking place.
- The Destination Page is the page to which the user should be redirected as the outcome of the action.

### Methods

The IAFAction and IAFHardCodedASPAction interface defines the access to the AFHardCodedASPAction component. These interfaces support the following methods, which the developer uses to create a navigational action.

| | |
|---|---|
| *Int CreateSameFrame()* | The target of the action may be on the same frame as that from which the action is triggered. |
| *Int CreateOnNewWindow(String)* | The target of the action may be on a new instance of the web browser. |
| *Int CreateParentFranw(String)* | The target of the action may be on the parent frame of the frame, which triggered the action. |
| *Int generate(String)* | Create HTML to call Javascript function ("String value") when the action is triggered. |
| *InitiadizeLocation()* | Used to track frame location during action. |

### AFJScriptAction

The AFJscriptAction component adds a user defined action to a UI Component. The UI components that support this service include AFPushButton, AFTextBox, AFTextArea, AFRadioButton, AFCheckBox, AFDropDown and AFSelectedList. Attaching a Javascript action to a UI item may call a Javascript function when the action is triggered. Note: The application developer creates the called Javascript function on the correct application's ASP. The Javascript action is triggered when the user causes a defined event on the object. Defined events include clicking on a link or button and changing the text or exiting a text box. The Javascript events are onClick and onChange.

### Methods

The IAFAction interface defines the access to the AFJscriptAction component. This interface supports the following methods, which the developer uses to create an action.

| | |
|---|---|
| | |
| *Int generate(String)* | Create HTML to call Javascript function ("String value") when the action is triggered. |
| *Int JScript(String)* | Create HTML to call Javascript function ("String value") when the action is triggered. |

### AFScriptGenerator

The AFScriptGenerator component creates the Javascript functions needed by the actions.

### Methods

The IAFScriptGenerator interface defines the access to the AFScriptGenerator component. This interface supports the following methods, which the developer uses to generate the appropriate Javascript functions.

| | |
|---|---|
| | |
| *Int generate(eventcollection)* | Generate the Javascript function block. |
| *Int generateSelectedListScript(listen er, eventcollection)* | Generate the Javascript function block for a selected list box. |
| *Int generateAutoSave(eventcollection)* | Generate the Javascript function block for autosave. |
| *Int generateRadioButtonScript(liste ner, listener, listener)* | Generate the Javascript function block for radio button group. |
| *Int generateAutoCapture(eventcolle ction)* | Generate the Javascript function block for auto capture. |

### AFStyleSheet

The AFStyleSheet Component creates the Cascading Style Sheet text for the application.

### Methods

The I AFStyleSheet interface defines the access to the AFStyleSheet component. This interface supports the following method, which the developer uses to generate the appropriate Cascading Style Sheet text.

| | |
|---|---|
| | |
| *String getStyleSheet()* | Generate the Cascading Style Sheet text. |

### DEVELOPMENT ARCHITECTURE DESIGN

Figure **21** illustrates a method **2100** for software configuration management. First, in operation **2102,** software configuration management units are identified. In operation **2104,** software configuration management repositories and practices are established for storing work product related to the software configuration management units. A change control process is determined in operation **2106** for implementing change requests relating to the work product. Access to the work product is monitored in operation **2108** by a plurality of users and audits are performed to indicate whether the access to the work product by the users is authorized. Further, training requirements are calculated in operation **2110** by identifying a skill set required for the implementation of the change requests and determining a current skill set.

As an option, the software configuration management units may be identified based on configuration types, project baselines, and/or naming standards. The software configuration management units may also have characteristics including a name, a modification log, and a release affiliation. Further, the software configuration management practices may include backing up the repositories.

The change control process may include identifying users authorized to implement the change requests, defining criteria for implementing the change requests, allowing evaluation of the change requests by the users based on the criteria, and monitoring the implementation of the change request. The present invention may also optionally include the creation of a training schedule to fulfill the training requirements. The following material provides a more detailed description of the above-described method.

The ReTA Development Architecture Design includes a set of sub-components that represent all design aspects of the development architecture. The Development Architecture Design Deliverable is used to validate design of the development architecture against the requirements. After it is validated, it may be used as a basis for build and test of the architecture.

### Development Architecture Component Design

### Purpose

The ReTA Development Architecture Component Design is based on the IDEA framework **2130.** See Figure **21****.****1****.** IDEA provides a development environment framework and associated guidelines that reduce the effort and costs involved with designing, implementing, and maintaining an integrated development environment. IDEA takes a holistic approach to the development environment by addressing all three Business Integration components: organization, processes, and tools. In order to accomplish this, several subcomponents **2132** are provided around a central system building **2134.**

The purpose of the development environment is to support the tasks involved in the analysis, design, construction, and maintenance of business systems, as well as the associated management processes. It is important to note that the environment should adequately support all the development tasks, not just the code/compile/test/debug cycle.

### Configuration Management

The purpose of Software Configuration Management (SCM) **2106** is to establish and maintain the integrity of the components of an application throughout the project's life cycle.

This includes:
- Comprehensively assessing and evaluating changes to a system after requirements have been agreed upon and commitments established.
- Ensuring that approved changes are communicated, updated, verified and implemented properly.
- Coordinate the project's day-to-day activities and avoid conflicting actions by controlling access to code and repositories.

The project manager is responsible for the completion of the Project Configuration Management Plan during Design -- with the help of the project team. This may:
- Clarify roles/responsibilities for migrations so that they are understood early in the project lifecycle. See Figure **22**, which illustrates the Configuration Management Life Cycle. First, a project study **2200** is created. Development and testing stages **2202,2204** follow the study. Finally, the implementation stage is reached **2206**.
- Increase visibility of non-application components (e.g. database, architecture) in Configuration Management to improve quality of delivered products. Many times these are the components that are missed during implementations.

The ReTA SCM Policy portion of the description can assist engagement executives in creating a project configuration management plan.

The following table provides a list of the active participants within the change control process. A person may have more than one role or responsibility depending on the size of the technical effort. Also note that the responsibilities are described here at a high level and are not intended to be all-inclusive. Most of the roles are would already exist on an engagement. However, there is one new role that is critical to the CM process, the Source Code Librarian.

| Title | Description & Responsibilities |
|---|---|
| **Technical Manager** | Typically an IS department head with responsibility for the purchase and/or support of hardware and software. In configuration management, this role is more software oriented. Other responsibilities include: |
| | Assign development and support staff to projects. Review (accept/reject) technical approach proposed for projects. Monitor development and support budgets and personnel - status of projects. |
| **Network System Administrator** | This individual is responsible for the installation, maintenance and support of the Unix and Windows NT servers including operating system, file systems, and applications. Other responsibilities include: Operating system installation, patch updates, migrations and compatibility with other applications. |
| | Installation and support of proper backup/restore systems. |
| | Installation and support of other peripherals required for installed (or to be installed) applications. |
| | Proper portion of the present description of hardware configuration and setup. |
| | Maintenance of Windows Domain users and Groups as well as other security issues. |
| **Database Administrator** | The DBA is responsible for proper creation and maintenance of production and system test databases. The integrity of the database, as well as recovery using backup/restore and logging, are priorities for the DBA. Other responsibilities include: |
| | Assist developers in maintaining development databases by automating backup/recovery, applying changes to database schema, etc. |
| | Provide support for tuning, sizing and locating database objects within allocated database space. |
| | Applying change requests to databases. |
| | Ideally maintain entity relationship diagrams for databases. |
| | Maintenance of database users and other database-related security issues |
| **Source Code Librarian** | Individual responsible for development and maintenance of source code control tools, training materials, and storage areas. The Source Code Librarian is also responsible for the integrity of the source code environment. Additionally: |
| | Establishes source code directories for new projects. |
| | Provides reports on source code environment status and usage per project. |
| | Provides assistance/information as needed regarding objects to check out for system test. |
| | Assists production operations in building/moving all applications into production. |
| **Business Analyst** | Individual or individuals responsible for managing the detailed |
| | design, programming, and unit testing of application software. Other responsibilities include: |
| | Developing/reviewing detailed designs. |
| | Developing/reviewing unit test plans, data, scripts, and output. |
| | Managing application developers. |
| **Application Developer** | Individual or individuals responsible for making changes to source code defined by management. This person typically: |
| | Checks source code out of the source code environment. |
| | Modifies code per user requirements or other development portion of the present description. |
| | Unit tests modifications in the development environment. |
| | Checks modified code back into source code environment in preparation for system test. |
| **System Tester Integration Tester** | This person or team is directly responsible for system testing or integration testing of an application prior to implementing in production. This may also take the form of performance testing. Typically, a system or integration test person or team may be responsible for: |
| | Following production operation procedures for installing a new application in the appropriate test environment. |
| | Develop and execute a test plan to properly exercise new application including new, modified, and unmodified functionality. |
| | Reporting results of test. |
| **Vendor** | For the purposes of this portion of the present description, a vendor is defined as an organization from which software has been purchased for use by the clients systems. Alternatively, a vendor may distribute |
| | final installable media in the form of tape or CD with upgrades or new release of application. A vendor may: |
| | Make modifications to application code at vendor offices or within the engagement development environment. |
| | Provide necessary information to Source Code Librarian to store new code. |
| | Assist Source Code Librarian in transferring modifications to the engagement system test environment. |
| | Participate in system test (or performance test). |

### Change Control

### Description

Change requests as a consequence of changing requirements and changes requested due to nonconformity (or defects), either in the application software, or in the system software must be analyzed, authorized, scheduled, staffed, and tracked in a defined way. What, why, when, and who made a change must be tracked from the point of analysis to the reintroduction of the defective or changed component at the appropriate stage. Change control therefore governs what software component is changed, version controlled, and when it is re-migrated to a given development stage.

Configuration Management becomes more complex in a component-based development environment as the system is broken down to a greater level of granularity. For this reason, change control processes need to be clearly defined and communicated across the entire engagement team.

### Tool Recommendation

### ReTA Change Tracking Database

The Change Tracking Database is a Microsoft Access tool. It provides basic functionality of entering, modifying and reporting of system change requests encountered throughout the entire project life cycle.

### Issues Tracking Database

The Issues Tracking Database is a Microsoft Access tool that is ideal for small to medium sized projects. It provides basic functionality of entering, modifying and reporting of project issues encountered throughout the entire project life cycle.

### ProcedureslStattdards

Figure **23** illustrates the change control 'pipeline' **2300** and each phase within the pipeline. The Change Control process can be divided into many different phases. They include:

### Log Change Request

The first phase **2302** of the change control process is to log a change request. Regardless of who initiates a change request and how the change request enters into the engagement work-in-progress pipeline each change request should be logged Change Tracking tool. IT personnel who log change requests should record as much information as possible.

### Change Control Committee Review

During the second phase **2304**, the Change Control Committee (CCC) meets regularly to review the change requests that have been logged to the Change Tracking tool in the past week. The committee also discusses the status of the changes scheduled for migration during the weekly migration windows, reviews the changes already moved to production, and sets the Staging Date for change requests.

Before each weekly meeting, the Change Control Committee facilitator may generate the following reports:
- Report of the change requests that have been logged to the Change Tracking tool in the past week
- Implementation Report that list all changes scheduled to be implemented

During the meeting the CCC may:
- Review the new change requests
- Discuss the cross-functional impacts
- Verify that the target implementation date is realistic
- Set the Staging Date
- Update the status of the change requests scheduled to be implemented that week during one of the change windows
- Evaluate the quality metrics of the changes that have been migrated to production and discuss any lessons learned

### Statement of Work / Scope Definition Portion of the present description

During the third phase **2306**, depending on the Change Category (Project, Enhancement, or Emergency), a Statement of Work or simple Scope Definition portion of the present description may or may not be required. These portions of the present descriptions both serve to define what the change request entails, and record what is agreed to by the change requester and IT.

The Statement of Work, which is currently in use sometimes in FIP, is a detailed portion of the present description that describes the work that may be done for the change request. The Scope Definition portion of the present description is a simple portion of the present description of the scope of the change. It can be an email message, a faxed letter, or a brief Microsoft Word portion of the present description. The following table shows what is required:

| Change Category | Statement of Work | Scope Definition Portion of the present description |
|---|---|---|
| **Project** | Required | Not Required |
| **Enhancement** | Not Required | Required |
| **Emergency** | Not Required | Not Required |

Once the developer starts working on the Statement of Work or Scope Definition portion of the present description, the developer should set the status of the change request in the Change Tracking tool to "Assigned".

The Statement of Work / Scope Definition portion of the present description is sent to the change requester for sign-off. The sign-off needs to be checked-off on the Migration Checklist in the Change Tracking Tool in order to migrate the change to production. This sign-off serves as a quality checkpoint that the work on the change request may meet the business needs of the change requester.

### Analysis & Design

This phase 2308 is required only for project change requests. For example, the developer may create technical analysis and design specifications portion of the present descriptions. Other impacted groups may create a technical impact statement.

### Code & Unit Test

In this phase **2310,** the developer codes the change request and unit tests the code changes to ensure that it works as designed and that it meets the business needs.
The developer should set the status of the change request in the Change Tracking tool to "Development".

After the change has been coded and unit tested, the developer should fill in the Resolution field for the change request within the Change Tracking Database. The developer should also fill in the approximate number of hours it took to complete the change request in the Actual Hours field

### System Test

This phase **2312** is required for all project change requests and some enhancements. In this phase, the developer tests the change to ensure that the system's functionality works as designed. Furthermore, this test also ensures that the code change did not adversely affect other areas of the current system. This may entail running some pre-defined System Test scripts. For certain change requests, it is important to test the code change against a large volume of data. This may check if the change may handle all the data in the production environment. For any change requests which may impact interfaces both in and out of the target application, it is necessary to test that all the interfaces still work correctly. This may prevent a change request from adversely impacting other systems.

The developer should set the status of the change request in the Change Tracking tool to "Testing".

### User Acceptance Test

In this phase **2314,** the most appropriate person, whether it is the requester or a user who may be directly affected by the change, may assume the role of the test administrator. The administrator tests the change request to ensure that it meets the original business need. In some cases, the developer may actually run the test plans that the test administrator creates, and the test administrator may validate the test results. Once the test administrator agrees that the change satisfies all the test criteria, the developer needs to check the user acceptance test sign-off box in the Change Tracking Tool.

The sign-off is needed to migrate the change to production. This sign-off serves as a final quality checkpoint that the work on the change request meets the business needs of the change requester.

### Fill out Migration Form

In this phase, the developer goes through a final process before submitting the change request to be moved to production. The developer should move all objects associated with the change request from the testing environment to the staging area.

In order to move the change to production, the developer needs to complete the Migration Checklist form on the Change Tracking Tool and inform Production Control 2316 by the Staging Date. This form contains all the information about the objects that need to be moved from the staging area into the production environment. This form is a streamlined checklist of all the things that the developers must do in order for Production Services personnel to move the objects to production. Whenever a sign-off checkbox is checked or unchecked, the current user's ID and the current date may be captured by the Change Tracking tool.

The following Migration Checklist items are required for the different change categories:

| **Checklist Item** | **Project** | **Enhancement** | **Emergency** |
|---|---|---|---|
| Statement of Work | Required | Not Required | Not Required |
| Scope Definition | Not Required | Required | Not Required |
| User Acceptance Test | Required | Required | Not Required |
| Tech/Code Review | Required | Required | Not Required |
| Complete Portion of the present description | Required | Required | Not Required |
| Complete Components | Required | Required | Required |
| Submit Production Move | Required | Required | Required |
| Distribution Lists Requirements (TCPIP, Special Forms, Microfiche, Electronic Files) | Required | Required | Not Required |
| Identify Impacted Systems | Required | Required | Not Required |
| Capacity Planning | Required | Required | Not Required |
| Ready to Migrate | Required | Required | Required |

The Ready to Migrate checkbox is used to summarize that all the required sign-offs have been obtained and that the code is ready to be migrated to production. Finally, the developer should set the status of the change request in the Change Tracking tool to "Migrate".

### Move to Production

Once Production Services personnel examines a completed Migration Checklist form, they may verify that all objects to be moved into production are in order, and that the change can be moved on the migration night in phase 2318. They may also ensure that all relevant items on the Migration Checklist have been completed. This check serves as the final quality checkpoint before the change goes into production.

Production Services personnel may move all project and enhancement change requests to the Production environment during prescheduled outages or immediately in the case of an emergency fix. Production Services may then informing all system users what changes have been moved into production.

Production Services personnel should set the status of each migrated change request in the Change Tracking tool to "Production". They should also set the Actual Implementation Date to the date the change was moved to production.

### Measure / Monitor Change in Production

Business users and developers should continue to actively monitor the change requests after it is migrated to production during phase 2320. If no problems develop in production due to the change request, the Change Control Committee may confirm that the team leader of the change request should set the status of the change request in the Change Tracking tool to "Closed". If problems do develop in production, the status should be set to "Re-Open". The developer is then re-assigned to fix the change request.

If the change request in production caused other problems to jobs in production, and a new fix is needed, the change request is reopened once again. If the change request caused problems in other jobs that requires modification to the other jobs, then a new change request is created, and the source of the new request is tracked back to the old request.

The Change Tracking tool contains metrics to track the quality of the change request. The Change Control Committee may assign the Migration Metric and Production Metric values for each change request approximately 35 days after it was migrated into production. If problems occur during the migration of the change request, the Change Control Committee may assign a "Fail" for the Migration Metric. The Problem Description should then be completed to explain why this problem occurred. The Lessons Learned should be filled with what lessons can be learned from the experience. If no problems occur, the Migration Metric may be assigned a "Pass".

If problems occur in production due to the change request, the Change Control Committee may assign a "Fail" for the Production Metric. The Problem Description and Lessons Learned fields should also be filled with the relevant information.

Below are the criteria for the Change Control Committee to use in deciding if a change request passed or failed the migration metric or the production metric. A change request may pass if it meets the following criteria.

### Migration Metric Criteria

Flawless movement of all resources (Active Server Pages, MTS Components, Java Classes, Graphics, Data Model, etc.), from the staging environment to the production environment) is required. (I.e., resource movement must have no negative effects.)

During implementation activities there must be no unplanned, adverse effect on regularly scheduled batch or online processing, online availability feeds to other systems and reports.

### Production Metric Criteria

Production online processing and production batch processing must not experience any release-related abends.

The production implementation may not cause problems, interruptions in service or failures in other areas within 35 days of the initial implementation date. Any release with is backed out due to quality or problems may fail this criterion.

The change must be delivered when planned. A postponement due to external reasons may not cause the change to fail this criterion. Postponements due to quality or readiness of code must be communicated to the Change Control Committee, project team, and customers at least 3 days prior to the scheduled implementation date.

### Migration Control

### Description

Migration Control tools control multiple versions of source code, data, and other items as they are changed, tested, and moved from one development environment into another, for example, from development to test and from test to production. The list below provides a list of the various environments and their specific purpose within the project lifecycle.

| Environment | **Description** |
|---|---|
| **Build / Component Test** | This 'virtual' environment is configured to reside nearly entirely on an individual developer workstation. Web and application services are running locally for presentation and business logic. |
| | Architecture components are accessed via a mapped network drive. A shared RDBMS Server or a local, more lightweight version of the database can be used for database services. |
| | Different workstation configurations may exist for component or user interface developers. Both types of developers use a source code repository for check in/out of code during development. In the event that the required modifications affect both a user interface and server-side components, then both developers may share components and interfaces using drive mappings. |
| | As code changes are made a 'Unit' or Component test is performed to ensure that changes made in one area of the code do not have adverse affects on the rest of the component. |
| | When the build code is deemed fit for promotion, the source code is checked into the source code repository and the source code administrator is notified of the status. |
| **Staging Test** | This environment is used to verify and test packaged systems and components. This allows developers to verify the functionality and use of third party vendor applications during the Build/Unit Testing phase. |
| **Assembly Test** | This environment is a smaller testing environment used to ensure that end-to-end functionality of the system and to verify that changes made during any build efforts do not impact other areas of the system. A single developer lead (typically the Source Code Administrator) gets the latest version of the source code from the source code repository, performs a complete build, and executes a complete regression test of the system. |
| | When a point when the code is deemed stable and the system test environment is ready, the code residing on the integration server is checked back into the source code repository using a version label. Additionally, the binaries from the integration server are copied to the system test server for continued testing. |
| **System Test** | This environment, sometimes referred to as Product Test, is used for complete system technical and functional testing. Typically there are assigned project team members tasked with writing and executing system test scripts, logging errors as they are encountered and ensuring that the delivered application satisfies the functional requirements set by the client. |
| | From this point, system application and architecture binaries are promoted to the production environment. |
| **Performance Test** | This environment is used for conducting performance evaluations of the application and supporting architecture components. This environment should be configured to simulate the production system as closely as possible. Additionally, data and transactional volume should be configured to simulate the system under worst-case scenarios. |
| | Performance testing tools should be utilized to simulate multiple users as well as monitor and report performance results. |
| **Production** | This environment consists of key hardware and software components to support the business operational systems. Typically, only applications and components that have been thoroughly tested for functional and technical accuracy are moved into this environment. |

With a ReTA/Microsoft-centric environment, a few key issues arise with respect to environment migration. These issues relate to the fact that the application is based on the use of Active Server Pages, Microsoft Transaction Server components and Java Classes.

### Sequence of Events

To perform the code migration, certain steps should be followed to ensure that users that are currently in the application are not adversely affected. This can be accomplished by performing the migration in the following order:
Using the Internet Information Server administration utility, monitor the site's number of active users. A count of zero indicates that no clients are currently hitting the site. Shut down the web listener to prevent additional users from connecting to the site.

Within the MTS Administration tool, shut down all server processes. This cleans up an components that may still be awaiting garbage collection from the Java Virtual Machine.

If the component interfaces have not been modified, it is possible to copy the new version of the Java Classes directly to the new environment. If the interfaces have been changed, the MTS administrator may need to delete and recreate the individual components within MTS.

Copy any new web server files (ASP, HTML, graphics, etc..) to the target directories on the web server.

Restart the web listener to allow users access to the application.

### Module Location

There are basically three types of modules that get migrated during a ReTA engagement. Web Server files, Application files and database objects.

Web Server modules include Active Server Pages (ASP), static HTML portion of the present descriptions, graphics or images and JavaScript files. The ASP and HTML portion of the present descriptions may have security restrictions placed on them from within Microsoft Internet Information Server (IIS) and from the Windows NT Server. Security can be set to include individual user accounts, groups/roles, or no security.

Application Server - Two file types are migrated within application servers, COM Dynamic Link Library's and Java Classes. Both files are created during the application and architecture build processes. The COM DLL's require registration within MTS by inserting them into a MTS Package. In the event that the Web and Application servers are two physically different machines, an export process is required between them to instruct the Web server where the business components physically reside. For more information on the registration and exporting processes refer to the MTS online help.

In the case of the Java Classes, they need to reside in a directory that is defined within the server's 'CLASSPATH' environment variable. For ReTA Phase 1 & 2 development and testing all runtime files were located with **C:\ReTA.** Therefore the following classpath environment variable was defined on each developer's workstation:
CLASSPATH=C:\WinNT\Java\Classes;C:\WinNT\Java\TrustLib;C:\ReTA\Architecture;C:\ReT A\Application

Database Server - These items include tables, views, sequences, triggers, stored procedures and functions, and user/schema information. These items are not necessarily particular to multi-tiered development. However, care should be taken to ensure that architecture tables and other objects are located separately from the application objects.

### Security

Within the ReTA application model, security is enforced at the Web and Application Servers. In the case of Web server security, access to ASP and HTML files can be restricted using the Access Control List security provided by Windows NT. Security on these objects can be set at the group (role) or individual user levels.

A component within MTS utilizes role-based security to determine who may or may not have access to a specific COM component. A role is a symbolic name that defines a group of users for a package of components. Roles extend Windows NT security to allow a developer to build secured components in a distributed application.

For example, Figure **24** depicts the application of Roles **2400** within the Microsoft Transaction Server Management console **2402.** The package labeled 'ReTA Applications' **2404** has a single role defined as being able to access it, 'ReTA User' **2406.** Users that are members of the local 'ReTA Administrators' and 'ReTA User' Windows NT groups **2408,2410** are allowed to function in the ReTA User capacity defined for this package.

Due to the security options available at both the Web and Application server levels, care should be taken during code migration to ensure that security settings are consistent and applied correctly to ensure accurate execution.

### MTS Transactions

Within MTS, every component has a transaction attribute that can be set by the MTS administrator to indicate what level of participation a component has within a transaction. Care must be taken during MTS component migrations to ensure that the correct transactional attributes are set within MTS.
The transaction attribute can have one of the following values:
- **Requires a transaction.** This value indicates that the component's objects must execute within the scope of a transaction. When a new object is created, its object context inherits the transaction from the context of the client. If the client does not have a transaction, MTS automatically creates a new transaction for the object.
- **Requires a new transaction.** This value indicates that the component's objects must execute within their own transactions. When a new object is created, MTS automatically creates a new transaction for the object, regardless of whether its client has a transaction.
- **Supports transactions.** This value indicates that the component's objects can execute within the scope of their client's transactions. When a new object is created, its object context inherits the transaction from the context of the client. If the client does not have a transaction, the new context is also created without one.
- **Does not support transactions.** This value indicates that the component's objects do not run within the scope of transactions. When a new object is created, its object context is created without a transaction, regardless of whether the client has a transaction.

### Tool Recommendation

Many configuration management tools are available on the market today, some of which provide many features useful for code promotion and management.

During the ReTA Phase 1 engagement, Microsoft Visual SourceSafe was utilized for it's labeling and source code management capabilities. Additionally, the ReTA Change Tracker database could be utilized for source code migrations that required change management knowledge and approval. In the event that client requires the use of paper or email based migration control, the ReTA Migration Request template can be used.

### Procedures/Standards

### Processes

The processes that guide development within ReTA engagement environments are represented in Figure **25****,** which illustrates an environment migration process **2500.** These processes include creating a new application **2502,** modifying an existing application, and applying emergency bug fixes **2504.** The solid lines represent stages required for new/modified application process. Dashed lines show the path for emergency bug fixes. Note: The term application used here is broadly applied to any managed module or component.

Processes are defined by stages shown as individual boxes. Through these stages, applications are eventually (or quickly in the case of emergency bug fixes) promoted to production. Stages provide for initiating, managing, securing and coordinating changes to applications.

The stages for the projects were developed in conjunction with representatives from each development team. It is important to note that the development stages represent the lifecycle of an application, not data. Within each development stage, there can be multiple data sets. For example, within the system test stage, an application team might wish to run several test cycles in parallel. In order to do that and keep the data consistent, a database for each cycle is required.

The CM process may ensure application modules are promoted through the development stages in a consistent manner. It is up to each application team to decide how to use each stage. For example, the application testing team may want four databases within the system test stage for different types of tests, whereas the assembly testing team may only want two.

* - Stage is used to consolidate and verify vendor changes. Depending on the change, it may be migrated to Development or System Test **2506,2508** directly. The order may be dictated by project requirements.

A very important tenet of the CM process is that an application modification can only be in one stage at any point in time. Consider the example of module1. Modulel starts out in development. When the development team indicates, the Source Code Librarian moves module1 into system test. As soon as that happens, no changes can be made to module1. Only after module1 is promoted to production **2510** can modifications be made to the module (further enhancements, bug fixes, etc.). The purpose for this rule is to prevent the situation where one developer is modifying a module when that module needs to have a bug fix to continue testing. There is one exception to this rule, emergency fixes.

When the situation dictates an emergency fix, the module affected needs to be modified immediately. When this happens, the module in question should be fixed within the development stage. When the fix is made, the module may immediately be put back into production. However, the same change also needs to be applied/promoted to the module in system test stage. This may allow modules in system test to always be current with what is in production.

The CM process depends on change control records (CCR) for tracking changes to the system. A change control record is created for every new module or modification. The CCR is used to coordinate migrations and communicate status for each module in the system. One may see the use of the CCR throughout every process description. The CCR processing system may be automated through Notes.

Major tasks and responsibilities define each stage of a process and are covered in the pages that follow. These tasks and responsibilities are not intended to be a development methodology. Any references to deliverables and/or portion of the present descriptions is informational only and provided to help anchor an already existing development methodology. However, specific deliverables and portion of the present descriptions required for the change management process are required and may be highlighted.

### Development/Unit Test

Development team checks required application source code out of source code control. See Figure **26****,** which illustrates a Development/Unit test **2600** for existing applications. Note: In the event that this is a new application, the developer may use the appropriate template from source code control.

As needed, DBA **2602** checks required database source code out of source code control. Also as needed, DBA works with development team to approve and prepare modifications to development database. All work occurs on developer's workstation using local web and application server processes. Note: A shared web/application may be used for vendor staging.

Unit testing is ongoing during development. The development team checks modified application source code into source code control. The development team also fills in a change control record indicating which modules have changed. As needed, the DBA checks modified database source code into source code control. A source Code Librarian **2604** verifies/prepares necessary objects for building new applications. Unit test and development is completed. In some cases, a string test may be required. The system test team is notified, such as by e-mail.

Deliverables from this stage might include:
● Modified or new application
● Modified or new database objects
● Unit test data and output

CM Deliverables from this stage include:
- A change control record with developer information filled in.

### Assembly Test

With reference to Figure **27****,** an assembly test team **2700** reviews user requirements and prepares validation or test plan. Database modifications are fetched from source code control and applied to an assembly test environment **2702.** The Source Code Librarian fetches new application, builds it and copies it into assembly test environment **2704.** Validation or test plan is executed pass/fail/deviation. The assembly test team signs change control portion of the present description. Deliverables from this stage might include:
- Completed validation or test plan with pass/fail/deviation information.

CM Deliverables from this stage include:
- A change control record with assembly test information.

### System Test

System test team reviews user requirements and prepares validation or test plan. See Figure **28****,** which illustrates a system test **2800** for existing systems. Database modifications are fetched from source code control **2802** and applied to the system test environment **2804.** The Source Code Librarian fetches the new application, builds it and copies it into the system test environment. A validation or test plan is executed pass/fail/deviation. The system test team **2806** signs the change control portion of the present description.

Deliverables from this stage might include:
- Completed validation or test plan with pass/fail/deviation information.

CM Deliverables from this stage include:
- A change control record with system test information.

### Production

Figure **29** is a flowchart for production of existing applications. The change control record is forwarded to the production operations team **2900** responsible for scheduling changes to production. A promotion to production is scheduled on the production plan **2902.** Database modifications are fetched from source code control **2904** and applied to the production environment **2906.**

The Source Code Librarian fetches the new application, builds it and copies it into the production environment. The controlled change-tracking portion of the present description is signed and filed. Electronic copies of all portion of the present descriptions and portion of the present description can optionally be stored in source code control or other portion of the present description storage system.

Deliverables from this stage might include:
- Application promoted to production.

CM Deliverables from this stage include:
- A complete change control record with production information.

### Version Control

### Description

Version Control tools control access to source code as it is developed and tested and allow multiple versions to be created, maintained, or retrieved. For maintenance management purposes, it is desirable to designate one individual team member to function as the source control administrator. Duties for the source control manager would include the administration of source control users and projects, scheduling and performing periodic backups and applying labels to specific versions of the code (for migration purposes).

Examples of architecture and application source code maintained within the version control process include:

| Location | **Types** |
|---|---|
| Web Server | Static HTML, Images, JavaScript |
| | Active Server Pages (ASP) |
| | Cascading Style Sheets (DHTML) |
| | Architecture ASP Header Files |
| Application Server | Activities |
| | Sub-Activities |
| | Business Components (factories, supporting Business Objects) |
| | Architecture Frameworks |
| Database Server | Database specifics (table, rollback segment and temporary space information) |
| | Users, Roles |
| | Tables, Indexes, Triggers |
| | Procedures, Packages, Sequences |

### Tool Recommendation

Many configuration management tools are available on the market today, some of which provide test data management functionality.

During the ReTA Phase 1 engagement, two different tools where utilized and evaluated: MicroSoft's Visual SourceSafe^{™} and Intersolve's PVCS Version Manager^{™}. Both applications are relatively simple use and administer. Visual SourceSafe is preferred for small to medium sized engagements and PVCS Version Manager is preferred for large, enterprise-scale development efforts. For a complete description of the configuration and usage of the Microsoft Visual SourceSafe application as it was utilized on the ReTA Phase 1 engagement, refer to Source Control.

### Visual SourceSafe

Visual SourceSafe from Microsoft ships with the Visual Studio suite and as such is tightly integrated with the Visual Integrated Development Environments. See Figure **30****,** which illustrates a frame **3000** of Visual Source Safe. Check in and check out functions **3002,3004** can be performed from with Visual Basic or Visual J++. Additionally, Rational Rose is also tightly integrated with SourceSafe.

Additionally, this product provides:
- Easy to use drag-and-drop for file check in and check out
- Historical reporting and impact analysis
- User and project level security
- Archive and restore functionality
- Version 'Labeling' for source code migration
- Support for web based applications

### PVCS Version Manager

PVCS Version Manager from INTERSOLV is the industry standard for organizing, managing and protecting your enterprise software assets. Version Manager enables teams of any size, in any location, to coordinate concurrent development, with secure access and a complete audit trail. See Figure 31, which illustrates a frame **3100** of PVCS Version Manager I-Net Client.

PVCS VM Server extends the power of Version Manager to teams enterprise-wide via the Internet and Intranets. An intuitive Web client lets users connect to a secure archive and work interactively, anywhere in the world, while sharing protected, centrally managed software.

Additional features include:
- I-NET client is simple and easy to use. It supports developers in many locations, working on many platforms
- Organizes and references all project components graphically with a flexible, project-oriented approach
- Use easy drag-and-drop to check files in and out of the system with the check in and check out buttons **3102,3104**
- Graphically view project history and see file differences in side-by-side comparisons
- Branch and merge as needed, with automatic alerts of any conflicts
- Automate development processes with event triggers
- Set up projects quickly with online assistants for project configuration, security and customization

### Procedures/Standards

### Build & Integration

Figure **32** is an illustration of a Build Source Control Model. During the Build phase of a ReTA engagement, the workstation **3200** of each individual developer should be configured to function independently of other workstations and servers **3202** (except for the development database **3204).** This process may require developers to first get an updated version of the application source files in addition to those files be checked out for modifications.

The benefits of this configuration are:
- Individual development changes do not effect other developers
- Easier debugging and testing
- Different project team members may check out different versions and/or components of the application concurrently. Changes can then be merged later.

### Assembly Test

Figure **33** illustrates an Assembly Test phase control model. During the Assembly Test phase of a ReTA engagement, the Source Control Administrator may be responsible for the mass checkout and build of the entire application or architecture. Test workstations **3300** may access a web the app server **3302,** which is connected to the source code repository **3304** and the database server **3306.**

To aid in this process, the use of 'Labels' within the source code repository is employed to identify specific versions of files and projects. (See Figure **34****,** which illustrates Microsoft Visual SourceSafe 'Labels' **3400).** Labels allow for marking a specific set of files within the repository with a logical name and version. At a later point, it is possible to display the different labels and retrieve the desired version.

### Environment Management

This portion of the description identifies the miscellaneous application and system-level services that do not deal with the human-computer interface, communication with other programs, or access to information. Environment Management Services identify each component used to perform the operating system services, system level services, application services, and run-time services.

### Systems Management

In order to maintain an effective and secure infrastructure, System Management procedures are essential in the success of obtaining a stable environment. These systems require tools, utilities and processes that allow administrators to monitor running components and change their configuration. Systems Management involves all functions required for the day to day operation of the ReTA environment (e.g. event monitoring, failure control, monitoring, tape loading, etc.). Regardless of the changes taking place within the Net-Centric environment, Systems Management activities must take place in an on-going manner.

### System Startup & Shutdown

A comprehensive development environment rapidly becomes sufficiently complex that the startup and shutdown of the environment must be managed carefully, and preferably automated. This is key to ensuring the integrity of the environment. Startup may involve the carefully sequenced initialization of networking software, databases, web servers and more. Similarly, shutdown involves saving configuration changes as needed and gracefully taking down running software in the correct sequence.

An Uninterrupted Power Supply (UPS) provides a server with power when the AC power fails or is marginal. The UPS may also shut the server down, in an orderly fashion, in the event of a power failure. The UPS may not shut down the server if the power failure is brief.

The Smart UPS 1400 should be configured with an interface to the server. The recommended interface is the serial port B (COM2) on most servers. PowerChute Plus 5.0 software from American Power Conversion is the recommended choice.

The basic purpose of PowerChute Plus is to safely shut down an operating system and server in the event of a power failure. To do this properly, PowerChute Plus needs the UPS to provide battery power to the system while PowerChute shuts down the system. This is where the correct sequencing of Events becomes important.
Clear and accessible portion of the present description of startup / shutdown procedures Automated startup / shutdown process that rarely requires manual intervention
A product that has remote power on reset capabilities

### Backup and Restore

The incremental value of the daily work performed on the development project is high. This investment must be protected from problems arising from hardware and software failure, and from erroneous user actions and catastrophes such as fires or floods. The repositories and other development information must therefore be backed up regularly. Backup and restore procedures and tools must be tested to ensure that system components can be recovered as anticipated. The large volumes of complex data generally require automation of backups and restores.

The advent of Netcentric technologies has introduced an increase in media content that requires storage. The environment may support a high volume of media files, which must be considered in the backup/restore plans. Storage capacity planning should allow for the typically increased size of these file types.

As the amount of storage may grow significantly over time on a large project, the hardware requirements may increase. Sufficient room for growth should be planned when selecting the tools and hardware. Switching tools and hardware can be problematic due to lack of upward compatibility (DDS - DLT, various tools etc.).

The time required for backups must also be considered. Usually the number of hours without development per day decreases over time and if backups can only be performed when no user is logged in, this might become a problem. It is generally the case that the project may benefit from buying the fastest and largest backup hardware/software it can afford.

### Storage Management

ReTA may implement an automated tape management system that provides location / retention special handling, file integrity and data protection.

### Archiving

Archiving can be particularly useful to safeguard information from previous versions or releases. More generally, it is used to create a copy of information that is less time-critical than the current environment at a given time. Archiving may be performed to a medium, which is different from the backup medium, and may involve other tools, which, for example, provide a higher compression ratio.

### Performance Monitoring

Performance Management ensures that the required resources are available at all times throughout the distributed system to meet the agreed upon SLAs. This includes monitoring and management of end-to-end performance based on utilization, capacity, and overall performance statistics. If necessary, Performance Management can adjust the production environment to either enhance performance or rectify degraded performance.

### Operating System

Windows NT may function as the ReTA Phase 1 Development Environment operating system, handling Environment System Services such as multi-tasking, paging, memory allocation, etc.

### System Level Services

The Windows NT Domain Controller allows users and applications to perform system-level environment services such as a login/ logoff process for authentication to the operating system; enforced access control to system resources and executables; and access to the local or remote system's user or application profiles.

### Application Services

The ReTA Phase 1 Frameworks may perform application Security Services, Error Handling/Logging Services, State Management Services and Help Services within the application.

### State Management

State Management Services enable information to be passed or shared among windows and/or Web pages and/or across programs. In Netcentric environments, the HTTP protocol creates a potential need for implementing some form of Context Management Services (storing state information on the server). The HTTP protocol is a stateless protocol. Every connection is negotiated from scratch, not just at the page level but for every element on the page. The server does not maintain a session connection with the client nor save any information between client exchanges (i.e., web page submits or requests). Each HTTP exchange is a completely independent event. Therefore, information entered into one HTML form must be saved by the associated server application somewhere where it can be accessed by subsequent programs in a conversation

### Security Services

ReTA implements Application Security through the ReTA Session and Activity frameworks. The Session framework provides "Session level Page access authorization", "User identification" and "session timeout" services. The Activity framework provides "Activity level Page access authorization".

### Error Handling/Logging Services

Error Handling Services support the handling of fatal and non-fatal hardware and software errors for an application. An error handling architecture takes care of presenting the user with an understandable explanation of what has happened and coordinating with other services to ensure that transactions and data are restored to a consistent state.

Logging Services support the logging of informational, error, and warning messages. Logging Services record application and user activities in enough detail to satisfy any audit trail requirements or to assist the systems support team in recreating the sequence of events that led to an error.

### Runtime Services

The ReTA Phase 1 Development Environment may use the Microsoft Transaction Server and the Microsoft Java Virtual Machine as a Run-Time Environment System Service. This affords a layer of abstraction between the applications and the underlying operating system.

### Problem Management

Problem Management tools help track each system investigation request - from detection and portion of the present description to resolution (for example, Problem Tracking, Impact Analysis, Statistical Analysis). Several problem management software packages are available from a variety of vendors.

### Tool Recommendation

### SIR Workbench

The SIR Workbench is another Microsoft Access tool that was developed for small to medium sized projects. It provides basic functionality of entering, modifying and reporting of architecture and application problems encountered during the testing and release phases of the project life cycle.

### Visual SourceSafe

Visual SourceSafe (VSS) from Microsoft ships with the Visual Studio suite and as such is tightly integrated with the Visual Integrated Development Environments. One of the features provided by VSS is the ability to search through the source code for given text strings. This is useful for performing impact analysis.

### Security Management

Security Management tools provide the components that make up the security layer of the final system, and may provide required security controls to the development environment. While some of these tools may be considered as nothing more than security-specific Packaged Components, many are an integral part of the development environment toolset.

### Database

Development Database security may be minimal. Database User IDs may be setup to grant user-level security. The engagement Database Administrator (DBA) may have a logon to allow for full permissions. Otherwise, a Developer ID may allow read/write access and a Core User ID may allow for read access only.

### Network

A Windows NT Group created specifically for the engagement may protect the Development shared file folder and subsequent sub-folders (ex 'ReTAArch'). Project members individual network accounts may be added to the Domain Group ensuring access. Local network administrators may be responsible for the creation and maintenance of individual and group account information.

### Application Server

The application server has two forms of security: Static security and dynamic (context dependent) security.
A Windows NT group may be created for each Role in the completed application (e.g. Customer, Manager). Microsoft Transaction Server's integrated Windows NT security allows the developer to determine the security rights for each component.
The dynamic, context dependent security is implemented by the developer using the Event Handler framework for the logging and display of errors to the user.

### Web Server

The web server has static security for each page and security to maintain control of the flow between pages. The static security uses the Windows NT group for each user role to restrict access to each page. For the flow control, the developer uses the Session framework to restrict the ordering of page requests. The allowed ordering of pages are entered into the Session database tables.

### Systems Building

System Building tools comprise the core of the development architecture and are used to design, build, and test the system.

### Analysis & Design

The BI Methodology has several application development routes that apply to different development scenarios. Routes currently exist in the methodology for custom and packaged application development. Component development is among several routes to be developed. Until the component development route is completed, component-based projects should be planned using a combination of BI Methodology and ODM task packages.
In general, BI Methodology should be used for all tasks that are independent of a specific technology. For example, tasks related to business modeling, user interface design, training development, package selection, and product testing should all be taken from BI Methodology rather than ODM. These technology-independent tasks typically occur early (business modeling, solution strategy, and requirements gathering) and late (product testing through deployment) in the project.
ODM content should be used for all tasks that are related to component and object development. In addition, ODM is the primary source for those tasks related to obtaining characteristics associated with component- and object-based development (such as flexibility and reuse). When using ODM task packages, take care to ensure that one consider how they link with the other elements of business integration (such as human performance).

### Data Modeling

### Description

Data Modeling tools provide a graphical depiction of the logical data requirements for the system. These tools usually support diagramming entities, relationships, and attributes of the business being modeled on an Entity-Relationship Diagram (ERD). Several techniques have evolved to support different methodologies (e.g., Chen, Gane & Sarson, and IDEF).

As systems are often built on top of legacy databases, some data modeling tools allow generation of an object model from the legacy database data model (DDL). By understanding the E-R diagram represented by the database, it is easier to create an efficient persistence framework, which isolates business components from a direct access to relational databases. Caution is required, however, as the resulting model is at best only partial, as an object model has dynamic aspects to it as well as static relationships, and may not correctly reflect the analysis performed in the problem domain.

When a component or object-based approach is used, data modeling is not performed. Rather, the object model represents both the data and the behavior associated with an object. In most systems, relational databases are used and the object model must be mapped to the data model. Standard mechanisms for mapping objects exist.

### Tool recommendation

### Visual Studio

Microsoft's Visual Studio 6.0 includes a database diagram tool that helps developers visualize structures of tables and relationships within a relational database. See Figure **35****,** which illustrates a Database Diagram **3500** within Visual Studio **3502.**
Using this project within Visual Studio it is possible to, for example:
- Connect to existing Oracle 7.33+ or SQL Server 6.5+ databases.
- View, print and modify existing database objects including table attributes and properties, views **3504,** columns, indexes, relationships, procedures **3506** and functions **3508.**
- Create new database objects.
- Generate SQL scripts for schema creation and update.
- Version control schema information using Visual SourceSafe.

### Visual Studio

Additionally, Rational Software's Rational Rose 98 provides Oracle8 data modeling functionality including schema analysis, SQL/DDL generation, reporting and editing. For a complete description of the product and its features visit the Rational Rose Website at www.rational.com.

Performance Modeling / Management

### Description

The performance of a system must be analyzed as early as possible in the development process. Performance modeling tools support the analysis of performance over the network. A simple spreadsheet may be suitable in some well-known and understood environments, but dedicated performance modeling tools should be considered on any project with high transaction volumes or complex distributed architectures involving several platforms.

In the case of Internet-based applications, as the Internet is not a controlled environment, performance modeling is limited to those components within the domain of the controlled environment (i.e. up to the Internet Service Provider). However, in the case of intranet-based systems, where the environment is controlled from end-to-end, performance modeling may be performed across the entire system.

Performance modeling for components involves the analysis of the projected level of interaction between components and the level of network traffic generated by this interaction. It is important for performance reasons that communication between components is minimized, especially if these components are distributed.

### Tool recommendation

Visual Quantify
Tivoli
Sniffer Basic
Application Expert

### Object Modeling

### Description

An object model usually contains the following deliverables:
Class Diagram (1 per functional area or 1 per component)
Class Definition (1 per class)
Class Interaction or Sequence Diagram (1 or more per scenario / workflow)
Class State Transition Diagram (1 per Class with complex state)
Tools such as MS Word, MS PowerPoint, ABC Flowchart (MicroGrafix), may be used to produce these deliverables. See Figure **36** illustrating Object Modeling **3600** within Rational Rose **3602.** Specific modeling tools do exist, however, and provide advantages such as cross referencing (for example, are all the methods used in the Interaction diagrams described in the class definitions?), automatic propagation of changes to other diagrams, generation of reports, and generation of skeleton code. However, some tools have problems with:
   - Usability and stability
   - Single users or small numbers of concurrent users
   - Proprietary repositories (usually file-based, rather than DB-based)
   - Support of extensions / customizations

As well as providing the usual editing and graphical functionality, a good modeling tool should:
- Interface with a repository (to support versioning)
- Support multiple users
- Generate code from the design

The industry standard to represent the object model is UML notation (adopted by OMG).

### Tool recommendation

Rational Rose 98
Visio 5.0
Visual Modeler 2.0 (Only valid for VB and VC++)

### Component Modeling

### Description

Component modeling can mean either designing components from scratch, or customizing and integrating packaged software. No specific component modeling tools exist, and current object modeling tools only provide limited support for components (e.g. for packaging related classes together). Class packages can be used to separate the object models for different components, with a separate class package(s) for the component model. This approach, however, is not enforced by current modeling tools, and requires project naming and structuring standards.

When component modeling is being performed using existing packaged software, some form of reverse engineering or importing is required from the modeling tool to capture the existing design.

During component design, the partitioned component model is designed, which defines physical interfaces and locations for components. It is important for performance reasons that communication between components is minimized, especially if they are distributed.

### Tool recommendation

Rational Rose 98
Visio 5.0
Visual Modeler 2.0 (Only valid for VB and VC++)

### Application Logic Design

### Description

Application Logic Design tools graphically depicts an application. These tools include application structure, module descriptions, and distribution of functions across client/server nodes.

A variety of tools and techniques can be used for Application Logic Design. Examples are structure charts, procedure diagrams (module action diagrams), and graphics packages to illustrate distribution of functions across client and server.

Application Logic Design functionality is also provided by a number of Integrated Development Environments (IDE).

With component-based development, Application Logic Design is performed through object and component modeling. The functionality is captured in use cases, scenarios, work flows and/or operations diagrams along with interaction diagrams/sequence diagrams. These are usually produced using MS Word, MS PowerPoint, ABC Flowcharter (Micrografix), or an object modeling tool.

### Tool recommendation

Rational Rose 98
Visio 5.0

### Database Design

### Description

Database design tools provide a graphical depiction of the database design for the system. They enable the developer to illustrate the tables, file structures, etc. that may be physically implemented from the logical data requirements. The tools also represent data elements, indexing, and foreign keys.

Many data design tools integrate data modeling, database design, and database construction. An integrated tool may typically generate the first-cut database design from the data model, and may generate the database definition from the database design.

With an object-based or component-based solution, the data-modeling task changes. In most cases, relational databases are still used, even where there are no dependencies on legacy systems. As there is an 'impedance mis-match' between an object model and a data model, a mapping activity must be undertaken. There are standard mechanisms for doing this. There are also tools on the market which allow the mapping of classes to relational tables, and which generate any necessary code to perform the database operations.

There is a tendency (especially when dealing with legacy systems) to treat data models and object models the same. It is important to recognize that at best, the data model represents only the static part of the object model and does not contain any of the transient or dynamic aspects. The physical data model may also change significantly (for DB optimization), further confusing the issue.

There can be performance problems with objects mapped to a relational database. In a worst case scenario, an object can be spread across many tables, with a single select/insert for each table, and as each object is loaded one by one, the performance becomes very poor. Some tools provide lazy initialization (only loading the parts as they are needed) and caching (minimizing DB hits).

The current trend seems to be for object-relational databases, with vendors such as Oracle adding object features to their core products. Although the support provided at the moment is limited, it is likely that in future versions Java or C++ classes may be able to interface directly.

### Tool recommendation

Rational Rose 98 (Only valid for Oracle 8)
ERwin

### Presentation Design

### Description

Presentation design tools provide a graphical depiction of the presentation layer of the application. Tools in this category include window editors, report editors, and dialog flow (navigation) editors. Window editors enable the developer to design the windows for the application using standard GUI components. Report editors enable the developer to design the report layout interactively. Placing literals and application data on the layout without specifying implementation details such as page breaks. The majority of these tools generate the associated application code required to display these components in the target system.

Using the dialog flow (navigation) editors, the developer graphically depicts the flow of the windows or screens. The Control-Action-Response (CAR) diagram is a commonly used technique for specifying the design of GUI windows.

The majority of Netcentric systems use Web browsers to provide a common cross-platform user interface. Presentation design for this type of environment therefore entails the generation of HTML pages, often with additional components (JavaScript, 3rd party ActiveX controls, Plugins) providing enhanced functionality or media content. Many tools are currently available for designing and creating web content, although HTML remains the common denominator, at the very least as a placeholder for the content.

In the case of systems published on the Internet, defining the target audience is less straightforward than in traditional systems, but equally important. Having a good understanding of the intended audience may be a big advantage when thinking about user interaction with the system, and therefore, the presentation layer of the system.

Within a ReTA based application, three types of web pages that are available include:

| Page Type | **Description** |
|---|---|
| Static HTML | This page consists of a single HTML file containing static text, formatting, scripts, anchor tags, and imbedded images. This type of portion of the present description is the most common as it can be created using an ASCII text editor such as Windows Notepad. |
| | For designing web pages in a WYSIWYG format, Many popular editing tools are available including Microsoft FrontPage, Microsoft Visual InterDev, and HomeSite. |
| | Design elements include: |
| | Static HTML v3.2/v4.0 portion of the present descriptions |
| | Graphics/Images |
| | JavaScript (client and server) v1.2 |
| Active Server Page (Non UI Framework) | This type of web page is created dynamically at the web server and written to the requesting client. These pages are useful when dynamic data is required within the web page itself. |
| | Microsoft FrontPage and Visual InterDev are popular ASP editors with Visual InterDev providing ASP debugging functionality as well. |
| Active Server Page (Using UI Framework) | This type of web page is also created dynamically at the web server and written to the requesting client, however, they make use of the ReTA User Interface Framework. |

### Tool recommendation

Microsoft Visual Studio 6.0
Rational Rose 98
Visio 5.0
Visual Modeler 2.0 (Only valid for VB and VC++)

### Packaged Component Integration

### Description

Packaged components are generally thought of as third party applications or services that provide ready-made business logic that is customizable and reusable. Additionally, legacy applications can be included in these discussions when there is a desire to reuse portions of or an entire preexisting application.
One of the benefits of component-based systems is the ability to separate the component interfaces from their implementation. This simple feature can help enormously with access to both third party components and legacy applications. The concept of putting an object or component interface on a non-object piece of software is called 'wrapping.'

There are several arguments for putting a wrapper around an third party application or legacy system instead of custom building or replacing the functionality that they provide:
- The wrapped component may provide functionality that requires deep technical expertise or knowledge to develop. (e.g. hardware drivers, EDI applications)
- The provided functionality may only be temporary. With a wrapper in place, the underlying implementation may change without affecting the consuming application.
- The wrapped component can now be reused within additional applications without additional effort.
- Wrapping can take considerably less time and effort than building the third party component or legacy application over again. The more complex the application being wrapped, the greater the cost savings in time and effort.
- Within wrapped components, it is possible to consolidate several existing applications into a single new service. (e.g. customer details from a ERP package as well as from the new system)

### Procedures/Standards

### Pure Component Integration

Component standards are maturing, particularly in eCommerce Applications. Although plug and play is not yet a reality, more application and ISV vendors are developing component based solutions for the eCommerce market place. Generally, this is the simplest form of integration if leading-edge eCommerce architectures are being deployed.

Care should be taken to allow for the migration from one vendor to another. To allow for this, the application developer should investigate encapsulating the component within an application wrapper.

### Wrapped Component Integration

Many of today's vendors provide ActiveX or Java classes that provide a direct component interface into their application or services. Some vendors such as SAP expose component interfaces which can be accessed by ORBs e.g. Microsoft's DCOM connector. The underlying architecture however is not component-based. This is not a problem providing the package provides scalable and robust application execution.

Another example is the use of Microsoft's COM Transaction Integrator **3700** and the Microsoft SNA Server for NT **3702.** These products allow for the wrapping of CICS transactions in COM component stubs **3704** that can be invoked from MTS components. See Figure **37****,** which illustrates directly calling a wrapped CICS component **3706.**

### Batch and Indirect Integration

This process of integration relies on the use of Message Oriented Middleware (MOM) to provide asynchronous messaging to and from the packaged application. This can be accomplished using Microsoft's Message Queue (MSMQ) **3800,** IBM's MQ/Series **3802** and Level 8's Falcon Bridge **3804** (to provide MSMQ to MQ/Series communication). See Figure **38****,** which illustrates indirectly calling a wrapped CICS component **3806.**

### Data Integration

This is the most common form of integration but restrictive because it involves development of duplicated business logic, risks breaking application integrity and causes maintenance overheads.

Construction

Construction tools and processes are used to program or build the application: client and server source code, windows, reports, and database. ReTA based development should use a base set of naming and coding standards.

### Tool recommendation

Visual Studio 6.0
Rational Rose 98

### Test

Testing applications (client/server or NetCentric) remains a complex task because of the large number of integrated components involved (i.e., multi-platform clients, multi-platform servers, multi-tiered applications, communications, distributed processing, and data). The large number of components result in a large number and variety of testing tools.

### Test Data Management

### Description

Members of the technology infrastructure and data architecture teams are often the ones who create and maintain the common test data. This requires full-time personnel, especially when a large number of test databases must be kept in synchronization. Many of the automated testing tools available on the market today provide test data management functionality.

At a minimum, vendor or custom applications and processes should be in place to perform the following:
- Database Schema Export & Import
- Individual or Bulk Table Deletion and Population
- Data Refresh/Restore

Additional functionality may include data generation or conversion, versioning and validation.

### Tool Recommendation

Many testing tools are available on the market today, some of which provide test data management functionality.

### Procedures / Standards

The ReTA Component Test Workbook Plan-Prep provides the mechanism for maintaining component test data required during test execution. When creating the test data, all attempts should be made to make the test data reusable.

### Test Data Manipulation

### Description

There are a few avenues for the manipulation of test data. When considering this function during the component and assembly testing phases consider the following:
- Create test data if the physical data model is stable.
- Use the existing application if it can create valid data.
- Convert production data if the Data Conversion Application and the production data are reliable.

### Tool Recommendation

If possible, leverage any existing data manipulations that were included with the database suite. Many database vendors provide data management and manipulation applications with their database systems. Additionally, many development packages, including Microsoft Visual Studio^{™}, provide database access and manipulation functionality.

For data generation, PLATINUM TESTBytes^{™} is a test data generation tool that connects to your database to create test data for your relational databases. With point-and-click action, one can specify the type of data needed. TESTBytes automatically generates up to millions of rows of meaningful test data, eliminating days or weeks of time-consuming effort and reducing costs.

### Procedures / Standards

For data conversion, the best approach is to:
- If data is going to be shared with an existing application, attempts should be made to reuse test data from the legacy system.
- Use the existing data store capabilities to extract or massage the data into a format that is easily integrated into the new application.
- Create one-time extract and formatting applications to extract the legacy data, perform formatting and business operations, and import the newly modified data into the new data store.

The ReTA Component Test Workbook Plan-Prep provides the mechanism for maintaining component test data required during test execution. When creating the test data, all attempts should be made to make the test data reusable.

### Test Planning

### Description

The test planning function during a ReTA engagement provides an opportunity to define the approaches, tools, environments and process to test the application and its individual components for functional and technical validation. This process is typically assigned to someone with experience in application development using similar technologies as those to be used on the new system.

### Tool Recommendation

The ReTA Component Test Workbook Plan-Prep provides the mechanism for maintaining and communicating component test information. Component test planning information such as component test cycles and component test conditions are included. Both worksheets are to be completed during the design phase by the designer.

### Test Execution

### Description

If testing environments have been created, application testing scenarios and scripts should be created to evaluate the application functions as designed. Actual results are compared against expected results portion of the present description with the test conditions. The use of automated testing tools is essential for fast, accurate regression and performance testing. Ensure the tool used for automated testing is easily configured. Also, ensure the scripts can be quickly updated to allow for user interface changes.

### Tool Recommendation

### Component Test Workbook

The ReTA Component Test Workbook Plan-Prep provides the mechanism for maintaining and communicating component test information. Component test planning information such as component test cycles and component test conditions are included. Both worksheets are to be completed during the design phase by the designer.

### Automated Testing Tool

There are many automated, web-based testing tools on the market today. Many tools provide record and playback scripting functionality. See Figure 39 which illustrates RSW eTest Automated Testing Tool 3900. Recommended features include:
- Auto record and playback of test scripts
- Data driven testing
- Easy test modification (many tools have proprietary scripting languages)
- Cross-browser support
- Multi-user simulation for load & performance testing
- Test summaries and reporting

### Procedures / Standards

In addition to the test planning elements of the CT workbook, component test execution worksheets are also included: component test script, test data, and expected & actual results worksheets. These worksheets are to be completed by the developer during the build phase. These scripts may be used by the developer/tester to execute the individual component tests. In theory, since the steps of the component test are portion of the present description, any developer or tester should be able to execute the test by simply following the steps outlined in the test script.

### Performance Management

### Description

Performance Management tools support application performance testing. These tools monitor the real-time execution and performance of software. They help to maximize transactions and response time to the end user. They are also useful in identifying potential bottlenecks or processing anomalies.

### Procedures /Standards

During the automated test execution process, the testing tool may automatically verify the current state of the system (i.e. actual results) against the expected state of the system (i.e. expected results) for each test case defined in the test script. Execution status may be reported through the reporting function of the toolset. In the case of performance or lead testing, the testing tool may provide a summary report including graphic illustrations describing the overall performance of the system.

### Test Results Comparison

### Description

Whether using automated or manual testing processes, after the completion of each testing cycle it should be clear as to what defects still exist within the system. By comparing actual results with expected results, the application tester and developer can quickly detect design and development errors within the system.

### Tool Recommendation

The ReTA Component Test Plan-Prep Workbook provides the mechanism for maintaining expected and actual results. The Expected and Actual Results worksheet outlines the expected result for each condition and lists the actual result encountered during the test execution.

### Procedures / Standards

During the automated test execution process, the testing tool may automatically verify the current state of the system (i.e. actual results) against the expected state of the system (i.e. expected results) for each test case defined in the test script. Execution status may be reported through the reporting function of the toolset.

### Test Coverage Measurement

### Description

Test Coverage Measurement tools are used to analyze which parts of each module are used during the test. Coverage analyzing tools are active during program operation and provide comprehensive information about how many times each logic path within the program is run. This Test Management and Quality Management tool ensures that all components of an application are tested, and its use is a vital and often overlooked component of the test process.

### Tool Recommendation

Rational's Visual PureCoverage^{™} is an easy-to-use code-coverage analysis tool that automatically pinpoints areas of code that code that have and have not been exercised during testing. This greatly reduces the amount of time and effort required to test an entire application and its components, increases the effectiveness of testing efforts by providing insight into overall program execution, and helps ensure greater reliability for the entire program, not just part of it.

### Procedures /Standards

Test coverage measurement ensures is used to ensure that the entire application or system is completely tested. A manual approach can be applied to ensure that every path of logic within the application is completely tested. To reduce the test preparation time, an automated testing tool that provides this functionality should be leveraged.

### SIR Management

### Description

SIR Management Tools help track each system investigation request from problem detection through portion of the present description resolution.

### Tool Recommendation

SIR Management Tools help track each system investigation request from problem detection through portion of the present description resolution. During the testing phases of the engagement, it may be desirable to reuse the SIR tools and processes developed for and used for overall problem tracking SIR Workbench

The SIR Workbench is a Microsoft Access based tool that has been used on various component and client/server engagements. It provides basic functionality of entering, modifying and reporting of architecture and application problems encountered during the testing phases of the project life cycle.

### Procedures / Standards

For a full description of the tool and its use, refer to the SIR Workbench.

### Development Architecture Physical Model

### Purpose

The ReTA Development Architecture Physical Model portion of the description shows the actual components comprising the Development Architecture and their relative location and interfaces. Additionally, the model depicts the platforms on which the components may reside as well as the distribution across the environment. The components in the Physical Model may support a portion of a function or more than one function from the functional model.

### Physical Configuration

Figure 40 is an illustration that describes the physical configuration necessary for ReTA development. The development environment was composed of the following hardware and software configurations:

| Name | CPU | RAM | Operating System | Software |
|---|---|---|---|---|
| RET ASR V1 **(400 0)** | **P-300** | **128 MB** | **Windows NT Server 4.0 (SP4)** | **Microsoft Internet Information Server 4.0** |
| | | | | **Microsoft Transaction Server 2.0** |
| | | | | **Microsoft Visual SourceSafe Client 6.0** |
| | | | | **HP OmniBack II Client** |
| RET ASR V2 **(400 2)** | **P-166** | **60** | **Windows NT** | **Microsoft Visual SourceSafe Server 6.0** |
| | | **MB** | **Workstation 4.0 (SP4)** | **HP OmniBack II Client** |
| RET AD B1 **(400 4)** | **P-300** | **128** | **Windows NT Server 4.0** | **Oracle Enterprise Edition 8.04** |
| | | **MB** | **(SP4)** | **HP OmniBack II Client** |
| RET ADE V1 **(400 6)** | **P-300** | **96** | **Windows NT** | **Microsoft Transaction Server 2.0** |
| | | **MB** | **Workstation 4.0 (SP4)** | **Microsoft Personal Web Server 4.0** |
| | | | | **Microsoft Visual SourceSafe Client 6.0** |
| | | | | **Microsoft Visual J++ 6.0** |
| | | | | **Microsoft Visual C++ 6.0 -Tools Only** |
| | | | | **Microsoft Internet Explorer 4.01 Oracle 8 Client** |

### Build Model

Figure **41** illustrates the application & architecture configuration for a typical ReTA Build environment **4100.** Each development workstation **4102** should be configured to provide systems management, configuration management and systems building support. In this model, all architecture and application components **&** services reside on the developer workstation. This allows the developer to design, build, debug and test independently of other developers.

### Assembly Test Model

Figure **42** illustrates the application & architecture configuration for a typical ReTA Build environment **4200.** In this model, the testing workstation **4202** is configured to provide presentation services by way of an HTML 3.2 & JavaScript 1.2 compatible web browser. The web/application server **4204** is configured with the current assembly test versions of ReTA application and architecture components.

### Security Management Architecture

### Overview

The ReTA Security Management Architecture includes security issues, concerns and recommendations associated with Net-Centric Computing. The Security Management Architecture deliverable is used to illustrate the potential security implications. The ReTA Security Management Architecture portion of the present description is divided into three main portions in order to encompass security requirements for Development, Execution and Operation Architecture.

### Development Architecture Security Management

Preserving security of information as it travels across the Internet, or even your own intranet, has become increasingly complex. The Internet is a public resource accessible worldwide, and is built on a foundation of inherently insecure technologies. Information which is available across the Internet is becoming more and more sensitive as business continue to deploy to the Internet. Implementing effective security in our new Net Centric computing environments presents some challenges without a doubt, but not insurmountable ones. By designing security into your Net Centric solution, and implementing the appropriate application, infrastructure, and procedural controls, security can be appropriately aligned with business risk. See Figure **43****,** which illustrates an IDEA Framework **4300** with components in scope ReTA Phase 1.

Everyone today is talking about Net Centric security. Keeping up with all of the security issues surrounding Net Centric technologies is more than a full time job, it has become a full time obsession. When designing a Net Centric solution, security is always at the forefront of everyone's mind, but what are the important things to consider? How do I know that I've addressed all the appropriate questions? How may my solution affect the security of my computing environment? How may that security impact my business? This paper may answer these questions, providing an overview of "things to consider" when designing a Net Centric solution. It may not attempt to provide detailed technical solutions, but it may navigate one to the right path to find that information.

### Impacts

### Security Impacts

There is no question that the trend toward Net Centric computing may impact the traditional computing environment. Systems are much more distributed, and applications are being used by a larger number of people to reach new objectives every day. Along with all of these changes come significant security impacts. So what is it about Net Centric computing that can lead to security problems?

First of all, the Internet is a public resource. Traditionally our computer systems were only used or accessible by a small audience which we knew and could control. Now our computer environment is linked to the Internet, which is accessible to virtually anyone who has the time and the money to invest. While most of these people have good intentions when it comes to using your resources, some have an evil purpose. Threats can come from many sources: teenage hackers, spies from other companies, even curious people who inadvertently cause damage. The public nature of the Internet also increases the ability of these malicious individuals to collaborate and recruit others, thus strengthening their cause. The Internet contains a wide variety of information that people are interested in, from public information resources to sensitive customer databases.

In addition to the very lure of interesting information on the Internet, there are vulnerabilities inherent to Internet technologies which can make that information more easily compromised. In fact, the original intent of the Internet was to share information, not to be used as a business tool. Security weaknesses are widespread and present in nearly all Internet related technologies. The very communication protocol used, TCP/IP, was designed with few provisions to protect the security of the data packet.

Of course, security problems weren't created with the Internet; many of our standalone computer systems have the same types of security exposures. However, the global nature of the Internet now transfers these insecure services rapidly around the world. Weaknesses that before could only have been exploited by a small number of users with access to the system, can now be exploited by virtually anyone. These breaches are also now publicized to the entire Internet community. For example, many high profile web pages have recently been attacked, including NASA, the Department of Justice, and the CIA. Although these attacks were limited to vandalizing their web pages, (as far as we know), the publicity generated from the attacks has raised questions about the security of their systems in general. Internet access not only made these attacks possible, it also publicized the attack around the world.

This rapid transfer of information raises an issue regarding the dynamic nature of today's environment. The Net Centric environment includes traditional long term users of systems, as well as one time users who require instant logons and immediate connections. Security may stand in the way of business objectives if it is not flexible and dynamic enough to adapt to everchanging business and technology requirements. In addition, new threats and risks evolve quickly in the Net Centric environment, and security programs may become ineffective and obsolete if not reviewed and updated regularly.

The Internet also brings with it a whole new set of legal issues, and topping the list are potential privacy implications. Businesses can now track your every movement on the Internet, from your email and IP addresses, to each site you surfed to and which ad one clicked. Does this constitute an invasion of your privacy? One may have freely given other businesses sensitive information aboutonerself, such as one's credit card number or one's social security number. To what lengths must that business go to in order to protect that information? If and when that information is compromised, who is liable? What is the penalty for breaking into a computer to which one is not granted access? What if one just looks around and does not cause any damage? These questions are just beginning to be addressed as cases are introduced in court and legislation is passed in Congress. But we are a long way from finding all the answers.

All of these security concerns have been widely publicized in the media, to the extent that the public now perceives security as a major issue on the Internet. These concerns may have the effect of impeding the success of an Internet solution, or even delaying a business decision to deploy to the Internet. Even as new technology emerges to solve many Internet related security problems, public opinion, legitimate or not, may still impact the success of any Internet solution.

### Application Impacts

There are obviously a myriad of security implications from the move towards Net Centric computing. The Internet, and the growth of local intranets, has made our computing environment look much different today than it did five years ago. So what does this mean? When designing a business solution in this new environment, security implications have to be considered at every step of the process. Application design presents a specific set of security related challenges.

### Application Design

The underlying theme in application design, from a security perspective, is to design in security from the beginning. Talk to Information Security representatives, and even internal auditors early on, and get their approval for your design. This can save retrofitting costs in order to achieve an adequate level of security, and may also end up giving one a more secure solution by integrating security right into the design of the application.

Once one is considering security, what is the best way to design it into your application? Even the most pompous security expert should recognize that your primary goal is not to build an application with really good security, it is to build an application that achieves a specific business goal. The challenge is to integrate security into that business goal so that it may not impede efficiency. Often security is tacked on a the last minute and impedes performance in the application, such that users may bypass security if possible, and curse it if not possible.

The next step is to consider the basic parameters of your application and how security applies to each of them.

**Who** needs access to the application, i.e. what is your user group? Is it all Internet users or some authorized subset? Does one only have one type of user or are multiple levels of authorization required?

**Where** may your application may be accessed from, the Internet or your intranet? How much control do one has over the security of that location and PC?

**What** is the confidentiality of the information your application may be transmitting or accessing? What implications would there be if that information fell into the wrong hands? Once these questions have been answered one can begin to choose the appropriate tools or mechanisms to provide an adequate level of protection.

When designing your application, consider implementing the minimum level of functionality and authority required to meet your business goal. This is often contradictory to basic instinct when designing a new solution, but consider the potential implications. If your application does not need to allow users to execute arbitrary operating system commands, don't let it. If your application does not need to run as root or supervisor, don't let it. Designing for minimum functionality may obviously be a tradeoff between business and security benefits, but in general, it is better meet the level of authority required, not exceed it.

### Security Integration

When designing security into your application, remember that one may not have to re-invent the proverbial wheel. Most information security groups may have corporate security strategies with which one can integrate. For example, an enterprise wide authentication scheme may be in use, with which one can integrate for remote access. Or there may be a single sign-on product with which your application may need to be compatible. Even if there is not a corporate security strategy in place today, consider the direction that the company is moving toward, and provide for future integration if possible.

### Auditing and Logging

Application auditing and logging is often overlooked because it is less than glamorous, but it does provide security administrators with a crucial tool for monitoring use of an application. Good logs should be searchable for known or suspected patterns of abuse, and should be protected from alteration. Logs can monitor a virtual myriad of data, including access times, user IDs, locations from where the application was accessed, actions the user performed, and whether or not those actions were successfully completed.

### Web Browser Security

While web browsers may not be exactly part of your application design, they are intimately related to many of the design decisions one may make, such as the programming tools one uses and the format your user interfaces take. The application programming tools portion of the description, above, discussed some possible ways a Web browser can exploit application security flaws. There are also design anomalies within the Web browsers themselves which can be exploited. Microsoft has fixed many of these flaws in their newest release of Internet Explorer, but their older versions are still vulnerable. This type of problem demonstrates that when considering integration with the major commercial web browsers, it is important to monitor news releases for recent security flaws. One may want to consider requiring your users to use the latest, most secure version of their Web browser if possible.

### Infrastructure Impacts

Today's Net Centric computing infrastructure requires a complex mix of operating systems, web servers, database servers, firewalls, management tools, routers, and underlying network components. Each different component of this infrastructure has specific security considerations which need to be addressed. These requirements are always growing and changing, as are the solutions which can be implemented. When designing this complex infrastructure, similar to designing an application, security should be considered early on in the process.

### Operating System Security

It is crucial to choose an operating system (OS) which can provide adequate security; and once chosen it is just as important to configure that OS in a secure manner. Any OS must address the same basic security questions, such as restricting permissions for what each user can access, limiting what actions each user can perform, providing monitoring and logging of user access, and restricting what services are available. Windows NT is without exception.

NT has been publicly available for over three years now, and while security issues may have appeared, fresh out of the box NT is a very secure OS. But there are still steps to take to improve this security. Configure your OS securely from the start, implement tools where appropriate, and continue to monitor the bulletin boards and vendor announcements for problems as they come up.

### Web Server Security

Many of the OS security guidelines apply to web servers as well. Regardless of your choice of web server, it is important to configure that server securely. The server should be set to run under an ID which is used only by that web server, and never as root. Directory permissions should be assigned according to a need to know philosophy, and your portion of the present description root (where published information is stored) should be different from your server root (where server binaries and configuration files are stored.)

In addition to these somewhat generic operating system security tips, there are several features which are specific to a web server which could create security exposures. In general, if one doesn't need a feature, don't turn it on; and if one does need a feature, make sure the potential security risks are understood. Server side includes allow HTML authors to place commands inside their portion of the present descriptions that cause output to be modified whenever that portion of the present description is accessed by a user. Hackers can take advantage of server side includes if they are able to place arbitrary HTML statements on your server and then execute them.

### Legacy System Integration

In order to truly take advantage of the power of Net Centric computing, new technologies need to be mixed and integrated with existing systems. More sophisticated intranets and extranets often require on line transactions or database inquiries of legacy environments which may not have the level of granular control required for secure access. In some cases, it may be possible to mirror the information from an existing platform to a more securable web server or database. This may protect the integrity of your sensitive systems while still providing the access for your on-line transactions. If a mirror system is not possible, a thorough audit should be performed of the security of your legacy system, to ensure that one is providing access to only those resources which are allowed.

### Network Security

Now one has chosen your access control mechanisms, configured your OS, and it's time to connect to your network. This action may strike fear into the heart of many network and system administrators, because this may create one more way network security can be compromised. Contrary to popular belief, it is possible to establish and maintain effective network security. The first step is to understand what all of your network components are, and how they are connected. By examining your network topology, one can determine where all of your access points are, and (hopefully) the way that access to them is controlled. If remote access directly into your network is required, the use of your modems must be appropriately restricted. Don't rely on knowledge of the phone number or a single static password as effective security controls.

In addition to identifying one's access points, one should examine the path that one's traffic follows, and determine if that path is vulnerable to snooping and attack. One of the more infamous hacker gangs, the Masters of Deception, once infiltrated a major telecommunication provider's data network, and had access to the corporate secrets of hundreds of companies as information was sent across the lines. Even if your data is just traveling over internal links, a network management station could still be monitoring traffic, or a sniffer could illicitly be installed anywhere along the line. There are two major security controls that mitigate these risks: firewalls to restrict who can access your secure network, and encryption to protect your data as it's sent over an insecure network.

### Firewalls

Firewalls are often thought of as THE answer to network security. There is a common misconception that purchasing and installing the "best" firewall available may automatically protect your network from the Internet. This is not necessarily true. In fact there are many factors to consider when choosing a firewall, and when placing and configuring that firewall in your environment. First of all, consider the type of network connection your are trying to protect. Firewalls are not only used to separate your intranet from the Internet, they can also be used to segregate a particularly sensitive or particularly insecure area of your intranet from the rest of your network. Depending on the services one wants to provide your users and what risk one is willing to accept, your choice of the "best" firewall implementation may change.

There are many different components of the firewall architecture to consider.

Packet Filtering Systems selectively route packets between internal and external hosts by either the type of packet, the originating host address, or the target host address. Packet filtering is typically implemented on a specific type of router called a screening router.

Proxy Services are specialized applications or server programs that run on a firewall host, which take users' requests for Internet services (such as ftp and telnet) and forward them, as appropriate according to the site's security policy, to the actual services. The proxies provide replacement connections and act as gateways to the services. For this reason, proxies are sometimes known as Application Level Gateways.

A Bastion Host is typically a dual-homed gateway with one interface on the internal network and one on the external network. It can be used to run proxy services or perform stateful packet inspection. The bastion host typically acts as the main point of contact for incoming connections from the outside world, including email, ftp and telnet requests, and DNS queries about the site.

A Perimeter Network or DMZ refers to a small network between your internal network and the Internet which provides an extra layer of security. Any publicly available resources one provides, such as a Web server or an ftp server, may typically be located in the DMZ, and restricted from one's internal network by a firewall machine or bastion host.

There are many commercially available firewall products that provide some or all of these features. Which product or firewall configuration is right for one may depend on what one's network looks like, what one is trying to protect, and what your users require.

### Event Monitoring

Before an incident can be responded to, it must first be detected. In the Net Centric environment, your firewall, routers, web servers, database servers, applications, and network management tools must be monitored to ensure they are working correctly and no violations have occurred. Monitoring packages can be configured to take different actions on a series of specified events, such as sending an email message if a log fills up, flashing an icon on a system administrator's screen if someone's user ID is disabled, or paging a network administrator if a link to the ISP goes down. Once this initial notification takes place, there should be escalation procedures to decide whom to notify next. For example, if the link to the ISP goes down, how long does, one wait before notifying one's manager? one's users? In addition, not all monitoring needs to be reactive. There are proactive monitoring tools available which can detect patterns of abuse or failure which may lead to larger problems, and can help one detect those problems before they affect your users.

### Backup and Recovery

People kick over servers, accidentally delete files, and spill coffee on machines. For these reasons and a host of others, Net Centric resources must be backed up in a manner so that they can be recovered. This does not mean dumping a bunch of files onto data tapes and stacking them in a corner of the server room. An effective backup and recovery strategy should address how backups may be taken, the media on which they may be stored, the location where they may be stored, and the frequency with which they may be taken. Backups should also be periodically tested to make sure that they are recoverable, for example to make sure the backup tape drive is still working. When designing your backup strategy one should also consider the specific types of applications, databases, and hardware which are in use in your environment. For example an Oracle database may probably not be recoverable from a .tar file. In addition to software resources, consider what would happen if your router or your ISP link were to go down. It may be necessary to maintain a backup link to a secondary service provider in the event that your ISP goes down for an extended period of time.

### Execution Architecture Security Management

The Execution Architecture Security focuses on Authorization, Encryption and Authentication in order to securely support applications and ensure data integrity throughout the life cycle of a single transaction. The ReTA Effort chose the Netcentric Architecture Framework (NCAF) to identify the appropriate components to focus on within the Execution Architecture. See Figure **44** which illustrates a NCAF Framework **4400** with the shaded components **4402** in scope for Phase 1.

### Authentication

Regardless of the operating system that one is using, access control is a major security concern. NT authenticate users by their knowledge of an ID and password that can be used multiple times however, all passwords are vulnerable in some manner. The advent of sniffing technologies allows passwords to be monitored and read over the network. Even if passwords are encrypted as they are sent, a keystroke capturing program could be installed at the client PC and used to capture passwords before they are encrypted. Perhaps advanced client side security can mitigate this threat as well, but even with the highest technology solution, a user could write his password down and stick it to the side of his PC, thereby defeating all of the technology just implemented.

The solution to this problem is some type of two factor authentication, meaning that users are authenticated with something they have, and something they know. The "something they know" can still be a password, and the "something they have" can range from the high end being a one time password generator, to the low end being an ID file stored on the user's PC or on a disk. In choosing an appropriate solution, one should consider ease of management and ease of distribution, the required strength of the solution, and integration into your environment. There are several examples of technologies which can meet your requirements, including the use of one-time passwords, time based passwords, or challenge response schemes. Once chosen and implemented, a secure authentication mechanism can be incorporated with both your operating system and your application to remove the risks associated with static passwords. Some authorization options are depicted in this Authentication Matrix:

| **Product** | **Description** | **Pros** | **Cons** | **Implementation** | **Vendors** |
|---|---|---|---|---|---|
| Smartcards | The smart card is a plastic card having the size and shape of a credit card, and containing a microprocessor chip with both secure storage of public/private key data and cryptographic processing capabilities | -Strong Authentication | -Additional Hardware | 4-6 people weeks | WetStone |
| | | | | | Schumberger |
| | | | -No Standard | | |
| | | -Login from various locations | -Slow Acceptance | | SmartCard Technologies |
| | | -Scalability | | | |
| PKI | The system required to provide public-key encryption and digital signature services. The purpose of a public-key infrastructure is to manage keys and certificates. A PKI enables the use of encryption and digital signature services across a wide variety of applications. | -Strong Authentication | -Requires infrastructure to operate Certificate Management Services | 4-24 people weeks | GTE Cybertrust |
| | | | | | |
| | | | | | VeriSign |
| | | | | | |
| | | -Enables the use of encryption and digital signature services across a wide variety of applications | | | Entrust |
| Hard Token | A hard token is a physical device that acts as "something a user has" . The end-user then supplies "something the user knows", namely a personal identification number or PIN. The combination of the token and the PIN, along with the user's public username, provides strong two factor authentication of the user. | -Strong | -Increased Cost | 4-8 weeks depending on API config. | Enigma Logic |
| | | Authentication | | | |
| | | -Versatility | | | Security Dynamics |
| | | -Login from various locations | | | Vasco |
| Soft Token | A soft token is a software device that creates a unique one-time password that cannot be guessed, shared, or cracked. The end-user then supplies a personal identification number or PIN. The combination of the one-time password and the PIN, along with the user's public username, provides two factor authentication of the user. | -Provides a significantly higher level of security than the reusable password | Users limited to log on from one computing location | 3-6 weeks depending on API config. | Axent Defender |
| | | | | | Security |
| | | | -More easily compromised than hard token | | Dynamics |
| ID / Password | A method of authenticating a user by which a user provides a unique identifier and a shared secret. | -Easy implementation | -Password Intensive | Native to Applet | |

### Encryption

In Net Centric computing it is likely that eventually your data may pass through a network that is not secure, where your data can be snooped or even changed. In order to guarantee confidentiality over any insecure network, including the Internet, some type of encryption must be used. Encryption may ensure that data cannot be read by anyone other than the secure target server, and that the data being transferred has not been altered. Today there are so many different strategies for implementing encryption, it is often difficult to choose which scheme is most appropriate. The specific encryption strategy chosen may rely on a number of factors.

What information exactly needs to be encrypted? If one is running a smart store over the Internet, maybe one only needs to encrypt the single piece of data that has the customer's credit card information. If one is allowing their system administrators to dial into their network via the Internet, one may probably want to encrypt the whole session.

How many users are there? If one want to just encrypt data between a few users and one's system, a private or secret key encryption scheme may be appropriate. If one is in a multi-user environment one may probably want to consider public key encryption, and the key management strategies that go along with it.

What does one's computing environment look like? If your applications or operating systems provide native encryption, these may be the easiest and most secure to implement.

Based on your answers to these questions, there are a number on encryption solutions available for implementation. If one is running a Netscape web server, one may want to consider Secure Sockets Layer, or SSL, which provides data encryption, server authentication, message integrity, and optional client authentication for a TCP/IP connection. Another WWW security solution is Secure Hypertext Transfer Protocol (S-HTTP), which is a security-enhanced version of HTTP, developed by Enterprise Integration Technologies (BIT). S-HTTP supports end-to-end secure transactions by incorporating cryptographic enhancements to messaging at the application level. Pretty Good Privacy, or PGP, is a common encryption solution for electronic mail. PGP may both authenticate the sender of the message, and encrypt the contents of the message through the use of a public key/private key pair. In electronic commerce solutions, the Secure Electronic Transactions (SET) specification which is being jointly developed by Visa and MasterCard may be considered. SET may require authentication of all parties involved with a credit card transaction through the use of digital signatures and certificates, and may use a separate encryption handshake in order to guarantee both confidentiality and integrity. Other encryption solutions include Point to Point Tunneling Protocol (PPTP), Private Communication Protocol (PCT), or the use of CryptoAPI. Some available encryption options are depicted in the following Encryption Matrix:

| **Product** | **Description** | **Pros** | **Cons** | **Implementation** | **Vendors** |
|---|---|---|---|---|---|
| Virtual Private Network | A secure, end-to-end connection is established through encryption in an application-independent channel. Encryption services can be computationally expensive and degrade performance. Hardware based encryption services usually provide increased performance over software based encryption. | - Application-independent channel | - High implementation cost | 1- 4 people weeks. | Axent Raptor Firewall VPN and Power VPN |
| | | - Best suited for static business relationships | - Requires software for remote users | | |
| | | | | | |
| | | - Does not require any additional software for enterprise users | | | Checkpoint VPN |
| | | | | | V-one SmartGate, |
| Protocol Specific VPN | A secure, end-to-end connection is established through encryption for a specific protocol. | - Reduced cost over traditional VPN | - Application dependent channel | 2-8 people weeks | WorldTalk's WorldSecure |
| | | - Reduced implementation time compared to traditional VPN | | | |
| Hardware Encryption | Performs cryptographic processing features on a dedicated hardware device. | - Increased security and performance over software encryption | - Increased cost over software encryption | 1-3 people weeks | Atalla SignMaster |
| | | | | | Cylink CryptoServer |
| | | | | | Timestep PERMIT/Gate |
| Secure Sockets Layer | SSL is a security protocol that prevents eavesdropping, | - Open standard | - Early implementations have security | Native to web components) | |
| | | - Low implementation | | | |
| | tampering, or | cost | vulnerabilities | | |
| | message forgery over the Internet. | - Strong take-up in the U.S. vs. SET | | | |
| PKI | The system required to provide public-key encryption and digital signature services. The purpose of a public-key infrastructure is to manage keys and certificates. A PKI enables the use of encryption, digital signatures, and authentication services across a wide variety of applications. | - Provides security infrastructure for multiple applications | - Expensive to implement | 4-24 people week | GTE Cybertrust |
| | | | - Requires ongoing key management activities | | VeriSign |
| | | | | | |
| | | - Provides authentication in addition to encryption | | | Entrust |
| Symmetric Key Encryption Infrastructure | The system required to provide symmetric key encryption and authentication services. Similar to kerberos, this system may provide a central repository for encryption and authentication services across multiple applications and computing platforms. | - Increased performance over public key encryption | - Authentication is not tied uniquely to one individual | (solution not implemented) | TriStrata Portion of the present description Security System |
| | | - Toolkits can be used to integrate security technology into applications | - Private information is stored in a central database | | |
| | | | - native in applications | | |
| | | | - limited to WIN95/NT | | |

### Authorization

When a user requests access to network resources, the Authorization service determines if the user has the appropriate permissions and either allows or disallows the access. (This occurs after the user has been properly authenticated.)

The following are examples of ways to implement Authorization services:
Network Operating Systems - Authorization services are bundled with all network operating systems in order to control user access to network resources.
Servers, Applications, and Databases - Authorization can occur locally on a server to limit access to specific system resources or files. Applications and databases can also authorize users for specific levels of access within their control. (This functionality is within the Environment Services grouping in the execution architecture.)
Firewall Services protect sensitive resources and information attached to an Intxxnet network from unauthorized access by enforcing an access control policy.

### Recommendation

ReTA may utilize all Windows NT-based resources, including those accessed using a Web browser, are represented as objects that can be accessed only by authorized Windows NT-based users. Access may be controlled through an Access Control List (ACL).

### Operations Architecture Security Management

The Operations Architecture is a combination of tools, support services, procedures, and controls required to keep a production system up and running efficiently. Unlike the Execution and Development Architectures, its primary users are the system administrators and the production support personnel.

All components of the Operations Architecture are integral to the successful management of a distributed environment. Any processes, procedures, or tools developed or chosen as an operational management solution for a specific operational area must be able to integrate with any existing or planned process, procedure, tool solutions for other Operations Architecture areas. See Figure **45** which illustrates a MODEnc Framework **4500** with an event processing component **4502** and an event and data generation component **4504.**

### Execution Architecture Design

### Overview

The Netcentric Architecture Framework (NCAF) identifies the run-time services required by Netcentric applications. The ReTA design effort used this framework to define the ReTA Execution Architecture requirements. Taken in the NCAF context, this portion of the present description describes the ReTA Execution Architecture implementation (through custom and/or vendor components) of the required run-time services.

The NCAF categorizes the runtime services into the following logical areas (see Figure **46** which illustrates the NCAF Framework 4600):
- Presentation Services **4602**
- Information Services **4604**
- Communication Services **4606**
- Communication Fabric Services **4608**
- Transaction Services **4610**
- Environment Services **4612**
- Base Services **4614**
- Business Logic **4616**

### Execution Architecture Component Design

### Purpose

The Execution Architecture Component Design portion of the description describes the ReTA implementation of the NCAF defined run-time services. This portion of the description also maps the ReTA application architecture frameworks into the appropriate NCAF service component descriptions.

The ReTA Application Architecture comprises the following frameworks:

| | |
|---|---|
| **Session** | *Security* |
| | User identification |
| | Page access authorization - Session scope |
| | Automatic abort - timeout |
| | *Customized information delivery* |
| | Customized user interface |
| | Customized application access |
| | *Manage user session* |
| | Inform user on session status |
| | Abort session |
| | *Flow control* |
| | Page to open on action |
| | Pages of activity |
| | *Maintain context* |
| | Activity context |
| | Business Object context - shared among activities |
| | *Message Broadcast* |
| | Register listener |
| | Broadcast Message to registered listeners |
| | *Encryption* |
| | Encode Database User Name and Password |
| | Decode Database User Name and Password |
| **Activity** | *Provide a logical unit of work* |
| | Microsoft Transaction Server transaction principles |
| | *Maintain context* |
| | Business Object context |
| | UI context - List boxes |
| | Sub-activity context |
| | *Security* |
| | Page access authorization - Activity scope |
| | *Validation* |
| | Pre-conditions |
| | Post-conditions |
| | ***Sub-Activity** - Smallest grained business logic* |
| | Execute business logic |
| | ***View** - mapping between a user interface and a business object* |
| | Capture user entry |
| | Display value entered |
| **Persistence** | *Database Connection* |
| | Uncouple database connection from application |
| | *Database mapping* |
| | Map an object to a database table |
| | *Object query* |
| | Trigger queries on objects |
| | Easily iterate through the results |
| | *Record locking* |
| | Optimistic locking |
| | Pessimistic locking |
| **Event Handler** | *Register event* |
| | Create event |
| | Maintain event reference |
| | *Process event* |
| | Information |
| | Warning |
| | Logical Unit of Work |
| | Fatal |
| | *Display events* |
| | Translate event |
| | Inform user |
| | *Persist event* |
| | Log event to database |
| **User Interface** | *Generate UI Items* |
| | Form |
| | Push Button |
| | Text Box (single-line entry field) |
| | Text Area (multi-line entry field) |
| | Radio Button group |
| | Check Box |
| | Drop Down List Box |
| | Blank Item |
| | Static Table |
| | Single-Select List Box |
| | *Generate UI actions* |
| | JavaScript - action shell |
| | JavaScript - data type validation |
| | JavaScript - data range validation |
| | JavaScript - automatic navigation action |
| | *Generate Page Format* |
| | Cascading Style Sheet |
| | Form (grid layout for form elements) |
| **Codes Table** | *Retrieve from Codes Table* |
| | Retrieve single decode value |
| | Retrieve all decode values |
| | *Maintain Codes Table* |
| | Update single Code/Decode |
| | Update all Codes/Decodes |
| | Set Table Name |
| | Add new Code/Decode |
| | Remove Code/Decode |
| | Add Table |
| | Remove Table |

### Base Services

Base Services provide server-based support for delivering applications to a wide variety of-users over the Internet, intranet, and extranet.

### Web Server Services

### Description

Enables organizations to manage and publish information and deploy Netcentric applications over the Internet and Intranet environments. These services support the following: managing portion of the present descriptions in multiple formats, handling of client requests for HTML pages, processing server-side scripts, and caching web pages to improve performance.

### ReTA implementation

ReTA implements web server services through Microsoft's Internet Information Server 4.0 (IIS).
US provides the following services:
- Process requests for static and dynamic web pages and graphics.
- Implement appropriate security and authentication to public and private areas of a web site.
- Execute application specific Active Server Pages.
- Implement web activity tracking and reporting.
- Implement application state and management capability.

ReTA uses the IIS Session object to hold references to architecture and application components during the user session.

### Communication Services

Network services provided by the Communications Services layer are grouped into four major categories of functionality: Virtual Resource, Directory, Messaging, and Security services. The Virtual Resources Component is not implemented by ReTA Phase 1.

### Directory Services

A full-featured Directory Service *organizes, categorizes* and *names* networked resources in order to provide a comprehensive picture of clients, servers, users, applications and other resources. The service typically includes a database of objects, representing all nodes and resources on a network. The database manages relationships between users and networks, network devices, network applications, and information on the network. The Directory service performs the following functions:
- Stores information about network resources and users and tracks relationships
- Organizes resource access information in order to aid resources in locating and accessing other resources throughout the network
- Provides location transparency, since resources are accessed through a directory rather than based on their physical location
- Converts between logical resource names and physical resource addresses
- Interacts with Security services such as authentication and authorization track identities and permissions
- Provides single network logon to file and print resources; can provide single network logon for network applications that are integrated with the Directory service
- Distributes directory information throughout the enterprise (for reliability and location-independent access)
- Synchronizes multiple directory databases
- Enables access to heterogeneous systems (integration of various network operating systems, platforms, etc.)

### Domain Services

### Description

A network domain is a set of network nodes under common control (i.e., common security and logins, unified addressing, coordinated management, etc.). Domain services manage these types of activities for the network nodes in a domain. Domain services may be limited in their ability to support heterogeneous systems and in the ability to scale to support the enterprise.

### ReTA implementation

ReTA implements domain services through Microsoft's NT 4.0 Server.

### Name Services

### Description

The Name service creates a logical "pronounceable" name in place of a binary machine number. These services could be used by other communications services such as File Transfer, Message Services, and Terminal Services. A Name service can be implemented on its own, or as part of a full-featured Directory service.

### ReTA implementation

ReTA implements name services through Microsoft's NT 4.0 Server.
Messaging Services (Core)
Broadly defined, Messaging services enable information or commands to be sent between two or more recipients. Recipients may be computers, people, or processes within a computer. Core Messaging services are categorized by the characteristics of the information being transferred:
File Transfer
RPC
   - Message-Oriented Middleware: - Not in scope for ReTA Phase 1
   - Streaming: - Not in scope for ReTA Phase 1
File Transfer

### Description

File Transfer services enable the sending and receiving of files or other large blocks of data between two resources. In addition to basic file transport, features for security, guaranteed delivery, sending and tracking sets of files, and error logging may be needed if a more robust file transfer architecture is required.

### ReTA implementation

ReTA implements file transfer services through Microsoft's Internet Information Server 4.0 (IIS) using the HyperText Transfer Protocol (HTTP). Within a Web-based environment, Web servers transfer HTML pages to clients using HTTP. HTTP can be thought of as a lightweight file transfer protocol optimized for transferring small files. HTTP reduces the inefficiencies of the FTP protocol. HTTP runs on top of TCP/IP and was developed specifically for the transmission of hypertext between client and server.

### RPC (Remote Procedure Calls)

### Description

RPCs (Remote Procedure Calls) are a type of protocol by which an application sends a request to a remote system to execute a designated procedure using the supplied arguments and return the result. RPCs emulate the function call mechanisms found in procedural languages. This means that control is passed from the main logic of a program to the called function, with control returning to the main program once the called function completes its task.

### ReTA implementation

ReTA implements RPC services through Microsoft's COM/DCOM mechanism and the Internet Information Server 4.0 (IIS) using HTTP.

### Messaging Services (Specialized)

Specialized Messaging services extend the Core Messaging services to provide additional functionality, including:
Provides messaging among specialized systems by drawing upon basic messaging capabilities Defines specialized message layouts
Defines specialized inter-system protocols
Suggests ways in which messaging draws upon directory and security services in order to deliver a complete messaging environment

### Database Access

### Description

Database Messaging services (also known as Database Access Middleware) provide connectivity for clients to access databases throughout the enterprise. Database messaging software draws upon basic inter-process messaging capabilities (e.g., RPCs) in order to support database connectivity.

### ReTA implementation

ReTA implements Database Messaging services through Microsoft's Open Database Connectivity (ODBC) mechanism. ReTA abstracts database connection from the application developer through the Microsoft Transaction Server (MTS) 2.0 connection pooling mechanism.

### Object Messaging

### Description

Object Messaging enables objects to transparently make requests of and receive responses from other objects located locally or remotely. Objects communicate through an Object Request Broker (ORB). An ORB enables client objects to access server objects either locally or remotely over a network and invoke operations (i.e. functions and methods) on them. ORBs typically provide interoperability between heterogeneous client and server environments: across languages and/or operating systems and/or network protocols.

### ReTA implementation

ReTA implements Object Messaging services through Microsoft's COM/DCOM mechanism.

### Security Services

Communications Security services control access to network-attached resources. Combining network Security services with security services in other parts of the system architecture (e.g., application and database layers) results in robust security.

### Authentication

### Description

Authentication services verify network access requests by validating that users are who they claim to be. For secure systems, one or more authentication mechanisms can be used to validate authorized users and to verify to which functions and data they have access.

### ReTA implementation

ReTA implements Authentication services through Microsoft's NT 4.0 Server (and IIS).

### Authorization

### Description

Authorization services determine if users have appropriate permissions and either allows or disallows the access.

### ReTA implementation

ReTA implements Authorization services through Microsoft's NT 4.0 Server (and IIS). ReTA also supports application defined "required workflow sequence" web page access authorization through the ReTA Session framework.

### Encryption

### Description

Encryption services encrypt data prior to network transfer to prevent unauthorized interception. Encryption has two main components: the encryption algorithm, which is the series of steps that is performed to transform the original data; and the key, which is used by the algorithm in some way to encrypt the message. Typically, the algorithm is widely known, while the key is kept secret. There are several types of encryption in use today, including:
**Secret key cryptography** - uses one key (the secret key) both to encrypt the message on one side and to decrypt the message on the other side.
**Public key cryptography** - uses two keys, the public key and the private key. The public key and private key are mathematically related so that a message encrypted with the recipient's public key may be decrypted with the recipient's private key. Therefore, the public key can be widely published, while the private key is kept secret.

### ReTA implementation

ReTA implements Encryption services through the Secure Sockets Layer (SSL) mechanism. ReTA also implements encryption for the User ID and User Password used by the ODBC mechanism through the ReTA Session framework.

### Environment Services

Environment Services provide miscellaneous application and system level services that do not deal directly with managing the user-interface, communicating to other programs, or accessing data. Sub-components covered during the Phase 1 of ReTA include: Application Services, Component Framework, Operating System, Runtime Services, and System Services.

### Application Services

Application Services are miscellaneous services which applications can use for common functions. These common functions can apply to one application or can be used across applications. They include: Application Security Services, Error Handling/Logging Services, State Management Services, Help Services, and Other Common Services.

### Application Security

### Description

Besides system level security such as logging into the network, there are additional security services associated with specific applications. These include:
**User Access Services** - set of common functions that limit application access to specific users within a company or external customers.
**Data Access Services** - set of common functions that limit access to specific data within an application to specific users or user types (e.g., secretary, manager).
**Function Access Services** - set of common functions that limit access to specific functions within an application to specific users or user types (e.g., secretary, manager).

### ReTA implementation

ReTA implements Application Security through the ReTA Session and Activity frameworks. The Session framework provides "Session level Page access authorization", "User identification" and "session timeout" services. The Activity framework provides "Activity level Page access authorization".

### Codes Table Services

### Description

Codes Table Services enable applications to utilize externally stored parameters and validation rules. For example, an application may be designed to retrieve the tax rate for the State of Illinois. When the user enters "Illinois" on the screen, the application first validates the user's entry by checking for its existence on the "State Tax Table", and then retrieves the tax rate for Illinois. Note that codes tables provide an additional degree of flexibility. If the tax rates changes, the data simply needs to be updated; no application logic needs to be modified.

### ReTA implementation

ReTA implements Codes Table Services through the ReTA Codes Table framework.

### Error Handling/Logging

### Description

Error Handling Services support the handling of fatal and non-fatal hardware and software errors for an application. An error handling architecture takes care of presenting the user with an understandable explanation of what has happened and coordinating with other services to ensure that transactions and data are restored to a consistent state.

Logging Services support the logging of informational, error, and warning messages. Logging Services record application and user activities in enough detail to satisfy any audit trail requirements or to assist the systems support team in recreating the sequence of events that led to an error.

### ReTA implementation

ReTA implements Error Handling/Logging Services through the ReTA Event Handler and Persistence frameworks.

### Other Common Services

### Description

Catchall category for additional reusable routines useful across a set of applications (e.g., Date Routines, Time Zone Conversions, Field Validation Routines).

### ReTA implementation

ReTA implements client side Field Validation Services through the ReTA UI framework.

### State Management

### Description

State Management Services enable information to be passed or shared among windows and/or Web pages and/or across programs. In Netcentric environments, the HTTP protocol creates a potential need for implementing some form of Context Management Services (storing state information on the server). The HTTP protocol is a stateless protocol. Every connection is negotiated from scratch, not just at the page level but for every element on the page. The server does not maintain a session connection with the client nor save any information between client exchanges (i.e., web page submits or requests). Each HTTP exchange is a completely independent event. Therefore, information entered into one HTML form must be saved by the associated server application somewhere where it can be accessed by subsequent programs in a conversation.

### ReTA implementation

ReTA implements State Management Services through Microsoft's IIS Session component and the ReTA Session, Activity and UI frameworks.

### Component Framework

### Description

Component Framework Services provide an infrastructure for building components so that they can communicate within an application and across applications, on the same machine or on multiple machines across a network, to work together. COM/DCOM and CORBA described in Communication Services are the two leading component industry standards. These standards define how components should be built and how they should communicate.

Object Request Broker (ORB) services, based on COM/DCOM and CORBA, focus on how components communicate. Component Framework Services, also based on CORBA and COM/DCOM, focus on how components should be built.

### ReTA implementation

ReTA implements Component Framework Services through the ReTA Activity framework.

Operating System

### Description

Operating System Services are the underlying services such as multi-tasking, paging, memory allocation, etc., typically provided by today's modem operating systems. Where necessary, an additional layer or Application Programming Interface (API) may be provided to gain either operating system independence or a higher level of abstraction for application programmers.

### ReTA implementation

ReTA implements Operating System Services through the NT 4.0 operating system.

### Runtime Services

Runtime services convert non-compiled computer languages into machine code during the execution of a program. They include: Language Interpreter Service and Virtual Machine Service.

### Language Interpreter

### Description

Language Interpreter Services decompose a 4th generation and/or a scripting languages into machine code (executable code) at runtime.

### ReTA implementation

ReTA implements Language Interpreter Services through NT server 4.0 and IIS 4.0.

### Virtual Machine

### Description

Typically, a Virtual Machine is implemented in software on top of an operating system, and is used to run applications. The Virtual Machine provides a layer of abstraction between the applications and the underlying operating system and is often used to support operating system independence.

### ReTA implementation

ReTA implements Virtual Machine Services through NT 4.0 Virtual Machine component.

### System Services

Services which applications can use to perform system-level functions. These services include: System Security Services, Profile Management Services, Task and Memory Management Services, and Environment Verification Services.

### Environment Verification

### Description

Environment Verification Services ensure functionality by monitoring, identifying and validating environment integrity prior and during program execution. (e.g., free disk space, monitor resolution, correct version). These services are invoked when an application begins processing or when a component is called. Applications can use these services to verify that the correct versions of required Execution Architecture components and other application components are available.

### Profile Management

### Description

Profile Management Services are used to access and update local or remote system, user, or application profiles. User profiles, for example, can be used to store a variety of information such as the user's language and color preferences to basic job function information which may be used by Integrated Performance Support or Workflow Services.

### ReTA implementation

ReTA implements Profile Management Services through ReTA Session framework.

### System Security

### Description

System Security Services allow applications to interact with the operating system's native security mechanism. The basic services include the ability to login, logoff, authenticate to the operating system, and enforce access control to system resources and executables.

Task & Memory Management

### Description

Task & Memory Management Services allow applications and/or other events to control individual computer tasks or processes, and manage memory. They provide services for scheduling, starting, stopping, and restarting both client and server tasks (e.g., software agents).

### ReTA implementation

ReTA implements Task & Memory Management Services through MTS 2.0.

### Information Services

Information Services manage electronic data assets and enable applications to access and manipulate data stored locally or remotely in portion of the present descriptions or databases. They minimize an application's dependence on the physical storage and location within the network. Information Services can be grouped into two categories: Database Services, and Portion of the present description Services. Portion of the present description Services may not be covered during ReTA Phase 1.

### Database Services

Database Services are responsible for providing access to a local or a remote database, maintaining integrity of the data within the database and supporting the ability to store data on either a single physical platform, or in some cases across multiple platforms. Database Services include: Access Services, Indexing Services and Security Services.

### Access

### Description

Access Services enable an application to retrieve data from a database as well as manipulate (insert, update, delete) data in a database. This can be done through the following:
Standards Based Structured Query Language (SQL) API
SQL Gateways
Distributed Relational Data Access (DRDA)

### ReTA implementation

ReTA implements Database Access Services through the ReTA Persistence framework, which utilizes the Standards Based SQL API approach through ODBC.

### Indexing

### Description

Indexing Services provide a mechanism for speeding up data retrieval. In relational databases one or more fields can be used to construct the index. So when a user searches for a specific record, rather than scanning the whole table sequentially the index is used to find the location of that record faster.

### ReTA implementation

ReTA implements Database Indexing Services through the Database Management System (either Oracle or SQL Server).

### Security

### Description

Security Services enforce access control to ensure that records are only visible or editable by authorized people for approved purposes. Most database management systems provide access control at the database, table, or row level as well as concurrency control.

### ReTA implementation

ReTA implements Database Security Services through the Database Management System (either Oracle or SQL Server).

### Presentation Services

Presentation Services enable an application to manage the human-computer interface. This includes capturing user actions and generating resulting events, presenting data to the user, and assisting in the management of the dialog flow of processing. Typically, Presentation Services are only required by client workstations. Sub-components covered during the Phase 1 of ReTA include: Window System, Desktop Manager, Form, Web Browser, Report & Print, and Direct Manipulation.

Desktop Manager

### Description

Desktop Manager emulates the idea of a physical desktop allowing one to place portion of the present descriptions on the desktop, launch applications by clicking on a graphical icon, or discard files by dragging them onto a picture of a waste basket.

### ReTA implementation

ReTA implements Desktop Manager Services through the NT 4.0 operating system.

### Direct Manipulation

### Description

Direct Manipulation Services enable applications to provide a direct manipulation interface (often called "drag & drop").

### ReTA implementation

ReTA implements Desktop Manager Services through the NT 4.0 operating system.

### Form

### Description

Form Services enable applications to use fields to display and collect data. Form Services provide support for: Display, Mapping Support, and Field Interaction Management.

### ReTA implementation

ReTA implements Form Services through the NT 4.0 operating system.

### Report & Print

### Description

Report and Print Services support the creation and on-screen previewing of paper or photographic portion of the present descriptions which contain screen data, application data, graphics or images.

### ReTA implementation

ReTA implements Report and Print Services through the NT 4.0 operating system.

### Web Browser

Web Browser Services allow users to view and interact with applications and portion of the present descriptions made up of varying data types, such as text, graphics, and audio. These services also provide support for navigation within and across portion of the present descriptions no matter where they are located, through the use of links embedded into the portion of the present description content. Web Browser Services retain the link connection, i.e., portion of the present description physical location, and mask the complexities of that connection from the user. Web Browser services can be further subdivided into: Browser Extension, Form, and User Navigation.

### Browser Extension

### Description

Browser Extension Services provide support for executing different types of applications from within a Browser. These applications provide functionality that extend Browser capabilities. The key Browser Extensions are:
**Plug-in** - a plug-in is a software program that is specifically written to be executed within a browser for the purpose of providing additional functionality that is not natively supported by the browser, such as viewing and playing unique data or media types.
**Helper Applicafion/Viewer** - is a software program that is launched from a browser for the purpose of providing additional functionality to the browser.
**ActiveX control** - is also a program that can be run within a browser, from an application independent of a browser, or on its own.

### ReTA implementation

ReTA supports Browser Extensions through Netscape Navigator and Internet Explorer.

### Form

### Description

Like Form Services outside the Web Browser, Form Services within the Web Browser enable applications to use fields to display and collect data. The only difference is the technology used to develop the Forms. The most common type of Forms within a browser are Hypertext Markup Language (HTML) Forms. The HTML standard includes tags for informing a compliant browser that the bracketed information is to be displayed as an editable field, a radio button, or other form-type control. Currently, HTML browsers support only the most rudimentary forms - basically providing the presentation and collection of data without validation or mapping support. When implementing Forms with HTML, additional services may be required such as client side scripting (e.g., VB Script, JavaScript).

### ReTA implementation

ReTA implements Form Services through the NT 4.0 operating system, Internet Explorer 4.0 and Netscape Navigator 4.0. ReTA supports creating the form objects and the JavaScripts used by the browsers with the ReTA UI framework.

### User Navigation

### Description

User Navigation Services within the Web Browser provide a user with a way to access or navigate between functions within or across applications. These User Navigation Services can be subdivided into three categories:
**Hyperlink** - the hyperlink mechanism is not constrained to a menu, but can be used anywhere within a page or portion of the present description to provide the user with navigation options. **Customized Menu** - a menu bar with associated pull-down menus or context-sensitive pop-up menus.
**Virtual Reality** - A virtual reality or a virtual environment interface takes the idea of an image map to the next level by creating a 3-dimensional (3-D) environment for the user to walk around in.

### ReTA implementation

ReTA implements the Hyperlink functionality of web browser Navigation Services through the ReTA UI framework.

### Window System

### Description

Typically part of the operating system, the Window System Services provide the base functionality for creating and managing a graphical user interface (GUI) - detecting user actions, managing windows on the display, and displaying information in windows.

### ReTA implementation

ReTA implements Window System Services through the NT 4.0 operating system.

### Transaction Services

A transaction is a unit of work that has the following (ACID) characteristics:
A transaction is **atomic;** if interrupted by failure, all effects are undone (rolled back).
A transaction produces **consistent** results; the effects of a transaction preserve invariant properties.
A transaction is **isolated;** its intermediate states are not visible to other transactions. Transactions appear to execute serially, even if they are performed concurrently.
A transaction is **durable;** the effects of a completed transaction are persistent; they are never lost (except in a catastrophic failure).

A transaction can be terminated in one of two ways: the transaction is either committed or rolled back. When a transaction is committed, all changes made by the associated requests are made permanent. When a transaction is rolled back, all changes made by the associated requests are undone.

Transaction Services provide the transaction integrity mechanism for the application. This allows all data activities within a single business event to be grouped as a single, logical unit of work.

### Transaction Monitor

### Description

The Transaction Monitor Services are the primary interface through which applications invoke Transaction Services and receive status and error information. Transaction Monitor Services, in conjunction with Information Access and Communication Services provide for load balancing across processors or machines and location transparency for distributed transaction processing.

### ReTA implementation

ReTA implements Transaction Monitor Services through MTS 2.0. ReTA uses the Activity framework to define a transaction.

### Resource Management

### Description

A Resource Manager provides for concurrency control and integrity for a singular data resource (e.g., a database or a file system). Integrity is guaranteed by ensuring that an update is completed correctly and entirely or not at all. Resource Management Services use locking, commit, and rollback services, and are integrated with Transaction Management Services.

### ReTA implementation

ReTA implements Resource Manager Services through MTS 2.0.

### Transaction Management

### Description

Transaction Management Services coordinate transactions across one or more resource managers either on a single machine or multiple machines within the network. Transaction Management Services ensure that all resources for a transaction are updated, or in the case of an update failure on any one resource, all updates are rolled back.

### ReTA implementation

ReTA implements Transaction Management Services through Microsoft's Distributed Transaction Manager and MTS 2.0.

### Transaction Partitioning

### Description

Transaction Partitioning Services provide support for mapping a single logical transaction in an application into the required multiple physical transactions. For example, in a package or legacy rich environment, the single logical transaction of changing a customer address may require the partitioning and coordination of several physical transactions to multiple application systems or databases. Transaction Partitioning Services provide the application with a simple single transaction view.

### ReTA implementation

ReTA implements Transaction Partitioning Services through Microsoft's Distributed Transaction Manager and MTS 2.0.

### Business Logic

The execution architecture services are all generalized services designed to support the applications Business Logic. Normally, how Business Logic is to be organized is not within the scope of the execution architecture. However, the ReTA Application Frameworks extend the services of the execution architecture to support the "Interface Controller Model" (ICM) pattern approach to packaging the Business Logic as components.

Business Logic is the core of any application, providing the expression of business rules and procedures (e.g., the steps and rules that govern how a sales order is fulfilled). As such, the Business Logic includes the control structure that specifies the flow for processing business events and user requests. In a ReTA application, the Application Frameworks define a structured approach to the concepts of Interface, Application Logic, and Data Abstraction.

Interface logic interprets and maps the actions of users into business logic processing activities. With the assistance of Presentation Services, Interface logic provides the linkage that allows users to control the flow of processing within the application. ReTA implements this service through the UI and Activity Frameworks.

Application Logic is the expression of business rules and procedures (e.g., the steps and rules that govern how a sales order is fulfilled). As such, the Application Logic includes the control structure that specifies the flow for processing for business events and user requests. The isolation of control logic facilitates change and adaptability of the application to changing business processing flows. ReTA implements this service through the Activity Framework.

Information Access Services isolate the Business Logic from the technical specifics of how information is stored (e.g., location transparency, RDBMS syntax, etc.). Data Abstraction provides the application with a more logical view of information, further insulating the application from physical information storage considerations. ReTA implements this service through the Persistence Framework.

The ReTA Application Frameworks provides services that encourage and support the thin-client model. Also, the Frameworks shield business logic developers from the details and complexity of architecture services (e.g., information services, component services) and other business logic.

Execution Architecture Physical Model

### Purpose

The ReTA Execution Architecture Physical Model portion of the description shows the actual components comprising the Execution Architecture and their relative location and interfaces. Additionally, the model depicts the platforms on which the components may reside as well as the distribution across the environment. The components in the Physical Model may support a portion of a function or more than one function from the functional model.

### Physical Configuration

The content for this portion of the description is defined in the Technology Infrastructure Procurement List portion of the present description.

### Physical Model

Figure **47** illustrates the components that comprise the ReTA execution architecture **4700** and their physical location. In particular, the components are grouped through their association with the client **4702,** network **4704,** web server **4706,** application server **4708,** and database server **4710.**

### Operations Architecture Design

### Overview

The Operations Architecture is a combination of tools, support services, procedures, and controls required to keep a production system up and running efficiently. Unlike the Execution and Development Architectures, its primary users are the system administrators and the production support personnel. With reference to Figure **48****,** all components of the Operations Architecture **4800** are integral to the successful management of a distributed environment. Any processes, procedures, or tools developed or chosen as an operational management solution for a specific operational area must be able to integrate with any existing or planned process, procedure, tool solutions for other Operations Architecture areas.

### Operations Architecture Component Design

### Physical Environment 4802

### Implementing - Initial Installation

### Description

Initial Installation prepares the physical location for the rollout of a new site or service, pre-assembles the equipment (hardware and software) based on developed specifications, installs the equipment and tests that the equipment is fully functional prior to allowing the users to utilize the system in a production environment.
Precise build procedures must be delivered early enough to drive Release Testing, Procurement, and rollout plans. For large multi site installations that require significant rollout of new hardware, optimization of the configuration tasks (hardware and software) can be achieved through the use of a central staging facility.

### Planning Considerations

The deployment of the physical environment must be scheduled as early as possible, and detailed communication regarding the technology infrastructure deployment plan should be distributed regularly to key stakeholders.

Where a pilot implementation has taken place previously, or is in progress, the experiences from this activity need to be incorporated into the deployment plans. The purpose of a pilot implementation essentially is to minimize the risks of full implementation. Any experiences from the pilot should be identified and plans to avoid trouble, or accelerate progress, should be included within the deployment work plan.

Ensure that the organizational functions are ready for the change. Functions of the organization may need to be ready for the technology infrastructure change before it is deployed. These functions include:
Help Desk
Support Systems
System Maintenance
Operations

The organizations supporting these functions need to understand how their support roles may change, and what new demands the technology infrastructure may place upon them. Ensuring that these areas are comfortable supporting the new infrastructure, and that they are able to troubleshoot problems is critical to the overall support and success of the business capability.

### Event / Data Management

*Event* / *Data management* is the process of receiving and classifying events. An event is a change in the state of a network component. There are two types of events - solicited and unsolicited. A solicited event results from the direct (synchronous) polling of a network component **4900** by a network management station **4902** as represented in Figure **49****.**

An unsolicited event occurs when a network component **5000** sends (asynchronously) data to the network management station **5002** as represented in Figure **50****.**

Once the event is received, the management station classifies the event. If it is classified as a *fault,* it would then be passed to the fault management facility. Otherwise it is classified as a normal event and is logged for historical trending purposes.

### Event Processing

Event processing manipulates the raw data obtained in the event/data generation layer into a more workable form. This layer performs functions such as event filtering, alert generation, event correlation, event collection and logging, and automated trouble ticket generation. Event processing routes the processed information on to either the presentation or management applications layers. Again it is important to consider the interface of the event processing component with the other components of the operational architecture.

### Event Management in a Net-Centric Environment

The MODEnc project has further defined Net-Centric Computing as the standards and considerations involved with Internet/Intranet/Extranet environments.

When using the Internet-based net-centric model **5100,** as shown, for example, in Figure **51****,** Internet standards such as TCP/IP, HTML and CGI are used to publish, interact, and transact with data/content on the public Internet **5102.** Typically, a firewall **5104** is implemented to secure a service provider's internal resources **5106** from the public Internet. A service provider locates Internet-based resources outside of the firewall and may provide controlled access from the web to internal information through mechanisms such as CGI **5108.** Access to Internet resources may be through web browsers as depicted or via other mechanisms such as e-mail or ftp.

When using the Intranet-based net-centric model **5200** as illustrated in Figure **52****,** Internet standards are used within the confines of a private network to implement publish-, interact-, and transact-based applications. Browsers **5202** are used to access HTML pages or other services located and controlled through internal web servers **5204.**

When using the Extranet-based net-centric model **5300,** as illustrated in Figure 53 companies share computing resources by connecting over the Internet **5302** or Virtual Private Network (VPN). Each company typically shields its internal networks from the public Internet via firewalls **5304,5306** and provides controlled access through the firewalls to its partner's resources.

When performing the Event Management function in a net-centric environment, the following factors should be considered:
- Lack of event management on the Internet
- New events
- Integration with other system management tools
- Centralized event polling issues
- Intra-application events should be analyzed
- SNMP difficulties in managing net-centric environments

### Lack of Event Management on the Internet [Internet, Extranet]

Net-centric service providers must consider that the Internet provides few event management services. Though a service provider's systems that reside outside the firewall may host SNMP and/or other event management agents, public Internet hosts currently may not provide event management data to a 3^{rd} party service provider.

### New Events [Internet, Intranet, Extranet]

New event metrics such as metrics related to an Internet connection may be required to get an accurate overall picture of the net-centric environment health. The emerging thin client architecture may also require new event categories.

### Integration with other System Management Tools [Internet, Intranet, Extranet]

Events generated by net-centric management tools may need to integrate with other system management applications.

### Centralized Event Polling Issues [Internet, Intranet, Extranet]

Management of a net-centric environment relies more heavily on remote sites generating and queuing their own event management information. The reason for this is if there is a network failure, a centralized polling approach to event management may not be able to assess the health of nodes behind a broken network link. Remote nodes must generation their own events, queue them in case of failure, and resends the queued events upon reestablishment of network connections

### Intra-application events should be analyzed [Internet, Intranet, Extranet]

Service Providers should monitor not only what pages/interfaces that users are accessing, but what they are doing within each page/interface to maximize the marketing value of usage data. This can also provide valuable input to application design teams in making application refinements.

### SNMP in a Net-Centric Environment [Internet, Intranet, Extranet]

Since SNMP traps may have to traverse multiple networks, and MIBs may need to send management information to multiple stakeholders, managing events across net-centric environments can be difficult. An Internet Service Provider (ISP) may have to consider clever filtering to ensure that the right traps get to the right users.

### Presentation

The presentation component provides the interface between the manager(s) of the system and management data generated by the system. Data can be manipulated for various forms of output. By integrating the operational architecture it is possible to reduce the number of front-end interfaces required. Commonly, the presentation component uses a GUI front-end interface. This component is also responsible for real-time and historical report generation.

### Management Applications

Management applications are those tools which are used to manage the system. Most of the MODE functions tie directly into this component. The management applications component ties in directly with the integration platform component as the management applications tools must comply with the standards set by the integration platform. Management applications receive data from the event/data generation, event processing, and repositories components and then send data to the presentation or repositories components. Management applications tools include capacity planning tools, performance management tools, license management tools, remote management tools, systems monitoring tools, scheduling tools, help desk tools, etc.. Some Enterprise Management tools even poll the event/data generators for information but these options may impact network performance. Web Server management has been introduced as part of the management operations framework. As Corporate Internets and Extranets implement Web based software products to sell and advertise business services, corresponding administrative, security, event notification and performance requirements must be performed similarly for the companies web based system. The two critical path issues are security management and network management.

### Security Management

Security Management controls both physical and logical security for a Net-Centric environment. Due to the nature of the environment, security may need to be managed either centrally, remotely or through a combination of the two methods.

Security Management also handles the logging of proper and illegal access, provides a way to audit security information, rectify security breaches and address unauthorized use of the system.

### Network Mangement

Network & Systems Management Planning is responsible for the planning activities involved in running the day-to-day operations and maintenance of the production systems
Capacity Planning
Performance Planning
Repositories

Repositories contain all the management data generated or used during the management process. This includes historical data, capacity data, performance data, problem knowledge bases, asset databases, solution sets, and management information bases (MIBs). The repositories component interacts with the management applications, integration platform, supporting infrastructure, and presentation components. Again it is important to make sure that the other components of the operational architecture are compatible with the database tools.

### Backup / Restore

### Archiving

### Integration Platform

The integration platform provides a common platform for the operational architecture. At the lowest level this means deciding on common standards, interfaces, massage formats, and file logging forms to be used with all the management tools. Products like Tivoli Management Environment, require the use of a separate integration platform component into which the management applications are connected. Many third party vendors insist that they provide solutions which incorporate the event/data generation, event processing, repositories, and presentation components of the MAP operational architecture. It must be noted however that some of these total solution providers may sell a proprietary based solution, at best, and/or may include customized Application Programming Interfaces (API) or Software Development Kit capabilities in order to completely integrate your non-proprietary network.

Lastly, some environments use a home grown integration platform. The choice of integration platforms depends upon its ability to integrate with the execution and development environments.

### Supporting Infrastructure

The supporting infrastructure is the subset of operating systems, utilities, languages, and protocols used to support the management of the system. The supporting infrastructure is most often determined by the execution and development environments and the business applications on the system. It is necessary to ensure that the other components of the operational architecture are compatible with the existing supporting infrastructure.

### Managing Hardware

Managing hardware is all hardware directly used to manage the environment. This includes all staging components. These components are devoted to systems management functions. Examples of managing hardware include management servers, management controllers, management consoles, probes, and sniffers. One significant component in the hardware monitoring arena is Firewall access control policy management. Firewalls are regularly used for network based security management. It is typically a system or group of systems that enforce access control between two or more networks and/or perform network data packet filtering. Usually packet filtering router hardware and application gateways are used to block unauthorized IP packets and enforce proxy defined user commands.

### Management Tool Selection

It is important to note that there may be requirements which cannot be met by any tools. In this case, in-house development may be an alternative. This approach is likely to be more expensive, however, and more difficult to support the long term, and thus should usually be avoided if possible. Were possible, the tool with the best fit should be purchased, and customized to meet the necessary requirements. Some additional considerations are outlined below:
Central vs. Distributed Control
Platform Constraints
Integration with other Functions
Anticipated Volume of Data & Transaction Throughput
Number of Users for the Tool
Level of Support Required

### INSTALLATION

### Oracle Database Installation

### Overview

### Assumptions

This portion of the present description assumes:
That the target hardware configuration for the database server meets the specified requirements for the software being installed.
Embodiments mentioned within this portion of the present description may not be current as of the time of this reading. Care should be taken to ensure that the latest embodiments are used and that individual installation processes are reviewed to ensure that any changes are followed. Individuals performing this installation have experience in relational database concepts, tools, administration and performance tuning.

### Database Model

### Users and Schemas

The following table provides a list of the user accounts, roles and schemas used during ReTA Phase 1 development

| Account Name | Description |
|---|---|
| **RETA_ARCH** | Architecture Schema. This account contains various architecture-related objects (tables, sequences and procedures). |
| **RETA_APPS** | Application Schema. This account contains application-related objects (tables, sequences and procedures). |
| **Reta_Admin** | Administrator Role. This role provides administration privileges and rights to the administrator account. Rights include full access to the architecture and application schemas. |
| **Reta_User** | Application Role. This role provides rights and privileges to application accounts. Rights include full access to the application schema and insert on selected architecture tables. |
| **RetaAdmin** | Administrator id. This account is used for architecture and application maintenance. |
| **RetaUser** | Application id. This account is used to gain access to application specific database objects during application execution. |

### Architecture Tables

The ReTA Phase 1 Architecture Frameworks require the tables and relationships illustrated in Figure **54****.** Among these tables are user identification tables **5400,** user preference tables **5402,** and event log tables **5404.**

### Application Tables

Figure **55** illustrates tables and relationships required for the ReTA Phase 1 validation application. Among these are customer information tables **5500** and feedback tables **5502.**

### Installation Process

### Oracle Configuration

The following steps describe the process of installing and configuring a database for use during ReTA development and testing.

| **Step** | **Step Description** | **Notes** |
|---|---|---|
| 1 | Install "Oracle 8 Enterprise Edition" (Version 8.0.3.0.0 for Windows NT) | Though these steps describe the installation on a Windows NT platform, they are nearly identical to the installation process on the UNIX platform. |
| | Run **Setup** on the installation CD. | |
| | Choose the installation language, then select **OK.** | |
| | Choose the Company name, and change the default install directory to **C:\Oracle,** then select **OK.** | |
| | Select **Yes** when asked whether to have the installation program make changes to the PATH variable | |
| | **Choose to install Oracle 8 Enterprise Edition.** | |
| | Select where the Oracle portion of the present description should be installed. The default is to leave it on the CD. | |
| 2 | Create a directory for the application database. | |
| | Start the windows explorer | |
| | Select the directory where Oracle is installed **(C:\Oracle)** then the subdirectory **Database** | |
| | Create a new folder for the Database files. Ex. "C:\Oracle\ReTA" | |
| 3 | At this point a full operating system backup should be made, and the backup set stored. In future, if the database server goes down, this backup may be used to quickly restore the server to a point where the Oracle Recovery Manager can take over and complete the backup. | |
| 4 | Add registry keys for the database. The key locations are **HKEY_LOCAL_MACHINE\SOFTWARE\Oracle\.** | This key identifies the active database to Oracle on startup. |
| | Use the Start Menu to run the regedit application Browse to the above key. | |
| | Right click on the entry **ORACLE_SID** and select Modify. | |
| | Set the key value to RETA (or the SID of the Database if this has been modified. | |
| | Create a new key, **NLS_DATE_FORMAT,** and set the value to **"DD-MM-YY HH24:MM:SS"** (include the quotation marks) | |
| 5 | Perform the initial database creation. | This batch file is expects RETARUN.sql and RETA1RUN.s ql to be located in the same directory. |
| | Run the batch file **Create ReTA Database.bat** located in the **Database\CreateDB** subdirectory of the **Architecture** directory of the supplied media. | |
| | NOTE: The following batch files and database scripts may sometimes generate errors of the form "Table / View does not exist." This is because the scripts delete before trying to create objects - if the scripts are being run for the first time these objects may not exist and the errors may be generated. This is not a cause for concern. | |
| 6 | Register your new databases with the TNS listener service to enable other computers on the network to see it. | This step enables Oracle8 Client communication with the data server. |
| | Open the file listener.ora located in the Net80\admin directory of the Oracle directory. | |
| | Create entries identical to the **ORCL** entry at the end of the file, with the SIDs replaced by **PROS,** or the SID created in step 4. | |
| | Note: copy the entire code block - i.e. four lines of code. The inserted code is the following : | |
| | (SID_DESC = ReTA Development Database) (GLOBAL_DBNAME = <Your computer name here>) (SID_NAME = <Your database SID here>) ). | |
| | Stop and restart the service Oracle TNS Listener | |
| 7 | Create local connections to the new database. | This step provides access to the database from SQL*Plus, Oracle Navigator or other Oracle administrative tools. |
| | Use the start menu to run the program **Oracle for Win NT / Net8 Easy Config.** Note: If one gets a Dr. Watson error on Java.exe, set the display to 256 colors. | |
| | Select **Add New Service**, and supply a service name e.g. "RETAL1" | |
| | Select **Bequeath (local database).** | |
| | Select **Next.** | |
| | Enter the database SID used in the database creation script (RETA by default) | |
| | Select **Test Service** (Username: **system;** Password: **Manager)** and | |
| | when the test is successful push **Done** | |
| | **Select Next, then Finish.** | |

### Application & Architecture Database Objects

The following steps describe the process of creating user and schema accounts for use by the ReTA Phase 1 architecture and application services.

| **Step** | Description | Notes |
|---|---|---|
| 9 | Create the users and roles for the database. To run a database script, execute **Oracle for WinNT\SQLPlus 8.0** from the start menu. A script is executed by typing '@' followed by the full path and name of the script. The scripts reside in the **ReTA\Database\Create** directory of the supplied media. | Connect as Username : system ; Password : manager ; Host String: |
| | Run the script **CreateRoles.sql** | |
| | Run the script **CreateUsers.sql** | **RETA1 -** or the name of the service created in step 5 |
| 10 | Create and populate the architecture objects within the RETA_ARCH account. The following scripts are in the **ReTA\Database** directory of the supplied media. | This step creates the architecture framework tables expected by the ReTA Phase 1 architecture services. |
| | Connect as **RETA_ARCH,** i.e. type connect **reta_arch/reta_arch@reta1** at the command prompt or within SQL*Plus | |
| | Run the script **CreateArchTables.sql** | |
| | Run the script **GrantArchRights.sql** | |
| | Run the script **PopulateArchTables.sql** | |
| 11 | Create and populate the application objects within the RETA_APP account. The following scripts are in the **Application\Database** directory of the supplied media. | This step creates the tables necessary to run the ReTA Phase 1 validation application. |
| | Connect as **RETA_APP,** i.e. type **connect reta_app/reta_app@reta1** at the command prompt or within SQL*Plus | |
| | Run the script **CreateAppTables.sql** | |
| | Run the script **GrantAppRights.sql** | |
| | Run the script PopulateAppTables.sql | |
| 12 | Create synonyms and sequences for the both the architecture and application account objects. | This step creates public synonyms for use by other database accounts. |
| | Connect as the ReTA database administrator , i.e. type **connect RetaAdmin/RetaAdmin@reta1** at the command prompt or within SQL*Plus | |
| | Run the **CreateArchSyn.sql** script to create the architecture synonyms. | |
| | Run the **CreateAppSyn.sql** script to create the application synonyms. | |
| | Run the script **CreateArchSeq.sql** to create the sequences used by the event log and the feedback application. | |
| 13 | Modify the entries within the T_AF_USERNAME and T_AF_USERPREFERENCE tables with any new account information. | Ensure that a entry exists for each developer or tester. |
| 14 | It is recommended that at this point a full database export/backup be performed. | A clean database backup after install ensures that the database may be recovered from day one. |

### Technology Infrastructure Procurement List

### Purpose

This portion outlines the minimum required hardware and software specifications for Phase 1 & 2 of the Resources eCommerce Technical Architecture (ReTA) initiative. It should be noted that the actual configurations, tools and configurations may very depending on application and client **requirements.**

### Environment Physical Components

### Development Environment

Figure **56** illustrates the physical configuration of a possible ReTA-engagement development environment **5600.** A developer workstation **5602** is connected to a file server **5604** and an architecture database **5606.**

### Assembly/Product/Performance Testing Environments

Figure **57** illustrates the physical configuration of possible ReTA-based Assembly, Product and Performance testing environments **5700.** A web and application server **5702** is connected to a testing client **5704** and a database server **5706.**

### Production Environment

Because of the nature of netcentric applications, there are many possible physical configurations available for the production environment. The following illustrations provide views of two possible configurations. The main difference between the two is the separation of the web and application servers from one physical server into two separate physical boxes.
Later phases may add additional components, such as search servers, transient data servers and batch servers. Figure **58** illustrates Separate Web and Application Servers **5800,5802** between an unsecured network **5804** and a secured network **5806.** Figure **59** illustrates a Single Web and Application Server **5900** between an unsecured network **5902** and a secured network **5904.**

### Development Environment Specifications

It is assumed that during the development phases of the engagement, developers may perform much of the application build and test on their individual machines. As such, each developer may have their own web client, web server and app server running on their machine. A shared database(s) may provide development and testing relational database services needed in support of the architecture frameworks.

| **Name** | **Qty** | **Hardware** | **Software** |
|---|---|---|---|
| **Developer Workstations** | 1 per developer | 300 MHz (Pentium II) 128 MB RAM 3 GB Hard Drive CD-ROM Drive 17" Monitor | Microsoft Windows NT Workstation v4.0 (SP4) |
| | | | Microsoft Internet Explorer v4.01 |
| | | | Netscape Communicator v4.5 |
| | | | Microsoft Peer Web Server v4.0 |
| | | | Microsoft Transaction Server v2.0 |
| | | | Microsoft Site Server Commerce Edition v3.0 |
| | | | Microsoft Visual Studio v6.0 (SP2) |
| | | | Microsoft Office 97 |
| | | | Oracle 8.0.4 Client |
| | | | Rational Rose 98i - Java Edition (optional) |
| **File Server & Source Code Repository** | 1 per project | Any platform supporting standard file server service provider. | Example: |
| | | | Microsoft Windows NT Server OR |
| | | | Novell Netware |
| | | 1 GB Disk Space | |
| **Architecture Database Server** | 1 per project | 300 MHz (Pentium II) | Microsoft Windows NT Server v4.0 (SP4) |
| | | 128 MB RAM | Microsoft SQL Server v7.0 |
| | | 8 GB Hard Drive | And/or |
| | | CD-ROM Drive | Oracle8 Enterprise Edition for NT v8.0.4 |
| | | 15" Monitor | |

| | | | |
|---|---|---|---|
| Assembly, Product and Performance Testing Environment Specifications | | | |

The following table provides basic requirements for the hardware/software needed for the Assembly, Product and Performance testing phases of a ReTA engagement. The testing environment(s) should be configured to match as closely to that of the production system as possible.

Note that the specifications for each of these environments are the same. However, typical projects may want to establish separate environments to house each phase of testing to ensure contained and controlled results, and allow for parallel testing efforts. **Note that the recommendations on hardware attributes are greatly effected by functionality and complexity of the application, and may need to be analyzed against specific client needs.

| **Name** | **Qty** | **Hardware** | **Software** |
|---|---|---|---|
| **Testing Client** | 1 per tester | 300 MHz (Pentium II) | Microsoft Windows (NT or Windows 95/98) |
| | | 128 MB RAM 3 GB Hard Drive | Microsoft Internet Explorer v4.01 AND/OR |
| | | CD-ROM Drive | Netscape Communicator v4.5 |
| | | 17" Monitor | Microsoft Office 97 (optional) |
| | | | Issue and Error Reporting/Tracking Tools (optional) |
| **Architecture Database Server** | 1+per environment | (4) 400 MHz | Microsoft Windows NT Server v4.0 (SP4) |
| | | Pentium II | Microsoft SQL Server v7.0 |
| | | 2 GB RAM | OR |
| | | 8 GB Hard Drive | Oracle8 Enterprise Edition for NT v8.0.4 |
| | | CD-ROM 15" Monitor | Operational Utilities (optional) |
| **Web/Applicatio n Server** | 1+per environment | (4) 400 MHz | Microsoft Windows NT Server v4.0 (SP4) |
| | | Pentium II | Microsoft Internet Information Server v4.0 |
| | | 2 GB RAM | Microsoft Transaction Server v2.0 |
| | | 8 GB Hard Drive | Microsoft Site Server Commerce Edition |
| | | CD-ROM | v3.0 (optional) |
| | | 15" Monitor | Oracle 8.0.4 Client |
| | | | Operational Utilities (optional) |

### Production Environment Specifications

The following table provides basic requirements for the hardware/software needed for a possible Production environment of a ReTA engagement.
** Note that the recommendations on hardware attributes are greatly effected by functionality and complexity of the application, and may need to be analyzed against specific client needs.

| **Name** | **Qty** | **Hardware** | **Software** |
|---|---|---|---|
| **Application User** | NA | * Browser | Microsoft Internet Explorer v4.01 |
| | | Dependent | OR |
| | | | Netscape Communicator v4.5 |
| **Architecture Database Server** | 1+ per environment | (4) 400 MHz | Microsoft Windows NT Server v4.0 (SP4) |
| | | Pentium II | Microsoft SQL Server v7.0 |
| | | 2 GB RAM | OR |
| | | 8 GB Hard Drive | Oracle8 Enterprise Edition for NT v8.0.4 |
| | | CD-ROM 15" Monitor | Operational Utilities (optional) |
| **Web/Application Server** | 1+ per environment | (4) 400 MHz | Microsoft Windows NT Server v4.0 (SP4) |
| | | Pentium II | Microsoft Internet Information Server v4.0 |
| | | 2 GB RAM | Microsoft Transaction Server v2.0 |
| | | 8 GB Hard Drive | Microsoft Site Server Commerce Edition |
| | | CD-ROM | v3.0 (optional) |
| | | 15" Monitor | Oracle 8.0.4 Client |
| | | | Operational Utilities (optional) |
| **Firewall** | 1+ | 300 MHz (Pentium | Microsoft Windows NT Server v4.0 (SP4) |
| | | II) | Firewall Software |
| | | 128 MB RAM | Operational Utilities (optional) |
| | | 2 GB Hard Drive | |
| | | CD-ROM Drive | |
| | | 15" Monitor | |

### Site Server Installation

### Overview

This portion of the present description describes installation procedures for Microsoft SiteServer 3.0 (Commerce Edition) and the relevant configuration required to create a ReTA eCommerce application.

### Site Server Installation

The following portion of the description describes the pre-installation suggestions and the installation steps required for setup and configuring Site Server 3.0 Commerce Edition.

### Pre-Installation Suggestions

Do not install Site Server on a Backup Domain Controller.
Do not install Exchange Server on a Site Server. Both products are resource intensive.
Do not install Proxy Server on a Site Server.
Do not install Site Server on a Clustered NT System (MSCS). One can install Site Server onto a Windows Load Balancing Service (WLBS).
Remove Content Analyzer from Visual Studio.
Only install Site Server on a NTFS Drive.
Disable or Remove all Anti Virus software during entire install process.
Do not change ANY setting in IIS before installing Site Server (On a clean/new install).
Have at least one gig free of disk space.
Verify that virtual memory is set to at least 128MB during the install process.
Give your account administrative privileges on the local machine.

Installation Order for Site Server (This installation used with Oracle database).

Install Windows NT 4.0 Server or Windows NT Server 4.0 Enterprise Edition.
Install Windows NT Service Pack 3.
Install Internet Explorer 4.01 SP1 (choose standard install).
Install Windows NT Option Pack
Install Index Server and the SMTP Server components.
Make sure to configure MTS for local (not remote) administration.
Install Visual Studio 97 or Visual Studio 6 <optional> - Do not install Visual Studio Analyzer Component.
Create a System DSN to point to the database that may contain the sample tables.
Install Site Server - Do not create new membership instances before installing Commerce Edition.
Install Site Server Commerce Edition (do not overwrite data in database during commerce server setup).
Select your DSN created earlier to create the sample database tables.
Install Visual Studio 97 SP3 Or Visual Studio 6 SP2 < if Visual Studio is installed >.
Install Windows Service Pack 4 (do not install MDAC if prompted, this may be done in the next step).
Install MDAC 2.0 SP1.
Add the MaxBlock registry setting for MDAC.
Install Site Server 3.0 SP2.

### Site Server Configuration Information Using ReTA Frameworks

This portion of the description details the settings that must be in place to use Site Server's Personalization and Membership Services, along with instructions on how to setup a sample site to be used in conjunction with the ReTA Frameworks.

### Site Server Commerce Settings

After installing Site Server Commerce Edition v3.0 start the Site Server Admin Console and perform the following tasks:
Expand the **Personalization and Membership** folder.
Expand the computer name - i.e. "ZIMMERD3".
Right click on the **Commerce Membership Server (Membership Authentication)** folder and select properties.
On the "Authentication Service" tab *note* the **TCP Port** number.

Figure **60** illustrates a Commerce Membership Server [Membership Authentication] properties view **6000** which receives the computer name **6002,** user name **6004,** and password **6006.**

Right click on the **Membership Directory Manager 6100** and select properties.

Figure **61** illustrates a Membership Directory Manager Properties Dialog **6102.**
Make sure the Port number **6104** here matches the one from step # 4.

Site Server Commerce Sample Site Setup Instructions

To setup sample commerce site perform the following steps.

Right click on Default Web Site **6200** in Internet Information Server **6202,** select **Task 6204-Membership Server Mapping 6206...**

Figure **62** is an illustration of a Membership Server Mapping Property.

Select Intranet [Windows NT Authentication] Membership option.

Next create the sample site.
Right click on the "Computer name" under the Commerce Host Administration folder (Refer to Figure **62** **-** Computer Name is "ZIMMERD3" **6208**).
Select New - Commerce Site Foundation.
Create New Site Foundation Wizard **6300** appears. Figure **63** is an illustration of a Create New Site Foundation Wizard. Select to create site on "Site Server Commerce Membership Samples Web Site" option **6302.**

Follow steps in the wizard.
After Site has been created, right click on Default Web Site in Internet Information Server, select **Task - Membership Server Mapping...**
Change the Membership Server Mapping back to "Commerce Membership Server".
Site Server Commerce Site Sample - Setup

We may create the ReTA Application site under the "Member" directory in Windows Explorer (this may enable the use of the HTML Forms login that uses the Personalization and Membership Services to verify authentication to the site), this may be the site that was created through the Wizard.

For example we created a site and the ***shortname*** was "cm" **6400.** (Figure **64**)**.** Therefore our web application started under the "Member" directory **6402** of "cm".

Figure **64** illustrates the web application **6404** being placed under the "Member" directory of "cm" in Windows Explorer.

Place the Formslogin.asp, verifpwd.asp, and welcome_new.asp pages at the same level as the global.asa file. (These files one can copy from the Sample Site called "Trey Research").

### Starting up ReTA Framework Components Properly

We do not want to start the ReTA Framework components unless the user has authenticated properly.

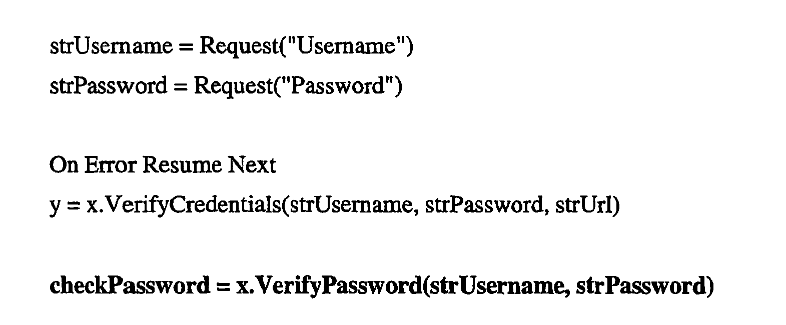

This line of code may verify that the user has authenticated with a proper username and password.

```
      On Error Resume Next
      ChkMemUserGUID = ChkUserObject.Get("GUID")
 
      if Err.Number <> 0 then
             IsError = True
      else
             IsError = False
      end if
 
      if checkPassword = 1 then
             REM
 
             'Create Event Handler that may be used in this function and in the Session_Stop
 function
             Set myEventCollection =
 Server.CreateObject("EventHandler.AFEventCollection")
             Set Session("AFEventCollection")=myEventCollection
 
             theCurrentPage = Request.ServerVariables("SCRIPT_NAME")
 
             'Create the ReTA AFSession Component
             Set Session("AFSession") = Server.CreateObject("Session.AFSession")
 
             'create ReTA AFUser object - either the UserSS or UserDB Component
             SiteServer=true 'change this to true for the SiteServer version
 
             if (SiteServei=true) then
                    Set user = Server.CreateObject("UserSS.AFUserSS")
             else
                    Set user = Server.CreateObject("UserDB.AFUserDB")
             end if
             theError=user.init()
 
             'Start the Session
             theError=Session("AFSession").start(myEventCollection)
 
             'Add the User component to the Session.
             the Error=Session("AFSession").setAFUser(user)
 
             'get The EventHandler Component from the Session and add it to the ASP session
 so that other pages can reference it.
             Set
 Session("AFEventHandler")=Session("AFSession")getEventHandler(myEventCollection)
 
             'Process any errors on this page. The return code is the severity of the Error
 
      theSeverity=Session("AFEventHandler").process(theCurrentPage,myEventCollection)
             'if the Severity is greater than 1 then redirect to the Error Page
             if (theSeverity >1) then
 
      response.Redirect("/asp/ExamplePages/asp/frameworks/ErrorHandler.asp")
             end if
 
             'test if we are starting the application at the correct point. If not it is probably
 because
             'the Session timed-out and so display the timeout message
             if theCurrentPage = "/asp/verifpwd.asp" then
                    'do nothing
             else
                    response.Redirect("/asp/ExamplePages/timeout.htm")
             end if
 
      end if
```

Here are some of the basic technologies utilized by Site Server Membership, including directory services, Lightweight Directory Access Protocol (LDAP), and Active Directory Service Interfaces (ADSI). A general knowledge of these technologies is important as one builds your Membership site.

### Directory Services and the Membership Directory

A directory service is a database that stores organizational data and is highly optimized for database lookups (reads). Directory services provide an index of users and network resources.

Site Server 3.0 contains Microsoft's most recent directory service, the Membership Directory. It is the central repository for user data, including member accounts, permissions, and site resources. All directory services use LDAP as their communicating protocol. In the future Microsoft Windows® 2000 Server may implement the much-talked-about Active Directory, which may take the Membership Directory to the next level. The Active Directory may also be responsible for storing all the information needed for the Windows NT domain architecture.

### Lightweight Directory Access Protocol

Lightweight Directory Access Protocol (LDAP) is the underlying protocol used by Site Server Membership to communicate with the Membership Directory. LDAP was designed to be the standard Internet protocol for accessing directory services. LDAP runs on TCP/IP networks and is independent of platform, allowing directory-based information to be shared across operating systems. Site Server Membership implements an LDAP service for reading and writing information to the Membership Directory database.

### Active Directory Service Interfaces

As stated previously, the Membership Directory must be accessed using the LDAP protocol. Rather than making raw LDAP calls to the Membership Directory, Site Server Membership uses Active Directory Service Interfaces, better known as ADSI. ADSI provides a common standard interface to multiple directory services (through ADSI providers) and communicates with the directory services using LDAP. ADSI makes life easier by allowing the developer to write code to one API while working with multiple directory services.

### Active User Object

Site Server provides the Active User Object (AUO) as a single component that aggregates all of a user's attributes from multiple Active Directory Service (ADS) providers. The primary provider is always the Membership Directory. The AUO is a COM object called *membership.userobjects.* It uses ADSI to retrieve a user's information from the Membership Directory and greatly simplifies the code a developer writes by automatically binding to the current user's information in the Membership Directory. The binding occurs when the component is created, but requires that the Web site be mapped to a Membership Server and that the user is authenticated.

### Membership Directory Authentication

### Authentication Choices

When one sets up a Membership Directory for a Web site, one must choose the type of authentication to be used. Membership may be set up to use Windows NT accounts **(Windows NT Authentication)** or accounts that reside solely in the Membership Directory database **(Membership Authentication).** Windows NT Authentication is most useful for intranet sites where one wish to leverage existing accounts and use the Windows NT Security Accounts Manager (SAM) for authentication. However, **Membership Authentication is a good choice for Internet sites**, especially sites in which the number of users may increase dramatically over time. As your user base grows, it is much easier to administer your accounts and privileges using Membership Authentication.

Since Integrated Direct Channel (IDC) uses Membership Authentication for the purposes mentioned above, further detail into that authentication method is discussed below:

### Membership Server Mapping

It is important to note that Membership Authentication maps Membership groups to proxy Windows NT group accounts to determine a member's security permissions. One still has the benefit of the strong security of Windows NT and can administer security permissions for a Membership group by assigning permissions (ACLs) to the proxy account. For every group in the Membership Directory, Membership creates a corresponding Windows NT group called *Site_directoryname_groupname,* where *directoryname* is the name of the Membership Directory and *groupname* is the name of the Membership group.

### Membership Authentication Configuration Options

Under Membership Authentication, there are also several options for configuration. There are four Security Support Providers available: 1) Automatic Cookie Authentication, 2) HTML Forms Authentication, 3) Distributed Password Authentication (DPA), and 4) Clear Text/Basic Authentication. At all four of these levels, there is an Allow Anonymous option, which allows unrecognized users to access the site as a generic account called IUSR_[server_name].

### 1. Automatic Cookie Authentication

This method provides us with a quiet and discreet authentication method for both anonymous users and registered members. Cookie authentication issues two cookies - SITESERVER and MEMUSER - to store information on the user's computer. When this option is selected, the ISAPI (Internet Server Application Program Interface) filter (which was installed by the mapping of the Membership Server) parses the headers of the client and looks for the two cookies. There are three possibilities. If the cookies exist then the information found therein is used to authenticate and bind to a member. If the cookies are invalid then the member is redirected to an ASP page in the _mem_bin virtual directory. If the cookies don't exist then the ISAPI filter creates and binds to a new member in the Membership Directory, in the ou=AnonymousUsers container. Once bound to this user, two cookies are written to the browser. These two new cookies SITESERVER and MEMUSER may be used in future sessions to identify the member uniquely.

### 2. HTML Forms Authentication

To provide a more secure (but equally simple) form of authentication, we can use HTML Forms Authentication. This method of authentication uses HTTP's POST method to send the user's credentials to an ASP page, which handles the submission. The ASP page then makes use of a special COM object - the VerifUsr object - to verify the user's credentials. HTML Forms Authentication also makes use of the ISAPI Membership Authentication filter. When a user makes a call to a page that uses HTML Forms Authentication, ISAPI traps that call and redirects to a special ASP page called FormsLogin.asp. This page is provided in the _mem_user virtual directory of the web application. FormsLogin.asp is nothing more than an asp page with form elements for user login name and password. Upon submission, the page redirects with the form elements to verifpwd.asp, which contains the script to verify a user's credentials. If the user is authenticated, the user is taken to the page s/he was trying to access and issues a FormsAuth cookie in addition to the SITESERVER and MEMUSER cookies.

### 3. Distributed Password Authentication (DPA)

DPA works for Membership authentication in much the same way as Challenge/Response works for Windows NT Authentication. For DPA, users are authenticated against the Membership Directory (rather than the Windows NT SAM database). Moreover, since the username and password are never sent across the wire, DPA is very secure. Unfortunately, it's only possible for Windows Internet Explorer clients to use DPA where usernames and passwords are hashed with a challenge sent by the server.

### 4. Clear Text / Basic Authentication

When we select Basic Authentication, we authenticate any user that requests a resource against the credentials stored in the Membership Directory. We can specify extra information with the user, from which to authenticate users. But here lies a difference between Basic Authentication under Windows NT authentication and Basic Authentication under Membership Authentication: in the former case this extra information is in the form of a domain, and in the latter case the information represents sub-containers in the directory. The Clear TextBasic Authentication method is supported by a number of applications, including Netscpape, and most clients should be able to use it.

### Other Considerations

DPA and Clear Text / Basic Authentication can be selected simultaneously. In this case, the server may first attempt to issue a DPA authentication challenge. If (and only if) the client cannot interpret the challenge, the server may offer the Clear TextBasic Authentication request.

### IDC and Membership Authentication

The Integrated Direct team used HTML Forms Authentication with anonymous support under certain circumstances for a few reasons. First of all, this authentication method provides an html interface as opposed to a pop up dialog box. This gives the application a more consistent look and feel since the FormLogin.asp page is customizable with graphics and layout. HTML Forms Authentication is also has no compatibility issues that DPA or Clear Text / Basic Authentication methods may have. It is simply an html page, which posts form elements to another asp page, which contains authentication methods. Finally, HTML Forms Authentication issues one session essential cookie, the FormsAuth cookie. The use of one cookie makes user administration issues, such as session time and logout, simpler.

### DEVELOPERS WORKSTATION INSTALLATION PROCESS

### Description

This portion of the description provides the steps necessary to configure a workstation for use doing application or architecture development on a ReTA engagement.

### Assumptions

This portion of the present description assumes:
That the target hardware configuration for the workstation meets the specified requirements for the software being installed.
Embodiments mentioned within this portion of the present description may not current as of the time of this reading. Care should be taken to ensure that the latest embodiments are used and that individual installation processes are reviewed to ensure that any changes are followed. Individuals performing this installation have experience in Microsoft platforms and tools, and are familiar within web-based application development.

### Development Environment

Figure **65** depicts a typical ReTA engagement development environment **6500,** including a file server **6502**, developer workstation **6504,** a build and unit test DB server **6506,** an assembly test web and application server **6508,** and an assembly test DB server **6510.**

### Installation Process

This is the script for the preparation of the run-time environment for the application and web server. It is applicable to a computer running Windows NT Workstation 4.0.

**Install/Configure Web and Application Server Components**

| **Step** | **Step Description** | **Notes** |
|---|---|---|
| 1 | **Install Windows NT Workstation v 4.0.** | It may be necessary to reboot the computer after the installation. |
| | Run install for Windows NT Workstation 4.0 from boot disks. | |
| 2 | **Install Service Pack 4.0 for NT 4.0** | It may be necessary to reboot the computer after the installation. |
| | Run install for Service Pack 4.0 (available from the Microsoft Website). Ignore any warnings issued later in the installation process that are related to the use of Service Pack 4.0. | |
| 3 | **Install Internet Explorer 4.01 Service Pack 1.** | This step installs the Java virtual machine used by the application. Reboot if prompted. |
| | It is not important whether the desktop shell update is installed or not. This step also installs the Java virtual machine used by the application. It may be necessary to reboot the computer after the installation. | |
| 4 | **Set up the Web and Application Server.** | Installs IIS 4.0 and MTS 2.0. Reboot when prompted. |
| | Install the NT Option pack from the supplied media. This may not be possible unless the previous step has been completed correctly. Choose to install the "custom set-up" of the option pack. Double click on the **Personal Web Server** component. Check the box for the **Internet Service Manager** component Click **OK**. | |
| | Double **Click Transaction Server.** | |
| | Check box for Transaction Server Development. Accept default location for WWW Service install, Click Next Accept default for Transaction Server (should be Administration-> local). | |
| | Application may begin to install. | |

**Install/Configure Database Connectivity**

| **Step** | **Description** | **Notes** |
|---|---|---|
| 5 | Install Oracle 8 Client. | Oracle 8 Client installed. |
| | Install **Oracle Client Software R 8.0** from the CD | |
| | Accept default home location. | |
| | Choose Custom Installation. | |
| | Select Oracle 8 Client Application User Products. | |
| | Click Install. | |
| | De-Select Oracle Objects for OLE. | |
| | Click OK | |
| | Click Exit when finished. | |
| 6 | Configure Oracle Networking | Net8 provides the |
| | Use the Oracle **Net8 Easy Config** Utility to define a local service name. To perform this operation one may need to know the name of the Oracle instance (default is 'ORCL'), the hostname of the server that Oracle resides on, and the port that the Oracle database listener is on (default is 1521). | networking component of Oracle8. |
| | Refer to the help portion of the present description installed in step 5 for assistance. | |
| 7 | Update MTS Settings for Oracle 8 client compatibility | Currently, MTS v2.0 installation is based on using **Oracle 7.3 for** Oracle connectivity. |
| | Open REGEDIT and within the LOCAL_MACHINE\SOFTWARE key modify the **Microsoft\Transaction Server\Local Computer\My Computer** entries: | |
| | Change the OracleSqlLib to "sqllib80.dll" | |
| | Change the OracleXaLib to "xa80.dll" | |
| 8 | Install Microsoft Data Access Components | Microsoft ODBC for Oracle driver (MSORCL32.DL L v 2.573.292700 ) installed Reboot if prompted. |
| | Run install from NT Server 4.0 SP 4.0 disk *(**Caution**,* do not install NT Service Pack 4.0 at this time) | |
| | Select Custom Install. | |
| | De-select everything except for ODBC Components, OLE DB components, Microsoft's Remote Data Services and ODBC driver for Oracle databases. | |
| 9 | Run MTS/Oracle Configuration Test Utility | Use this test to ensure your oracle client connection is transactional. |
| | Copy the Oracle 8.0 version of TestOraclexaConfig.exe (from the Tools project within VSS) to your C:\Program Files\Mts folder. Copy over the existing .exe (version 7.3 compatible). | |
| | Run the TestOraclexaConfig.exe from the command line; i.e. TestOraclexaConfig.exe -U<username> -P<password> -S<Net8 Service> | |
| | | MTS installs Oracle 7.3 compatible utility by default. |
| | Ex. **TestOraclexaConfig.exe -URetaUser -PRetaUser - SReta1** | |
| 10 | Create Architecture and Application DSN's (Data Source Names). | This process sets up an ODBC connection from the developers' machine to the Database Server. |
| | Run the 32Bit **Administrator** in the **Control Panel.** Make sure that the tab for System DSN is selected. | |
| | Select **Add,** then **Microsoft ODBC for Oracle** | |
| | The **Data Source Name** is **AFUser,** and the **Server** "retal" for the above example) | |
| | Repeat the above two steps to add DSN's for the data sources **AFPersistence, AFEvent, AFSession and AFOrder** | |
| 11 | Test the DSN's defined | |
| | Test the connections established above using the 32 **Bit ODBC** | |
| | **Test** utility in the **Oracle for NT** folder off the Start menu. | |
| | Select **Connect,** then **Machine Data Sources,** then one of the connections established above. | |

**Configure Java Runtime Components**

| Step | Description | Notes |
|---|---|---|
| 13 | Apply Software Updates | Reboot when prompted. |
| | Install the updated latest Java Virtual Machine (Downloaded from Microsoft) | |
| | | |
| 14 | Update the Runtime Java Classes | |
| | Using the **WinntJava.Zip** file provided within the Tools project | |
| | of SourceSafe: | |
| | Extract all files (use folder names) to C:\WinNT\Java. | |
| 15 | Create System Environment Variables | These variables are used by the Java Virtual Machine to find Java runtime classes and by the development tools for application and architecture builds. |
| | Define the following Environment Variable; | |
| | CLASSPATH | |
| | C:\ReTA\Architecture;C:\ReTA\Application;C:\winnt\java\classes | |
| | ;C:\winnt\java\packages;c:\winnt\java\trustlib | |
| | | |
| | INCLUDE | |
| | INCLUDE; add | |
| | C:\ReTA\Architecture;C:\ReTA\Application;C:\Program | |
| | Files\Microsoft Visual Studio\VC98\Include;c:\Program | |
| | Files\MTS | |
| | PATH | |
| | - PATH; add C:\orant\bin;C:\Program Files\Mts;C:\Program | |
| | Files\Microsoft Visual Studio\Common\Tools\;C:\Progtam | |
| | Files\Microsoft Visual Studio\VC98\bin;C:\Program | |
| | Files\Microsoft Visual Studio\VJ98 | |

**Install and Configure Development Software**

| **Step** | **Step Description** | **Notes** |
|---|---|---|
| 16 | Install Microsoft Visual J.++ | Restart if prompted. |
| | | |
| | If install detects an out of date version of IE 4.0 then accept the version offered by Visual J++ 6.0. | |
| | Reboot Computer, leave CD in drive. | |
| | Start install for Visual J++ v 6.0, select Install Visual J++ 6.0 option. | |
| | | |
| | Select Custom install: | |
| | Click **Data Access,** click **Change Option** button, click Microsoft | |
| | **ODBC** Drivers and click **Change Option** button, - De-Select | |
| | Microsoft SQL Server ODBC Driver and Microsoft Oracle ODBC | |
| | Driver, Click **OK twice,** Click Continue button. | |
| 17 | **Install Microsoft Visual Studio 6.0 Components.** | Restart if prompted. |
| | | |
| | Select Custom install: | |
| | De-select everything except for Microsoft Visual SourceSafe 6.0 and Microsoft Visual C++ 6.0.. Ignore warning message when deselecting the Data Access check box. | |
| | Click on Microsoft Visual C++ 6.0 | |
| | Click Change Option. | |
| | De-select everything except for VC++ Build Tools. | |
| | Click OK button. | |
| | Click Continue. | |
| | Click OK on register environment variables. | |
| | Click YES on Visual SourceSafe Database Format dialog. | |
| 18 | Apply Software Updates | |
| | In the event that updates are available for either Visual J++ or Visual C++, apply them now. | |
| 19 | **Install Service Pack 4.0 for NT** | |
| | Run install for Service Pack 4.0. | |
| | | |
| 20 | **Configure Web Server** | |
| | Start the Internet Service Manager | |
| | Add a virtual directory where the application may start. | |
| | On the virtual directory enable Server Side ASP script debugging | |
| | and Client Side script debugging. | |
| | On the virtual directory, set directory security for Basic | |
| | Authentication only. | |
| 21 | **Configure encrypted database access information** | This step creates an encrypted file located at the C:\ that contains the database connectivity information. |
| | Open Command prompt in C:\ReTA\Architecture | |
| | Type 'jview Session.Data.baseUser.class' | |
| | When Prompted for the Architecture user id and password enter: | |
| | **(Userid:** RetaUser, **Password:** RetaUser) | |
| | When Prompted for the Application user id and password enter: | |
| | (**Userid:** RetaUser, **Password:** RetaUser) | |

### WEB & APPLICATION SERVER ENVIRONMENT

### Overview

### Description

This portion of the description provides the steps necessary to configure a Microsoft Internet Information Server (IIS) web server and an application using Microsoft Transaction Server for use on a ReTA engagement.

### Assumptions

This portion of the present description assumes:
That the target hardware configuration for both the web and application server meets the specified requirements for the software being installed.

Embodiments mentioned within this portion of the present description may not be current as of the time of this reading. Care should be taken to ensure that the latest embodiments are used and that individual installation processes are reviewed to ensure that any changes are followed.
Individuals performing this installation have experience in Microsoft platforms and tools, and are familiar within web-based application development.

### Physical Configuration

Figure **66** illustrates the development environment configuration for a ReTA Phase 1 engagement. A developer workstation **6600,** a database server **6602,** and a web and application server **6604** are connected together.

### Installation Process

This is the script for the preparation of the run-time environment for the application and web server. It is applicable to a computer running Windows NT Server 4.0 Enterprise Edition.

**Install/Configure Web and Application Server Components**

| **Step** | **Step Description** | **Notes** |
|---|---|---|
| 1 | **Install Windows NT Server v 4.0 Enterprise Edition.** | It may be necessary to reboot the computer after the installation. |
| | Run install for Windows NT Server 4.0 from boot disks. | |
| 2 | **Install Service Pack 4.0 for Windows NT 4.0** | It may be necessary to reboot the computer after the installation. |
| | Run install for Service Pack 4.0 (available from the Microsoft Website). Ignore any warning messages during the later steps of the installation process related to the use of the Service Pack. | |
| 3 | **Install Internet Explorer 4.01 Service Pack 1.** | This step installs the Java virtual machine used by the application. Reboot if prompted. |
| | It is not important whether the desktop shell update is installed or not. This step also installs the Java virtual machine used by the application. It may be necessary to reboot the computer after the installation. | |
| 4 | **Set up the Web and Application Server.** | Installs IIS 4.0 and MTS 2.0. Reboot when prompted. |
| | Install the NT Option pack from the supplied media. This may not be possible unless the previous step has been completed correctly. Choose to install the "custom set-up" of the option pack. Double click on the **Personal Web Server** component. Check the box for the Internet **Service Manager** component Click **OK.** | |
| | Double **Click Transaction Server.** | |
| | Check box for Transaction Server Development. | |
| | Accept default location for WWW Service install, Click Next Accept default for Transaction Server (should be Administration-> local). | |
| | Application may begin to install. | |

**Install/Configure Database Connectivity**

| **Step** | **Description** | **Notes** |
|---|---|---|
| 5 | **Install Oracle 8 Client.** | Oracle 8 Client installed. |
| | Install **Oracle Client Software R 8.0** from the CD | |
| | Accept default home location. | |
| | Choose Custom Installation. | |
| | Select Oracle 8 Client Application User Products. | |
| | Click Install. | |
| | De-Select Oracle Objects for OLE. | |
| | Click OK | |
| | Click Exit when finished. | |
| 6 | Configure Oracle Networking | Net8 provides the networking component of |
| | Use the Oracle **Net8 Easy Config** Utility to define a local service name. To perform this operation one may need to know the name of the Oracle instance (default is 'ORCL'), the hostname of the server that Oracle resides on, and the port that the Oracle database listener is on (default is 1521). | |
| | Refer to the help portion of the present description installed in step 5 for assistance. | Oracle8. |
| 7 | Update MTS Settings for Oracle 8 client compatibility | Currently, MTS v2.0 installation is based on using Oracle 7.3 for Oracle connectivity. |
| | Open REGEDIT and within the LOCAL_MACHINE\SOFTWARE key modify the **Microsoft\Transaction Server\Local Computer\My Computer** entries: | |
| | Change the OracleSqlLib to "sqllib80.dll" | |
| | Change the OracleXaLib to "xa80.dll" | |
| 8 | Install Microsoft Data Access Components | Microsoft ODBC for Oracle driver (MSORCL32.DL L v 2.573.292700 ) installed Reboot if prompted. |
| | Run install from NT Server 4.0 SP 4.0 disk (***Caution**,* do not install NT Service Pack 4.0 at this time) | |
| | Select Custom Install. | |
| | De-select everything except for ODBC Components, OLE DB | |
| | components, Microsoft Remote Data Services and ODBC driver for Oracle databases. | |
| 9 | Run MTS/Oracle Configuration Test Utility | Use this test to ensure your oracle client connection is transactional. |
| | Copy the Oracle 8.0 version of TestOraclexaConfig.exe (from the Tools project within VSS) to your C:\Program Files\Mts folder. | |
| | Copy over the existing .exe (version 7.3 compatible). | |
| | Run the TestOraclexaConfig.exe from the command line; i.e. | |
| | TestOraclexaConfig.exe -U<username> -P<password> -S<Net8 Service> | MTS installs Oracle 7.3 compatible utility by default. |
| | Ex. **TestOraclexaConfig.exe -URetaUser -PRetaUser - SReta1** | |
| 10 | Create Architecture and Application DSN's (Data Source Names). | This process sets up an ODBC connection from the developers'machine to the Database Server. |
| | Run the **32Bit Administrator** in the **Control Panel.** Make sure that the tab for **System DSN** is selected. | |
| | Select **Add,** then **Microsoft ODBC for Oracle** | |
| | The **Data Source Name** is **AFUser,** and the **Server** "retal" for the above example) | |
| | Repeat the above two steps to add DSN's for the data sources | |
| | **AFPersistence, AFEvent, AFSession and AFOrder** | |
| 11 | Test the DSN's defined | |
| | Test the connections established above using the **32 Bit ODBC** | |
| | **Test** utility in the Oracle **for NT** folder off the Start menu. | |
| | Select **Connect,** then **Machine Data Sources,** then one of the connections established above. | |

**Configure Java Runtime Components**

| Step | Description | Notes |
|---|---|---|
| 13 | Apply Software Updates | Reboot when prompted. |
| | Install the updated latest Java Virtual Machine (Downloaded from Microsoft) | |
| 14 | Update the Runtime Java Classes | |
| | Using the WinntJava.Zip file provided within the Tools project of SourceSafe: | |
| | Extract all files (use folder names) to C:\WinNT\Java. | |
| 15 | Create System Environment Variables | This variable is used by the Java Virtual Machine to find Java runtime classes. |
| | Define the following Environment Variable; CLASSPATH | |
| | C:\ReTA\Architecture;C:\ReTA\Application;C:\winnt\java\classes | |
| | ;C:\winnt\java\packages;c:\winnt\java\trustlib | |
| | ***IF using this machine for development, Add the following:*** | |
| | INCLUDE | |
| | INCLUDE; add | These variables are used by the development tools for application and architecture builds. |
| | C:\ReTA\Architecture;C:\ReTA\Application;C:\Program | |
| | Files\Microsoft Visual Studio\VC98\Include;c:\Program Files\MTS | |
| | PATH | |
| | - PATH; add C:\orant\bin;C:\Program Files\Mts;C:\Program | |
| | Files\Microsoft Visual Studio\Common\Tools\;C:\Program | |
| | Files\Microsoft Visual Studio\VC98\bin;C:\Program | |
| | Files\Microsoft Visual Studio\VJ98 | |
| 16 | **Install Service Pack 4.0 for NT** | Reboot when prompted |
| | Run install for Service Pack 4.0. | |

**IF using this machine for development: Install and Configure Development Software**

| **Step** | **Step Description** | **Notes** |
|---|---|---|
| 16 | Install Microsoft Visual J++ | Restart if prompted. |
| | If install detects an out of date version of IE 4.0 then accept the version offered by Visual J++ 6.0. | |
| | Reboot Computer, leave CD in drive. | |
| | Start install for Visual J++ v 6.0, select Install Visual J++ 6.0 option. | |
| | Select Custom install: | |
| | Click **Data Access,** click **Change Option** button, click **Microsoft** | |
| | **ODBC Drivers** and click **Change Option** button, - De-Select | |
| | Microsoft SQL Server ODBC Driver and Microsoft Oracle ODBC | |
| | Driver, Click **OK** twice, Click **Continue button.** | |
| 17 | **Install Microsoft Visual Studio 6.0 Components.** Select Custom install: | Restart if prompted. |
| | De-select everything except for Microsoft Visual SourceSafe 6.0 and | |
| | Microsoft Visual C++ 6.0. Ignore warning message when | |
| | deselecting the Data Access check box. | |
| | Click on Microsoft Visual C++ 6.0 | |
| | Click Change Option. | |
| | De-select everything except for VC++ Build Tools. | |
| | Click OK button. | |
| | Click Continue. | |
| | Click OK on register environment variables. | |
| | Click YES on Visual SourceSafe Database Format dialog. | |
| 18 | Apply Software Updates | |
| | In the event that updates are available for either Visual J++ or | |
| | Visual C++, apply them now. | |
| 19 | **Install Service Pack 4.0 for NT** | |
| | Run install for Service Pack 4.0. | |
| 20 | **Configure Web Server** | |
| | Start the Internet Service Manager | |
| | Add a virtual directory where the application may start. | |
| | On the virtual directory enable Server Side ASP script debugging | |
| | and Client Side script debugging. | |
| | On the virtual directory, set directory security for Basic | |
| | Authentication only. | |
| **21** | **Configure encrypted database access information** | This step creates an encrypted file located at the C:\ that contains the database connectivity information. |
| | Open Command prompt in C:\ReTA\Architecture | |
| | Type 'jview Session.DatabaseUser.class' | |
| | When Prompted for the Architecture user id and password enter: | |
| | (**Userid**: RetaUser, **Password:** RetaUser) | |
| | When Prompted for the Application user id and password enter: | |
| | (**Userid:** RetaUser, **Password:** RetaUser) | |

### STANDARDS

### Objectives

### Purpose

The purpose of this guide is to provide a reasonable set of coding standards and recommendations for producing structured, reliable and maintainable portion of the present descriptions in the HyperText Markup Language (HTML) on the World Wide Web.

This guide is intended for programmers who are at least familiar with the basics of the HTML. Accordingly, no attempt is made to explain HTML concepts such as frames and tables.
Scope
These standards are intended to be independent of any particular hardware, operating system, or development tool. Due to the nature of the Internet, platform independent code is imperative.

This guide covers standards for HTML 2.0 and does not cover standards for HTML 3.2. This embodiment can be assumed to be "safe" for all Web browsers. However, HTML 3.0 and 3.0+ offer an extensive array of non-standard elements which enhances the presentation of a Web page. This guide may include tables and frames which are not fully supported by all browsers. Thus, when implementing tables or frames, it is important to consider your target audience and the type of browsers they may be using to surf the Internet.
There are a variety of tools to aid the authoring process of HTML. A HTML editing tool like WebEdit or a HTML template like Internet Assistant may not be consistent with our standards and guidelines. Projects using these HTML editors and converters are subject to the proprietary standards of their respective software applications.
Convention

In this guide, standards are presented as follows:
* Text for rule or standard here.
   The statement of one or more standards is usually followed by a discussion of the standard(s).
   Such a discussion may include justifications for using the particular rule, common alternatives, other supplementary information, or even situations where the standard may not apply.

### Program Organization

### Source Code

* Organize source code as follows:

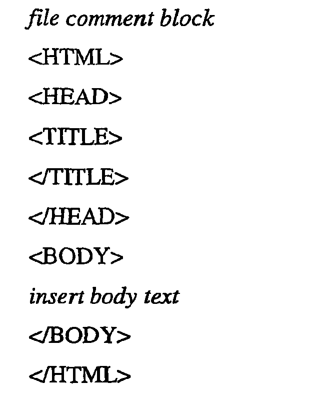

Defining a standard source file layout makes it easier to understand and maintain code written by other programmers.

### File Names

HTML files adhere to the same naming and directory standards set forth by the Internet Center of Excellence (ICE). For more information, refer to the ICE portion of the present description on file naming and directory standards.

### Programming Styles

### HTML Tags

* All HTML tags and attributes should be capitalized.
   HTML is not case sensitive, however, to preserve readability, it is important to adhere to uppercase lettering for HTML tags.
   However, some HTML editors, such as Microsoft FrontPage, generate lower-case HTML tages. Since more HTML editing may probably be done through similar tools, it does not make sense to have to go back through the code and make any changes. For this situation, simply adopt the format that your HTML tool generates, and make it consistent throughout your project.
* All open tags must be terminated by an end tag.
   Excluding tags such as <LI>, <HR>, <BR>, <IMG>, <META>, <BASE> and <P>, it is important to close a HTML tag with a </(tag name)>. For example, an open HTML tag is <HTML> and a closed HTML tag is </HTML>. Failure to close a HTML tag may cause undefined behavior with the appearance of the HTML page.
* Do not skip levels of headings.
   Headings should be not more than one level below the preceding heading level. For example, <H3> should not follow <H1>.
* Use underline for hypertext links only.
   Adhere to this standard to eliminate any confusion between a hypertext link and a text underlined for emphasis. To emphasize text, use the following tabs: <EM> for emphasis in italics, <STRONG> for text emphasis, <B> for bold and <I> for italics.
* Employ the logical styles rather than physical styles.
   Not all browsers are capable of displaying italics <I> or the boldface <B> tag. Physical styles indicate the specific appearance of individual words or sentences and include such tags as <B> for bold text, <I> for italic text, and <TT> typewriter text, e.g., fixed-width font. The following is a list of logical styles tags:
   <CITE> for citation (e.g., *HTML Coding Standards*). Typically displayed in italics.
   <CODE> for computer code (e.g., Enter <stdio.h> header file). Typically displayed in a fixed-width font.
   <DFN> for definition (e.g., *Guru* means god-like). Typically displayed in italics.
   <EM> for emphasis (e.g., *It is advisable that one uses this than typing italics within a tag).* Typically displayed in italics.
   <KBD> for user keyboard entry (e.g., Enter passwd). Typically displayed in a fixed-width font. <SAMP> for a sequence of literal characters (e.g., Segmentation fault: Core dumped).
   Typically displayed in a fixed-width font.
   <STRONG> for strong emphasis (e.g., NOTE: This is a reminder). Typically displayed in bold. <VAR> for a variable (e.g., rm *filename* deletes the file). Typically displayed in italics.
* The use of <P> should be avoided directly before any other element which already implies a paragraph break.
   The <P> element should not be placed before the headings, HR, ADDRESS, BLOCKQUOTE, or PRE.
   It should also not be placed immediately before a list element of any stripe. That is, a <P> should not be used to mark the end-of-text for <LI>, <DT> or <DD>. These elements already imply paragraph breaks.
* Investigate the possibility for using server-side includes for repeated blocks of HTML, such as footers and headers.
   The server-side include tag allows one to keep one copy of a footer or header. Updating this one copy may update all portion of the present descriptions that reference it.

Investigate the Client's use of the <META> tag, which is used to help with searches and portion of the present description information.

The <META> tag provides a way to store information about the portion of the present description that is not available elsewhere in the portion of the present description. For example, the META tag can contain catalog, author, or index information that various search engines can use.
An example might be:
<HEAD>
<META NAME="keywords" CONTENT="HTML portion of the present description reference
Netscape">
</HEAD>
This portion of the present description is indexed under the terms "HTML", "portion of the present description", "reference", and "Netscape".
HTML Tag Parameters
* Include HEIGHT and WIDTH attributes in all IMG tags.
   Adhering to this standard may eliminate the problem when using JavaScript code in HTML portion of the present descriptions with IMG tags. Without the HEIGHT and WIDTH parameters in IMG tags, JavaScript event handlers are ignored on subsequent form elements and also images are not displayed on screen. As good practice, it is recommended to include all parameters in their appropriate HTML tags.
* Include alternate text for images.
   Some Web browsers cannot display images and some Web users may not want to use image loading even if their software can display images because they are have a slow connection. For these browsers and users, the ALT attribute specifies the text to be displayed instead of the image. For example, <IMG SRC="aclogo.gif" ALT="Andersen Consulting logo">. If a Web browser cannot display aclogo.gif or a Web user wishes not to view the logo, the text "Company Logo" may be displayed to screen instead.
* Indicate a specific font size rather than incrementing it with the ±.
   Be careful when using the ± in the SIZE attribute in the FONT tags. Some Web users reconfigure the font sizes in their Web browsers and the consequences of using the ± may have an adverse effect on the text.
* Always have <NO FRAMES> tags following the <FRAMESET> tag.
   Not all Web browsers are "frame-capable." Those "frame-capable" browsers may see the frames layout and others may view an alternate or a normal page without frames. The code for the page without frames is bounded by the open and closed NO FRAMES tag set and includes the open and closed BODY tags and all code therein. For example:

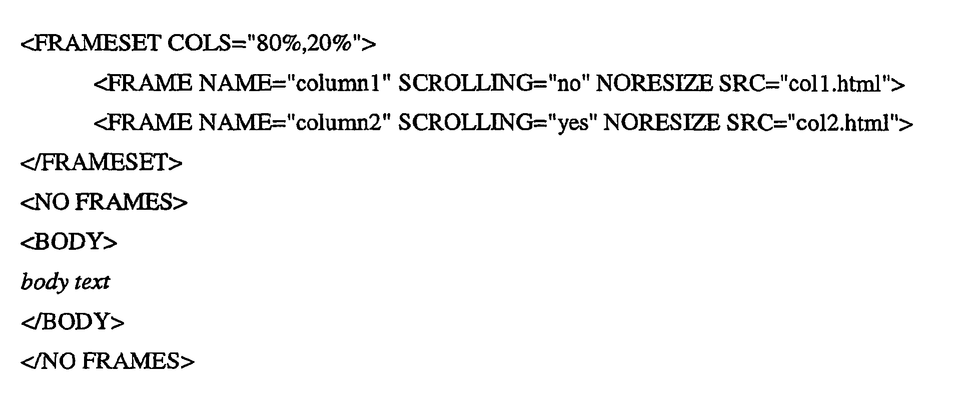

### Path Names

In general, use relative links when referencing internal files.
There are exceptions to this standard and a uniform scheme should be determined prior to HTML development.

In general, it is easier to move a group of portion of the present descriptions to another location because the relative path names may still be valid. Also, relative paths are more efficient to connect to the server. An example of a relative path to a file "california.html" located in the subdirectory "unitedstates" would be:
<A HREF="unitedstates/california.html">California</A>. Absolute pathnames link to portion of the present descriptions that are not directly related and require the complete Uniform Resource Locator (URL) of the file.
An example of an absolute path to a file "mteverest.html" in the subdirectory "nepal" on another server "Hiking Expeditions" would be:
<A HREF="www.hiking.com/nepal/mteverest.html">Trekking on Mt.Everest</A>.

When making a directory reference, it is important to make sure to have a trailing slash on the URL.
For example, <A HREF= "http://www.ac.com/news/"></A> is correct, while <A HREF= "http://www.ac.com/news"></A> is not.

### Formatting

### General

Consistent use of a suitable formatting style makes HTML portion of the present descriptions much easier to read, comprehend, and maintain. Choosing a reasonable style and using it consistently is more important than the details of the style itself.

### Screen Resolution

* All HTML files should be designed to fit on a 640x480 screen.
   This standard is set forth for consideration of most display monitors, especially laptop users who have screen resolution of 640x480 only.
* Indent HTML tags when creating tables, frames, and lists.
   Consistent use of a suitable formatting style makes programs much easier to read, comprehend and maintain. An example of this is as follows:

```
 <TABLE BORDER=0 CELLSPACING=0 CELLPADDING=0>
   <TH>Sample Heading</TH>
      <TR>
 <TD>Row 1 Column 1</TD>
 <TD>Row 1 Column 2</TD>
 <TD>Row 1 Column 3</TD>
                   <ITR>
      <TR>
 <TD>Row 2 Column 1</TD>
 <TD>Row 2 Column 2</TD>
 <TD>Row 2 Column 3</TD>
                   </TR>
 </TABLE>
```

An example of formatting an unnumbered list is as follows:

```
 <UL TYPE="square">
       <LI>Alligator
       <LI>Bear
       <LI>Cat
              <UL>
                     <LI>Siamese Cats
                     <LI>Persian Cats
                     <LI>Tabby Cats
              </UL>
       <LI>Deer
 </UL>
```

As one may notice, no closing LI tag is needed. The same format above would apply for numbered, i.e., <OL> and definition lists, i.e., <DL>.

### Portion of the present description (comments)

### General

Include comments in code as it is being written and update them accordingly. Remember that bad comments are worse than no comments at all!
Comments are also convenient for commenting out several adjacent lines of code for debugging purposes.

### Inline Comments

* Insert portion of the present description information at the top of each HTML file in comment tags.
   All HTML files should begin with the following information:
   <!-- Portion of the present description name: -->
   <!-- Description: ->
   <!- Author: -->
   <!-- Date created: -->
   <!-- Last modified on:-->
   <!- Any applicable copyright notices -->
* Comments should begin with <!-- and closed with ->.
* Include comments in places where the code is unclear and/or nonportable.
* Place comments above the appropriate tag/link.
* Indent inline block comments to the same level as the code they describe.
* Do not include comments for actions that can be stated in the language itself.
   Good inline comments are brief and to the point; the author should assume that the reader is reasonably competent.
* Date Created and Date Modifications should be in the format of "January 10, 1996", not "01/10/96".
   *This is because, for some audiences, especially those from Europe, "01*/*10*/*96" means "October 01, 1996".*
* Portion of the present description modifications in comment tags.
   If we are maintaining portion of the present descriptions on a long-term basis, not just for development, the following standard should be used to maintain HTML source.
   Add notation to portion of the present description header.
   Initialize and date the beginning and ending of modification if multiple lines. Example of this is:
   <!-- January 10, 1996 STP: Begin modified table entries --> *table...*
   <!-- January 10, 1996 STP: end of modification -->
   If single line modification, only mark line above.

### Common Mistakes

This portion of the description lists a few of the most common mistakes made by HTML designers, experienced as well as beginners. They are as follows:
Remember to close HTML tags.
Remember to close all attribute tags with a quote. For example, linking to Andersen Consulting's Web site may look like: <A HREF="http://www.ac.com">. However, people may inadvertently leave off the close quote and instead type: <A HREF="http://www.ac.com>.
Be sure all HTML files contain the main opening and closing tags in their respective order as follows:

```
 <HTML>
   <HEAD>
       <TITLE>
       </TITLE>
   </HEAD>
   <BODY>
   <BODY>
 </HTML>
```

Test all hyperlinks after completion of a HTML file.
A character reference and an entity reference are ways to represent information that might otherwise be interpreted as a markup tag.
For example:
< represents < symbol;
> represents > symbol;
" represents " mark;
& represents & symbol.
The most common errors in the use of entity references are leaving off the trailing semicolon and adding unnecessary spaces before and/or after the entity/character reference.

### Java Programming Standard

### Introduction

This portion of the present description describes the Programming Standard for Java in the Telebank project. It covers typical programming standard material, including the following:
Program organization
Naming standards
Code layout
Comments
In addition, it covers the following material:
Coding priorities
Programming style
Error handling

### Debugging and testing

The purpose of this portion of the present description is to help ensure a uniformly high source code quality. The rules and guiding principles have been chosen to support this goal. In cases with more than one acceptable alternative, one alternative has been chosen (more or less arbitrarily) rather than leaving it up to the individual programmer. The purpose of this is to ensure consistency in the source code.
Note: Some of the rules are beneficial only if applied consistently. Apply them!

### Coding Priorities

This portion of the description defines coding (and, to some extent, design) priorities on the various platforms. The first table defines the meaning of each priority item; the second table specifies their ranking on the three platforms.
Use these tables as a guide for resolving design and implementation issues.
In some cases, coding priorities are clearly opposed to one another. As an example, consider a choice of sorting algorithms. For simplicity and safety, there is nothing to beat the bubble sort- it is simple enough that one can code it from scratch each time one needs it and still be fairly confident that it works correctly the first time. The problem is, the bubble sort is slow. Just about any other sorting algorithm may be faster; it may also be complex enough that one may need to crack a book to implement it. In addition, one may have to test more thoroughly to be confident that the code works correctly.
In other cases, coding priorities work together. Small often equals fast, for example.

### Definitions of Priority Items

| | |
|---|---|
| | |
| *Correctness* | The code works correctly. This item might seem superfluous, but experience tells us differently. |
| *Size* | This does not refer to the number of source code lines, but to the total size of compiled code (the .class files). It also includes overhead imposed by non-functional data, e.g., strings used internally in the program. Traditionally, size also includes memory usage. In our case, the client/server network connection is the most important bottleneck; what counts is what goes over the wire. |
| *Speed* | This includes both execution speed (as measured by CPU usage) and perceived responsiveness from the user's point of view. These are not necessarily the same thing. |
| | A guideline is to make the code *fast enough,* but not to waste time making it faster than that. If one needs to sort 5 records, choose bubble sort. If one is sorting a million records, choose Quicksort. |
| | Speed bottlenecks are rarely obvious. Before one decides that an operation or a subsystem needs optimization, try to get hard data on where the real bottleneck is. |
| *Robustness* | Tolerance towards erroneous input and other error conditions. This does not mean that a program or routine should accept garbage, but that is should handle it gracefully. |
| *Safety* | Choose the implementation that one is most likely to develop without any bugs. |
| *Testability* | Easy to test |
| *Maintainability* | Code that is easy to maintain typically has several characteristics: |
| | It is easy to read and understand. |
| | It is well encapsulated. This allows changes (updates or fixes) to be made with some confidence that it won't blow up something else. |
| | Portion of the present description, including comments in the code, is in agreement with the code. |
| *Simplicity* | |
| *Reusability* | This can mean class or function reuse in the same project, or it can mean preparing for reuse on a later project. Designing for reuse typically has an overhead of around 50%, split among additional design time (to find good generalizations), additional portion of the present description requirements and additional testing. |
| | A good compromise is often just to choose a design that does not *preclude* reuse; the best tool for this is known as *encapsulation.* |
| *Portability* | The code is reusable across platforms. Coding for portability typically |
| | entails such things as: |
| | Using a cross-platform library |
| | Using a subset of a language or library that is common and consistent across platforms |
| | Isolating platform dependencies |
| | In the specific case of Java, we need to accommodate differences between |
| | Java VM implementations, differences between library implementations and differences between host GUIs. |
| | Java as a totally portable programming environment is a myth. One consequence is that we must test on a number of platforms-different hardware platforms, different operating systems and different Web browsers. |

### Priority Rankings

These rankings are specific to the Telebank project.

| | | |
|---|---|---|
| | | |
| Correctness | Correctness | Correctness |
| Size | Robustness | Robustness |
| Testability | Safety | Safety |
| Portability | Testability | Speed |
| Robustness | Speed | Testability |
| Safety | Maintainability | Maintainability |
| Maintainability | Simplicity | Simplicity |
| Simplicity | Reusability | Reusability |
| Reusability | Portability | Portability |
| Speed | Size | Size |

### Program Organization

### Module Organization

The term *module* in this context refers to a source file. A source file should contain one public class; it may contain additional non-public classes.
The elements of a module should be in the following order:
Package name
Import section
Class definition(s).
Class header
Constants (final class variables): public, protected, private
Public static inner classes
Protected inner classes, static or otherwise
Private inner classes, static or otherwise
Class variables (private only)
Fields (instance variables) (private only)
Constructors

### Other methods.

When ordering methods, ignore visibility specifiers (public, protected, private) and follow these guidelines instead:
Keep related methods together
When overriding superclass functions, keep them in the same order as in the superclass, and preferably together.
The class should end with the unitTest, getExpectedResult and main methods.

### Module Header

The module header consists of the package name and the import section. In addition, there should be a comment at the top with SourceSafe keywords. With these in place, we can see at a glance what this file is about:

```
 /*
  * $Archive: $
  * $Revision: $
  * $Date: $
  * $Author: $
  */
```

In the import section, list each imported module explicitly.
Example:

| | |
|---|---|
| | |
| IMPORT JAVA. AWT . FRAME; | import java.awt.*; |
| IMPORT JAVA. AWT. GRAPHICS; | import java.awt.event.*; |
| IMPORT JAVA. AWT. EVENT.WINDOWADAPTER; | import Java.applet.*; |
| IMPORT JAVA. AWT. EVENT. WINDOWEVENT; | |
| IMPORT JAVA.APPLET.APPLETCONTEXT; | |

Neither of these conventions is consistently maintainable, so don't put a lot of work into verifying that all listed modules are used. Likewise, don't spend time converting existing modules from one format to the other.

### Code Layout

A good layout strategy should accurately and consistently represent the logical structure of the code, it should make the code readable, and it should be easy to maintain. The rules in this portion of the description are designed to meet those criteria.

### Class Headers

Write class headers on a single line if there is room for it
If not, break the line before extends and implements. Indent succeeding lines.
If the class header is on a single line, put the opening brace at the end of that line.
If the class header needs multiple lines, put the opening brace left aligned on a line by itself. Method Headers
Write method headers on a single line if there is room for it.
If not, break the line immediately after the opening parenthesis. This leaves all the parameters on the same line.
If there still isn't enough room, put each parameter on its own line.
If the method header is on a single line, put the opening brace at the end of that line.
If the method header needs multiple lines, put the opening brace left aligned on a line by itself. Indentation
Indentation is three (3) spaces. Actually, indentation is one tab, which should be set to display as three spaces.
Use tabs for indentation only. Any white space after the indentation level should be actual spaces, so that the formatting may be reasonable no matter how many spaces a tab equals.
White Space in the Code
Whitespacedoes,ingeneral,enhancereadability.
Add one space in the following places:
between operators
after comma in method declarations and invocations
after semicolons in for-loops
after opening parentheses
before closing parentheses
after opening square bracket (index operator)
before closing square bracket
before and after the assignment operator
*No* space in the following places:
Between a method name and the opening parenthesis
Between opening and closing parentheses in a function declaration or invocation with an empty parameter list
Between opening and closing square brackets in an array declaration where the number of elements is not specified
This example illustrates the above rules: 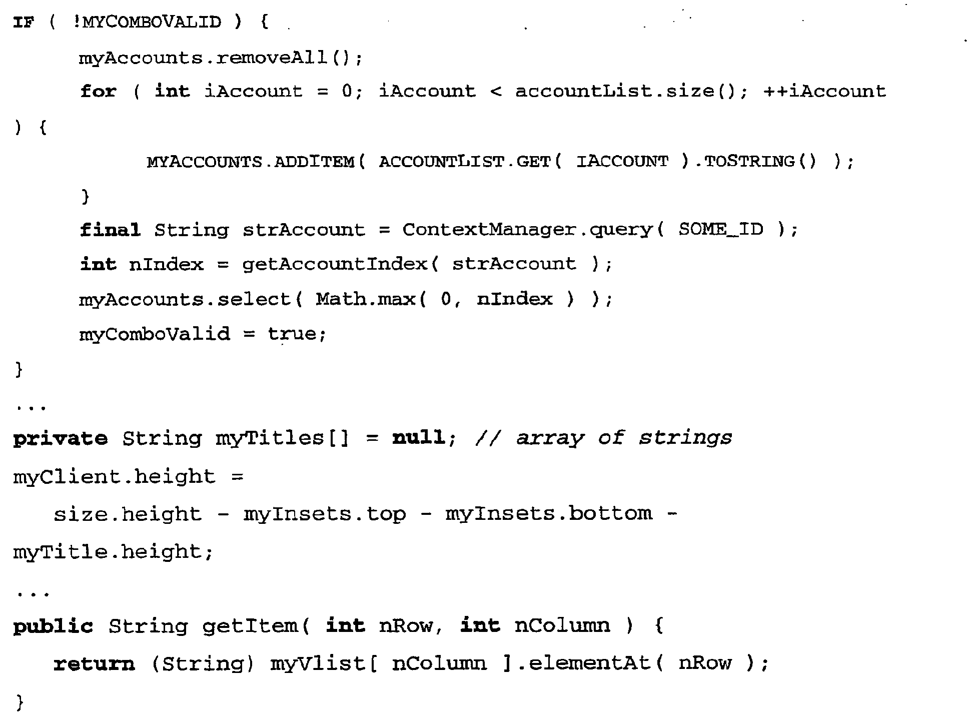 Use blank lines to separate "paragraphs" of related code lines.
Indentation hints for the Visual Studio Editor
Ctrl+Shift+8 toggles visibility of tabs and spaces.
To indent or outdent sections of code, select the code (at least one complete line) and use tab for indent, Shift-Tab for outdent.
To auto-format sections of code, select the code and hit Alt+F8.
Alt+Enter in the source window brings up the source file property dialog, which allows one to set indentation levels on a file-by-file basis. This is useful for viewing sample code, which is often formatted weirdly.
To set the number of spaces displayed per tab, select the Editor tab on the dialog box served up by the Tools, Options command:

### Braces and Line Breaks

*Always* use (curly) braces, even for blocks with only one statement. This removes one common source of bugs and eases maintenance:
Figure **67** illustrates an interface **6700** associated with the ability of inserting or removing statements within a block without worrying about adding or removing braces. One never has a problem matching else clauses to if clauses.

### Example:

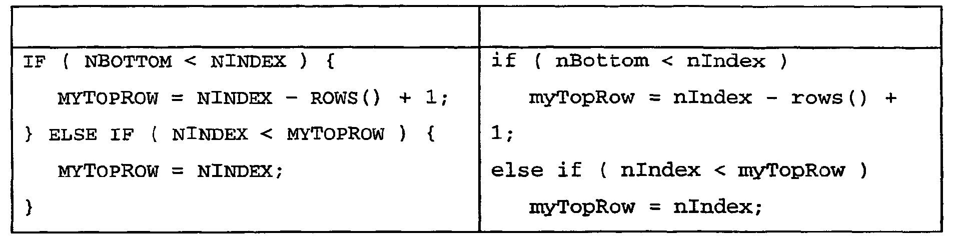

This rule applies to the following constructs:
for, while and do-while loops
if-else statements
try, catch and finally clauses
synchronized blocks.

Note that the opening brace is at the end of the first line, even for class and method definitions. The only exception is if the expression needs to be broken; in that case, readability is best served by putting the opening brace on the next line.
Aligning Assignment Statements
Align the = of related assignment statements. This sets them off as a group and shows clearly that they are related.
Do not align the = of unrelated statements. Such alignment gives an erroneous impression of relatedness.

### Example:

| | |
|---|---|
| | |
| nPanelWidth =90; | NPANELWIDTH = 90; |
| nPanelHeight = 30; | NPANELHEIGHT = 30; |
| | NSELECTEDINDEX = 0; |
| nSelectedIndex = 0; | NLASTINDEX = 12; |
| nLastIndex = 12; | |

### Line Lengths and Line Breaks

One statement per line.
Try to keep line lengths below 80 characters. This rule is not absolute; it is better to have a 90-character line than to break a statement.
If one must break a line, indent the continuation line(s).
If one must break a line, make it obvious by ending the first line with something that needs a continuation:
Break assignments after the assignment operator.
Break arithmetic and logical expressions after an operator.
Break the line to emphasize major sub-expressions.
Break method invocations after the opening parenthesis. If the parameter list still won't fit, break between each parameter or between each logical group of parameters if this seems better.
Break method declarations the same way, and put the opening brace on the next line, unindented.
If one need to break conditional expressions (e.g., in if or while-statements), follow rules 1 and 2 above, and put the opening brace on the next line, unindented.
Using extra variables top hold partial (intermediate) expressions can help one avoid line breaks and at the same time improve readability by making the code self-portion of the present descriptioning. This is a judgement call; the following example goes too far, perhaps, but does at least illustrate the point:

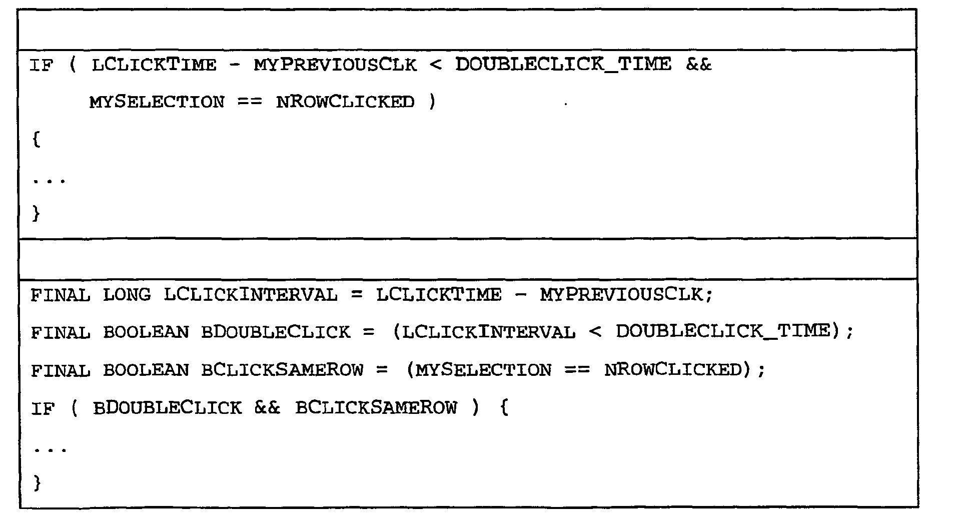

### Switch/case Layout

Align each cases with the switch. Additional indenting of the cases does not contribute measurably to display the logical structure of the program, and leads to excessive indentation. Indent the statements that belong to a switch, one statement to a line.
In the case of large, repetitive lists of cases, it may be better to do a table layout as follows: 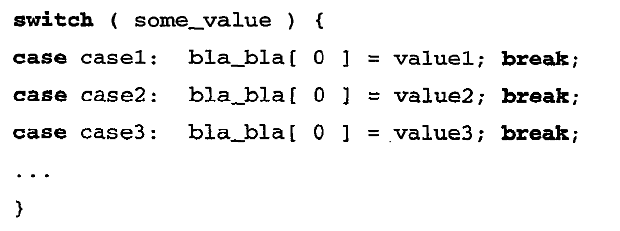 Consider, though: In cases where this looks good, perhaps a totally table-driven solution would be a better solution.

### Anonymous Classes

An anonymous class is a particular form of inner classes; an innovation of Java 1.1. It is a curious enough construct that we supply two examples of how to format it.

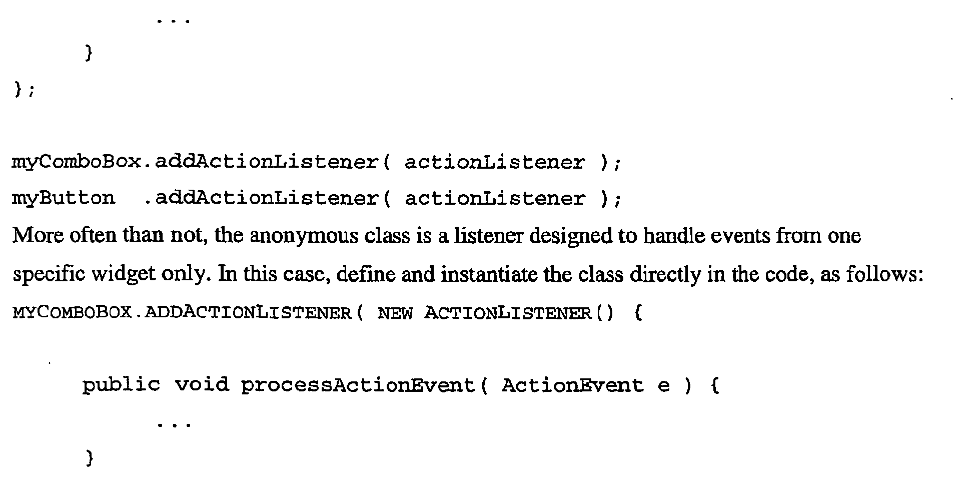

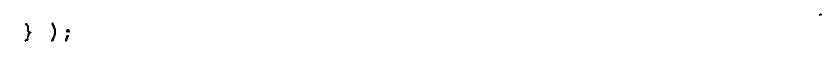

### Naming Conventions

### Package Names

Package names are always in lower case. To ensure global uniqueness, package names are prefixed with no. dnb. tb.

### File Names

Path: The path follows the package name. If a file is part of the package no . dnb. tb. client, and one is using c : \Data\Telebank as your root directory, the path to the file is:
C:\Data\Telebank\no\dnb\tb\client
Note lower-case names of intermediate directories.
The name of the file must be the same as the name of the public class defined in the file (with exactly the same case), with the extension .Java. Thus, the class Kontoutskrift in package no. dnb. tb. client. func resides here:
C:\Data\Telebank\no\dnb\tb\client\func\Kontoutskrift.java

### Classes

Use proper case for all class names, with first character upper case.
Separate multi-word class names using capitalization with no leading underscore.
Architectural classes have English names; functional classes have Norwegian names (?)

### Examples:

class FunctionPanel ...
class Kontoutskrift ...
A Note on Proper Case Identifiers
To create a proper case identifier, write down the identifier as normal words, e.g., "get customer name". Next, capitalize each word except possibly the first, which is only capitalized for classes: "get Customer Name". Finally, concatenate the words into a single word: getCustomerName. Note that compound word usage differs across languages. If the above example were in Norwegian, the name should be **hentKundenavn,** *not* **hentKundeNavn!**

### Methods

Method names are in proper case, with initial lower-case letter. If possible, construct method names that follow the action-object paradigm, i.e., getAccount, printAll. Prefer getSize () to size () ; this is consistent with changes to Java in JDK 1.1.
Method names do *not* use any hungarian prefixes to indicate return type. Return type can often be indicated by an object name in the method name, i.e., getAccountList.
Methods are called in the context of their class. Accordingly, it is not necessary to repeat the class name in method names. If the class customer has a method to retrieve the customer's name, name this method getName rather than getCustomerName. When users of the class invoke this method, they write something like customer. getName (), which is preferable to customer.getCustomerName().

### Fields

A field is a non-static member variable, sometimes called an *instance variable.*
All field names start with the characters "my", followed by a mixed-case identifier. This is standard practice in Java programming, and reminiscent of the C++ convention of prefixing member variables with "m_".
Since the "my" convention is not easily combined with hungarian prefixes, try to make the type obvious in the variable name.

### Examples:

private Dimension mySize;
private Account myAccount;
Class Variables
A class variable is a static member variable.
All class variables start with the characters "the", followed by a mixed-case identifier. Since this convention is not easily combined with hungarian prefixes, try to make the type obvious in the variable name.

### Examples:

private static AccountList theAccountList;

### Local Variables

Local variables use hungarian prefix conventions. The following prefixes are used:

| | | |
|---|---|---|
| | | |
| Str | String | strServer,strTitle |
| N | Integer | nCustomers, nWidth |
| I | Integer used as an index in a for loop | icustomer, i |
| A | Array (put this in front of other prefix) | astrTitles[] |
| Pnl | Panel | pnlMain |
| clr | Color | clrForeground,clrBackground |
| ... | ... | |

Although this table may get additional entries over time, most objects do not have defined prefixes and never may. A reasonable name is often the same as the class name, but with lower-case first character, e.g.:
Account account = getContext() .getCustomer() .getAccount();

### Constants

Constants are "static final" members of classes. Java has adopted the C convention for #defined constants and uses upper-case names.

### Examples:

public static final int DEFAULT_COLOR = Color.black;
private static final String DEFAULT_SERVER = "\\LF3DEV01";
Javadoc comments are *required* for public, protected and package constants.

### Exceptions

Exception names follow class naming conventions, with the additional requirement that the name end in Exception.

### Programming Style

This portion of the description covers layout conventions and coding principles.

### Visibility (Scope)

As a general rule, scope should be as narrow as possible.
All fields and class variables should be private.

```
 If one absolutely needs outside access to such fields, use access methods, e.g.:
 CLASS PERSON {
       private String myName;
 
       public void setName( Sring strName ) {
              MYNAME = STRNAME;
       }
 
       public String getName) {
              RETURN MYNAME;
       }
 
 ...
 
 }
```

Be aware, however, that a proliferation of access methods conflict with the principles of good object-oriented design. Even though access is controlled, the implementation (in particular the data type) is fairly exposed; this creates a coupling between object definition and object use that may be tighter than necessary.

Try to think of objects in terms of their behavior rather than the data fields they contain. In the example above, ask yourself what one would like that Person object to be able to do, and provide methods for that instead.

### Code Granularity (Method Size)

A reasonable line count for a method depends on its complexity. A module that consists of sequential statements can be longer than a method containing complex conditials and loops. If the sequential code is repetitive, such as an index-by-index array initialization, the method may be as long as it takes. (One should, however, think twice about your design. Perhaps there are better ways of doing it?)

A method should preferably do one single thing, and the method name should reflect this accurately. If it does more, ensure that this is reflected in the method name. If this leads to an ugly method name, reconsider the structure of your code. If one had a function named initPanelManagerAndReadAccountList, the code would probably benefit from a split into methods named initPanelManager and readAccountList.

### Variables

Use only one variable declaration per line. This increases readability and eases maintainability:

| | |
|---|---|
| | |
| PRIVATE INT MYWIDTH = 150; | private int myWidth = 150, |
| PRIVATE INT MYHEIGHT = 50; | myHeight = 50; |

All fields and class variables should be private.

### Initialization

All variables, including fields and class variables, should be initialized at the point of declaration if possible. Even though all Java declarations have default initialization values (0, null, false), spell this out explicitly.

Java allows initialization of arrays using the same syntax as C and C++, by enclosing a comma-delimited set of values in braces. A comma after the final value is permissible: use this facility, as it makes for easier maintenance-it is easier to add additional values to or remove values from the end of the list.

Java 1.1 allows *initializer blocks* among the declarations. An initializer block is a section of code enclosed in braces. There are two kinds of initializer blocks: *static* and *instance.*

**Static initializer blocks** are executed the first time a class is instantiated. During static initialization (class initialization), things happen in the following order:
Class initialization of the superclass is performed, unless it has been done earlier.
Static variables are initialized and static initializer blocks are executed. This happens in the order they are listed, from top to bottom. Instance variables, instance initializer blocks and methods don't figure into this.

Note that static and instance initializer blocks are allowed in Java 1.1. Static initializer blocks are executed in order when the class is first instantiated; instance initializer blocks are executed in order *after* the superclass constructor runs, but *before* the class constructor runs.

**Instance initializer blocks** are executed whenever a class is instantiated. During object initialization (instance initialization), things happen in the following order:
If this is the first time the class is instantiated, all the class (static) initialization takes place.
We enter a constructor. If we have not specified a constructor, a default constructor with no arguments is supplied automatically by the compiler.

The superclass constructor is called. If your constructor does not explicitly invoke a superclass constructor, the default (argument-less) superclass constructor is called anyway.

All instance variables are initialized and instance initializer blocks are executed. This happens in the order they are listed, from top to bottom. Class variables, class initializer blocks and methods don't figure into this.

Use initializer blocks to perform any initialization that can't be performed by direct variable initialization; put each initializer block immediately following the variable in question. In the examples below, note that the array can be initialized without using an initializer block, while the vector object requires one because of the calls to the addElement method.

### Examples:

```
 private Vector myListofSomething = new Vector();
 {// Instance initializer block
   myListofSomething.addElement( someObject );
   myListofSomething.addElement(anotherObject );
 }
 
 private static int[] anMultipliers = {
      5, 4, 3, 2, 7, 6, 5, 4, 3, 2,
 };
 
 private static MyClass theMyClass = new MyClass();
 static { // Static initializer block
      theMyClass.setValue( someValue );
 }
```

### Variable Usage

Always use a variable for a single purpose. At times it is tempting to reuse an existing variable; avoid this temptation:

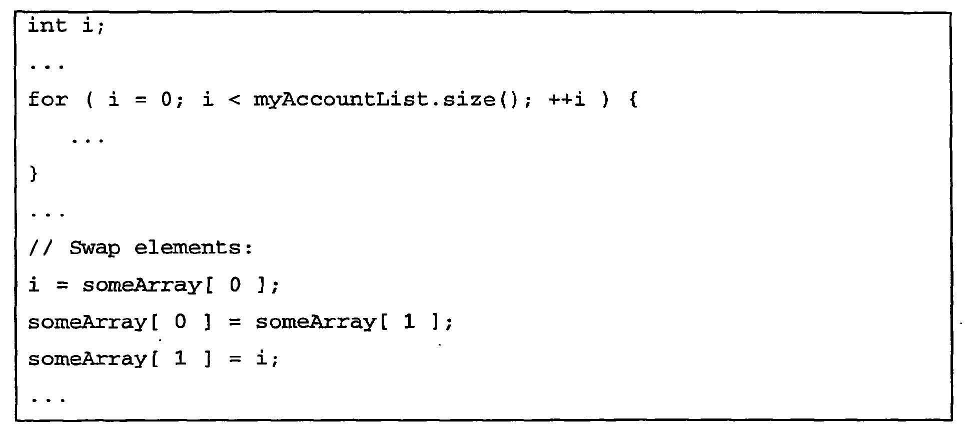

The two uses of i above have nothing to do with one another. Creating unique variables for each purpose makes your code more readable.

### Straight-line Code

Straight-line code divides into two categories:

### A sequence of statements that must be in a specific order

In this case, there are dependencies between statements; one statement must be executed before another for the program logic to work correctly. Here are a few simple guidelines:
Organize the code so that the dependencies are obvious.
Name methods so that dependencies are obvious at their point of call.
Use method parameters or return values to make dependencies obvious.
Portion of the present description unclear dependencies.

### A sequence of statements whose order doesn't matter

In this case, the program may work correctly no matter what the order of statements. Organize the statements so that readers need not skip around to find needed information:
Keep related statements together
Localize references to variables, i.e., declare and initialize variables as close as possible to where they are used.

### Conditionals

Complex conditions can be hard to read and understand. One way to alleviate this is by using extra boolean variables. In the first fragment below, the meaning of the test is not obvious; in the second, it is crystal clear:

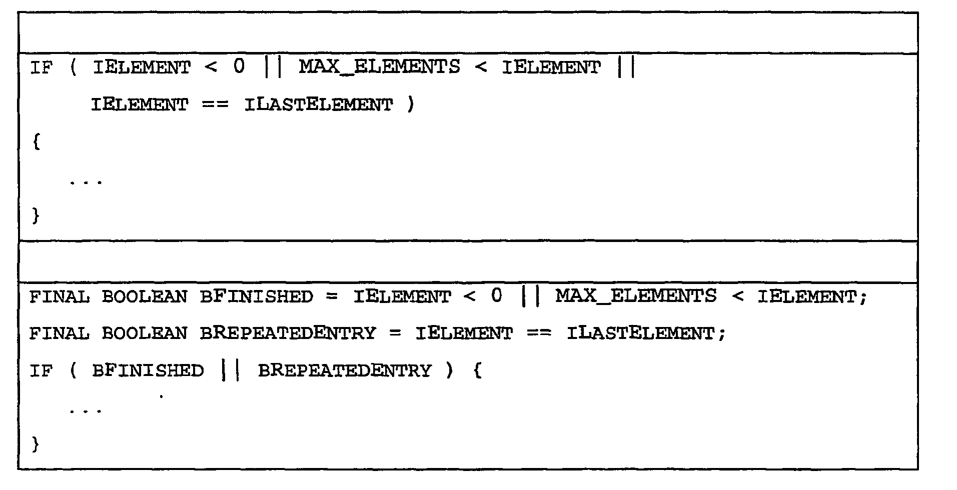

This approach both simplifies and portion of the present descriptions complex expressions, making them easier to program without errors and easier to maintain.

Never use > or >= in comparisons. Instead, switch the operators around and use < or <=. In this way the smaller number is always on the left-hand side, a practice that has been shown to be more readable when applied consistently.

If in doubt about operator precedence, don't look it up; use parentheses instead. They may not be needed, but they cost nothing, and save code readers from looking up the same thing.

If one codes a chain of if-then statements, code the most common cases first.

Strive to minimize the number of branches in your code. Whenever one finds himself or herself dealing with a special case, take a moment to consider if it is possible to handle the problem in a more general fashion. Linear code is far easier to test.

Make conditional blocks of code short enough to view all at once. Around 30 lines is enough.

Limit nesting to three levels.

Compare boolean values to true or false *implicitly,* not *explicitly:*

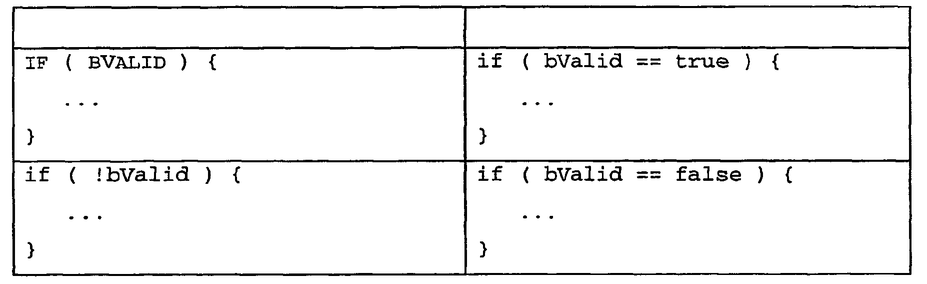

### Loops

Prefer a for loop whenever possible. The advantages of the for loop is that it collects the loop control in a single place, and that it allows one to declare a loop control variable that is not accessible outside the loop. Example:

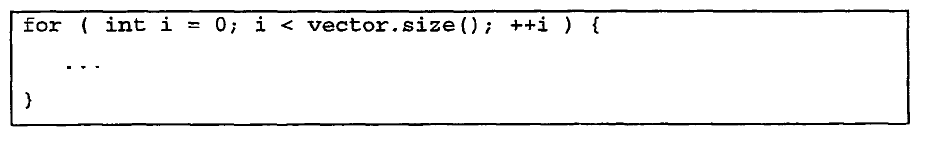

Never modify the loop control variable inside the for loop. If this becomes necessary, use a while loop instead. Consider the example above: If the purpose of the loop were to delete selected items from the vector, a for loop would be inappropriate since one wouldn't increment the loop control variable consistently:

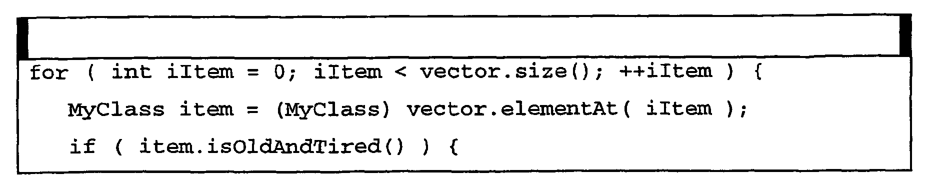

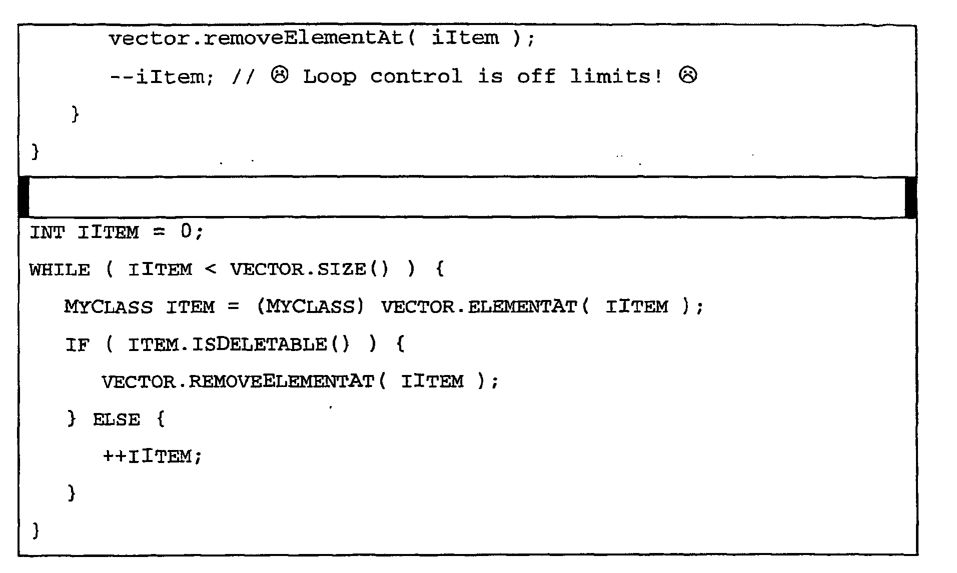

Prefer loops that test exit conditions at the top or the bottom. If this cannot be easily accomplished, rewrite the loop as a while ( true) 'infinite' loop with a test in the middle.
If possible, use only a single break statement to exit the loop.

If possible, make loops short enough to view all at once. This is especially important if the loop body is complex. If the loop code grows beyond about 30 lines, consider restructuring the code.

Limit nesting to three levels.

### Switches

Never let flow control "fall through" from one case label to the next by omitting the break statement. If you feel an urge to do this because of common code, consider factoring out the common code in a new helper method.

### Exceptions

Type Conversions
Notes on Specific Keywords and Constructs
final

The final keyword is a relative of the C++ keyword const (though not the same). Apply it to classes, methods and all kinds of variables:
A final class may not be subclassed.
A final method may not be overridden.
A final variable may never be changed.
Using final on a class or method may have an optimization effect as well. The compiler may be able to perform inlining or compile-time linking instead of dynamic linking at run-time. For this reason, **apply final to all classes and methods that are not intended to be subclassed or overridden.** (This is not to say that all non-final classes or methods *are* subclassed or overridden.)
Likewise, all variables (including function parameters) that *can* be final *should* be final. In the case of constants, this may allow inlining by the compiler, and it is in any case an **excellent portion of the present description tool**.
return
A method that returns a value should have a single return statement at the end of the method. If compliance with rule 1 makes your code needlessly complex put your single return statement elsewhere.
If compliance with rule 2 makes your code needlessly complex use multiple return statements. One is, in other words, free to do as one likes. The overall goal is readability.
If one breaks rule 1, make sure that:
the structure of your method is obvious, and that
the return statements are clearly visible, perhaps by setting them off with a blank line above and below, or an obscene end-line comment.
If one does feel an urge to break these rules, take a minute to consider if an alternative design might be possible, perhaps by offloading some of the methods work on helper methods.
transient
This keyword is applied to data elements that should not be serialized. Consider the customer class as an example: it has a private member of type Thread that is used for background downloading of the customer's account list. A thread is not serializable, so the Thread member is declared transient.

### Constructors

There should normally be only one "main" constructor in a class. Additional convenience constructors may be defined, but they should be implemented in terms of the main constructor. The point of this is to avoid duplicate code:

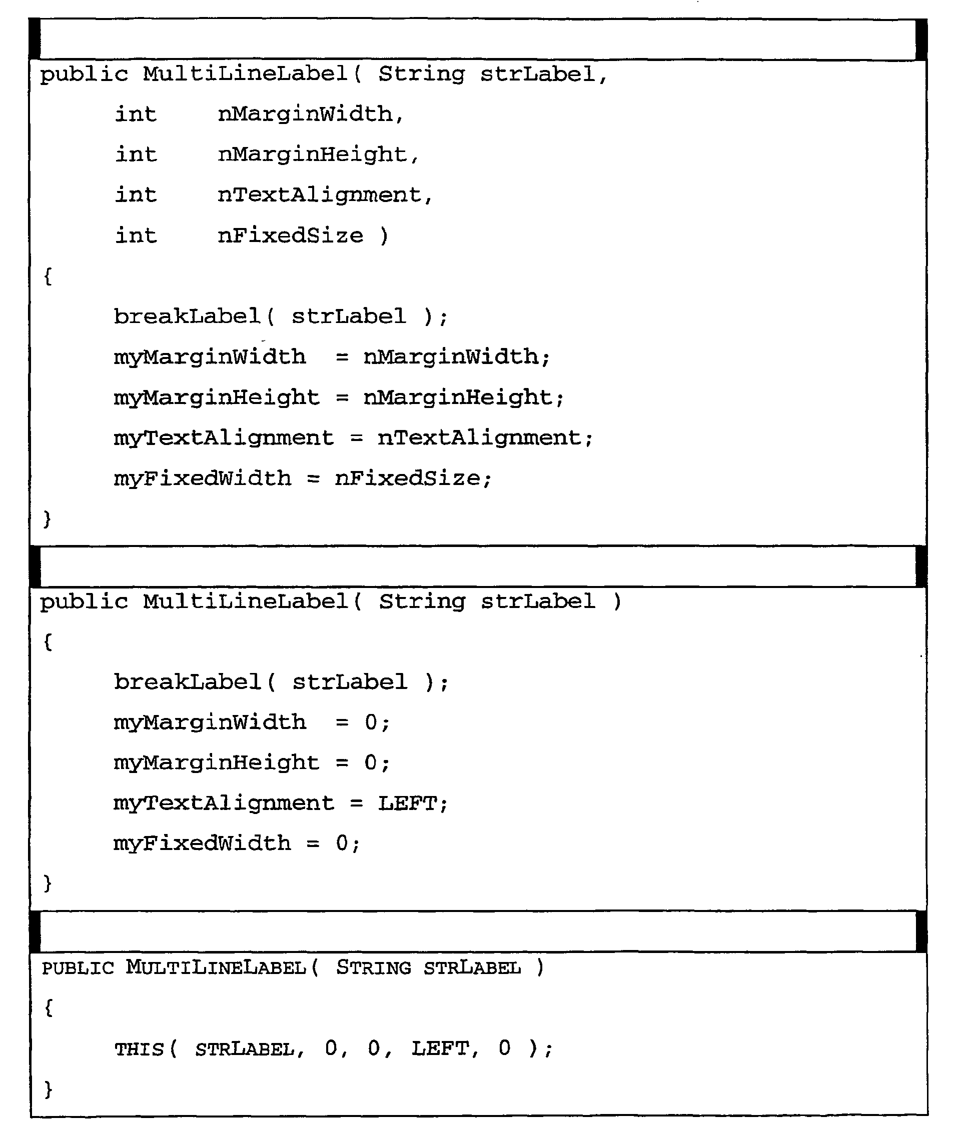

### Threads

Debugging and profiling can be made significantly more effective by naming all threads explicitly. Therefore, make sure always to use the Thread constructors that take a name parameter, e.g. use Thread (String name) instead of Thread ( ).

### Portion of the present description (Comments)

### JavaDoc

Use javadoc comments for all classes, methods and constants.
As a general rule, member variables (fields) are private, and don't need javadoc comments. If public or protected fields are required for some particular reason, these must be javaportion of the present descriptioned.
Macros to insert skeleton comment blocks may be provided.

### Class Headers

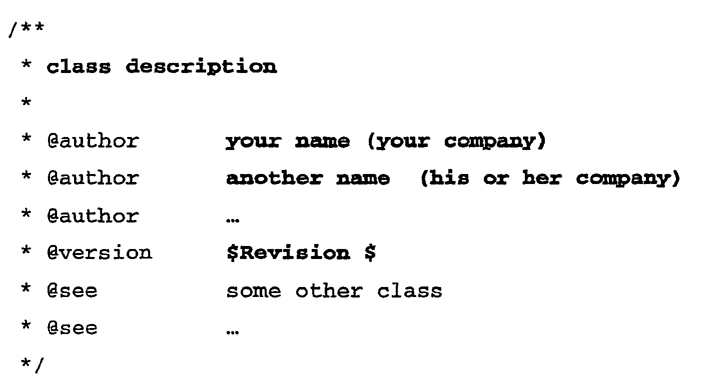

Use a short form of company name, such as AC or DnB.

### Method Headers

```
 /**
  * Validates user id and password; returns a Context structure
  * This is a synchronous service.
  *
  * @param    strUserId    User id
  * @param    strPassword    Password
  * @return    A Context structure if logon succeeds, else null
  * @see    no.dnb.tb.types.Context
  * @see    no.dnb.tb.interfaces.Isession
  * @exception    java.rmi.RemoteException if the connection fails
  */
 public Context getContext(
       String strUserId,
       String strPassword ) throws java.rmi.RemoteException
 {
 ...
 }
```

Note that the @exception tag **requires** an explanation after the exception name!

### SourceSafe Fields

The SourceSafe $Revision $ keyword is used in the @version field.

### Comments in the Code

Use / /-style comments rather than / * ... * / comments in the code. This allows one to comment out large blocks of code using / * ... * / . (If comments nested this would not be a problem. They don't, however.)

Add a blank line before any stand-alone comment line. If the comment is extensive or important, add a blank line below as well.

Indent the comment with its corresponding code.

Comments should clarify the intent of the code, not repeat the code in a more verbose way. Aim for a higher level of abstraction than the code itself. Focus on the why rather than the how; the *how* should be obvious from the code.

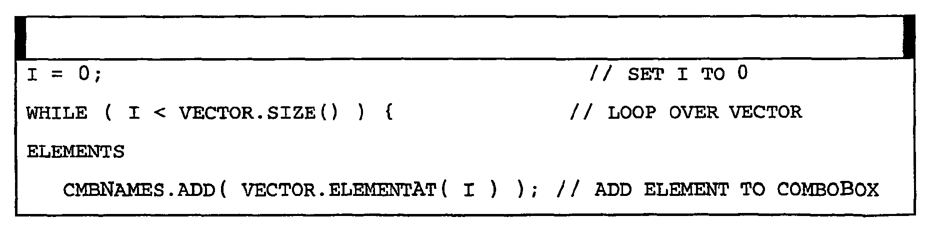

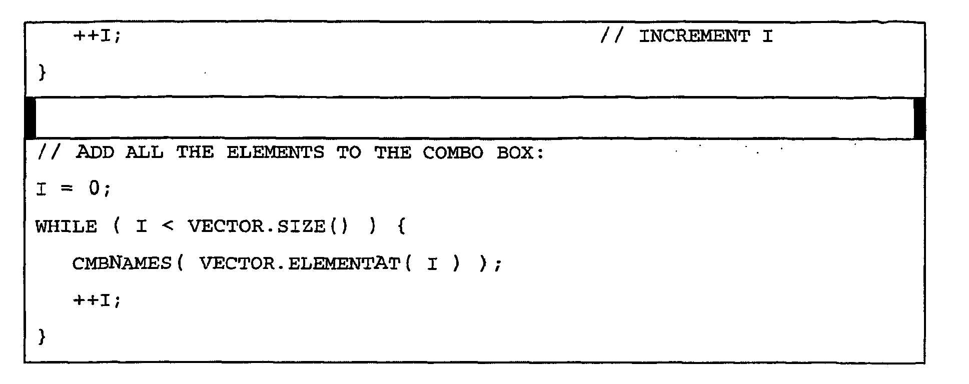

If the code is not obvious, your first course of action should be to restructure the code to make it obvious. If this is not possible, portion of the present description the how, by all means. End-line comments should apply to a single line only. Comments that apply to more than one line should be above the code.

### Working comments:

Insert comments containing the words TODO as a reminder to yourself or others that something remains to be done, or that there is an unresolved issue.

### Error Handling

Java's method of choice for handling error conditions is *exception handling.* Exception handling allows one to keep the sequential flow of the functional code separate from the error handling.
This leads to less complex code.

### Error Handling on the Server

### Signaling Errors to the Client

Whenever an error occurs in a remote method invocation, this may normally be signaled to the client by throwing an exception. Technical errors are always signaled by an exception; functional errors may be returned in the form of objects if that is more convenient.

### Logging

Logging to the NT event log is done through the ErrorLog class.

### Error Handling on the Client

### Logging

The context manager allows logging from the client to the server. This is done through the ContextManager.safeLog* family of methods.

### Reporting Errors

Error reporting on the client is done by publishing an ERROR, e.g.:

```
 try {
    ...something...
 }
 catch ( SomeException e ) {
 ...
    ContextManager.publish( ContextManager.ERROR, e );
 ...
 }
```

The context manager may take care of informing the user, if necessary; a special message panel may be created for this purpose. Application code may not normally have to deal directly with error reporting.

When an error occurs on the server (during a remote method invocation), the server throws an exception. In the case of data downloads (Kontoutskrift, etc.) this is handled uniformly in the download threads. In the case of truly synchronous calls, the functional code must handle the exception as shown in the example above.

### Debugging and Testing

This portion of the description describes how one can code to ease debugging and testing. The actual processes of debugging and testing are described elsewhere.

### Debugging

Pure debug code can be enclosed in special comment delimiters that may be stripped off in a release build. A debug block starts with //{{DEBUG and ends with / /}} DEBUG, the only difference being direction of the braces.
The class no. dnb. arch.util. Debug contains methods useful for debugging; in particular, it holds trace and assert methods.

### Unit Testing

### The main Method

Java allows any class to define a main function, even though the class may not be intended to be an application's entry point. This feature can be used for unit testing of classes. For example, the AccountNumber class might provide the following main function to exercise the class:

```
 //{{UNITTEST
 public static void main( String[] args ) {
 AccountNumber account = new AccountNumber( "42600505380" );
 System.out.println( "account = \" " + account +
    "\"; isValid = " + account.isValid() );
 account = new AccountNumber( "42600505381");
 System. out.println ( "account=\" " + account +
    "\"; isValid = " + account.isValid() );
 }
 //}}UNITTEST
```

Note that the above method may never be called except in explicit unit testing. It does, however, bloat the code needlessly. To enable us to strip it out for a release build, pure unit test code should be enclosed in special comment delimiters. A unit test block starts with / / {{UNITTEST and ends with / /} }UNITTEST, the only difference being direction of the braces.

### Specific Unit Testing Methods

In some cases, unit testing can be completely or partially automated. The requirement is that the test produces text, and that this text can be reliably compared to another text, the expected result.

To build automated unit testing into a class, define two static methods as follows:
public static void unitTest( PrintWriter ps );

This method exercises the class, printing its output on ps.
public static String getExpectedResult();

This method should return a (hard-coded!) string.
The automated testing loops through all classes and compares the output from the unitTest method with the string returned from getExpectedResult. This setup is intended to simplify regression testing. There are limitations: this method cannot test interaction with widgets, for example, nor can it handle dynamic results. (An output such as today's date can't be hard-coded into getExpectedResults. Using method invocations in getExpectedResults would defeat the whole purpose of the test, as we might well be comparing garbage to identical garbage.)

The following example shows how this framework might be applied to the Account class. Note that the main function in this case merely invokes the unitTest function.

```
 public class Account ... {
       //{{UNITTEST
       public static void unitTest( PrintWriter ps ) {
            try {
                 Account account =
                      new Account( "42600505380", "Konrad Kunde",
 CHECKING);
                 ps.println( "account = \" " + account + " \" " );
                 // Next statement trows exception due to illegal
 account #:
                 account =
                       new Account( "42600505381", "John Doe", CHECKING
 );
            }
            catch ( java.text.ParseException e) {
                 ps.println (e);
            }
       }
       public static String getExpectedResult() {
             return
                  "account = \"4260.05.05380 (LØNN) Konrad Kunde\"\n" +
                  "java.text.ParseException: Illegal account number\n";
       }
       public static void main( String args[] ) {
             Debug.trace( Debug.unitTest( "no.dnb.tb.types.Account" ) );
       }
       //}}UNITTEST
 }
```

In addition to the possibilities for automating regression testing, this approach has the benefit that the code, the test conditions and the expected results are close together and easy to keep synchronized.

### Further Reading

***Core Java,* Gary Cornell/Cay S. Horstmann [The SunSoft Press 1996]**
Covers Java 1.02. Good introduction to Java.
***Java in a Nutshell,* David Flanagan [O'Reilly 1997]**
Covers Java 1.1; includes examples. Strong coverage of inner classes.
***Writing Solid Code,* Steve Maguire [Microsoft Press 1993]**
Debugging techniques and attitudes.
***Code Complete,* Steve McConnel [Microsoft Press 1993]**
Detailed coverage of software construction techniques.
*Design Patterns: Elements of Reusable Object-Oriented Software,*
**Gamma, Helm, Johnson, Vlissides [Addison-Wesley 1995]**
Practical guide to object-oriented design and programming.

### PROJECT STANDARDS

### Application Development Standards and Procedures

The ReTA Application Development Standards and Procedures portion of the description consists of the standards, rules, and guidelines to be followed during the application development process for programming and portion of the present descriptioning programs. This portion of the present description is not meant to be a training manual. Rather, it is a reference for the standards set by the development architecture.

Use of Application Development Standards and Procedures to provide a consistent way of designing, portion of the present descriptioning, programming, etc. over the different areas of work, such as user interface design, and data design.

### Build Process

### Editing Source Code

To enter and edit source code for a ReTA Application, the standard tool is Microsoft Visual J++ 6.0. This Development Environment allows the user to edit and create Java source files, IDL source files, and Active Server Pages.

Editing Java source files are done by opening the Java project which contains the desired source file to be edited. Locate the Java source file in the project and enter the necessary changes. Once changes have been made the file must be saved.

Editing IDL (Interface Definition Language) files are opened up individually in the Microsoft Visual Studio J++ 6.0 Development Environment. The file is opened and changes are made, once changes are made the file is saved.

Editing ASP (Active Server Pages) files are done by opening up the file in Microsoft Visual Studio J++ 6.0 Development Environment. The file is opened and changes are made, once changes are made the file is saved.

### Compiling VJ++ Projects/IDL

To compile the Microsoft Visual J++.Projects and build COM components in ReTA there are steps that must be followed.

Generate the Type Libraries.
Use the midl.exe command line tool is used to generate the type libraries.

Generate the stubs from the Type Libraries.
Use the javatlb.exe to generate the stubs from the .tlb files.
javatlb /d. /p Activity /p:b- AFActivity.tlb

Use the javaguid.exe to generate the guid's for the stubs.
javaguid CodesTable\CAFCTRetrieval.class CodesTable\IAFCTRetrieval.class

Compile the Microsoft Visual J++ Project.

Figure **68** shows a Visual J++ Build Environment **6800.** To begin a build, the Build button **6802** is selected and Build **6804** is selected from the corresponding menu.

### Generate the DLL's.

Use the exegen.exe command line utility.

### Source Code Debugging

ReTA developers have the ability to debug the Architecture files, Business Objects, Application files, and Active Server Pages.

### Debugging Architecture or Application files

To debug Architecture or Application Java source code, the developer may open up the Microsoft Visual J ++ 6.0 project that contains that Java source file. Select the Debug menu and then the processes option, set a breakpoint where the code is suspect and attach to the "MTX" process. For help on how to attach to a process refer to the Microsoft Visual J++ help.

Figure **69** shows an interface **6900** for attaching to the MTS Process for debugging. Processes **6902** and their corresponding titles **6904** are shown.

### Debugging Active Server Pages

To debug an Active Server Page (assuming the ASP page is written in VBScript) the developer may code in the key word "stop" where the developer would like to start the debugging. The developer can then step into the ASP code, this applies to the global.asa file as well. For more information regarding debugging Active Server Pages, refer to the Visual Studio online help.

Figure **70** shows an interface **7000** for debugging an Active Server Page (example global.asa file **7002**).

### Unit Testing Business Objects

For a ReTA developer to perform a unit test on a Business Object, the developer may code a **"main"** method on the Java source file. This may allow the developer to call the various methods of the Business Object and inspect the results to ensure the object is working properly. The developer may invoke the main method from the command line using the Java command line utility "Jview.exe."

```
 public static void main(String[] args)
 {
 if (args[0].equals("1")) {
       JUnitOfWork connection=null;
       try
       {
              //Create the Domain
              JDomain myDomain=new
 JDomain(AFConstants.getAFProsisInterfaceDSNLabeIQ,AFPersistableObj.getApplicationDatab
 ase UsemameO,AFPersistableObj .getApplicationDatabasePasswordO);
 
              //Create a connection
              connection = (JUnitOfWork)myDomain.newConnection();
 
              //create an extent for the class we wish to persist.
              JExtent extent = (JExtent)new JExtent("BObjects.RetaCustomer");
              System.out.println (" Domain and Extent Created Success ");
 
              // Create our Customer Object
              System.out.println (" Create Customer");
              RetaCustomer theObj=new RetaCustomer();
              theObj.setSsn(123456789);
              theObj.setName("Esch Raphael");
              the Obj.setLevel("Partner");
              theObj.setAge(99);
              System.out.println (" Going to update record ");
              extent.update(theObj,connection);
 
              System.out.println (" Done OK. ");
              connection.close();
```

### Code Generation using Rational Rose

The Rational Rose modeling tool allows developers to define and communicate software architecture, resulting in:
Accelerated development, by improved communication among various team members Improved quality, by mapping business processes to software architecture, and
Increased visibility and predictability, by making critical design decisions explicit visually.

Rational Rose has the ability to generate Java Class files and within these files javadoc comments are generated along with rose comments.

Figure **71** illustrates an exemplary frame **7100** of Rose generated java file and javadoc comments **7102.**

### STANDARDS

### Naming Standards

### Folder/Directory

Internet Information Server WWWRoot Folder
The naming standard for ReTA web-based applications.
C:\InetPub\wwwroot\ReTAApplication\XXXName
In IIS 4.0 a virtual directory is defined to point to the preceding path. The properties on the directory allow execute and basic authentication permissions. For each separate application there may be a global.asa file which may reside in the "root" folder of the application.

### Files

Naming conventions used and recommended.

| **File Type** | **Naming Standard** | **Comments** |
|---|---|---|
| Business Object Java File | **BO**<business object name>.**java** | All business objects may start with a "BO" prefixed to their name. |
| Business Object Class Factory Java File | **BO**<business object name>Factory.**java** | All class factories may be prefixed with "BO" and suffixed with "Factory". |
| Activity Java File | **AXX**<activity name>.**java** | All activities may be prefixed with an "A" then a two-character initial for the activity, followed by the full name of the activity. |
| Sub-Activity Java File | **SAXX**<sub-activity name>.**java** | All sub-activities may be prefixed with SA, and then a two-character name initial that denotes which activity it belongs to ("XX"), followed by the sub-activity full name. |
| Business Object IDL File | **BO**<business object name>.**idl** | All business objects may start with a "BO" prefixed to their name |
| Activity IDL File | **AXX**<activity name>.**idl** | All activities may be prefixed with an "A" then a two-character initial for the activity, followed by the full name of the activity. |
| Sub-Activity mL File | **SAXX**<sub-activity name>.**java** | All sub-activities may be prefixed with SA, and then a two-character |
| | | name initial that denotes which activity it belongs to ("XX"), followed by the sub-activity full name. |
| Active Server Page File - Activity Page | < xxxname>index.asp | The Active Server Page may be a single mixed-case meaningful word that reflects the activity the ASP page belongs to suffixed with "index". Therefore the activity page for Customer would look like "CustomerIndex. asp". |
| Active Server Page File - SubActivity Page | <subactivityname>.asp | The Active Server Page may be a single mixed-case meaningful word that reflects the SubActivity the page performs. Therefore a SubActivity that reviews all customers in the "Customer" Activity would look like "ReviewAllCustomers.as P" |
| Image Files | <activityInitial>name jpg or <activityInitial>name gif | Images may be contained within an "images" directory for each application. For example an images directory for the "Billing" application would exist in the file system as "Billing/images". All images may reside in this directory for that application. Therefore an image that belongs to the "CustomerLookup" activity in the "Billing" application would be named "CLWarning_icon.jpg". |

Application Files
Business Object
BORetaCustomer.java OR BORetaCustomer.idl
Business Object Class Factory
BOCustomerLookupFactory.java
*Activity*

ACLCustomerLookup.java OR ACLCustomerLookup.idl

### Sub-Activity

SACLCustDetailCommit.java OR SACLCustDetailCommit.idl
Architecture Files

| **File Type** | **Naming Standard** | **Comments** |
|---|---|---|
| Architecture Java Files | **AFXX**<Filename>**.java** | All java architecture files may be prefixed with "Arch", then two letter initial that identifies the package it belongs to. For example an architecture file that is from the Session package would be named "**AFSE**filename.**java**". |
| Architecture IDL files | **IAFXX**filename.**idl** | Interfaces for architecture components that do not include any "coclass" statements are prefixed with an "I". All java packages may have a corresponding IDL file. For example EventHandler may have an IDL with this name, within this IDL may be all the associated coclass's that make up the package. |
| | **AFXX**filename.**idl** | |

### Proposed Convention

Interfaces for architecture components that do not include any "coclass" statements are prefixed with an "I".
IAFSEEventListener.idl

All architecture components may use the component name as the filename for the IDL. For example, if the component name is AFSESystemPreferences the IDL filename may be:

### AFSESystemPreferences. idl

All Java packages may have a corresponding IDL file. For example EventHandler may have an
IDL with this name, within this IDL may be all the associated coclass's that make up the package.
EventHandler.idl - <EventHandler - name of java package >

Example of - coclasses defined within "EventHandler.idl"

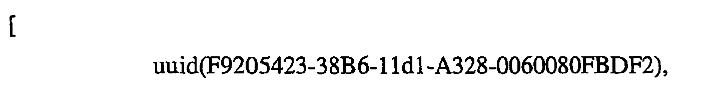

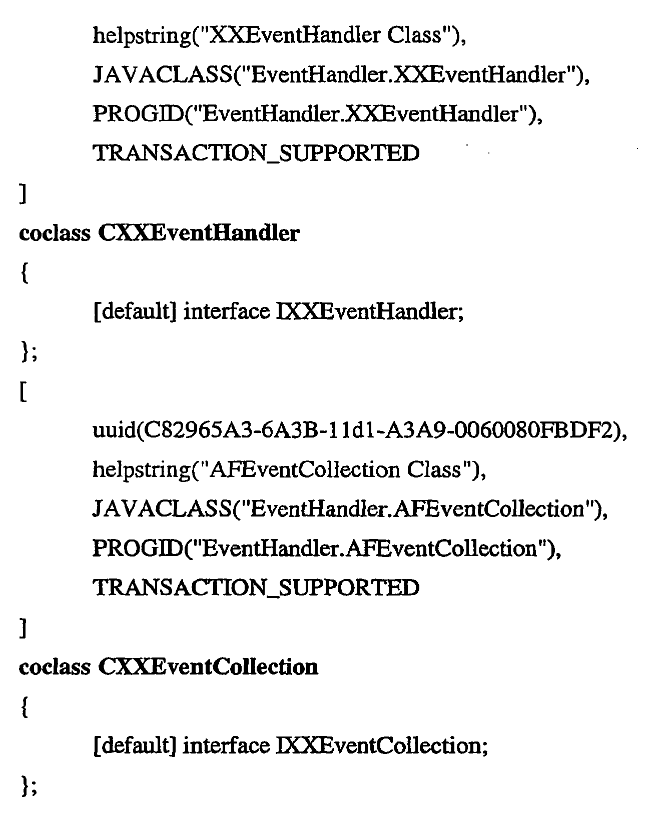

### Version Control Process

### Coding Standards

### Active Server Pages

### Delimiters

ASP delimiters (<%'s and %>'s) are placed in the very left hand margin, not in the middle of lines (unless 1. One uses the "<%= variable %>" format or unless 2. This way, all the code can be included on one line, in which case one still puts the "<%"on the left margin). This improved code readability and made it easier to determine where ASP code blocks began and HTML ended, and vice versa.

### Option Explicit

If using VBScript within the Active Server Page, the keywords "Option Explicit" should appear at the beginning of every script block. Enabling Option Explicit may cause the scripting engine to fault when it encounters an undeclared variable (a variable is declared with the Dim statement). VBScript is not a compiled language, and the runtime interpreter does very little to catch your programming errors. Therefore using Option Explicit should be absolutely mandatory.

### Variable Declaration

If using VBScript within the Active Server Page, put multiple Dims on a single line for faster execution (verified by Microsoft)
i.e. do this:
Dim a, b, c
...instead of this:
Dim a
Dim b
Dime

### Error Handling

Currently, it is required to invoke the **EventHandler.process** method passing in the ReTA **EventCollection** after every application Activity or architecture Session call. In the event that an error did occur during the prior application call, the **EventHandler** may process the error information and issue a HTTP Redirect to direct the client browser to the error page.

### Local Functions

Where Active Server Functions are embedded within a page they should be placed at the start of the page after the standard HTML header. Functions themselves should be written to the standard for the language in which they are written, VB Script or JavaScript within <% %> quotes.

### ASP Architecture Header

On any Active Server Page using the ReTA Architecuture there are some necessary statements needed at the beginning of each ASP page. Each page must include a "#Include" statement. This may bring in the architecture header file, which contains common variable definitions and architecture initialization statements.

To include the header file, add the following statement at the top of the Active Server Page.

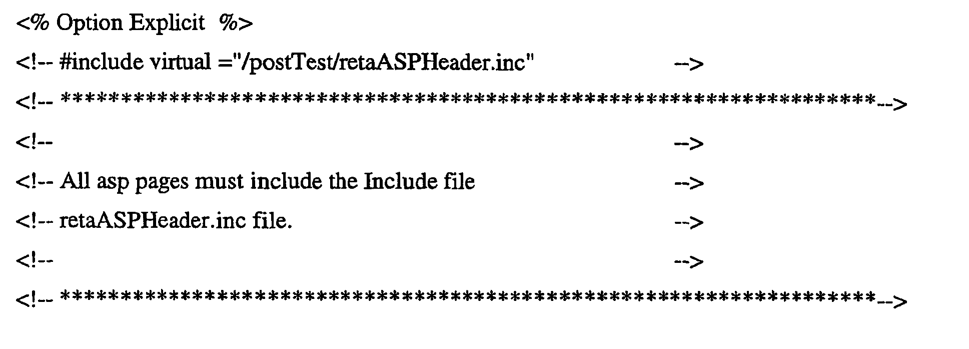

### Variable Naming Conventions

| | |
|---|---|
| g_Name | Any global variable (declared outside of a Sub or Function) |
| s_Name | a variable referencing a Session Variable |
| a_Name | a variable referencing an Application Variable |
| f_Name | a variable containing information from the Form collection |
| SName | Any string of characters |
| Iname | Any number |
| BName | a Boolean value of TRUE or FALSE |
| OName | an object |
| CoName | a collection of objects |
| XNameArray | An array, where 'x' may be's' for string, 'b' for Boolean, etc. |

### Control Naming Conventions

| | |
|---|---|
| BtnName | Button |
| TxtName | Text box or area |
| OptName | Option button (aka radio button) |
| ChkName | Check box |
| SelName | Combo box/drop down/SELECT control |

### Create Server Side Variable Sparingly

Developers should ensure that variables declared in the Active Server Page are reused if at all possible to try and reduce the memory demands on the web server. An example would be the use of an 'err' variable to capture the return code from all MTS component calls.

### Comments

While the use of comments within an Active Server Page are useful for describing the logical flow of the application, overuse should be avoided as comments are evaluated during execution and can hinder overall performance. Comments should be used sparingly and only to describe code that is difficult to understand or follow otherwise.

### HTML

HTML guidelines are necessary so each HTML programmer on the project can share in a common effort to establish best practice across the whole of the project. By moving beyond the HTML 2.0 Specification, the application can support Java, frames, and tables, among other added features.

File names may be composed of a single lower-case meaningful word that reflects the file's contents (i.e. financial.htm). Since different platforms handle capitalization differently, we may avoid capital letters to avoid any possible conflicts. All file names should end with ".htm". The ".html" ending leads to problems when porting to a machine that only recognizes three character file identifiers. Most importantly, files should be saved within the appropriate folder upon creation (i.e. financial/financial.htm). Names should easily convey the functionality or dialog that it belongs to.

### Page Title

It is crucial that users recognize that they are on a ReTA page, especially if they have accessed the site via a search engine (in this case, they would not have the "natural or the normal entry page" introduction to the site). The user would need to access the welcome page to the application. The title of the page should reflect the application name "/" activity name.

### Data Validation Header File

Every static HTML page or every top frame page must include the ReTA Data Validation JavaScript file if they are going to create Form elements that utilize the UI Framework client-side validation functions. Adding the following code after the <HEAD> tag may include this file and bring it down to the browser level. Note that this only needs to done once in the event of a HTML Frame based application.
<Script Src = "/ReTAScripts/retaDataValidation.js" Type = "Text/JavaScript">

### Image File Names

Image file names may be composed of a single lower-case word that consists of a two letter initial that stands for the activity they belong to (i.e. clwaming_icon.gif). Since different platforms handle capitalization differently, we may avoid capital letters to avoid any possible conflicts. Most importantly, files should be saved within the appropriate folder upon creation (i.e. financial/images/txdollarsign.gif).

### Image ALT Tag

Always use the ALT tag with images, in case the site is accessed by a browser with limited support for browsers (or a user who stops the page download before it is complete).
<IMG SRC = "/App/Images/imgStart.gif' ALT = "[ReTA Start Application]">

### META Tag Name

The <META> tag provides a way to store information about the portion of the present description that is not available elsewhere in the portion of the present description. For example, the META tag can contain catalog, author, or index information that various search engines can use.
This example illustrates a portion of the present description that is indexed under the terms "ReTA", the activity of the page is "ACLCustomerLookup", and the subactivity is " SAReviewAllCustomers ".
<HEAD>
<META NAME="keywords" CONTENT="ReTA ACLCustomerLookup
SAReviewAllCustomers">
</HEAD>

### Alternate text for images

Some Web browsers cannot display images and some Web users may not want to use image loading even if their software can display images because they are have a slow connection. For these browsers and users, the ALT attribute specifies the text to be displayed instead of the image. For example, <IMG SRC="aclogo.gif" ALT="Andersen Consulting logo">. If a Web browser cannot not display aclogo.gif or a Web user wishes not to view the logo, the text "Company logo" may be displayed to screen instead.

### Comments

While the use of comments within an HTML portion of the present description are useful for describing the logical flow of the application, overuse should be avoided as comments are evaluated during execution and can hinder overall performance. Comments should be sparingly used and only to describe code that is difficult to understand or follow otherwise.
Comments for HTML code should conform to the following guidelines:
Introduce code with the following comments:

| | |
|---|---|
| <!--Filepath: | /Application/html/appStart.htm |
| <!--Created By: | Jane Doe |
| <!--Modified By: | John Doe |
| <!--Modification Date: | 1/1/99 |
| <!--Revision #: | 1.1 |

Limit comments for describing complex statements that are not easily followed.
Eliminate all comments promoting the HTML code generating application
(i.e. < -! This page generated by Front Page -- >).
Screen Resolution

All HTML files should be viewable at resolutions of 800 x 600 and above.
This standard allows for a range of screen resolutions to ensure that all users may be able to view the pages. However pages should be tested at screen resolutions of 640 x 480 and 1024 x 768 pixels in order to ensure that layout and presentation do not deteriorate at different resolutions. At 640 x 480 the appearance of scroll bars is acceptable, as this resolution is not directly supported by the applications being developed.

### Graphics Sizes

Explicitly define the height and width of images used in pages. When this definition does not take place, browsers size the images themselves, which slows down the painting process. Browsers that do not have support for the WIDTH and HEIGHT attributes to the IMG tag may simply ignore them and lay out the portion of the present description normally.
<IMG SRC = "iso-ne.gif" WIDTH=413 HEIGHT=356>

### JavaScript

JavaScript provides a powerful tool for the creation of client side functionality. It suffers however from limited error handling capabilities and problems of compatibility between web browsers. JavaScript should be used only where the required client side functionality cannot be implemented in HTML and should be kept as simple and concise as possible. Completed JavaScript should be tested in as wide a variety of browsers as possible, especially Internet Explorer. (V4+) and Netscape Navigator (4+) as scripts which function cleanly in one browser may throw exceptions in another.

### Variable Declaration

When declaring variables in JavaScript, one may declare multiple variables on a single line or one may declare variables on a separate line. One may also initialize a variable to a value in your declaration.
vara,b,c,d,e;
var sum;
var message = "hello";

### Variable Naming Conventions

| | |
|---|---|
| returnCode | Local variables are written in mixed case starting with lower case |

Constants were not defined (DV_NONE) as this caused problems when attempting to stay compatible for both browsers (IE 4.0 and Netscape Navigator 4.0). When attempting to use constants such as "DV_NONE" Netscape failed and MS IE did not. Thus we used the corresponding numbers and added comments for the constants.
//DV_TYPE_ISNUMERIC -- data type must be numeric case 1:
...

### Local Functions

Local functions in JavaScript should be in mixed case, starting with lower case, mixing with upper case.
function retaDataValidationQ

### Error Handling

Currently there is no error handling in JavaScript. In JavaScript 1.3 both Microsoft Internet Explorer and Netscape Navigator may support the **try/catch** statement. **The try/catch** may be similar to the try/catch used in Java. It may be our recommendation to use the **try/catch** statement in the next release of JavaScript.

### Coding Conventions

In JavaScript, constructs' may always use the curly brace ("{") to format following lines of code, even if there is only one line of code that follows the construct.
Example:

```
 If(testvar = inputvar)
 {
       statement(s)...;
 }
 
 while(!fs.EOF)
 {
       statement1 ... ;
       statement2 ... ;
 }
 if(testvar != inputvar)
 {
       statement 1... ;
 }
 else
 {
       statement2...;
       statement3... ;
 }
```

The above example demonstrates how to use the formatting that was described above. This enables the developer when debugging/developing pieces of code to better read and understand what is in progress in the code. The learning curve may be reduced if the developer does not have poorly formatted code to read (especially when dealing with complex code). This promotes easy code maintenance.
Commenting
JavaScript ignores comments; therefore comments may be detailed if necessary without effecting performance. Any comments that may be contained on a single line may use the "//" comment style. This treats any comments after the "//" to the end of the line as a comment.
//this is an example of a single line comment in JavaScript'

Comments that explain a complex block of code which require more that on sentence of explanation may use the "/**.... */" comment style. We use the javadoc style of commenting for multiple line comments.

```
 /**
  * This is another example of comments in JavaScript.
  * It has multiple lines.
  */
```

ReTA architecture makes use of a JavaScript "js" file. This file resides on the Web Server and assists in performing client side validation. Commenting in this file is detailed, as this may not be visible to the client. The beginning of the file has a comment block that describes the purpose of the file and lists the author and any modification made to the file.

```
 /***************************************************************************
 ** RETA Distributed Component Architecture JavaScript File
 **
 ** FILENAME :retaDataValidation.js
 **
 ** DESCRIPTION : Data validation functions
 **
 ** retaDataValidation()
 ** retaValidateDateFormat()
 ** retaIsLeapYear()
 ** retaPadDateSegment()
 ** retaPadDateSegment()
 **
 ** AUTHOR : MEVANS
 **
 ** DATE CREATED : 01/19/99
 **
 ** REVISION HISTORY :
 **
 ** DATE REVISED BY SIR # DESCRIPTION OF CHANGE
 **
 ** 01/19/99 MEVANS Original code.
 **
 ***************************************************************************/
```

The "js" file contains a detailed comment block describing each function. This comment block should precede each function in the JavaScript source file.

```
 /**********************************************************************
 ** Distributed Component Architecture JavaScript Function
 **
 ** FUNCTION : retaParseDateSegment
 **
 ** DESCRIPTION : This function returns requested date segment.
 ** Date segments: month, day, year
 ** Date segment delimiters: "/", "-", "\"
 **
 ** INPUTS : inputDate
 **
 ** dateSegmentIndex
 **
 ** OUTPUTS : dateSegment
 ** - returns "" if segment not found
 **
 ** CALLED FUNCTIONS :
 **
 ** AUTHOR : MEVANS
 **
 ** DATE CREATED : 01/19/99
 **
 ** REVISION HISTORY :
 **
 ** DATE REVISED BY SIR# DESCRIPTION OF CHANGE
 **
 ** 01/19/99 MEVANS Original code.
 **********************************************************************/
```

For multi-line comments required within the function itself, use the multi-line comment style.

### Java

JAVA guidelines are necessary so each JAVA programmer on the project can share in a common effort to establish best practice across the whole of the project.
Variable Declaration
**When declaring local member variables in a java source file an declare them as private.**
**private** String m_name = new String();
**Temporary variables to be used within a method may be declared in lowercase and at the beginning of the method, ensure a meaningful name is used.**

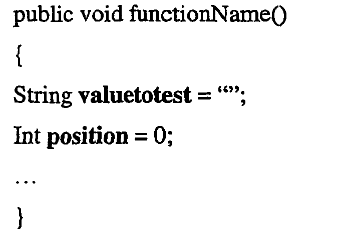

**Constants may be declared in a constant java file and may be in upper case. Make all constants public members, as this may provide direct access to the variable. If a change is made to the variable one must re-compile the java file and re-build the DLL's.**
public class ReTAHTMLConstants

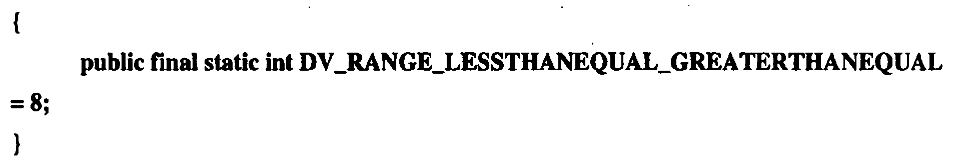

### Variable Naming Conventions

| | |
|---|---|
| m_returnCode | Local variables are written in mixed case starting with lower case |
| DV_NONE | Constants are declared in all uppercase |

### Coding Conventions

In Java, constructs may always use the curly brace ("{") to format following lines of code, even if there is only one line of code that follows the construct.
Example:

```
 If(testvar = inputvar)
 {
      statement(s)...
 }
 
 white(!fs.EOF)
 {
       statement(s)...
 )
 
 if(testvar != inputvar)
 {
       statement 1...
 }
 else
       statement2...
 }
```

The above example demonstrates how to use the formatting that was described above. This enables the developer when debugging/developing pieces of code to better read and understand what is in progress in the code. The learning curve may be reduced if the developer does not have poorly formatted code to read (especially when dealing with complex code). This promotes easy code maintenance.

### Method Names

Method names in java use mixed case, starting with lower case. public String generateJavaSrc().....

### Method Comments

For comments use the javadoc commenting style. This style provides useful portion of the present description (in HTML format) that may be generated by the javadoc.exe utility. Comments begin with a slash and two asterisks. The first sentence should be concise and describe the purpose of the method or class is. "@" parameters can be added, each may generate different comments in the html output from the javadoc.exe utility.

```
 /** ReTA Component Architecture Java Method
  *
  * METHOD : generateJavaSrc
  *
  * DESCRIPTION : This function generates the necessary html to include the script
  * tag that specifies the .js file for client side validation.
  * INPUTS :
  *
  * OUTPUTS : outputVal;
  * - this returns the formatted html string.
  * CALLED FUNCTIONS :
  *
  * AUTHOR : DZIMMER
  *
  * DATE CREATED : 01/19/99
  *
  * REVISION HISTORY :
 *
  * DATE REVISED BY SIR # DESCRIPTION OF CHANGE
  * ------- ---------- ------ ----------------------------
  * 01/19/99 DZIMMER Original code.
  *
  * @ author DZIMMER
  * @ return This method returns the string which may make up the html code that
  * contains the JavaScript source file.
  */
 Java Class Comments
```

For comments use the javadoc commenting style. This style provides useful portion of the present description (in HTML format) that may be generated by the javadoc.exe utility. Comments begin with a slash and two asterisks. The first sentence should be concise and describe the purpose of the method or class is. "@" parameters can be added, each may generate different comments in the html output from the javadoc.exe utility.

```
 /**
  * RETA Distributed Component Architecture Java File
  *
  * FILENAME : RETAHTMLConstants.java
  *
  * DESCRIPTION : HTML Constants
  *
  * AUTHOR : DZIMMER
  *
  * DATE CREATED : 01/22/99
  *
  * REVISION HISTORY :
  *DATE REVISED BY SIR # DESCRIPTION OF CHANGE
  *------- ---------- ------ ----------------------------
  * 01/22/99 DZIMMER Added UI Validation constants.
  *
  * @ author DZIMMER
  *
  */
 Error Handling
```

Any statement that can throw an exception may use the try/catch block to handle errors. This is necessary in order to evaluate what has been thrown and to determine what to send back to the user.

```
 IVCEEventCollection anEventCollection = null;
 try
 {
 anEventCollection=(IAFEventCollection) inEventCollection;
       outputBuffer = outputBuffer.append (m_alignment_start);
 }
 catch (Exception e)
 {
       // a AFEventException has been thrown. Add it to the collection
       e.addTocollection((IAFEventCollection)anEventCollection);
 }
```

### Application Naming Conventions

### Activities

The capital letter "A" to indicate and "activity" followed by a two-character activity name initial (in capital letters) "XX", followed by the full activity name.
ACLCustomerLookup
This name may be the name of the Java file and the java Class name defined in the Java source file i.e.
public class ACLCustomerLookup - class definition in java file.
ACLCustomerLookup.java - java file name.

### Sub-Activities

Sub-Activities should start with a two character prefix "SA", followed by the sub-activity name initial, followed by the sub-activity name.
SASFSaveFeedback
This name may be the name of the Java file and the Class name defined in the Java source file, i.e.
public class SASFSaveFeedback - class definition in java file.
SASFSaveFeedback.java - java file name.

### Business Objects

Business Objects naming should start with a prefix of two capital letters "BO", followed by the business object name, e.g. "BOCustomerLookup".

This name may be the name of the Java file and the Class name defined in the Java source file, i.e.
public class BOCustomerLookup - class definition in java file.
BOCustomerLookup java - java file name.

### Business Object's Class Factory

Class Factories naming should start with a prefix of two capital letters "BO", followed by the business object name, followed by the term "Factory".
BOCustomerLookupFactory

This name may be the name of the Java file and the Class name defined in the Java source file i.e.
public class BOCustomerLookupFactory - class definition in java file.
BOCustomerLookupFactory - java file name.

### Architecture Java Naming Conventions

ReTA architecture files should all be prefixed with the 'AF' standard, e.g."AF<filename>.java".
4.4.5 IDL
IDL (Interface definition Language) files define the interface of a COM component. ReTA makes use of the following naming conventions.
Look with the Platform SDK or MIDL portion of the present description found within MSDN. Application IDL Conventions
*Business Object*

All business objects should include the following statements in the #include section of the idl file.
#include <Persistence\IAFPersistable.id1>
#include <Activity\IAFEditable.idl>

Within the IDL for the Business Object the interface statement requires an "I" in front of the business object name.

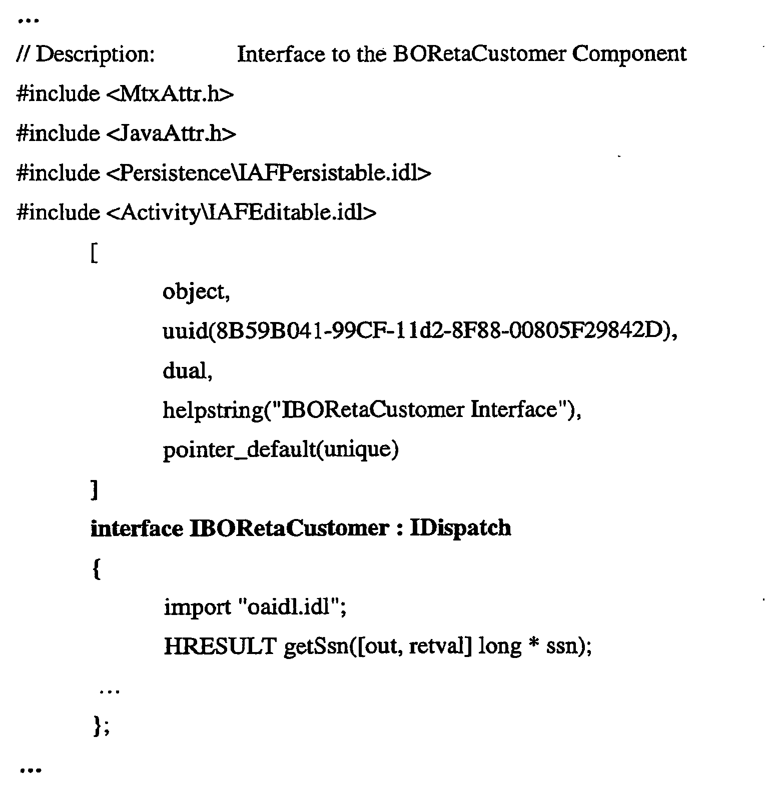

The business object IDL also defines the type library and the coclass. The type library may take on the name of the business object with "lib" appended to the end of the business object name. The coclass (Com class) may take on the name of the business object but may be prefixed with a "C". The following IDL shows the changes to be made.

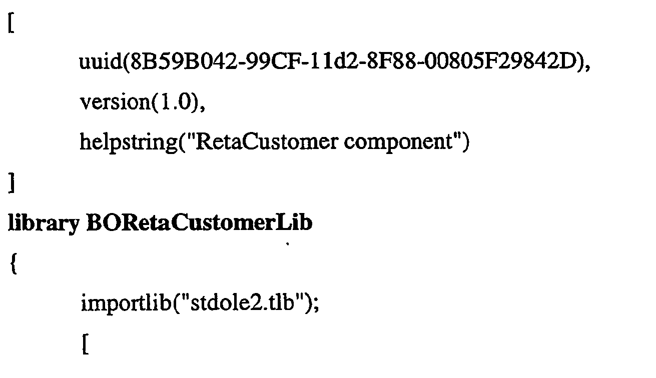

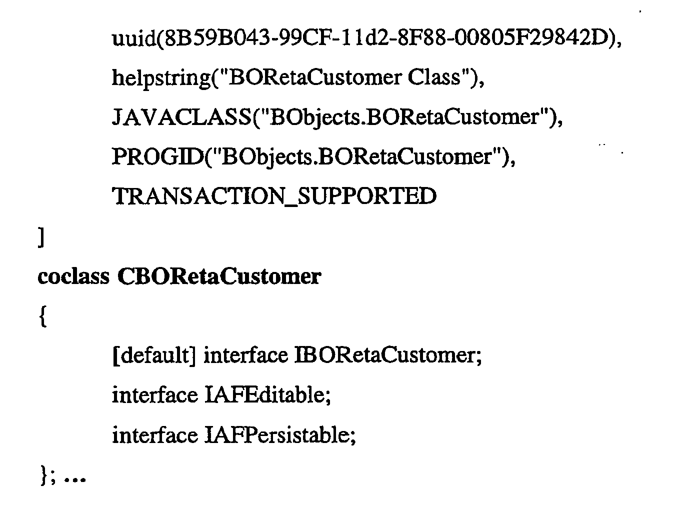

### Activity

All activities should include the following statements in the #include section of the idl file.
#include <Activity\IAFActivity.idl>
#include <Session\IAFEventListener.idl>
Within the IDL file the type library should follow the name of the activity and the coclass should also follow the naming convention described in the preceding portion of the description. An example below shows one in bold the changes to be made.

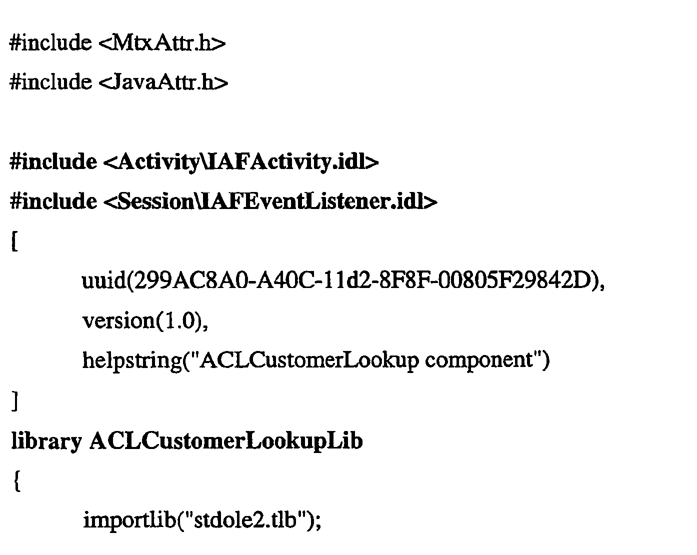

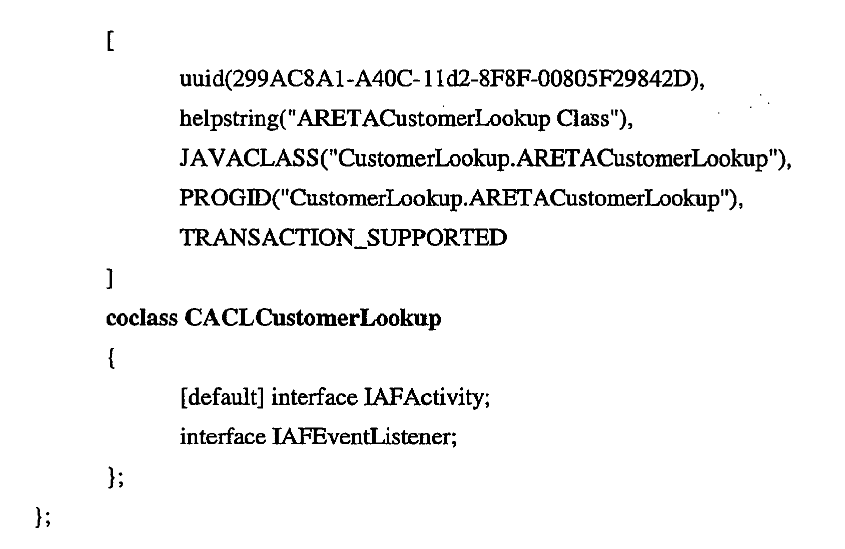

### Sub-Activities

All sub-activities should include the following statement in the include section of the idl file.
#include <Activity\IAFSubActivity.idl>

In the IDL file for a sub-activity one must define the type library name and the coclass must also be provided. A code example that follows highlighted in bold shows the changes to be made to a sub-activity IDL.

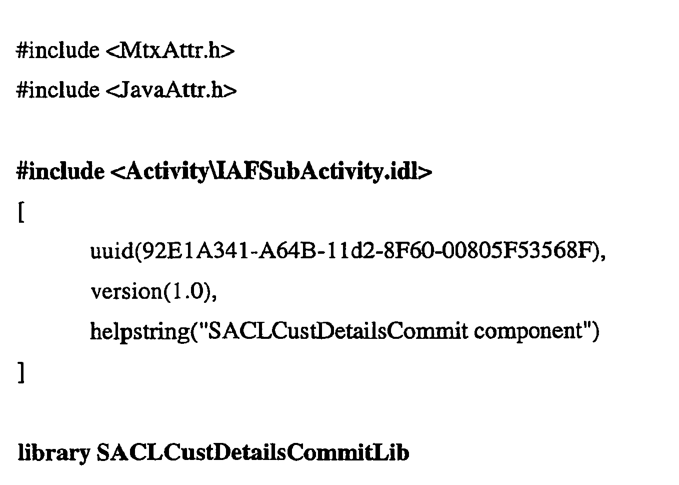

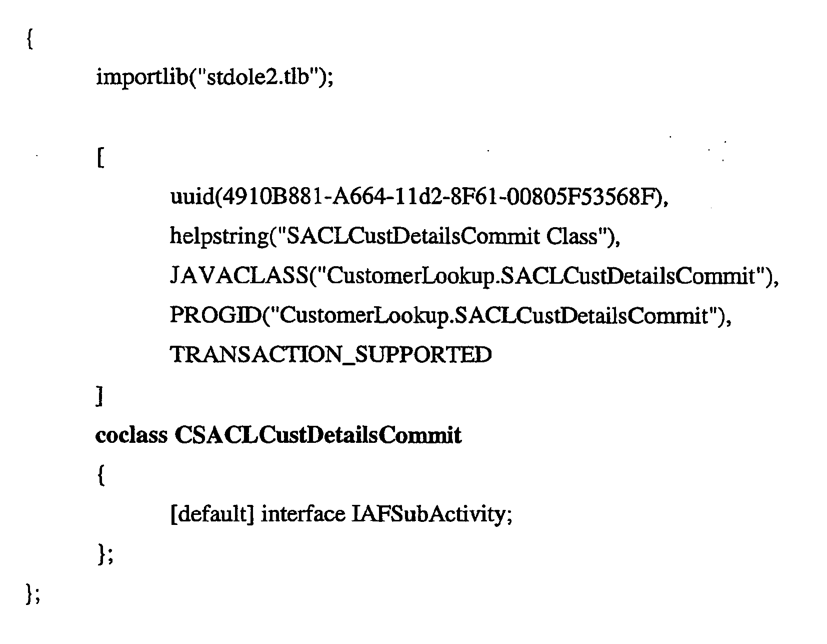

### Architecture IDL Conventions

Interfaces for architecture components that do not include any "coclass" statements may be prefixed with an "I", e.g. "IAFSEEventListener.idl".

All architecture components may use the component name as the filename for the IDL. For example, if the component name is AFSESystemPreferences the IDL filename may be, e.g."AFSESystemPreferences.idl".

All java packages may have a corresponding IDL file. For example EventHandler may have an IDL with this name, within this IDL may be all the associated coclass's that make up the package.

EventHandler.idl - <EventHandler - name of java package >

Example of - coclasses defined within "EventHandler.idl"

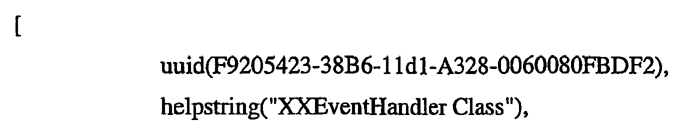

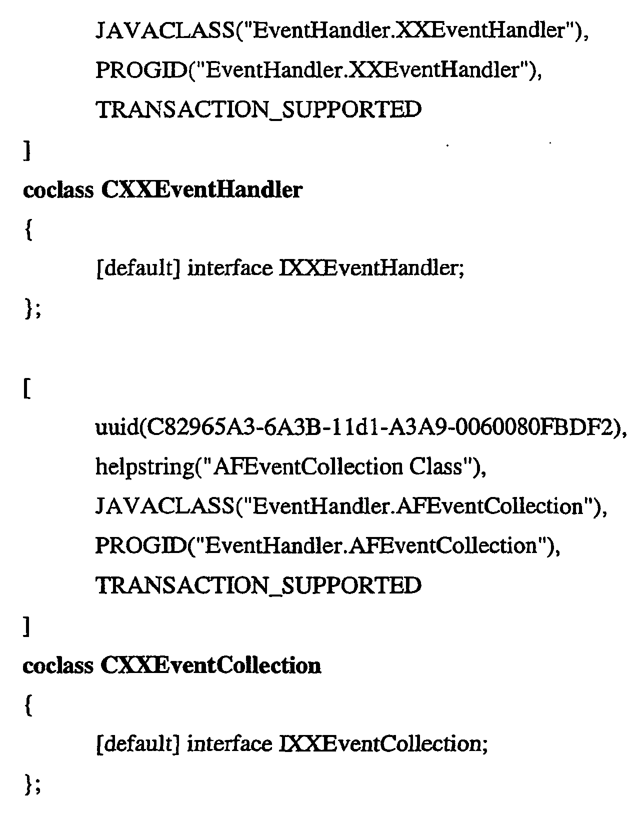

### TESTING

Figure **72** illustrates a method **7200** for testing a technical architecture. In operation **7202,** a plurality of software modules of a technical architecture are tested in a first pass. Next, a solution is implemented in operation **7204** for the software modules that are found to be defects when tested in the first pass. Subsequent to the first pass, in operation **7206,** the software modules are tested in a second pass to determine whether the solutions implemented in the first pass are defective and further determine whether the solutions caused additional defects in the software modules. In operation **7208,** a solution is generated for the software modules that are found to be defects when tested in the second pass. In operation **7210,** further tests are preformed on the software modules in a third pass to determine whether the solutions implemented in the second pass are defective.

The technical architecture may include execution architecture, development architecture, and operations architecture. Further, after the third pass, the generating of solutions for software modules found to be defective and the performance of subsequent tests on the implemented solutions may be repeated until no defects are detected.

Optionally, the tests may be regression tests. Additionally, testing may be performed only on those software modules of the most frequent paths. In yet another aspect, the software modules of all legal paths may be tested. Optionally, only the software modules related to error and exception handling logic may be tested. The following material provides a more detailed description of the above-described method.

The purpose of the Assembly Test Approach Deliverable is to outline the detailed approach that may be used to plan and execute the Assembly Test for Phase 1 of the Resources eCommerce Technical Architecture (ReTA) initiative.

### Test Objectives and Scope

### Objectives

The Assembly Test Approach deliverable outlines the approach that may be used to execute the Assembly Test. The Assembly Test ensures related components (programs) function properly when assembled into dialogs or batch processes and to verify that the interfaces have appropriately implemented the system design.

The Assembly Test Approach outlines the following information:
Test Objectives and Scope
Regression Testing Approach
Test Environment (Includes test tools)

### Metrics

The Assembly Test Approach may provide the overall guidelines that may be adhered to when planning and executing the Assembly Test.

### Scope

The scope of this Assembly Test Approach portion of the present description is limited to the Phase 1 enhancements to the ReTA architecture.

### Execution Architecture

The Execution Architecture comprises all the components required to support an application during run-time. The Netcentric Architecture Framework (NCAF) identifies those common, run-time services required when an application executes in a Netcentric environment. The services can be broken down into logical areas: Presentation Services, Information Services, Communication Services, Communication Fabric Services, Transaction Services, Environment Services, Base Services and Business Logic.

Execution architecture services typically provide either an interface between the application and some system component, or an interface connecting application components (for example a distribution service that allows client applications to execute server application transactions). The technology architecture assembly test focuses on testing the end-to-end function and quality of these execution architecture services.

The execution architecture components considered for Assembly test are:
Environment Services - Application Services
Codes Table services: static data code-decode implementation
Common services: creation of ASP header file to provide common architecture constants and functions within application Active Server Pages
Information Services - Database Services
Access: ADO Persistence layer
Presentation Services - Web Browser
Form: UI Controls
Client-side field validation (JavaScript)
Client architecture file to provide common JavaScript functions (field validation, date validation, message boxes, etc.). This may provide a single point of maintenance and functionality for client architecture services. Grouping attributes into single method call
Dropdown listbox UI Control integration with CodesTable service.

### Development Architecture

The development architecture is built upon an integrated set of tools and components, each supporting a specific task or set of tasks in the development process. The purpose of the development architecture is to support the tasks involved in the analysis, design, construction, and maintenance of business systems, as well as the associated management processes.

The development architecture components considered for Assembly test are:
System Building Services - Construction
Application developer coding templates for Active Server Pages, Activity, Sub-Activity, View, Mapping, Factory and Business Object.

### Standards and Procedures

### Operations Architecture

The Operations Architecture is a combination of tools, support services, procedures, and controls required to maintain a production system and keep it running efficiently. Unlike the Execution and Development Architectures, its primary users are the system administrators and the production support personnel.

The operations architecture components considered for Assembly test are:
Physical Environment Services - Implementing
Initial server installation (core software only)
Web server
Application server
Database server
Initial workstation installation (core software only)
Architecture installation process
Workstation
Architecture required java files
Architecture frameworks
Build tools
Architecture make file
Visual Studio 95 build tools
Server
Architecture required database tables

### Other

The components considered for Assembly test are:
Code cleanup
Component name changes (prefix): Removal of all application references within the architecture Application of naming and coding standards.
Consolidation of UI control attributes into single method calls.
Renaming and cleanup of framework constants.

### Test Cycles

The assembly test conditions may be defined as follows:
Reuse the component test conditions.
Add test conditions as necessary to obtain 100% message path coverage.
The test cycles may be organized as follows, for each assembly:
Cycle 1: test conditions that exercise the most frequent paths
Cycle 2: test conditions that exercise all other legal paths
Cycle 3: test conditions that exercise the error and exception handling logic

All cycles may be independent to minimize the overall calendar time required to test. In addition, each cycle may be run three times (i.e., three passes):
The objective of pass 1 is to get through the test as quickly as possible, finding as many defects as possible and implementing workarounds where needed.
The objective of pass 2 is to regression test the defects fixed from pass 1, and determine if the pass 1 workarounds caused any more defects.
The objective of pass 3 is to regression test defects fixed from pass 2; no defects should be found.

By planning three passes, regression tests can be built in to ensure that defects are completely fixed and the fixes did not break anything else.

It is important to note that the Technology Architecture Assembly Test Approach applies to both testing after normal construction and testing during "fix-it" or "debug" mode. Technology architecture assembly testing for normal development may cover all interactions between the technology architecture components, while an assembly test in "fix-it" mode may cover only the interactions which apply to the fix [fixes] being implemented.

### Risks

The risks and risk management approach for the Assembly Test stage are outlined below:
Concurrent development and configuration management
During the phase 1, there may be several simultaneous enhancement efforts. It may be essential to follow strict configuration management procedures in order to prevent version overwriting.

### Mitigation Plan

All components to be modified should be checked out of the version control tool (Visual Source Safe) with a detailed label stating the change description and the developer's name. If separate enhancement efforts require the same file, developers should coordinate file control so not to overwrite the other's work.

### Contingency Plan

Defects may be tracked during the Assembly Test. If a large number of defects are attributed to version mismatch or overwriting, the configuration management approach for development may be reevaluated. Additional resources may need to be added to the build and Assembly Test effort.

### Scope of Test Effort

Since almost every module may be modified (due to name changes), there may need to be extensive assembly testing to ensure no functionality is broken.

### Mitigation Plan

This Assembly Test approach relies on automation and reuse. There may be an effort to automate all Assembly Testing, so that it is easy to both execute the test and verify the expected results.

### Contingency Plan

Defects may be tracked during the Assembly Test. If a large number of defects are found for modules, the approach to coding and component testing the modules may be reevaluated.

### Regression Testing Approach

After a fix is put into the system, the fix is tested to ensure that it is correct. Other functions are "regression" tested in order to ensure that they were not adversely affected (broken) by the fix; this is regression testing. In general, the regression test should include all functions either directly or indirectly impacted by the fix and be executed during each pass.

At the end of each test stage, a clean test pass for that stage may be conducted. If non-critical errors do remain at the end of a test stage, the team leader for that stage must sign-off on their portion of the present description. The time required to execute the last test pass ought to be minimal, since the cycles should execute correctly.

The three pass approach for technology architecture assembly test may facilitate regression testing of defects found in the current test. In addition, the entire technology architecture assembly test model may be portion of the present descriptioned, repeatable and automated (where possible) in order to be easily re-executed for each pass.

For each code fix, a complete Assembly Test may be re-executed. Any new conditions created as result of fix implementation may be added to the existing test plan (conditions, scripts, etc.).

### Test Environment Requirements

### Technical Configuration

The technology architecture assembly test may occur in the technology architecture development environment. It is separated from the technology architecture, assembly test environment.

Figure **72****.****1** illustrates the application & architecture configuration for a typical ReTA Build environment **7230.** In this model, the testing workstation is configured to provide presentation services by way of an HTML 3.2 & JavaScript 1.2 compatible web browser. The web/application server **7232** is configured with the current assembly test versions of ReTA application and architecture components and is connected to a test workstation **7234,** a source code repository **7236,** and a database server **7238.**

The following table provides a complete listing of the hardware and software configuration of the assembly test environment.

| Name | CPU | RAM | Operating System | Software |
|---|---|---|---|---|
| RETADE V4 | **P-300** | **128 MB** | **Windows NT 4.0 (SP4)** | **Microsoft Visual SourceSafe Client 6.0** |
| | | | | **Microsoft Visual J++ 6.0** |
| | | | | **Microsoft Visual C++ 6.0 -Tools Only** |
| | | | | **Microsoft** Internet **Explorer 4.01** |
| | | | | ReTA Issues Tracker |
| | | | | ReTA SIR Workbench |
| RETASR V2 | **P-166** | **60 MB** | **Windows NT 4.0 (SP4)** | **Microsoft Visual SourceSafe Server 6.0** |
| | | | | **HP OmniBack II Client** |
| STPFS 10 11 | **P-** | **2 GB** | **Windows NT** | Microsoft Internet Explorer 4.01 |
| | **400** | | **Enterprise Server** | Microsoft IIS 4.0 |
| | **(4x)** | | **4.0** | Microsoft Transaction Server 2.0 |
| | | | | Microsoft Active Data Objects 2.0 |
| | | | | Oracle8 (Client only) |
| | | | | HP OmniBack II Client |
| | | | | |

### External Interfaces

### None

### Test Data Management

The common test data may be copied to the technology architecture assembly test environment and modified as needed by the development cell to satisfy all the technology architecture assembly test conditions.

After each successful execution of a cycle, the test executor may make a database backup. This backup may serve two purposes. It can be used as evidence of a successful execution of the cycle. It can also be used to restart a test execution after a certain sequence of upstream cycles.

The details of backup procedures in using the backup utility may be provided by the Database Architecture Team prior to the start of the technology architecture assembly test execution.

### Source Environment

During the Assembly Test phase of a ReTA engagement, the Source Control Administrator may be responsible for the mass checkout and build of the entire application or architecture. Figure **73** illustrates that the code for technology architecture assembly test may be migrated from the technology architecture component test environment as defined in the migration procedures. As shown, the test workstation **7300** is only connected to the web and application server 7302. The web and application server is connected to the source code repository **7304** and the database server **7306.**

### Automation

Test Execution - Custom scripts may be created and used by the developer to automate the execution of individual Assembly Tests.

Debugging - Visual Studio Source Code Debugger may be used.

Problem Management - a System Investigation Requests (SIR) Database for entering and managing the problem resolution process may be used to track all issues detected during assembly test.

### Environment Cleanup

The developer is responsible for cleaning up the databases and other environment information after each pass of the test execution.

### Security

As part of Assembly test, the following security roles may be created:
Source Control administrator - responsible for monitoring code migration
Web/Application server administrator - responsible for installation, configuration, maintenance and tuning on the server
Database administrator - responsible for test database installation, maintenance and tuning

### Metrics

The following metrics may be collected and evaluated throughout technology architecture component test:

### Metric Name

Definition
Target
Frequency of collection and evaluation

Refer to the Testing Metrics Job Aid in the Business Integration Methodology for more information.

### Entry and Exit Criteria

The entry and exit criteria for the different activities in Assembly Testing may ensure the quality of each deliverable from the testing process. Below are the entry and exit criteria for assembly test.

| | | | |
|---|---|---|---|
| **Stage:** | *Assembly Test* | **Exit Sign-off Details** | |
| | | **Name** : | ____________ |
| | | **Date** : | ____________ |
| | | **Cell Leader** : | ____________ |
| | | | |
| **Test** | **Entry/Exit Criteria** | | **Signed off Date by...** |
| **Activity** | | | |
| **Develop** | **Entry Criteria:** | | |
| **Assembly** | Capability Release Evaluation Approach | | |
| **Test** | Completed | | |
| **Approach** | At least 50% of the code completed before any Assembly Testing started. | | |
| | **Exit Criteria:** | | |
| | A configuration audit must have been completed on the source code and Assembly Test information after all test cycles run successfully. | | |

### Test Resources and Workplan

### Resources

The assembly test team may be responsible for creating the technology architecture Assembly Test conditions. The component test conditions developed during the design phase may be leveraged in assembly test as well. The Work Cell Leads may approve all test conditions and expected results.

The Assembly Test scripts may be developed and executed by Assembly test team. The Work Cell Leads may supervise the effort. The Test Manager may sign off on the deliverables. The Project Manager may approve the final report.

### Workplan

See the activities Architecture Design - Assembly Test: Prepare Assembly Test Approach and Prepare Assembly Test Plan within the ReTA workplan.

### Technology Architecture Component Test Approach

### ReTA

| **Revision Number** | **Date** | **Prepared By** |
|---|---|---|
| | | |
| | | |

### Overview

The purpose of the Component Test Approach Deliverable is to outline the detailed approach that may be used to plan and execute the Component Test for Phase 1 of the Resources eCommerce Technical Architecture (ReTA) initiative.

### Test Objectives and Scope

### Objectives

The objective of the Component Test is to ensure that each program in the application or architecture has implemented the functional, quality and technical specifications and should test all lines of code and branches of logic. At the end of component test, all lines of code should have been exercised and proven to meet the specified functional and quality requirements.

This objective is met through the following steps:
- Develop the Component Test Approach
- Plan Component Test
- Prepare Component Test
- Establish Component Test Environment
- Execute Component Test

Component testing addresses the initial stages of testing. Generally, testing at the component stage tests code. The test data prepared by the programmer tests how the component or module handles both valid and exception conditions. All logic paths are tested. Utility modules or any modules with complex logic should be tested in isolation before being integrated with other components.

Successful completion of the component test for the technology architecture components ensures that they meet their specifications. Interactions with other Technology architecture components are not part of this test. The operations required of other components (e.g., data access) by the components under test are replaced by stubs.

### Scope

The scope of this Component Test Approach portion of the present description is limited to the Phase 1 enhancements to the ReTA architecture. These enhancements include:

### Execution Architecture

Environment Services - Application Services
Codes Table services: static data code-decode implementation
Common services: creation of ASP header file to provide common architecture constants and functions within application Active Server Pages
Information Services - Database Services
Access: ADO Persistence layer
Presentation Services - Web Browser
Form: UI Controls
Client-side field validation (JavaScript)
Client architecture file to provide common JavaScript functions (field validation, date validation, message boxes, etc.). This may provide a single point of maintenance and functionality for client architecture services. Grouping attributes into single method call
Dropdown listbox UI Control integration with CodesTable service.

### Development Architecture

System Building Services - Construction
Application developer coding templates for Active Server Pages, Activity, Sub-Activity, View, Mapping, Factory and Business Object.

### Other

Code cleanup
Component name changes (prefix): Removal of all application references within the architecture Application of naming and coding standards.
Consolidation of UI control attributes into single method calls.
Renaming and cleanup of framework constants.

### Test Cycles

The test cycles, for each technology architecture component, may be organized as follows:
Cycle 1: test conditions that exercise the most frequent input, preconditions, and paths
Cycle 2: test conditions that exercise all other legal input, preconditions, and paths
Cycle 3: test conditions that exercise the error and exception handling logic

All cycles may be independent to minimize the overall calendar time required to test. In addition, each cycle may be run three times (i.e., three passes) to meet the objectives outlined below:
The objective of pass 1 is to get through the test as quickly as possible, finding as many defects as possible and implementing workarounds where needed.
The objective of pass 2 is to regression test the defects fixed from pass 1, and determine if the pass 1 workarounds caused any more defects.
The objective of pass 3 is to regression test defects fixed from pass 2; no defects should be found.

By planning three passes, regression tests are built in to ensure defects are fixed and did not break anything else.

It is important to note, the Technology architecture Component Test Approach applies to both testing after normal construction and testing during "fix-it" or "debug" mode.

### Risks

The risks and risk management approach for the component test stage are outlined below:

Concurrent development and configuration management

During the phase 1, there may be several simultaneous enhancement efforts. It may be essential to follow strict configuration management procedures in order to prevent version overwriting.

### Mitigation Plan

All components to be modified should be checked out of the version control tool (Visual Source Safe) with a detailed label stating the change description and the developer's name. If separate enhancement efforts require the same file, developers should coordinate file control so not to overwrite the other's work.

### Contingency Plan

Defects may be tracked during the component test. If a large number of defects are attributed to version mismatch or overwriting, the configuration management approach for development may be reevaluated. Additional resources may need to be added to the build and component test effort.

### Scope of Test Effort

Since almost every module may be modified (due to name changes), there may need to be extensive component and assembly testing to ensure no functionality is broken.
Mitigation Plan

This component test approach relies on automation and reuse. There may be an effort to automate all component testing, so that it is easy to both execute the test and verify the expected results.

### Contingency Plan

Defects may be tracked during the component test. If a large number of defects are found for modules, the approach to coding and testing the modules may be reevaluated.

### Regression Testing Approach

After a fix is put into the system, the fix is tested to ensure that it is correct. Other functions are "regression" tested in order to ensure that they were not adversely affected (broken) by the fix; this is regression testing. In general, the regression test should include all functions either directly or indirectly impacted by the fix and be executed during each pass.

At the end of each test stage, a clean test pass for that stage may be conducted. If non-critical errors do remain at the end of a test stage, the team leader for that stage must sign-off on their portion of the present description. The time required to execute the last test pass ought to be minimal, since the cycles should execute correctly.

The three pass approach for technology architecture component test may facilitate regression testing of defects found in the current test. In addition, the entire technology architecture component test model may be portion of the present descriptioned, repeatable and automated (where possible) in order to be easily re-executed for each pass.

For each code fix, a complete component test may be re-executed. Any new conditions created as result of fix implementation may be added to the existing test plan (conditions, scripts, etc.).

### Test Environment Requirements

### Technical Configuration

The technology architecture component test may occur in the technology architecture development environment. It is separated from the technology architecture, assembly test environment.

Figure **74** illustrates the application & architecture configuration for a typical ReTA Build environment. In this model, the testing workstation **7400** is configured to provide presentation services by way of a HTML 3.2 and JavaScript 1.2 compatible web browser. The web/application server **7402** is configured with the current assembly test versions of ReTA application and architecture components.

### External Interfaces

### None

### Test Data Management

The master set of common test data may reside in the central database. Each developer may access the data from their local workstation. When necessary, the data may be modified to satisfy all the test conditions for the tested components. The master test data should be exported so that the database tables can be restored to their original state once the test cycle is complete.

### Source Environment

The components under test and their technology architecture modules/classes are managed within the Source Control tool, Visual Source Safe. They are to be locked for the duration of the test; the developer receives exclusive access.

### Automation

Test Execution - Custom scripts may be created and used by the developer to automate the execution of individual component tests.

Debugging - Visual Studio Source Code Debugger may be used.

Problem Management- a System Investigation Requests (SIR) Database for entering and managing the problem resolution process may be used to track all issues detected during assembly test.

### Environment Cleanup

The developer is responsible for cleaning up the databases and other environment information after each pass of the test execution.

### Security

The developer is in charge of configuration management (version control and migration control) of the components under their responsibility. When the component has successfully completed component test and code review, the developer should promote the code to the appropriate, staged location in the version control repository.

### Metrics

The following metrics may be collected and evaluated throughout technology architecture component test:
**Metric Name**
Definition
Target
Frequency of collection and evaluation

Refer to the Testing Metrics Job Aid in the Business Integration Methodology for more information.

### Entry and Exit Criteria

The entry and exit criteria for the different activities in component testing may ensure the quality of each deliverable from the testing process. Below are the entry and exit criteria for assembly test.

### Test Resources and Workplan

### Resources

The developer responsible for the component build may create the technology architecture component test conditions. The creation of the test conditions may happen concurrently with the detail design of the component. The Work Cell Leads may approve all test conditions and expected results.

The component test scripts may be developed and executed by dedicated developers within the work cells. In addition, test drivers and stubs to simulate other components may be the responsibility of the developer. The Work Cell Leads may supervise the effort. The Test Manager may sign off on the deliverables. The Project Manager may approve the final report.

### Workplan

See the activities Architecture Design - Component Test: Prepare Component Test Approach and Prepare Component Test Plan within the ReTA workplan.

### Performance Test Approach

### Overview

The purpose of the Performance Test Approach Deliverable is to outline the detailed approach that may be used to plan and execute the Performance Test for the Resources eCommerce Technical Architecture (ReTA) initiative.

Performance and Stress Test simulates high production data volumes and ensures that system response time and communication links are adequate. Potential bottlenecks are identified and analysis of how the system can perform internally and with other systems at maximum processing loads is performed. Various members from the ReTA Technical Architecture team may perform this test.

### Test Objectives & Scope

### Objectives

Performance testing closely emulates the actual workload that an application generates and utilizes all environmental components for its test: network, server, clients, databases. Performance testing may also allow one to determine how effectively the application may function in the current environment and to gauge how scaleable it may be should the usage increase.

The ReTA Phase 2 Performance Tests may focus on five primary objectives:
To measure the response time performance of ReTA framework services in an environment that reasonably simulates an expected production environment.
To identify potential performance risks that need to be addressed in order to meet the foreseeable application response time requirements.
To work together with the development teams to analyse issues, identify root causes, and develop alternatives for performance enhancement.
To portion of the present description performance improvement ideas and suggestions that should be considered for the medium- to long-term.
To determine baseline hardware and network recommendations for use during requirement analysis phases of an engagement.

### Scope

The Performance Test Team may:
Develop a simulated production-like environment for the purpose of performance testing; Measure online user response times of the reference application under variable user load scenarios;
Recommend possible alternatives for performance enhancement; and,
Publish final reports describing the results of the Performance Test.

### Risks

The following table identifies external risks to be managed by the Performance Testing Team.

| **Risks** | **Actions** |
|---|---|
| Performance Testing environment negatively impacted by SolutionWorks network traffic usage. | Test cycle execution should be done during periods of low network usage (lunch periods, after normal business hours, etc.) |
| Tuning measures recommended by the Performance Testing Team must be implemented prior to the beginning of the next testing cycle. | ReTA Architecture team to notify Performance Testing Team in the case that tuning measures cannot be implemented within an agreed-upon time window. |
| Other risks being determined... | Performance Team to regularly and proactively keep project management appraised of new risks and issues. |

### Performance Testing Approach

### Approach Description

The performance testing approach centers on using an automated performance/load testing application to assist in the test script creation and execution. Three different tests (load, stress, and performance) may be executed to accurately determine the performance picture of the ReTA Phase 2 architecture. Each test and its accompanying test cycles may be designed to simulate varying user volumes.

### Key Differences between Load, Stress and Performance Testing

For the purpose of this portion of the present description, Load, Stress and Performance Testing may be distinguished. It is important to understand the subtle differences amongst the three types of testing.

### Load Testing

Load testing is used to subject a server to the load conditions that may be realized in a live production environment. This should enable the tester to make a more predictable assessment of the performance of a production system and thus eliminate much of the uncertainty. Load testing focuses on the number of users accessing the server, the combination of business transactions that are executed on the server, and the impact of the combination of users and transactions on different environment components.

### Stress Testing

Stress testing extends the focus of the load test. Whereas load testing stresses the server to normal production levels to determine performance, stress testing focuses on locating the point at which server performance breaks down. This is achieved by steadily increasing the number of simulated users that execute a given transaction until a breaking point is reached. In addition, a variation of this test would be to execute a single transaction repeatedly for an extended period of time.

### Perfomance Testing

Performance testing focuses on measuring performance for a specific transaction. The performance of a server should be measured under different user load conditions. For ReTA Phase 3 testing, cycles may be executed against both Oracle 8 Enterprise and Microsoft SQL Server 7.0 databases.

### Testing Process

For each of the performance tests, the following process may be used to plan, execute, and evaluate the results of the tests:

### Plan the Scenario

Determine the goal of the test such as the number of simulated users, the transactions to be performed and the transactions to be timed.

### Record web scripts

Record the steps a user may take to complete a transaction with the application. The majority of automated testing tools available on the market offer recording capabilities for the tester to capture the various actions that make up a single transaction as the tester navigates through the application.

### Define the scenario

A list of virtual users has to be defined in each workstation that is used for testing. The number of virtual users and the scripts to be used by each virtual user have to be set up before the scenario can be run.

### Run the scenario

Since the execution script is pre-recorded, simply clicking a button can run it. The testing tool may automatically launch all the virtual users and keep track of their test status. It should also record and measure the server response time as well as other statistics.

### Analysis of performance graphs and reports

After the scenario has completed its run, the performance graphs may be generated and shown to the tester automatically. The tester can then analyze the graphs and reports available. Graphs should be available that provide individual page averages, complete scenario execution times, and high/low response times.

### Testing Application

The application to be used during the ReTA Phase 2 Performance Tests provides three simple business and operational function.

| **Functional Area** | **Description** |
|---|---|
| **Review/Subnut Feedback** | This set of dialogs provides functionality for inputting and reviewing feedback. From a testing perspective, this provides database insert and volume retrieval functionality. |
| **Review Events** | This operational dialog provides custom queries and retrieval against the architecture event log. For testing purposes, this dialog provides volume data retrieval. |
| **Customer Maintenance** | This simulated business activity provides customer retrieval, update and deletion functionality. For testing purposes, these dialogs provide multi-window, transactional functionality. |

The testing script for both the Load and Stress tests consists of the following activities:
Application login
Customer Maintenance (create new)
Customer Maintenance (modify customer created in step 2)
Customer Maintenance (lookup existing customer)
Customer Maintenance (delete customer created in step 2)
Submit feedback
Review feedback
Review events
Application logout

During the database performance test cycles, the following script may be followed:
Application login
Customer Maintenance (create new)
Customer Maintenance (modify customer created in step 2)
Customer Maintenance (lookup existing customer)
Customer Maintenance (delete customer created in step 2)
Application logout

### Performance Test Cycles

The performance tests may be organized to reuse the component and assembly test conditions and scripts. In addition, testing functionality may leverage the reference application components developed in early phases of the ReTA initiative. A mix of various transactions may be used to ensure that the testing clients, web/application server, and database server are sufficiently stressed.

### Load Test

The ReTA Phase 2 Load Test is comprised of the following cycles:
Cycle 1: 25 concurrent users (various transactions)
Cycle 2: 50 concurrent users (various transactions)
Cycle 3: 75 concurrent users (various transactions)
Cycle 4: 100 concurrent users (various transactions)

### Stress Test

The ReTA Phase 2 Stress Test may be comprised of the following test cycles:
Cycle 1: 50 concurrent users (various transactions for 2 hours)
Cycle 2: 100 concurrent users (various transactions for 2 hours)
Cycle 3: 200 concurrent users (various transactions for 2 hours)

### Performance Test

The ReTA Phase 2 Performance Test may be comprised of the following test cycles:
Cycle 1: 50 concurrent users (Customer Lookup/Update, Oracle 8.04 Database)
Cycle 2: 100 concurrent users (Customer Lookup/LTpdate, Oracle 8.04 Database)
Cycle 3: 50 concurrent users (Customer Lookup/Update, SQL Server 7.0 Database)
Cycle 4: 100 concurrent users (Customer Lookup/Update, SQL Server 7.0 Database)

### Test Environment Requirements

### Physical Configuration

Figure 75 illustrates the physical characteristics of the testing environment to be utilized during the Performance Testing Phases. In particular, a web and application server 7500 is connected to a testing client 7502 and a database server 7504.

### Hardware/Software Configuration

The following table provides a complete listing of the hardware and software configuration of the performance test environment.

| Name | CPU | RAM | (Operating System | Software |
|---|---|---|---|---|
| RETADE V4 | **P-300** | **128 MB** | **Windows NT Workstation 4.0 (SP4)** | **RSW eTest & eLoad** |
| | | | | **Microsoft Internet Explorer 4.01** |
| | | | | ReTA Issues Tracker |
| | | | | ReTA SIR Workbench |
| STPFS 10 11 | **P-400** (4x) | **2 GB** | **Windows NT Enterprise Server** 4.0 | Microsoft Internet Explorer 4.01 |
| | | | | Microsoft IIS 4.0 |
| | | | | Microsoft Transaction Server 2.0 |
| | | | | Microsoft Active Data Objects 2.0 |
| | | | | Oracle8 (Client only) |
| | | | | HP OmniBack II Client |
| RETADB 2 | **P-300** | **128 MB** | **Windows NT Server 4.0 (SP4)** | **Microsoft** Internet **Explorer 4.01** |
| | | | | Microsoft SQL Server 7.0 |
| | | | | HP OmniBack II Client |
| AS88232 | **HP K57 0** | **3.75 GB** | **HP-UX v10.20** | **Oracle Enterprise Edition 8.04** |
| | | | | HP OmniBack II Client |

### External Interfaces

### None

### Test Data Management

The performance test data may be created using an Active Server Page created during Phase 2 for the purposes of populating and restoring test data.
After each successful execution of a cycle, the test executor may refresh the database by re-executing the data population Active Server Page.

### Automation

An automated web-based testing application may be utilized for test script recording and playback. The testing application should have the ability to simulate multiple web clients. Debugging - Visual Studio Source Code Debugger may be used. Problem Management - a System Investigation Requests (SIR) Database for entering and managing the problem resolution process may be used to track all issues detected during performance tests.

### Environment Cleanup

The developer is responsible for cleaning up the databases and other environment information after each pass of the test execution.

### Security

As part of performance test, the following security roles may be created:
Source Control administrator - responsible for monitoring code migration
Web/Application server administrator - responsible for installation, configuration, maintenance and tuning on the server
Database administrator - responsible for test database installation, maintenance and tuning

### SIRs/Change Requests

The Performance Testing Team may, as a result of Performance Tuning analysis, create SIRs and/or Change Requests, as appropriate. These portion of the present descriptions may describe recommendations for performance enhancements to be undertaken by the architecture development team. Project management may hold responsibility for prioritizing and scheduling SIRs and/or Change Requests for the immediate-, medium-, and long-term.

### Metrics

The following metrics may be collected and the ReTA Phase 2 performance tests:
End-to-end response times for individual transactions.
Measurement summary of transaction performance
Performance summary of all transactions
Detailed measurement of transaction performance
Simulated user statistical report
CPU utilization of Web/Application and database servers.
Database connection pooling statistics

### Test Resources and Workplan

### Resources

The performance test team may be responsible for creating the technology architecture Performance Test data and scripts. The component test conditions developed during the design phase may be leveraged in performance test as well. The Work Cell Leads may approve all test conditions and expected results.

The Performance Test scripts may be developed and executed by Performance testing team. The Work Cell Leads may supervise the effort. The Test Manager may sign off on the deliverables. The Project Manager may approve the final report.

### Workplan

The workplan for the ReTA Phase 2 Performance Tests can be found within ReTA Performance Test Workplan.

The high level tasks within the workplan are as follows:
Develop testing scenarios (transactional mix)
Establish testing environment
Develop data generation, population, and refresh approach
Develop load generation approach
Get first cut of architecture/application code
Record and modify automated testing scripts
Execute test cycles
Analyze, report, SIRs, change recommendations, etc.
Code changes per performance management review
Re-execute or get second cut of code.

While various embodiments have been described above, it should be understood that they have been presented by way of example only, and not limitation. Thus, the breadth and scope of a preferred embodiment should not be limited by any of the above described exemplary embodiments, but should be defined only in accordance with the following claims and their equivalents.

## Claims

1. A method (100) for providing a system for translating a test script comprising user readable words into automation code suitable for an automated testing tool for enterprise testing, wherein the system interfaces with the automated testing tool and the method comprises the steps of:
(a) receiving test script information at a server computer (204), the test script information comprising a plurality of user readable words having colloquial meaning to a user and an automation code associated with each of the plurality of user readable words;
(b) dividing (402) received test script information into a plurality of components, each component comprising a user-readable word and an automation code;
(c) storing (404) the plurality of components in a database and identifying (406) and storing the relationships between the components using database tables (214);
(d) providing a table-driven automated scripting architecture (102) comprising the server computer (204) and the database tables (214), wherein a client computer (206) is provided for the user, the client computer in communication with the server computer (204) upon which is stored the database tables (214);
(e) enabling the user to develop (104) with the client computer a test script using the table-driven automated scripting architecture (102), wherein the test script contains a plurality of user-readable sentences of user-readable words, and wherein each user-readable word has a colloquial meaning to the user and wherein the test script is stored in the database tables;
(f) translating (806) the stored test script using the database tables {214} into automation code such that a client software module can send the automation code to the automated testing tool, the automated testing tool being arranged to perform automated testing (106) by executing the automation code (808) and outputting any metrics (218) generated therefrom.

2. The method of Claim 1, wherein the step of enabling the user to develop further comprises using the English language to create the user-readable sentences with the client com puter.

3. A computer program on a computer readable medium for configuring a computer to perform the method of any preceding claim.

4. A system (200) for translating a test script comprising user readable words into automation code suitable for an automated testing tool for enterprise testing, wherein the system is arranged to interface with an automated testing tool (210), the system comprising:
(a) receiving means arranged to receive test script information at a server computer (204), each test script comprising a plurality of user readable words having colloquial meaning to a user and an automation code associated with each of the plurality of user readable words;
(b) dividing means arranged to divide received test script information into a plurality of components, each component comprising a user readable word and an automation code;
(c) storing means arranged to store the plurality of components in a database and identify (406) and store the relationships between the components using database tables (214);
(d) a table-driven automated scripting architecture comprising the server computer (204) and the database tables (214), wherein a client computer (206) is provided for the user, the client computer in communication with the server computer (204) upon which is stored the database tables (214);
(e) enabling means arranged to enable the user to develop (104) with the client computer a test script using the table-driven automated scripting architecture (102), wherein the test script contains a plurality of user-readable sentences of user-readable words, and wherein each user-readable word has a colloquial meaning to the user and wherein the test script is stored in the database tables; and
(f) translating means arranged to translate the stored test script using the database tables (214) into automation code such that a client software module can send the automation code to the automated testing tool, the automated testing tool being arranged to perform automated testing (106) by executing the automation code (808) and outputting any metrics (218) generated therefrom.

## Patentansprüche

1. Verfahren (100) zum Bereitstellen eines Systems zum Übersetzen eines benutzerlesbare Wörter umfassenden Testscriptes in einen Automatisierungscode, geeignet für ein automatisiertes Testwerkzeug zum Unternehmenstesten, wobei das System mit dem automatisierten Testwerkzeug gekoppelt ist und das Verfahren die folgenden Schritte umfasst:
(a) Empfangen von Testscriptinformationen an einem Servercomputer (204), wobei die Testscriptinformationen mehrere benutzerlesbare Wörter mit für einen Benutzer umgangssprachlicher Bedeutung und einen mit jedem der mehreren benutzerlesbaren Wörter assoziierten Automatisierungscode umfassen;
(b) Unterteilen (402) empfangener Testscriptinformationen in mehrere Komponenten, wobei jede Komponente ein benutzerlesbares Wort und einen Automatisierungscode umfasst;
(c) Speichern (404) der mehreren Komponenten in einer Datenbank und Identifizieren (406) und Speichern der Beziehungen zwischen den Komponenten unter Verwendung von Datenbanktabellen (214);
(d) Bereitstellen einer den Servercomputer (204) und die Datenbanktabellen (214) umfassenden tabellengesteuerten automatisierten Scripting-Architektur (102), wobei ein Clientcomputer (206) für den Benutzer bereitgestellt ist, wobei der Clientcomputer mit dem Servercomputer (204), auf dem die Datenbanktabellen (214) gespeichert sind, in Kommunikation steht;
(e) dem Benutzer ermöglichen, mit dem Clientcomputer unter Verwendung der tabellengesteuerten automatisierten Scripting-Architektur (102) ein Testscript zu entwickeln (104), wobei das Testscript mehrere benutzerlesbare Sätze aus benutzerlesbaren Wörtern enthält und wobei jedes benutzerlesbare Wort für den Benutzer eine umgangssprachliche Bedeutung besitzt und wobei des Testscript in den Datenbanktabellen gespeichert ist;
(f) Übersetzen (806) des gespeicherten Testscriptes unter Verwendung der Datenbanktabellen (214) in Automatisierungscode derart, dass ein Client-Softwaremodule den Automatisierungscode an das automatisierte Testwerkzeug senden kann, wobei das automatisierte Testwerkzeug ausgelegt ist, ein automatisiertes Testen (106) durchzuführen durch Ausführen des Automatisierungscodes (808) und Ausgeben etwaiger daraus erzeugte Metriken (218).

2. Verfahren nach Anspruch 1, wobei der Schritt, dem Benutzer das Entwickeln zu ermöglichen, weiterhin das Verwenden der englischen Sprache umfasst, um die benutzerlesbaren Sätze mit dem Clientcomputer zu erstellen.

3. Computerprogramm auf einem computerlesbaren Medium zum Konfigurieren eines Computers, das Verfahren nach einem der vorhergehenden Ansprüche auszuführen.

4. System (200) zum Übersetzen eines benutzerlesbare Wörter in einem Automatisierungscode umfassenden Testscriptes, geeignet für ein automatisiertes Testwerkzeug zum Unternehmenstesten, wobei das System ausgelegt ist zum Koppeln mit einem automatisierten Testwerkzeug (210), wobei das System Folgendes umfasst:
(a) Empfangsmittel ausgelegt zum Empfangen von Testscriptinformationen an einem Servercomputer (204), wobei jedes Testscript mehrere benutzerlesbare Wörter mit für einen Benutzer umgangssprachlicher Bedeutung und einen mit jedem der mehreren benutzerlesbaren Wörter assoziierten Automatisierungscode umfasst;
(b) Unterteilungsmittel ausgelegt zum Unterteilen empfangener Testscriptinformationen in mehrere Komponenten, wobei jede Komponente ein benutzerlesbares Wort und einen Automatisierungscode umfasst;
(c) Speichermittel ausgelegt zum Speichern der mehreren Komponenten in einer Datenbank und Identifizieren (406) und Speichern der Beziehungen zwischen den Komponenten unter Verwendung von Datenbanktabellen (214);
(d) eine den Servercomputer (204) und die Datenbanktabellen (214) umfassende tabellengesteuerte automatisierte Scripting-Architektur, wobei ein Clientcomputer (206) für den Benutzer bereitgestellt ist, wobei der Clientcomputer mit dem Servercomputer (204), auf dem die Datenbanktabellen (214) gespeichert sind, in Kommunikation steht;
(e) Ermöglichungsmittel, ausgelegt, um dem Benutzer zu ermöglichen, mit dem Clientcomputer unter Verwendung der tabellengesteuerten automatisierten Scripting-Architektur (102) ein Testscript zu entwickeln (104), wobei das Testscript mehrere benutzerlesbare Sätze aus benutzerlesbaren Wörtern enthält und wobei jedes benutzerlesbare Wort für den Benutzer eine umgangssprachliche Bedeutung besitzt und wobei des Testscript in den Datenbanktabellen gespeichert ist; und
(f) Übersetzungsmittel ausgelegt zum Übersetzen des gespeicherten Testscriptes unter Verwendung der Datenbanktabellen (214) in Automatisierungscode derart, dass ein Client-Softwaremodule den Automatisierungscode an das automatisierte Testwerkzeug senden kann, wobei das automatisierte Testwerkzeug ausgelegt ist, ein automatisiertes Testen (106) durchzuführen durch Ausführen des Automatisierungscodes (808) und Ausgeben etwaiger daraus erzeugte Metriken (218).

## Revendications

1. Méthode (100) de fourniture d'un système de traduction d'un script de test constitué de mots lisibles par un utilisateur en code d'automatisation approprié pour un outil de test automatisé pour la mise à l'essai en entreprise, dans laquelle les interfaces du système avec l'outil de test automatisé et la méthode comprennent les étapes de :
(a) réception des informations du script de test au niveau de l'ordinateur serveur (204), les informations du script de test étant constituées d'une pluralité de mots lisibles par un utilisateur ayant une signification courante pour un utilisateur et d'un code d'automatisation associé à chacune des pluralités de mots lisibles par un utilisateur;
(b) division (402) des informations de script reçues en une pluralité de composants, chaque composant étant constitué d'un mot lisible par un utilisateur et d'un code d'automatisation ;
(c) mémorisation (404) de la pluralité de composants dans une base de données et identification (406) et mémorisation des relations entre les composants grâce aux tables de base de données (214) ;
(d) fourniture d'une architecture de script automatisé basée sur des tables (102) comprenant l'ordinateur serveur (204) et les tables de base de données (214), dans laquelle un ordinateur client (206) est fourni pour un utilisateur, l'ordinateur client en communication avec l'ordinateur serveur (204) étant celui dans lequel sont mémorisées les tables de base de données (214) ;
(e) autorisation d'un utilisateur pour développer (104) avec l'ordinateur client un script de test qui utilise l'architecture de script automatisé basée sur des tables (102), dans laquelle le script de test intègre une pluralité de phrases lisibles par un utilisateur et de mots lisibles par un utilisateur, dans laquelle chaque mot lisible par un utilisateur a une signification courante pour un utilisateur et dans laquelle le script de test est mémorisé dans les tables de base de données ;
(f) traduction (806) du script de test mémorisé grâce aux tables de base de données (214) en code d'automatisation, telle que le module logiciel client envoie le code d'automatisation à l'outil de test automatisé, l'outil de test automatisé étant disposé pour effectuer un test automatisé (106) en exécutant le code d'automatisation (808) et la sortie de n'importe quelles mesures (218) générées à partir du test automatisé.

2. Méthode selon la revendication 1, dans laquelle l'étape d'autorisation d'un utilisateur à développer comprend en outre l'utilisation de l'anglais pour créer des phrases lisibles par un utilisateur avec l'ordinateur client.

3. Programme informatique sur un moyen lisible par un ordinateur pour la configuration d'un ordinateur afin d'exécuter la méthode selon l'une quelconque des revendications précédentes.

4. Système (200) pour la traduction d'un script de test comprenant des mots lisibles par un utilisateur en code d'automatisation approprié pour un outil de test automatisé pour la mise à l'essai en entreprise, dans lequel le système est disposé pour s'interfacer avec un outils de test automatisé (210), le système comprenant :
(a) des moyens de réception disposés pour recevoir des informations de script de test sur un ordinateur serveur (204), chaque script de test comprenant une pluralité de mots lisibles par un utilisateur ayant une signification courante pour un utilisateur et un code d'automatisation associé à chaque mot de la pluralité de mots lisibles par un utilisateur ;
(b) des moyens de division disposés pour diviser les informations du script de test en une pluralité de composants, chaque composant étant constitué d'un mot lisible par un utilisateur et d'un code d'automatisation ;
(c) des moyens de mémorisation disposés pour mémoriser la pluralité de composants dans une base de données et pour identifier (406) et mémoriser les relations entre les composants grâce à des tables de base de données (214) ;
(d) une architecture de script automatisé basée sur des tables comprenant l'ordinateur serveur (204) et des tables de base de données (214), dans laquelle un ordinateur client (206) est fourni pour un utilisateur, l'ordinateur client étant en communication avec l'ordinateur serveur (204) sur lequel sont mémorisées les tables de base de données (214);
(e) des moyens d'autorisation disposés pour permettre à un utilisateur de développer (104) avec l'ordinateur client un script de test grâce à l'architecture de script automatisé basée sur des tables (102), dans lesquels le script de test est constitué d'une pluralité de phrases lisibles par un utilisateur constituée de mots lisibles par un utilisateur, dans lesquels chaque mot lisible par un utilisateur possède une signification courante pour un utilisateur et dans lesquels le script de test est mémorisé dans les tables de base de données ; et
(f) (des moyens de traduction disposés pour traduire le script de test mémorisé grâce aux tables de base de données (214) en code d'automatisation, tels qu'un module logiciel client puisse envoyer le code d'automatisation à un outil de test automatisé, l'outil de test automatisé étant disposé pour effectuer un test automatisé (106) en exécutant le code d'automatisation (808) et la sortie de n'importe quelles mesures (218) à partir du test automatisé.
